# EUROPEAN PATENT SPECIFICATION

(11) **EP 2 905 432 B1**
(45) Date of publication and mention of the grant of the patent: **25.04.2018**
(21) Application number: 13741862.0
(22) Date of filing: 08.02.2013
(51) Int. Cl.: F01K 3/12, F01K 3/00, F02C 1/10, F25B 30/02, F25B 1/10, F25B 9/06

(54) **METHOD AND INSTALLATION FOR ACCUMULATING, STORING AND RETURNING OF MECHANICAL ENERGY**
VERFAHREN ZUM SAMMELN, SPEICHERN UND RÜCKGEWINNEN MECHANISCHER ENERGIE UND VORRICHTUNG ZUR UMSETZUNG DIESES VERFAHRENS
PROCÉDÉ ET INSTALLATION D'ACCUMULATION, DE STOCKAGE ET DE RÉCUPÉRATION D'ÉNERGIE MÉCANIQUE

(30) Priority: 10.02.2012 RU 2012104762
(43) Date of publication of application: 12.08.2015
(73) Proprietor: GRASYS HOLDING LTD, 2012 Strovolos, Nicosia (CY)
(72) Inventor: SAMOILOV, Alexander Petrovich, 129110 g. Moscow (RU)
(74) Representative: Wettlaufer, Frank
(86) International application number: PCT/RU2013/000091
(87) International publication number: WO 2013/119145

(56) References cited:
- EP-A1- 2 390 473
- EP-A1- 2 400 120
- EP-A2- 0 703 420
- WO-A1-2014/052927
- WO-A2-2009/044139
- US-A1- 2011 204 655

## Description

The invention relates to an apparatus and a method for accumulating, storing and returning of mechanical energy. Specifically it relates to the field of power industry and energy converters, are intended for accumulating, for instance, during surplus electrical energy generating, storing and returning in the time of the increased electrical energy consumption or returning of the mechanical energy for its using in technological processes.

There are known and is used for a long time in power industry the method and installations for accumulating of the electrical energy with the help of pumped hydro storage, for example, "Energy complex", RF patent for useful model No. 91577, published on 20.02.2010 by IPC E02B9/00, in which during accumulation the electrical energy is converted to the potential water energy, transferring by pumps from the lower water reservoir to the upper one. Returning of the accumulated energy is realized by converting of the kinetic energy at water draining from the upper water reservoir to the lower one through hydro turbines, which rotate electric generators. The disadvantage of such type energy storages is the low efficiency in using of the space because of the dependence of the topography. Such type energy storages require the combination of water reserves, sufficient for effective functioning, and of vertical drop between the levels of upper and lower water reservoirs. Such type energy storages are advantageous only with significant powers of electric generators and corresponded quantities of water and vertical drops. Requirements of specific nature factor combinations make difficult, and sometimes impossible the construction of such type energy storages in places of electric energy generation of comparable powers. For creation such type energy storages near modern stations, generating electric energy, it is necessary to allot significant ground areas for its construction. It will critically change the natural hydrological regime of the place.

There are known electrochemical energy storages - batteries, including leaden, lithium, nickel-cadmium, sodium - sulfur and others, for example, "Solid-state secondary power supply", RF patent for invention No.2295178, published on 10.03.2007 by IPC H01M6/18.

The disadvantage of such type energy storages is the low efficiency because of the limited service life (the capacity critically reduces after some hundreds cycles of charging - discharging) and of the high cost of the comparable power apparatuses with modern power stations.

There are known and have solitary application in power industry accumulating apparatuses with using of flywheels, for example, US patent No.5721461, published on 24.02.1998 by IPC H02J1/16.

The disadvantage of such type energy storages is the low efficiency because of the insufficient energy capacity of the single flywheel and of the high cost of the comparable power apparatuses with modern power stations.

There is known the method of accumulating and storing of the electric energy with using of hydrogen, for example, "System of the ecologically clear hydrogen power energy for means of transport and electric mobile transport", RF patent No.2179120, published 10.02.2002 by IPC B60L11/18. The disadvantage of such type energy storages is the low efficiency because of insufficiently high round trip efficiency and the high cost of the apparatuses of comparable power with modern power stations.

In the RF patent for invention No. 2273742 "Energy-accumulating installation", published on 10.04.2006 by IPC F01K25/06, it is suggested energy accumulating with using of the thermal energy, releasing in sorption of various working mediums by various sorbents. The disadvantage of such type energy storages is the low efficiency because of insufficiently high round trip efficiency due to the necessity to combine the simultaneous inflow of the heat and mechanical energy in energy accumulating, as well the considerable imperfect condition of the sorption - desorption processes, combined with the heat transfer processes, as the temperature level, at which it is necessary to input the heat during desorption , will be substantially higher of the temperature level, at which the sorption heat will release, that inevitably will cause to considerable irreversible losses.

In the RF patent for invention No. 2062887 "Method of heat energy accumulating and receiving from it the mechanical energy", published on 27.06.1996 by IPC F01K13/00, it is suggested to realize energy accumulating by converting of the mechanical energy, being accumulated, into the thermal one with the help of the vapor-compression heat pump, using the saturated vapor of various substances, for example, of water, as the working medium. Moreover, the heat exchange between the working medium and substances - heat accumulators is realized in the isothermal regime, in which the working medium is vaporized or condensed, and substances - heat accumulators are crystallized or melted. Returning of the accumulated energy is realized by converting in the reverse order of the accumulated thermal energy into the mechanical one in the heat machine, working, as well, with the saturated vapor. The disadvantage of such type energy storages is the low round trip efficiency, as well the narrowness of the range of possible parameter changes:
- The necessity to support the working medium in the state of the saturated vapor in the process of the compression and expansion, that required either the input of the fluid working medium, or the output of the working medium condensate immediately in the compression or expansion process; creating compressors and expanders, capable to work with the flow, containing considerable quantity of the liquid phase, - complicated and expensive task; in the ordinary practice the ingress of liquid to the compressor, or expander of any construction is considered prohibited, because either lead to the apparatus abnormal damage in the compression process of the "uncompressible" liquid, or to the considerable reduction of its service life;
- The necessity to realize the heat exchange between the working medium and the substance, realizing transition from a solid state to a liquid one, or vice versa; creating the heat transfer surface for this process is a complicated and expensive task; moreover, such heat exchange, as a rule, has a considerable imperfect condition degree, that leads to irreversible losses, and as a consequence - to the decreasing of the round trip efficiency;
- The necessity to have at the increased pressure the considerable working medium volumes, because the working medium during energy accumulating in such type apparatuses is accumulated at the increased pressure that leads to the necessity of creating of large and expensive vessels and apparatuses, working at the pressure.

In US patents No.20100218500 "Installation and Methods for Storing and Restoring Electrical Energy Using a Piston-Type Gas Compression and Expansion Unit", published on 02.09.2010 by IPC F01K3/00, and No. 20100301614 "Installation and Method for Storing and Restoring Electrical Energy", published on 02.12.2010 by IPC F02B63/04, it is suggested to realize electrical energy accumulating, converting the electrical energy into the thermal one with the help of a heat pump with the gaseous working medium and accumulating the received thermal energy in the thermal energy storages with the solid porous heat transfer agent, directly through which the gaseous working medium is passed. Accumulated electrical energy returning is realized by converting in the heat machine of the thermal energy, accumulated in thermal energy storages, into the mechanical one. Received in such a way the mechanical energy further is converted into the electrical one with the help of the electric generator. At the time the working medium flows through thermal storages in counterflow way, i.e. in the energy accumulating process and in the accumulated energy returning process the gaseous working medium flows through thermal energy storages in opposite directions that during the accumulated energy returning working medium parameters should be approached to the utmost to working medium parameters at the outlet from the heat pump in the energy accumulating process. The disadvantage of such type thermal energy storages is the low efficiency concerning the ratio of the energy quantity in discharging to the energy quantity in charging, and the narrowness of the range of possible parameter changes:
- At the temperature working regimes of the apparatus with using of piston machines for energy accumulating (USA patent application No.20100218500), necessary for its acceptable thermodynamic efficiency, it is required ether piston machines cooling, causing accumulated energy direct losses with the corresponding undesirable decreasing installation efficiency, or the piston machines service life sharply decreases;
- For thermal energy storages with, working on the principle of regenerative heat exchangers with the solid heat transfer agents, it is characteristically that at the steady state cyclic counterflow working regime the temperature profile along such heat exchange is close to the strait line, connecting the inlet temperature and the outlet temperature, and the such heat exchanger thermal capacity depends on the admissible temperature deviation at the its outlet - the smaller admissible deviation of the working medium temperature, being heated in the regenerative heat exchanger, from the temperature of the working medium, that have heated this regenerative heat exchanger before that, the smaller such heat exchanger capacity, i.e., if according to the thermal energy storage working process specifications the admissible difference in temperatures of the gas, heating or cooling the regenerative heat exchanger, and of the gas, being heated or cooled then in this regenerative heat exchanger, is small, then also the such regenerative thermal energy storage capacity is small, but in connection with that parameters of gas machines like turbo compressors and turbo expanders have the efficiency maximum only at the definite working medium parameters combination, the admissible temperature deviation is insignificant, since, in opposite case the efficiency of such machines critically decreases, that does not permit in this energy storage to accumulate and return to the user the energy power, comparable with powers of modern power stations, because of the existence of reverse dependence between the capacity and the efficiency.

- The work of such type apparatuses assumes heat energy transfer at the direct contact between the working medium and the solid porous heat transfer agent, that assumes to use in the capacity of the thermal energy storage the vessel, which all the internal volume with the solid porous heat transfer agent is at the working medium total pressure - the creation of thermal energy storage with the volume of thousands cubic meters order, being designed for storing of considerable heat quantity and simultaneously being at pressure, introduces the critical restrictions for the structure.
- At the starting of such type apparatuses it is necessary to make a gaseous working medium pressure drop between the first and the second (conventionally cold and conventionally hot) thermal energy storages, for that it will be necessary to do considerable work on pumping of considerable volumes of the gaseous working medium from that thermal energy storage, which in the working process has the pressure less, to the thermal energy storage, having in the working process the pressure more; in the case of having the interruption between stages of energy accumulating and energy returning it is introduced restrictions for the rate of bringing of such type apparatuses up to the every stage working regime, but keeping of the pressure drop between thermal energy storage if minimum for some hours requires to create complicated and expensive locking valves, capable to work for a long time in working temperature conditions, to lock considerable sections and in the same time to ensure the sufficient tightness.

In the USA patent application No.20100251711 "Energy Storage", published on 07.10.2010 by IPC F01K3/00, that can be qualified as the nearest analog of stated inventions, the USA patent application No.20100257862 "Energy Storage", published on 14.10.2010 by IPC F02C1/04, international patent application No.2009044139 "Energy Storage", published on 09.04.2009 by IPC F01K3/06, as well, it is provided energy accumulating with the help of the apparatus, working in accumulating as the heat pump with the gaseous working medium, and in returning of the accumulated energy - as the heat machine with the gaseous working medium with storing of low temperature thermal energy and/or high temperature thermal energy, in which the being accumulated energy is converted, in accumulators with unmovable heat accumulating materials. The disadvantage of such type energy storages is the low efficiency because of low specific energy capacity of the heat accumulating material, because of increased irreversible losses of the thermodynamic cycle and the installation material mass and because of the impossibility to return the system in the initial state after the charging - discharging cycle in the time, comparable with periods of accumulated energy consuming.

These disadvantages are caused by the following:
The considerable size and cost of energy storages due to the insignificant specific energy capacity of the heat accumulating material, used in energy storages, connected with the peculiarity of the temperature distribution in regenerative heat exchangers, which variety are the heat energy accumulators with unmovable heat accumulating material. This peculiarity consists in that at the steady state cyclic counterflow working regime the temperature profile along such heat exchange is close to the strait line, connecting the inlet temperature and the outlet temperature, and the such heat exchange capacity depends on the admissible temperature deviation at the its outlet - the smaller admissible deviation of the working medium temperature, being heated in the regenerative heat exchanger, from the temperature of the working medium, that have heated this regenerative heat exchanger in the heating cycle before that, the smaller such heat exchanger capacity, i.e., if according to thermal energy storage working process specifications the admissible difference in temperatures of the gas, heating or cooling the regenerative heat exchanger, and of the gas, being heated or cooled then in this regenerative heat exchanger, is small, then also the such regenerative thermal energy storage capacity is small. But in connection with that the maximum of efficiency of gas machines like turbo compressors and turbo expanders, with the help of which is realized the energy accumulating thermodynamic cycle, is ensured in the quite narrow range of working medium parameters, the admissible temperature deviation is insignificant, that leads to the critical decreasing of the heat energy quantity, storing by the unit of the heat accumulating material mass, that, in its turn, leads to the increasing of the sizes and cost of the energy storage.

Decreasing of the efficiency and/or the capacity of the energy storage due to the considerable complexity or even impossibility of providing at large size of the regenerative heat exchanger, variety of which is the thermal energy storage with unmovable heat accumulating material, of the effective heat transfer between the gaseous working medium or the gaseous heat transfer agent and the thermal energy storage heat accumulating material is caused by that it is difficult or impossible to provide such the gas flow distribution, in order to exclude the possibility of the formation from one flow several flows with different temperatures and following their mixing in the heat exchanger or at the its outlet. Mixing of the gas flows with different temperatures both in the regenerative heat exchanger and at its outlet leads to the irreversible losses of the thermodynamic cycle that, in its turn, leads to the decreasing of the efficiency and/or the energy storage capacity.

The considerable complexity and hence the cost of the thermal energy storage, used in energy storages because the realization of the heat accumulating material heat exchange with the gaseous working medium directly in the energy storage with unmovable heat accumulating material leads to the condition, when all the thermal energy storage will be at the gaseous working medium or the gaseous heat transfer agent pressure, and that in the case of the necessity to use the gaseous working medium or gaseous heat transfer agent will lead to the considerable increase of the thermal energy storage shell thickness, therefore, of its cost.

The low ability for continuous cyclic using of the energy storage is caused by the absence of the heat exchanger - cooler in the energy accumulator structure for removing from the thermodynamic cycle of accumulating, storing and returning of the energy of the surplus heat, generated in the cycle due to non-ideal processes, taking place during energy accumulating and returning (deviations of real processes of compressing and expanding from adiabatic ones, heat transfer, pressure drops during working mediums moving). In the result of the heat exchanger - cooler absence the thermodynamic state of such type apparatuses system, forming the energy storage, after cycle charging - discharging (energy accumulating - energy returning) may critically differ from this system state, preceding this cycle, if natural losses in the necessary energy storage place in the necessary cycle period will not provide such heat removing, which will permit the system to return in the initial state. This will lead to the condition, when to duplicate the analogous cycle charging - discharging at once after the previous cycle with the same efficiency will be impossible.

Each of documents EP2390473A1 and US2011/204655 disclose closed loop energy storage systems based on a Rankine cycle, which are respectively a staged compression/expansion system and a recuperated system.

Developing of effective methods of energy accumulating and energy storages is based on the following facts and suggested technical decisions.

Three types of loops are used, one of which is represented by the gaseous working medium loop, in which in the energy accumulating process it is realized the thermodynamic cycle of the heat pump with the gaseous working medium, but in the energy returning process it is realized the thermodynamic cycle of the heat machine with the gaseous working medium, another loop type - the loop of conventionally cold heat transfer fluid agent, being cooled in the energy accumulating process and being heated in the energy returning process, and the third loop type - the loop of conventionally hot heat transfer fluid agent, being heated in the energy accumulating process and being cooled in the energy returning process.

The combination of three this loop type in one installation permits to accumulate the mechanical energy, converting it in the gaseous working medium loop into the heat one and, transferring to the heat transfer fluid agent loops, to store the accumulated energy as the thermal energy in the heat transfer fluid agent loops, as well as to return the accumulated and storing energy, transferring from the heat transfer fluid agent loops the storing in them thermal energy to the gaseous working medium loop, in which the thermal energy is converted into the returning mechanical energy. The task of the invention is developing of methods of accumulating, storing and returning of the mechanical energy and installation variants for their realization with increased efficiency, capacity and comparatively cheap. The invention results for example in:
- decreasing of dimensions and the cost of the energy, as well as decreasing of the cost of the energy accumulating, storing and returning method, resulting from increasing of the heat accumulating materials specific energy capacity when using of loops with heat transfer fluid agents, suitable for using both as heat transfer agents, and as heat accumulating materials, the heat transfer to which can be organized in effective recuperative heat exchangers without using of the increased pressures in heat transfer fluid agent loops;
- increasing of the effectiveness and the capacity of the energy storage and the method of accumulating, storing and returning of mechanical energy, resulting from the organization of the effective heat transfer between gaseous working medium loop and heat transfer fluid agent loops in high effective recuperative heat exchangers, is caused by that in the process of such heat transfer it is practically excluded the possibility of the formation from one flow several flows with different temperatures and following their mixing, both for heat transfer fluid agents and the gaseous working medium, and that exclude irreversible losses of the thermodynamic cycle, caused by the non-effective heat transfer;
- simplifying and decreasing of the cost of the thermal energy storage, being the part of the energy storage, in the result of using of fluid heat transfer agents, which storing and using is possible at the atmospheric pressure, that in combination with the heat exchangers for heat transfer with the gaseous working medium permit to organize the high effective heat exchange between the heat transfer agent and the gaseous working medium, being practically at any required pressure, and this will have no influence upon the thermal energy storage, where the heat transfer fluid agents are contained;
- maintaining the energy storage ability for continuous cycling using due to using of the heat exchanger - cooler for removing of the surplus low-potential heat from the energy storage in the necessary time and in the necessary quantity, and increasing of the effectiveness in the result of the useful application of the withdrawal from the energy storage waste heat for fulfilling requirements for industrial or domestic needs in such a heat.

The invention achieves its technical results by at least respectively all features of appended independent claims 1 and 11. The further features and embodiments described in the following may supplement the features contained in the independent claims.

In an embodiment of the realization the technical results are achieved by that the stallation for accumulating, storing and returning of a mechanical energy comprises at least, one loop of an conventionally cold heat transfer fluid agent, at least, one loop of an conventionally hot heat transfer fluid agent, at least, one loop of gaseous working medium, connected with, at least, one source of the mechanical energy, being accumulated, and with, at least, one using equipment of the accumulated mechanical energy, in which the energy, being accumulated, is transformed into the gaseous working medium heat energy, and the accumulated heat energy by means of the gaseous working medium is transformed into the mechanical energy, and, at least, one heat exchanger-cooler, the conventionally cold heat transfer fluid agent loop is made with the possibility in the interaction with the gaseous working medium loop through, at least, one heat exchanger "gaseous working medium - conventionally cold heat transfer fluid agent" in the energy accumulating process to cool the loop heat transfer fluid agent, but in the energy returning process to heat the loop heat transfer fluid agent, the conventionally hot heat transfer fluid agent loop is made with the possibility in the interaction with the gaseous working medium loop through, at least, one heat exchanger "gaseous working medium - conventionally hot heat transfer fluid agent" in the energy accumulating process to heat the loop heat transfer fluid agent, but in the energy returning process - to cool the loop heat transfer fluid agent, besides the mentioned one or some heat exchangers "gaseous working medium - conventionally cold heat transfer fluid agent" the loop of the conventionally cold heat transfer fluid agent contains, at least, one tank, at least, one pipeline system, at least, one apparatus or system for providing of the heat transfer fluid agent moving in the loop through one or some mentioned heat exchangers "gaseous working medium - conventionally cold heat transfer fluid agent" from one part of the tank to another or from one tank to another or to others or from some tanks to others, besides the mentioned one or some heat exchangers "gaseous working medium - conventionally hot heat transfer fluid agent" the loop of the conventionally hot heat transfer fluid agent contains, at least, one tank, at least, one pipeline system, at least, one apparatus or system for providing of the heat transfer fluid agent moving in the loop through one or some mentioned heat exchangers "gaseous working medium - conventionally hot heat transfer fluid agent" from one part of the tank to another or from one tank to another or to others or from some tanks to others, the gaseous working medium loop besides the mentioned heat exchangers, the mentioned link with the source of the mechanical energy, being accumulated, and the link with the using equipment of the accumulated mechanical energy contains, at least, one pipeline system for providing of gaseous working medium moving in the loop, at least, one apparatus like compressor means for providing of the gaseous working medium compression, which works in the energy accumulating process, at least, one apparatus like expander means for providing of the gaseous working medium expansion, which works in the energy accumulating process, at least, one link with, at least, one using equipment of the mechanical energy, releasing in the energy accumulating process in one mentioned apparatus like expander means or in some mentioned apparatuses like expander means, which works or respectively which work in the energy accumulating process, at least, one apparatus like compressor means for providing of the gaseous working medium compression, which works in the energy returning process, at least, one apparatus like expander means for providing of the gaseous working medium expansion, which works in the energy returning process, at least, one link with, at least, one source of the mechanical energy, being used in the energy returning process in one mentioned apparatus like compressor means or in some mentioned apparatuses like compressor means, which works or respectively which work in the energy returning process.

The technical results are achieved, as well, by that the heat exchanger-cooler is made as the heat exchanger "gaseous working medium cooler" in the gaseous working medium loop for providing of the gaseous working medium cooling in the energy returning process, which is working in the part of the loop between the outlet from one mentioned or from one of some mentioned apparatuses like expander means, working in the energy returning process, nearest to the inlet to the heat exchanger "gaseous working medium - conventionally cold heat transfer fluid agent" and the mentioned inlet to the mentioned one or to one of some mentioned heat exchangers "gaseous working medium - conventionally cold heat transfer fluid agent", nearest to the mentioned outlet from the mentioned apparatus like expander means, working in the energy returning process, and/or as the heat exchanger "gaseous working medium cooler" in the gaseous working medium loop for providing of the gaseous working medium cooling in the energy accumulating process, working in the part of the loop between the outlet from one mentioned or from one of some mentioned heat exchangers "gaseous working medium - conventionally cold heat transfer fluid agent", nearest to the inlet to one or to one of some mentioned apparatuses like compressor means, working in the energy accumulating process, and the mentioned inlet to one or to one of some mentioned apparatuses like compressor means, working in the energy accumulating process, nearest to the mentioned outlet from the mentioned one or from one of some mentioned heat exchangers "gaseous working medium - conventionally cold heat transfer fluid agent", and/or as the heat exchanger "conventionally cold heat transfer fluid agent cooler" in the conventionally cold heat transfer fluid agent loop for providing the conventionally cold heat transfer fluid agent cooling, working in the energy accumulating process in the part of the loop between the outlet from the mentioned part of the mentioned loop tank, or the outlet from the mentioned loop tank, or the outlet from the mentioned loop tanks and the inlet to the mentioned heat exchanger, or to mentioned heat exchangers "gaseous working medium - conventionally cold heat transfer fluid agent", and/or working in the energy returning process in the part of the loop between the outlet from the mentioned heat exchanger, or mentioned heat exchangers "gaseous working medium - conventionally cold heat transfer fluid agent" and the inlet to the mentioned part of the loop tank, or to the mentioned loop tank, or to the mentioned loop tanks, and/or as the heat exchanger "gaseous working medium cooler" in the gaseous working medium loop for providing gaseous working medium cooling in the energy returning process, working in the part of the loop between the outlet from one or from one of some mentioned apparatuses like compressor means, working in the energy returning process, nearest to the inlet to the heat exchanger "gaseous working medium - conventionally hot heat transfer fluid agent", and the mentioned inlet to the mentioned one or to one of some mentioned heat exchangers "gaseous working medium - conventionally hot heat transfer fluid agent", nearest to the mentioned outlet from the mentioned apparatus like compressor means, working in the energy returning process, and/or as the heat exchanger "gaseous working medium cooler" in the gaseous working medium loop for providing gaseous working medium cooling in the energy accumulating process, working in the part of the loop between the outlet from one or from one of some mentioned heat exchangers "gaseous working medium - conventionally hot heat transfer fluid agent", nearest to the inlet to the mentioned apparatus like expander means, working in the energy accumulating process, and the mentioned inlet to the mentioned one or to one of some mentioned apparatuses like expander means, working in the energy accumulating process, nearest to the mentioned outlet from the mentioned heat exchanger "gaseous working medium - conventionally hot heat transfer fluid agent", and/or as the heat exchanger "conventionally hot heat transfer fluid agent cooler" in the conventionally hot heat transfer fluid agent loop for providing the conventionally hot heat transfer fluid agent cooling, working in the energy returning process in the part of the loop between the outlet from the mentioned heat exchanger or from mentioned heat exchangers "gaseous working medium - conventionally hot heat transfer fluid agent" and the inlet to the mentioned part of the loop tank, or to the mentioned loop tank, or to the mentioned loop tanks, and/or working in the energy accumulating process in the part of the loop between the outlet from the mentioned part of the mentioned loop tank, or the outlet from the mentioned loop tank, or the outlet from the mentioned loop tanks, and the inlet to the mentioned heat exchanger "gaseous working medium - conventionally hot heat transfer fluid agent", or to mentioned heat exchangers "gaseous working medium - conventionally hot heat transfer fluid agent".

The technical results are achieved, as well, by that the apparatus like compressor means, working in the energy accumulating process is used in the capacity of the using equipment of the mechanical energy, releasing in the energy accumulating process in the apparatus like expander means, working in the energy accumulating process.

The technical results are achieved, as well, by that the apparatus like expander means, working in the energy returning process is used in the capacity of the source of the mechanical energy, being used in the energy returning process in the apparatus like compressor means, working in the energy returning process.

The technical results are achieved, as well, by that there is a mechanical link between an apparatus like expander means, working in the energy accumulating process, and the using equipment of the mechanical energy, releasing in the energy accumulating process in the apparatus like expander means, working in the energy accumulating process.

The technical results are achieved, as well, by that there is a electrical link between an apparatus like expander means, working in the energy accumulating process, and the using equipment of the mechanical energy, releasing in the energy accumulating process in the apparatus like expander means, working in the energy accumulating process.

The technical results are achieved, as well, by that there is an electro-mechanical link between an apparatus like expander means, working in the energy accumulating process, and the using equipment of the mechanical energy, releasing in the energy accumulating process in the apparatus like expander means, working in the energy accumulating process.

The technical results are achieved, as well, by that there is a mechanical link between an apparatus like compressor means, working in the energy returning process, and the source of the mechanical energy, being used in the energy returning process in the apparatus like compressor means, working in the energy returning process.

The technical results are achieved, as well, by that there is an electrical link between an apparatus like compressor means, working in the energy returning process, and the source of the mechanical energy, being used in the energy returning process in the apparatus like compressor means, working in the energy returning process.

The technical results are achieved, as well, by that there is an electro-mechanical link between an apparatus like compressor means, working in the energy returning process, and the source of the mechanical energy, being used in the energy returning process in the apparatus like compressor means, working in the energy returning process.

The technical results are achieved, as well, by that the link with the source of the mechanical energy, being accumulated, is mechanical one.

The technical results are achieved, as well, by that the link with the source of the mechanical energy, being accumulated, is electrical one.

The technical results are achieved, as well, by that the link with the source of the mechanical energy, being accumulated, is electro-mechanical one.

The technical results are achieved, as well, by that the link with the using equipment of the accumulated mechanical energy is mechanical one.

The technical results are achieved, as well, by that the link with the using equipment of the accumulated mechanical energy is electrical one.

The technical results are achieved, as well, by that the link with the using equipment of the accumulated mechanical energy is electro-mechanical one.

The technical results are achieved, as well, by that the source of the mechanical energy, being accumulated, is an electric motor.

The technical results are achieved, as well, by that the source of the mechanical energy, being accumulated, is a steam or gas turbine.

The technical results are achieved, as well, by that the using equipment of the accumulated mechanical energy is an electric generator.

The technical results are achieved, as well, by that the using equipment of the accumulated mechanical energy is a compressor.

The technical results are achieved, as well, by that a reversible electric machine is used as the source of the mechanical energy, being accumulated, and as the using equipment of the accumulated mechanical energy, and is working as an electric motor in the energy accumulating process and is working as an electric generator in the energy returning process,

The technical results are achieved, as well, by that the conventionally cold heat transfer fluid agent loop is made so that it is possible to control the quantity of the conventionally cold heat transfer fluid agent in the loop.

The technical results are achieved, as well, by that the conventionally hot heat transfer fluid agent loop is made so that it is possible to control the quantity of the conventionally hot heat transfer fluid agent in the loop.

The technical results are achieved, as well, by that the gaseous working medium loop is made so that it is possible to control the quantity of the gaseous working medium in the loop.

The technical results are achieved, as well, by that any of the tanks is heat insulated and is made so that it is possible to bring the heat transfer fluid agent into the working condition and to maintain the heat transfer fluid agent in the working condition.

The technical results are achieved, as well, by that any part of the pipelines is heat insulated one.

The technical results are achieved, as well, by that the heat exchanger "gaseous working medium - conventionally cold heat transfer fluid agent" is made as recuperative one.

The technical results are achieved, as well, by that the heat exchanger "gaseous working medium - conventionally cold heat transfer fluid agent" is made as counterflow one.

The technical results are achieved, as well, by that the heat exchanger "gaseous working medium - conventionally hot heat transfer fluid agent" is made as recuperative one.

The technical results are achieved, as well, by that the heat exchanger "gaseous working medium - conventionally hot heat transfer fluid agent" is made as counterflow one.

The technical results are achieved, as well, by that the pipeline system of the conventionally cold heat transfer fluid agent loop is made so that it is possible to brunch or to divide the heat transfer fluid agent flow with the possibility of outflow or inflow of the brunched or divided flows in the process of the heat exchange between the heat transfer fluid agent and the gaseous working medium.

The technical results are achieved, as well, by that the heat exchanger "gaseous working medium - conventionally cold heat transfer fluid agent" is made so that it is possible to brunch or to divide the heat transfer fluid agent flow with the possibility of outflow or inflow of the brunched or divided flows in the process of the heat exchange between the heat transfer fluid agent and the gaseous working medium.

The technical results are achieved, as well, by that the pipeline system of the conventionally hot heat transfer fluid agent loop is made so that it is possible to brunch or to divide the heat transfer fluid agent flow with the possibility of outflow or inflow of the brunched or divided flows in the process of the heat exchange between the heat transfer fluid agent and the gaseous working medium.

The technical results are achieved, as well, by that the heat exchanger "gaseous working medium - conventionally hot heat transfer fluid agent" is made so that it is possible to brunch or to divide the heat transfer fluid agent flow with the possibility of outflow or inflow of the brunched or divided flows in the process of the heat exchange between the heat transfer fluid agent and the gaseous working medium.

The technical results are achieved, as well, by that the pipeline system of the gaseous working medium loop is made with a possibility of partial or total delivery of the gaseous working medium around the heat exchanger "gaseous working medium - conventionally hot heat transfer fluid agent".

The technical results are achieved, as well, by that the pipeline system of the gaseous working medium loop is made with a possibility of partial or total delivery of the gaseous working medium around the heat exchanger "gaseous working medium - conventionally cold heat transfer fluid agent".

The technical results are achieved, as well, by that the pipeline system of the gaseous working medium loop is made with a possibility of partial or total delivery of the gaseous working medium around the heat exchanger " gaseous working medium cooler," and/or pipeline system of the conventionally cold heat transfer fluid agent loop is made with a possibility of partial or total delivery of the conventionally cold heat transfer fluid agent around the heat exchanger "conventionally cold heat transfer fluid agent cooler", and/or pipeline system of the conventionally hot heat transfer fluid agent loop is made with a possibility of partial or total delivery of the conventionally hot heat transfer fluid agent around the heat exchanger "conventionally hot heat transfer fluid agent cooler."

The technical results are achieved, as well, by that the pipeline system of the gaseous working medium loop is made with a possibility of partial or total delivery of the gaseous working medium around the apparatus like compressor means.

The technical results are achieved, as well, by that the pipeline system of the gaseous working medium loop is made with a possibility of partial or total delivery of the gaseous working medium around the apparatus like expander means.

The technical results are achieved, as well, by that an axial turbo compressor is used in the capacity of an apparatus like compressor means.

The technical results are achieved, as well, by that a radial turbo compressor is used in the capacity of an apparatus like compressor means.

The technical results are achieved, as well, by that an axial - radial turbo compressor is used in the capacity of an apparatus like compressor means.

The technical results are achieved, as well, by that an axial turbo expander is used in the capacity of an apparatus like expander means.

The technical results are achieved, as well, by that a radial turbo expander is used in the capacity of an apparatus like expander means.

The technical results are achieved, as well, by that an axial - radial turbo expander is used in the capacity of an apparatus like expander means.

The technical results are achieved, as well, by that a pump or a system of pumps is used in the capacity of an apparatus or a system, providing moving of the conventionally cold heat transfer fluid agent in the loop.

The technical results are achieved, as well, by that a pump or a system of pumps is used in the capacity of an apparatus or a system, providing moving of the conventionally hot heat transfer fluid agent in the loop.

The technical results are achieved, as well, by that the base of the conventionally cold heat transfer fluid agent is hydrocarbons.

The technical results are achieved, as well, by that the base of the conventionally cold heat transfer fluid agent is organic-silicon compounds.

The technical results are achieved, as well, by that the base of the conventionally cold heat transfer fluid agent is water.

The technical results are achieved, as well, by that the base of the conventionally cold heat transfer fluid agent is a water solution of organic compounds.

The technical results are achieved, as well, by that the base of the conventionally cold heat transfer fluid agent is a water solution of non-organic compounds.

The technical results are achieved, as well, by that the base of the conventionally cold heat transfer fluid agent is a water solution of organic acids salts.

The technical results are achieved, as well, by that the base of the conventionally cold heat transfer fluid agent is spirits, or glycols, or ethers, or aldehyds, or ketons, or mixture of spirits and/or glycols, and/or ethers, and/or aldehyds, and/or ketons.

The technical results are achieved, as well, by that the base of the conventionally hot heat transfer fluid agent is water.

The technical results are achieved, as well, by that the base of the conventionally hot heat transfer fluid agent is hydrocarbons.

The technical results are achieved, as well, by that the base of the conventionally hot heat transfer fluid agent is organic-silicon compounds.

The technical results are achieved, as well, by that the base of the conventionally hot heat transfer fluid agent is melted salts of alkali metals or alkaline-earth metals, or melted mixture of salts of alkali and/or alkaline-earth metals.

The technical results are achieved, as well, by that the base of the conventionally hot heat transfer fluid agent is melted alkali metals or melted alkaline-earth metals, or their mixture.

The technical results are achieved, as well, by that the base of the gaseous working medium is inert gases argon or helium or their mixture.

The technical results are achieved, as well, by that the base of the gaseous working medium is nitrogen.

In an embodiment of the invention realization the technical results are achieved by that the installation for accumulating, storing and returning of a mechanical energy comprises at least, one loop of an conventionally cold heat transfer fluid agent, at least, one loop of an conventionally hot heat transfer fluid agent, at least, one loop of gaseous working medium, connected with, at least, one source of the mechanical energy, being accumulated, and with, at least, one using equipment of the accumulated mechanical energy, in which the energy, being accumulated, is transformed into the gaseous working medium heat energy, and the accumulated heat energy by means of the gaseous working medium is transformed into mechanical energy, and, at least, one heat exchanger-cooler; the conventionally cold heat transfer fluid agent loop is made with the possibility in the interaction with the gaseous working medium loop through, at least, one heat exchanger "gaseous working medium - conventionally cold heat transfer fluid agent" in the energy accumulating process to cool the loop heat transfer fluid agent, but in the energy returning process - to heat the loop heat transfer fluid agent, the conventionally hot heat transfer fluid agent loop is made with the possibility in the interaction with the gaseous working medium loop through, at least, one heat exchanger "gaseous working medium - conventionally hot heat transfer fluid agent" in the energy accumulating process to heat the loop heat transfer fluid agent, but in the energy returning process - to cool the loop heat transfer fluid agent; besides the mentioned one or some heat exchangers "gaseous working medium - conventionally cold heat transfer fluid agent" the loop of the conventionally cold heat transfer fluid agent contains, at least, one tank, at least, one pipeline system, at least, one apparatus or system for providing of the heat transfer fluid agent moving in the loop through one or some mentioned heat exchangers "gaseous working medium - conventionally cold heat transfer fluid agent" from one part of the tank to another or from one tank to another or to others or from some tanks to other ones, besides the mentioned one or some heat exchangers "gaseous working medium - conventionally hot heat transfer fluid agent" the loop of the conventionally hot heat transfer fluid agent contains, at least, one tank, at least, one pipeline system, at least, one apparatus or system for providing of the heat transfer fluid agent moving in the loop through mentioned one or some mentioned heat exchangers "gaseous working medium - conventionally hot heat transfer fluid agent" from one part of the tank to another or from one tank to another or to others or from some tanks to other ones, the gaseous working medium loop besides the mentioned heat exchangers, the mentioned link with the source of the mechanical energy , being accumulated, and the link with the using equipment of the accumulated mechanical energy contains, at least, one pipeline system for providing of gaseous working medium moving in the loop, at least, one apparatus like compressor means for providing of the gaseous working medium compression, which works in the energy accumulating process, at least, one apparatus like expander means for providing of the gaseous working medium expansion, which works in the energy accumulating process, at least, one link with, at least, one using equipment of the mechanical energy, releasing in the process of the energy accumulating in one mentioned apparatus like expander means or in some mentioned apparatuses like expander means, which works or respectively which work in the energy accumulating process, at least, one apparatus like compressor means for providing of the gaseous working medium compression, which works in the energy returning process, at least, one apparatus like expander means for providing of the gaseous working medium expansion, which works in the energy returning process, at least, one link with, at least, one source of the mechanical energy, being used in the energy returning process in one mentioned apparatus like compressor means or in some mentioned apparatuses like compressor means, which works or respectively which work in the energy returning process, at least, one heat exchanger "gaseous working medium - gaseous working medium", working in the energy accumulating process in the part of the loop between the outlet from mentioned one or one of some mentioned heat exchangers "gaseous working medium - conventionally cold heat transfer fluid agent", the nearest to the inlet to the mentioned apparatus like compressor means, working in the energy accumulating process, and the mentioned inlet to mentioned one or one of some mentioned apparatuses like compressor means, working in the energy accumulating process, the nearest to the mentioned outlet from the mentioned heat exchanger "gaseous working medium - conventionally cold heat transfer fluid agent", and in the part of the loop between the outlet from mentioned one or one of some mentioned heat exchangers "gaseous working medium - conventionally hot heat transfer fluid agent", the nearest to the inlet to the mentioned apparatus like expander means, working in the energy accumulating process, and the mentioned inlet to mentioned one or one of some mentioned apparatuses like expander means, working in the energy accumulating process, the nearest to the mentioned outlet from the mentioned heat exchanger "gaseous working medium - conventionally hot heat transfer fluid agent", and/or at least, one heat exchanger "gaseous working medium - gaseous working medium", working in the energy returning process in the part of the loop between the outlet from mentioned one or one of some mentioned apparatuses like compressor means, working in the energy returning process, the nearest to the inlet to the mentioned heat exchanger "gaseous working medium - conventionally hot heat transfer fluid agent", and the mentioned inlet to mentioned one or one of some mentioned heat exchangers "gaseous working medium - conventionally hot heat transfer fluid agent", the nearest to the mentioned outlet from the mentioned apparatus like compressor means, working in the energy returning process, and in the part of the loop between the outlet from mentioned one or one of some mentioned apparatuses like expander means, working in the energy returning process, the nearest to the inlet to the mentioned heat exchanger "gaseous working medium - conventionally cold heat transfer fluid agent", and the mentioned inlet to mentioned one or one of some mentioned heat exchangers "gaseous working medium - conventionally cold heat transfer fluid agent", the nearest to the mentioned outlet from the mentioned apparatus like expander means, working in the energy returning process, and/or at least, one heat exchanger "gaseous working medium - gaseous working medium", working in the energy accumulating process in the part of the loop between the outlet from mentioned one or one of some mentioned heat exchangers "gaseous working medium - conventionally cold heat transfer fluid agent", the nearest to the inlet to the mentioned apparatus like compressor means, working in the energy accumulating process, and the mentioned inlet to mentioned one or one of some mentioned apparatuses like compressor means, working in the energy accumulating process, the nearest to the mentioned outlet from the mentioned heat exchanger "gaseous working medium - conventionally cold heat transfer fluid agent", and in the part of the loop between the outlet from mentioned one or one of some mentioned heat exchangers "gaseous working medium - conventionally hot heat transfer fluid agent", the nearest to the inlet to the mentioned apparatus like expander means, working in the energy accumulating process, and the mentioned inlet to mentioned one or one of some mentioned apparatuses like expander means, working in the energy accumulating process, the nearest to the mentioned apparatus like expander means, working in the energy accumulating process, and working in the energy returning process in the part of the loop between the outlet from mentioned one or one of some mentioned apparatuses like compressor means, working in the energy returning process, the nearest to the inlet to the mentioned heat exchanger "gaseous working medium -conventionally hot heat transfer fluid agent", and the mentioned inlet to mentioned one or one of some mentioned heat exchangers "gaseous working medium - conventionally hot heat transfer fluid agent", the nearest to the outlet from the mentioned apparatus like compressor means, working in the energy returning process, and in the part of the loop between the outlet from mentioned one or one of some mentioned apparatuses like expander means, working in the energy returning process, the nearest to the inlet to the mentioned heat exchanger "gaseous working medium - conventionally cold heat transfer fluid agent", and the mentioned inlet to mentioned one or one of some mentioned heat exchangers "gaseous working medium - conventionally cold heat transfer fluid agent", the nearest to the mentioned outlet from the mentioned apparatus like expander means, working in the energy returning process.

The technical results are achieved, as well, by that the heat exchanger-cooler is made as a heat exchanger "gaseous working medium cooler" in the gaseous working medium loop for providing of gaseous working medium cooling in the energy returning process, working in the part of the loop between the outlet from mentioned one or one of some mentioned heat exchangers "gaseous working medium - gaseous working medium", the nearest to the inlet to the mentioned heat exchanger "gaseous working medium - conventionally cold heat transfer fluid agent" and the mentioned inlet to mentioned one or one of some mentioned heat exchangers "gaseous working medium - conventionally cold heat transfer fluid agent", the nearest to the mentioned outlet from the mentioned heat exchanger "gaseous working medium - gaseous working medium", and/or as a heat exchanger "gaseous working medium cooler" in the gaseous working medium loop for providing of gaseous working medium cooling in the energy accumulating process, working in the part of the loop between the outlet from mentioned one or one of some mentioned heat exchangers "gaseous working medium - conventionally cold heat transfer fluid agent", the nearest to the inlet to the mentioned heat exchanger "gaseous working medium - gaseous working medium" and the mentioned inlet to mentioned one or one of some mentioned heat exchangers "gaseous working medium - gaseous working medium ", the nearest to the mentioned outlet from the mentioned heat exchanger "gaseous working medium - conventionally cold heat transfer fluid agent", and/or as a heat exchanger "conventionally cold heat transfer fluid agent cooler" in the loop of the conventionally cold heat transfer fluid agent for providing of conventionally cold heat transfer fluid agent cooling, working in the energy accumulating process in the part of the loop between the outlet from the mentioned part of the mentioned loop tank, or the outlet from the mentioned loop tank, or the outlet from the mentioned loop tanks and the inlet to the mentioned heat exchanger, or mentioned heat exchangers "gaseous working medium - conventionally cold heat transfer fluid agent", and/or working in the energy returning process in part of the loop between the outlet from the mentioned heat exchanger, or mentioned heat exchangers "gaseous working medium - conventionally cold heat transfer fluid agent" and the inlet to the mentioned part of the loop tank, or the mentioned loop tank, or the mentioned loop tanks.

The technical results are achieved, as well, by that an apparatus like compressor means, working in the energy accumulating process, is used in the capacity of the using equipment of the mechanical energy, releasing in the apparatus like expander means, working in the energy accumulating process.

The technical results are achieved, as well, by that an apparatus like expander means, working in the energy returning process, is used in the capacity of the source of the mechanical energy, being used in the apparatus like compressor means, working in the energy returning process.

The technical results are achieved, as well, by that there is a mechanical link between an apparatus like expander means, working in the energy accumulating process, and the using equipment of the mechanical energy, releasing in the energy accumulating process in the apparatus like expander means, working in the energy accumulating process.

The technical results are achieved, as well, by that there is a electrical link between an apparatus like expander means, working in the energy accumulating process, and the using equipment of the mechanical energy, releasing in the energy accumulating process in the apparatus like expander means, working in the energy accumulating process.

The technical results are achieved, as well, by that there is a electro-mechanical link between an apparatus like expander means, working in the energy accumulation process, and the using equipment of the mechanical energy, releasing in the energy accumulation process in the apparatus like expander means, working in the energy accumulating process.

The technical results are achieved, as well, by that there is a mechanical link between an apparatus like compressor means, working in the energy returning process, and the source of the mechanical energy, being used in the energy returning process in the apparatus like compressor means, working in the energy returning process.

The technical results are achieved, as well, by that there is an electrical link between an apparatus like compressor means, working in the energy returning process, and the source of the mechanical energy, being used in the energy returning process in the apparatus like compressor means, working in the energy returning process.

The technical results are achieved, as well, by that there is a electro-mechanical link between an apparatus like compressor means, working in the energy returning process, and the source of the mechanical energy, being used in the energy returning process in the apparatus like compressor means, working in the energy returning process.

The technical results are achieved, as well, by that the link with the source of the mechanical energy, being accumulated, is mechanical one.

The technical results are achieved, as well, by that the link with the source of the mechanical energy, being accumulated, is electrical one.

The technical results are achieved, as well, by that the link with the source of the mechanical energy, being accumulated, is electro-mechanical one.

The technical results are achieved, as well, by that the link with the using equipment of the accumulated mechanical energy is mechanical one.

The technical results are achieved, as well, by that the link with the using equipment of the accumulated mechanical energy is electrical one.

The technical results are achieved, as well, by that the link with the using equipment of the accumulated mechanical energy is electro-mechanical one.

The technical results are achieved, as well, by that the source of the mechanical energy, being accumulated, is an electric motor.

The technical results are achieved, as well, by that the source of the mechanical energy, is a steam or gas turbine.

The technical results are achieved, as well, by that the using equipment of the accumulated mechanical energy is an electric generator.

The technical results are achieved, as well, by that the using equipment of the accumulated mechanical energy is a compressor.

The technical results are achieved, as well, by that an reversible electric machine is used as the source of the mechanical energy, being accumulated, and as the using equipment of the accumulated mechanical energy, and is working as an electric motor in the energy accumulating process and is working as an electric generator in the energy returning process.

The technical results are achieved, as well, by that the conventionally cold heat transfer fluid agent loop is made so that it is possible to control the quantity of the conventionally cold heat transfer fluid agent in the loop.

The technical results are achieved, as well, by that the conventionally hot heat transfer fluid agent loop is made so that it is possible to control the quantity of the conventionally hot heat transfer fluid agent in the loop.

The technical results are achieved, as well, by that the gaseous working medium loop is made so that it is possible to control the quantity of the gaseous working medium in the loop.

The technical results are achieved, as well, by that any of the tanks is heat insulated and is made so that it is possible to bring the heat transfer fluid agent into the working condition and to maintain the heat transfer fluid agent in the working condition.

The technical results are achieved, as well, by that any part of the pipelines is heat insulated one.

The technical results are achieved, as well, by that the heat exchanger "gaseous working medium - conventionally cold heat transfer fluid agent" is made as recuperative one.

The technical results are achieved, as well, by that the heat exchanger "gaseous working medium - conventionally cold heat transfer fluid agent" is made as counterflow one.

The technical results are achieved, as well, by that the heat exchanger "gaseous working medium - conventionally hot heat transfer fluid agent" is made as recuperative one.

The technical results are achieved, as well, by that the heat exchanger "gaseous working medium - conventionally hot heat transfer fluid agent" is made as counterflow one.

The technical results are achieved, as well, by that the heat exchanger "gaseous working medium - gaseous working medium" is made as recuperative one.

The technical results are achieved, as well, by that the heat exchanger "gaseous working medium - gaseous working medium" is made as counterflow one.

The technical results are achieved, as well, by that the pipeline system of the conventionally cold heat transfer fluid agent loop is made so that it is possible to brunch or to divide the heat transfer fluid agent flow with the possibility of outflow or inflow of the brunched or divided flows in the process of the heat exchange between the heat transfer fluid agent and the gaseous working medium.

The technical results are achieved, as well, by that the heat exchanger "gaseous working medium - conventionally cold heat transfer fluid agent" is made so that it is possible to brunch or to divide the heat transfer fluid agent flow with the possibility of outflow or inflow of the brunched or divided flows in the process of the heat exchange between the heat transfer fluid agent and the gaseous working medium.

The technical results are achieved, as well, by that the pipeline system of the conventionally hot heat transfer fluid agent loop is made so that it is possible to brunch or to divide the heat transfer fluid agent flow with the possibility of outflow or inflow of the brunched or divided flows in the process of the heat exchange between the heat transfer fluid agent and the gaseous working medium.

The technical results are achieved, as well, by that the heat exchanger "gaseous working medium - conventionally hot heat transfer fluid agent" is made so that it is possible to brunch or to divide the heat transfer fluid agent flow with the possibility of outflow or inflow of the brunched or divided flows in the process of the heat exchange between the heat transfer fluid agent and the gaseous working medium.

The technical results are achieved, as well, by that the pipeline system of the gaseous working medium loop is made with a possibility of partial or total delivery of the gaseous working medium around the heat exchanger "gaseous working medium - conventionally hot heat transfer fluid agent".

The technical results are achieved, as well, by that the pipeline system of the gaseous working medium loop is made with a possibility of partial or total delivery of the gaseous working medium around the heat exchanger "gaseous working medium - conventionally cold heat transfer fluid agent".

The technical results are achieved, as well, by that the pipeline system of the gaseous working medium loop is made with a possibility of partial or total delivery of the gaseous working medium around the heat exchanger "gaseous working medium - gaseous working medium ".

The technical results are achieved, as well, by that the pipeline system of the gaseous working medium loop is made with a possibility of partial or total delivery of the gaseous working medium around the heat exchanger "gaseous working medium cooler," and/or pipeline system of the conventionally cold heat transfer fluid agent loop is made with a possibility of partial or total delivery of the conventionally cold heat transfer fluid agent around the heat exchanger "conventionally cold heat transfer fluid agent cooler", and/or pipeline system of the conventionally hot heat transfer fluid agent loop is made with a possibility of partial or total delivery of the conventionally hot heat transfer fluid agent around the heat exchanger "conventionally hot heat transfer fluid agent cooler."

The technical results are achieved, as well, by that the pipeline system of the gaseous working medium loop is made with a possibility of partial or total delivery of the gaseous working medium around the apparatus like compressor means.

The technical results are achieved, as well, by that the pipeline system of the gaseous working medium loop is made with a possibility of partial or total delivery of the gaseous working medium around the apparatus like expander means.

The technical results are achieved, as well, by that an axial turbo compressor is used in the capacity of an apparatus like compressor means.

The technical results are achieved, as well, by that a radial turbo compressor is used in the capacity of an apparatus like compressor means.

The technical results are achieved, as well, by that an axial - radial turbo compressor is used in the capacity of an apparatus like compressor means.

The technical results are achieved, as well, by that an axial turbo expander is used in the capacity of an apparatus like expander means.

The technical results are achieved, as well, by that a radial turbo expander is used in the capacity of an apparatus like expander means.

The technical results are achieved, as well, by that an axial-radial turbo expander is used in the capacity of an apparatus like expander means.

The technical results are achieved, as well, by that a pump or a system of pumps is used in the capacity of an apparatus or a system, providing moving of the conventionally cold heat transfer fluid agent in the loop.

The technical results are achieved, as well, by that a pump or a system of pumps is used in the capacity of an apparatus or a system, providing moving of the conventionally hot heat transfer fluid agent in the loop.

The technical results are achieved, as well, by that the base of the conventionally cold heat transfer fluid agent is hydrocarbons.

The technical results are achieved, as well, by that the base of the conventionally cold heat transfer fluid agent is organic-silicon compounds.

The technical results are achieved, as well, by that the base of the conventionally cold heat transfer fluid agent is water.

The technical results are achieved, as well, by that the base of the conventionally cold heat transfer fluid agent is a water solution of organic compounds.

The technical results are achieved, as well, by that the base of the conventionally cold heat transfer fluid agent is a water solution of non-organic compounds.

The technical results are achieved, as well, by that the base of the conventionally cold heat transfer fluid agent is a water solution of organic acids salts.

The technical results are achieved, as well, by that the base of the conventionally cold heat transfer fluid agent is spirits, or glycols, or ethers, or aldehyds, or ketons, or mixture of spirits and/or glycols, and/or ethers, and/or aldehyds, and/or ketons.

The technical results are achieved, as well, by that the base of the conventionally hot heat transfer fluid agent is water.

The technical results are achieved, as well, by that the base of the conventionally hot heat transfer fluid agent is hydrocarbons.

The technical results are achieved, as well, by that the base of the conventionally hot heat transfer fluid agent is organic-silicon compounds.

The technical results are achieved, as well, by that the base of the conventionally hot heat transfer fluid agent is melted salts of alkali metals or alkaline-earth metals, or melted mixture of salts of alkali and/or alkaline-earth metals.

The technical results are achieved, as well, by that the base of the conventionally hot heat transfer fluid agent is melted alkali metals or melted alkaline-earth metals, or their mixture.

The technical results are achieved, as well, by that the base of the gaseous working medium is inert gases argon or helium or their mixture.

The technical results are achieved, as well, by that the base of the gaseous working medium is nitrogen.

In the embodiment of the realization the technical results are achieved by that in the method of accumulating, storing and returning of a mechanical energy in the energy accumulating process the mechanical energy, being accumulated, is received from the source of the mechanical energy, being accumulated, and through the link with the apparatus like compressor means, working in the energy accumulating process, the received mechanical energy is supplied to the mentioned apparatus like compressor means, working in the energy accumulating process, in the same time the gaseous working medium, circulating in the gaseous working medium loop, is supplied to the mentioned apparatus like compressor means, working in the energy accumulating process, the gaseous working medium is compressed in the mentioned apparatus like compressor means, working in the energy accumulating process, thereby the gaseous working medium pressure and temperature are increased, after that the gaseous working medium is supplied via a pipeline into the heat exchanger "gaseous working medium - conventionally hot heat transfer fluid agent", where the gaseous working medium is cooled and simultaneously the conventionally hot heat transfer fluid agent is heated, at the same time the conventionally hot heat transfer fluid agent is moved in the conventionally hot heat transfer fluid agent loop, in case of need, through the heat exchanger-cooler of the conventionally hot heat transfer fluid agent loop, in which the conventionally hot heat transfer fluid agent is cooled and after that through the mentioned heat exchanger "gaseous working medium - conventionally hot heat transfer fluid agent", or only through the mentioned heat exchanger "gaseous working medium - conventionally hot heat transfer fluid agent" with the help of the apparatus for providing of the conventionally hot heat transfer fluid agent moving from one part of the tank in the conventionally hot heat transfer fluid agent loop, in which the conventionally hot heat transfer fluid agent is heated less, to another part of the tank with the conventionally hot heat transfer fluid agent, heated more, or from one tank in the conventionally hot heat transfer fluid agent loop, in which conventionally hot heat transfer fluid agent is heated less, to another tank with the conventionally hot heat transfer fluid agent, heated more, or to others with the conventionally hot heat transfer fluid agent, heated more, or from some tanks in the conventionally hot heat transfer fluid agent loop, in which the conventionally hot heat transfer fluid agent is heated less, to the other tanks with the conventionally hot heat transfer fluid agent, heated more, after leaving the mentioned heat exchanger "gaseous working medium - conventionally hot heat transfer fluid agent," the gaseous working medium, in case of need, is supplied to the heat exchanger-cooler of the gaseous working medium loop, working in the energy accumulating process, in which gaseous working medium is cooled and then is supplied via the pipeline into the apparatus like expander means, working in the energy accumulating process, or at once after leaving the mentioned heat exchanger "gaseous working medium - conventionally hot heat transfer fluid agent," the gaseous working medium is supplied via the pipeline into the mentioned apparatus like expander means, working in the energy accumulating process, in which the gaseous working medium is expanded and the gaseous working medium pressure and temperature are reduced, at the same time via the link with the mentioned apparatus like expander means, working in the energy accumulating process, the mechanical energy, releasing in the mentioned apparatus like expander means, working in the energy accumulating process, is removed, after leaving the mentioned apparatus like expander means, working in the energy accumulating process, the gaseous working medium is supplied via a pipeline into the heat exchanger "gaseous working medium - conventionally cold heat transfer fluid agent", where the gaseous working medium is heated and simultaneously the conventionally cold heat transfer fluid agent is cooled, at the same time the conventionally cold heat transfer fluid agent is moved in the conventionally cold heat transfer fluid agent loop, in case of need, through the heat exchanger - cooler of the conventionally cold heat transfer fluid agent loop, in which the conventionally cold heat transfer fluid agent is cooled and after that through the mentioned heat exchanger "gaseous working medium - conventionally cold heat transfer fluid agent", or only through the mentioned heat exchanger "gaseous working medium - conventionally cold heat transfer fluid agent" with the help of the apparatus for providing of the conventionally cold heat transfer fluid agent moving from one part of the tank in the conventionally cold heat transfer fluid agent loop, in which the conventionally cold heat transfer fluid agent is heated more, to another part of the tank with the conventionally cold heat transfer fluid agent, heated less, or from one tank in the conventionally cold heat transfer fluid agent loop, in which conventionally cold heat transfer fluid agent is heated more, to another tank with the conventionally cold heat transfer fluid agent, heated less, or to others with the conventionally cold heat transfer fluid agent, heated less, or from some tanks in the conventionally cold heat transfer fluid agent loop, in which conventionally cold heat transfer fluid agent is heated more, to the other tanks with the conventionally cold heat transfer fluid agent, heated less, after leaving the mentioned heat exchanger "gaseous working medium - conventionally cold heat transfer fluid agent," the gaseous working medium, in case of need, is supplied to the heat exchanger-cooler of the gaseous working medium loop, in which the gaseous working medium is cooled and then again the gaseous working medium is supplied via the pipeline into the mentioned apparatus like compressor means, working in the energy accumulating process, or at once after leaving the mentioned heat exchanger "gaseous working medium - conventionally cold heat transfer fluid agent," the gaseous working medium again is supplied via the pipeline into the mentioned apparatus like compressor means, working in the energy accumulating process; in the energy returning process the gaseous working medium, circulating in the gaseous working medium loop, is supplied into the apparatus like expander means, working in the energy returning process, the gaseous working fluid is expanded in the mentioned apparatus like expander means, working in the energy returning process, at the same time the gaseous working medium pressure and temperature are reduced, at the same time via the link with the mentioned apparatus like expander means, working in the energy returning process, the mechanical energy, releasing in the mentioned apparatus like expander means, working in the energy returning process, is supplied to the user of the accumulated mechanical energy, after leaving the mentioned apparatus like expander means, working in the energy returning process, in case of need, the gaseous working medium is supplied via the pipeline into the heat exchanger-coolerof the gaseous working medium loop, in which gaseous working medium is cooled, then the gaseous working medium is supplied via the pipeline into the heat exchanger "gaseous working medium - conventionally cold heat transfer fluid agent," or at once after leaving the mentioned apparatus like expander means, working in the energy returning process, the gaseous working medium is supplied via the pipeline into the heat exchanger "gaseous working medium - conventionally cold heat transfer fluid agent", in which gaseous working medium is cooled, and simultaneously the conventionally cold heat transfer fluid agent is heated, at the same time the conventionally cold heat transfer fluid agent is moved in the conventionally cold heat transfer fluid agent loop through the mentioned heat exchanger "gaseous working medium - conventionally cold heat transfer fluid agent", and then, in case of need, through the heat exchanger-cooler of the conventionally cold heat transfer fluid agent loop, in which the conventionally cold heat transfer fluid agent is cooled, or only through the mentioned heat exchanger "gaseous working medium - conventionally cold heat transfer fluid agent" with the help of the apparatus for providing the conventionally cold heat transfer fluid agent moving from one part of the tank in the conventionally cold heat transfer fluid agent loop, in which the conventionally cold heat transfer fluid agent is heated less, to another part of the tank with the conventionally cold heat transfer fluid agent, heated more, or from one tank in the conventionally cold heat transfer fluid agent loop, in which the conventionally cold heat transfer fluid agent is heated less, to another tank with the conventionally cold heat transfer fluid agent, heated more, or to others with the conventionally cold heat transfer fluid agent, heated more, or from some tanks in the conventionally cold heat transfer fluid agent loop, in which the conventionally cold heat transfer fluid agent is heated less, to the other tanks with the conventionally cold heat transfer fluid agent, heated more, after leaving the mentioned heat exchanger "gaseous working medium-conventionally cold heat transfer fluid agent" the gaseous working fluid is supplied via the pipeline to the apparatus like the compressor means, working in the energy returning process, where the gaseous working fluid is compressed, the gaseous working fluid pressure and temperature are increased, at the same time via the link with the mentioned apparatus like compressor means, working in the energy returning process, the mechanical energy is supplied to the mentioned apparatus like compressor means, working in the energy returning process, after leaving the mentioned apparatus like compressor means, working in the energy returning process, in case of need, gaseous working medium is supplied via the pipeline to the heat exchanger-cooler of the gaseous working medium loop, in which the gaseous working medium is cooled, after that the gaseous working medium is supplied via the pipeline into the heat exchanger "gaseous working medium - conventionally hot heat transfer fluid agent," or at once after leaving the mentioned apparatus like compressor means, working in the energy returning process, the gaseous working medium is supplied via the pipeline into the heat exchanger "gaseous working medium - conventionally hot heat transfer fluid agent," in which the gaseous working medium is heated and simultaneously the conventionally hot heat transfer fluid agent is cooled, at the same time the conventionally hot heat transfer fluid agent is moved in the conventionally hot heat transfer fluid agent loop through the mentioned heat exchanger "gaseous working medium - conventionally hot heat transfer fluid agent" and then, in case of need, through the heat exchanger-cooler of the conventionally hot heat transfer fluid agent loop, in which the conventionally hot heat transfer fluid agent is cooled, or only through the mentioned heat exchanger "gaseous working medium - conventionally hot heat transfer fluid agent" with the help of the apparatus for providing the conventionally hot heat transfer fluid agent moving from one part of the tank in the conventionally hot heat transfer fluid agent loop, in which the conventionally hot heat transfer fluid agent is heated more, to another part of the tank with the conventionally hot heat transfer fluid agent, heated less, or from one tank in the conventionally hot heat transfer fluid agent loop, in which the conventionally hot heat transfer fluid agent is heated more, to another tank with the conventionally hot heat transfer fluid agent, heated less, or to others with the conventionally hot heat transfer fluid agent, heated less, or from some tanks in the conventionally hot heat transfer fluid agent loop, in which the conventionally hot heat transfer fluid agent is heated more, to other tanks with the conventionally hot heat transfer fluid agent, heated less, after leaving the mentioned heat exchanger "gaseous working medium - conventionally hot heat transfer fluid agent" gaseous working medium again is supplied via the pipeline into the mentioned apparatus like expander means, working in the energy returning process; in the process of accumulated energy storing the circulation of the gaseous working medium in the gaseous working medium loop is lowered up to the preferable minimum or is terminated, the moving of the conventionally hot heat transfer fluid agent in the conventionally hot heat transfer fluid agent loop and the moving of the conventionally cold heat transfer fluid agent in the conventionally cold heat transfer fluid agent loop are lowered up to the preferable minimum or terminated.

The technical results are achieved, as well, by that the mechanical energy, being accumulated, is received in the energy accumulating process from the source of the mechanical energy, being accumulated, and through the link with the apparatus like compressor means, working in the energy accumulating process, the received mechanical energy is supplied to the mentioned apparatus like compressor means, working in the energy accumulating process, in the same time the gaseous working medium, circulating in the gaseous working medium loop, is supplied to the mentioned apparatus like compressor means, working in the energy accumulating process, the gaseous working medium is compressed in the mentioned apparatus like compressor means, working in the energy accumulating process, thereby the gaseous working medium pressure and temperature are increased, after that the gaseous working medium is supplied via a pipeline into the heat exchanger "gaseous working medium - conventionally hot heat transfer fluid agent", where the gaseous working medium is cooled and simultaneously the conventionally hot heat transfer fluid agent is heated, at the same time the conventionally hot heat transfer fluid agent is moved in the conventionally hot heat transfer fluid agent loop, in case of need, through the heat exchanger "cooler of the conventionally hot heat transfer fluid agent", in which the conventionally hot heat transfer fluid agent is cooled, and after that through the mentioned heat exchanger "gaseous working medium - conventionally hot heat transfer fluid agent", or only through the mentioned heat exchanger "gaseous working medium - conventionally hot heat transfer fluid agent" with the help of the apparatus for providing of the conventionally hot heat transfer fluid agent moving from one part of the tank in the conventionally hot heat transfer fluid agent loop, in which the conventionally hot heat transfer fluid agent is heated less, to another part of the tank with the conventionally hot heat transfer fluid agent, heated more, or from one tank in the conventionally hot heat transfer fluid agent loop, in which the conventionally hot heat transfer fluid agent is heated less, to another tank with the conventionally hot heat transfer fluid agent, heated more, or to others with the conventionally hot heat transfer fluid agent, heated more, or from some tanks in the conventionally hot heat transfer fluid agent loop, in which the conventionally hot heat transfer fluid agent is heated less, to the other tanks with the conventionally hot heat transfer fluid agent, heated more, after leaving the mentioned heat exchanger "gaseous working medium - conventionally hot heat transfer fluid agent", the gaseous working medium, in case of need, is supplied to the heat exchanger - cooler of the gaseous working medium, working in the energy accumulating process, in which gaseous working medium is cooled and then is supplied via the pipeline into the apparatus like expander means, working in the energy accumulating process, or at once after leaving the mentioned heat exchanger "gaseous working medium - conventionally hot heat transfer fluid agent," the gaseous working medium is supplied via the pipeline into the mentioned apparatus like expander means, working in the energy accumulating process, in which the gaseous working medium is expanded, and the gaseous working medium pressure and temperature are reduced, at the same time via the link with the mentioned apparatus like expander means, working in the energy accumulating process, the mechanical energy, releasing in the mentioned apparatus like expander means, working in the energy accumulating process, is removed, after leaving the mentioned apparatus like expander means, working in the energy accumulating process, the gaseous working medium is supplied via a pipeline into the heat exchanger "gaseous working medium - conventionally cold heat transfer fluid agent", where the gaseous working medium is heated and simultaneously the conventionally cold heat transfer fluid agent is cooled, at the same time the conventionally cold heat transfer fluid agent is moved in the conventionally cold heat transfer fluid agent loop, in case of need, through the heat exchanger "cooler of the conventionally cold heat transfer fluid agent", in which the conventionally cold heat transfer fluid agent is cooled, and after that through the mentioned heat exchanger "gaseous working medium - conventionally cold heat transfer fluid agent", or only through the mentioned heat exchanger "gaseous working medium - conventionally cold heat transfer fluid agent" with the help of the apparatus for providing of the conventionally cold heat transfer fluid agent moving from one part of the tank in the conventionally cold heat transfer fluid agent loop, in which the conventionally cold heat transfer fluid agent is heated more, to another part of the tank with the conventionally cold heat transfer fluid agent, heated less, or from one tank in the conventionally cold heat transfer fluid agent loop, in which conventionally cold heat transfer fluid agent is heated more, to another tank with the conventionally cold heat transfer fluid agent, heated less, or to others with the conventionally cold heat transfer fluid agent, heated less, or from some tanks in the conventionally cold heat transfer fluid agent loop, in which the conventionally cold heat transfer fluid agent is heated more, to the other tanks with the conventionally cold heat transfer fluid agent, heated less, after leaving the mentioned heat exchanger "gaseous working medium - conventionally cold heat transfer fluid agent," the gaseous working medium, in case of need, is supplied to the heat exchanger "cooler of the gaseous working medium", in which the gaseous working medium is cooled and then again the gaseous working medium is supplied via the pipeline into the mentioned apparatus like compressor means, working in the energy accumulating process, or at once after leaving the mentioned heat exchanger "gaseous working medium - conventionally cold heat transfer fluid agent," the gaseous working medium again is supplied via the pipeline into the mentioned apparatus like compressor means, working in the energy accumulating process; in the energy returning process the gaseous working medium, circulating in the gaseous working medium loop, is supplied into the apparatus like expander means, working in the energy returning process, the gaseous working medium is expanded in the mentioned apparatus like expander means, working in the energy returning process, at the same time the gaseous working medium pressure and temperature are reduced, at the same time via the link with the mentioned apparatus like expander means, working in the energy returning process, the mechanical energy, releasing in the mentioned apparatus like expander means, working in the energy returning process, is supplied to the user of the accumulated mechanical energy, after leaving the mentioned apparatus like expander means working in the energy returning process, in case of need, the gaseous working medium is supplied via the pipeline into the heat exchanger "gaseous working medium cooler", in which gaseous working medium is cooled, then the gaseous working medium is supplied via the pipeline into the heat exchanger "gaseous working medium - conventionally cold heat transfer fluid agent," or at once after leaving the mentioned apparatus like expander means, working in the energy returning process, the gaseous working medium is supplied via the pipeline into the mentioned heat exchanger "gaseous working medium - conventionally cold heat transfer fluid agent", in which gaseous working medium is cooled, and simultaneously the conventionally cold heat transfer fluid agent is heated, at the same time the conventionally cold heat transfer fluid agent is moved in the conventionally cold heat transfer fluid agent loop through the mentioned heat exchanger "gaseous working medium - conventionally cold heat transfer fluid agent", and then, in case of need, through the heat exchanger "cooler of the conventionally cold heat transfer fluid agent", in which the conventionally cold heat transfer fluid agent is cooled, or only through the mentioned heat exchanger "gaseous working medium - conventionally cold heat transfer fluid agent" with the help of the apparatus for providing the conventionally cold heat transfer fluid agent moving from one part of the tank in the conventionally cold heat transfer fluid agent loop, in which the conventionally cold heat transfer fluid agent is heated less, to another part of the tank with the conventionally cold heat transfer fluid agent, heated more, or from one tank in the conventionally cold heat transfer fluid agent loop, in which the conventionally cold heat transfer fluid agent is heated less, to another tank with the conventionally cold heat transfer fluid agent, heated more, or to others with the conventionally cold heat transfer fluid agent, heated more, or from some tanks in the conventionally cold heat transfer fluid agent loop, in which conventionally cold heat transfer fluid agent is heated less, to the other tanks with the conventionally cold heat transfer fluid agent, heated more, after leaving the mentioned heat exchanger "gaseous working medium - conventionally cold heat transfer fluid agent", the gaseous working medium is supplied via the pipeline to the apparatus like compressor means, working in the energy returning process, where the gaseous working medium is compressed, the gaseous working medium pressure and temperature are increased, at the same time via the link with the mentioned apparatus like compressor means, working in the energy returning process, the mechanical energy is supplied to the mentioned apparatus like compressor means, working in the energy returning process, after leaving the mentioned apparatus like compressor means, working in the energy returning process, in case of need, gaseous working medium is supplied via the pipeline to the heat exchanger "gaseous working medium cooler", in which the gaseous working medium is cooled, after that the gaseous working medium is supplied via the pipeline into the heat exchanger "gaseous working medium - conventionally hot heat transfer fluid agent," or at once after leaving the mentioned apparatus like compressor means, working in the energy returning process, the gaseous working medium is supplied via the pipeline into the heat exchanger "gaseous working medium - conventionally hot heat transfer fluid agent", in which the gaseous working medium is heated and simultaneously the conventionally hot heat transfer fluid agent is cooled, at the same time the conventionally hot heat transfer fluid agent is moved in the conventionally hot heat transfer fluid agent loop through the mentioned heat exchanger "gaseous working medium - conventionally hot heat transfer fluid agent" and then, in case of need, through the heat exchanger "cooler of the conventionally hot heat transfer fluid agent", in which the conventionally hot heat transfer fluid agent is cooled, or only through the mentioned heat exchanger "gaseous working medium - conventionally hot heat transfer fluid agent" with the help of the apparatus for providing the conventionally hot heat transfer fluid agent moving from one part of the tank in the conventionally hot heat transfer fluid agent loop, in which the conventionally hot heat transfer fluid agent is heated more, to another part of the tank with the conventionally hot heat transfer fluid agent, heated less, or from one tank in the conventionally hot heat transfer fluid agent loop, in which conventionally hot heat transfer fluid agent is heated more, to another tank with the conventionally hot heat transfer fluid agent, heated less, or to others with the conventionally hot heat transfer fluid agent, heated less, or from some tanks in the conventionally hot heat transfer fluid agent loop, in which the conventionally hot heat transfer fluid agent is heated more, to other tanks with the conventionally hot heat transfer fluid agent, heated less, after leaving the mentioned heat exchanger "gaseous working medium - conventionally hot heat transfer fluid agent" gaseous working medium again is supplied via the pipeline into the mentioned apparatus like expander means, working in the energy returning process; in the process of accumulated energy storing the circulation of the gaseous working medium in the gaseous working medium loop is lowered up to the preferable minimum or is terminated, the moving of the conventionally hot heat transfer fluid agent in the conventionally hot heat transfer fluid agent loop and the moving of the conventionally cold heat transfer fluid agent in the conventionally cold heat transfer fluid agent loop are lowered up to the preferable minimum or terminated.

The technical results are achieved, as well, by that the mechanical energy, releasing in the apparatus like expander means, working in the energy accumulating process, is supplied via the link to the apparatus like compressor means, working in the energy accumulating process.

The technical results are achieved, as well, by that the mechanical energy, releasing in the apparatus like expander means, working in the energy returning process, is supplied via the link to the apparatus like compressor means, working in the energy returning process.

The technical results are achieved, as well, by that the energy accumulating process is terminated at depleting of the conventionally hot heat transfer fluid agent, heated less, in the part of the tank in the conventionally hot heat transfer fluid agent loop with the conventionally hot heat transfer fluid agent, heated less, or in the tank in the conventionally hot heat transfer fluid agent loop with the conventionally hot heat transfer fluid agent, heated less, or in the tanks in the conventionally hot heat transfer fluid agent loop with the conventionally hot heat transfer fluid agent, heated less.

The technical results are achieved, as well, by that the energy accumulating process is terminated at filling with the conventionally hot heat transfer fluid agent, heated more, the part of the tank in the conventionally hot heat transfer fluid agent loop with the conventionally hot heat transfer fluid agent, heated more, or at filling the tank in the conventionally hot heat transfer fluid agent loop with the conventionally hot heat transfer fluid agent, heated more, or the tanks in the conventionally hot heat transfer fluid agent loop with the conventionally hot heat transfer fluid agent, heated more.

The technical results are achieved, as well, by that the energy accumulating process is terminated at depleting of the conventionally cold heat transfer fluid agent, heated more, in the part of the tank in the conventionally cold heat transfer fluid agent loop with the conventionally cold heat transfer fluid agent, heated more, or in the tank in the conventionally cold heat transfer fluid agent loop with the conventionally cold heat transfer fluid agent, heated more, or in the tanks in the conventionally cold heat transfer fluid agent loop with the conventionally cold heat transfer fluid agent, heated more.

The technical results are achieved, as well, by that the energy accumulating process is terminated at filling with the conventionally cold heat transfer fluid agent, heated less, the part of the tank in the conventionally cold heat transfer fluid agent loop with the conventionally cold heat transfer fluid agent, heated less, or at filling the tank in the conventionally cold heat transfer fluid agent loop with the conventionally cold heat transfer fluid agent, heated less, or the tanks in the conventionally cold heat transfer fluid agent loop with the conventionally cold heat transfer fluid agent, heated less.

The technical results are achieved, as well, by that the energy returning process is terminated at depleting of the conventionally hot heat transfer fluid agent, heated more, in the part of the tank in the conventionally hot heat transfer fluid agent loop with the conventionally hot heat transfer fluid agent, heated more, or in the tank in the conventionally hot heat transfer fluid agent loop with the conventionally hot heat transfer fluid agent, heated more, or in the tanks in the conventionally hot heat transfer fluid agent loop with the conventionally hot heat transfer fluid agent, heated more.

The technical results are achieved, as well, by that the energy returning process is terminated at filling with the conventionally hot heat transfer fluid agent, heated less, the part of the tank in the conventionally hot heat transfer fluid agent loop with the conventionally hot heat transfer fluid agent, heated less, or at filling the tank in the conventionally hot heat transfer fluid agent loop with the conventionally hot heat transfer fluid agent, heated less, or the tanks in the conventionally hot heat transfer fluid agent loop with the conventionally hot heat transfer fluid agent, heated less.

The technical results are achieved, as well, by that the energy returning process is terminated at depleting of the conventionally cold heat transfer fluid agent, heated less, in the part of the tank in the conventionally cold heat transfer fluid agent loop with the conventionally cold heat transfer fluid agent, heated less or in the tank in the conventionally cold heat transfer fluid agent loop with the conventionally cold heat transfer fluid agent, heated less, or in the tanks in the conventionally cold heat transfer fluid agent loop with the conventionally cold heat transfer fluid agent, heated less.

The technical results are achieved, as well, by that the energy accumulating process is terminated at filling with the conventionally cold heat transfer fluid agent, heated more, the part of the tank in the conventionally cold heat transfer fluid agent loop with the conventionally cold heat transfer fluid agent, heated more, or at filling the tank in the conventionally cold heat transfer fluid agent loop with the conventionally cold heat transfer fluid agent, heated more, or the tanks in the conventionally cold heat transfer fluid agent loop with the conventionally cold heat transfer fluid agent, heated more.

The technical results are achieved, as well, by that in the energy accumulating process during conventionally hot heat transfer fluid agent moving through the mentioned heat exchanger "gaseous working medium - conventionally hot heat transfer fluid agent" the quantity of the conventionally hot heat transfer fluid agent, taking part in the heat exchange, is varied as heating with the help of the partial supply of the conventionally hot heat transfer fluid agent, heated less from the part of the tank in the conventionally hot heat transfer fluid agent loop with the conventionally hot heat transfer fluid agent, heated less, or from the tank in the conventionally hot heat transfer fluid agent loop with the conventionally hot heat transfer fluid agent, heated less, or from the tanks in the conventionally hot heat transfer fluid agent loop with the conventionally hot heat transfer fluid agent, heated less, or with the help of the partial withdrawal of the conventionally hot heat transfer fluid agent, heated more into the part of the tank in the conventionally hot heat transfer fluid agent loop with the conventionally hot heat transfer fluid agent, heated more, or into the tank in the conventionally hot heat transfer fluid agent loop with the conventionally hot heat transfer fluid agent, heated more, or into the tanks in the conventionally hot heat transfer fluid agent loop with the conventionally hot heat transfer fluid agent, heated more.

The technical results are achieved, as well, by that in the energy accumulating process during conventionally cold heat transfer fluid agent moving through the mentioned heat exchanger "gaseous working medium - conventionally cold heat transfer fluid agent" the quantity of the conventionally cold heat transfer fluid agent, taking part in the heat exchange, is varied as cooling with the help of the partial supply of the conventionally cold heat transfer fluid agent, heated more, from the part of the tank in the conventionally cold heat transfer fluid agent loop with the conventionally cold heat transfer fluid agent, heated more, or from the tank in the conventionally cold heat transfer fluid agent loop with the conventionally cold heat transfer fluid agent, heated more, or from the tanks in the conventionally cold heat transfer fluid agent loop with the conventionally cold heat transfer fluid agent, heated more, or with the help of the partial withdrawal of the conventionally cold heat transfer fluid agent, heating less, into the part of the tank in the conventionally cold heat transfer fluid agent loop with the conventionally cold heat transfer fluid agent, heated less, or into the tank in the conventionally cold heat transfer fluid agent loop with the conventionally cold heat transfer fluid agent, heated less, or into the tanks in the conventionally cold heat transfer fluid agent loop with the conventionally cold heat transfer fluid agent, heated less.

The technical results are achieved, as well, by that in the energy returning process during conventionally hot heat transfer fluid agent moving through the mentioned heat exchanger "gaseous working medium - conventionally hot heat transfer fluid agent" the quantity of the conventionally hot heat transfer fluid agent, taking part in the heat exchange, is varied as cooling with the help of the partial supply of the conventionally hot heat transfer fluid agent, heated more from the part of the tank in the conventionally hot heat transfer fluid agent loop with the conventionally hot heat transfer fluid agent, heated more, or from the tank in the conventionally hot heat transfer fluid agent loop with the conventionally hot heat transfer fluid agent, heated more, or from the tanks in the conventionally hot heat transfer fluid agent loop with the conventionally hot heat transfer fluid agent, heated more, or with the help of the partial withdrawal of the conventionally hot heat transfer fluid agent, heated less into the part of the tank in the conventionally hot heat transfer fluid agent loop with the conventionally hot heat transfer fluid agent, heated less, or into the tank in the conventionally hot heat transfer fluid agent loop with the conventionally hot heat transfer fluid agent, heated less, or into the tanks in the conventionally hot heat transfer fluid agent loop with the conventionally hot heat transfer fluid agent, heated less.

The technical results are achieved, as well, by that in the energy returning process during conventionally cold heat transfer fluid agent moving through the mentioned heat exchanger "gaseous working medium - conventionally cold heat transfer fluid agent" the quantity of the conventionally cold heat transfer fluid agent, taking part in the heat exchange, is varied as heating with the help of the partial supply of the conventionally cold heat transfer fluid agent, heated less, from the part of the tank in the conventionally cold heat transfer fluid agent loop with the conventionally cold heat transfer fluid agent, heated less, or from the tank in the conventionally cold heat transfer fluid agent loop with the conventionally cold heat transfer fluid agent, heated less, or from the tanks in the conventionally cold heat transfer fluid agent loop with the conventionally cold heat transfer fluid agent, heated less, or with the help of the partial withdrawal of the conventionally cold heat transfer fluid agent, heated more into the part of the tank in the conventionally cold heat transfer fluid agent loop with the conventionally cold heat transfer fluid agent, heated more, or into the tank in the conventionally cold heat transfer fluid agent loop with the conventionally cold heat transfer fluid agent, heated more, or into the tanks in the conventionally cold heat transfer fluid agent loop with the conventionally cold heat transfer fluid agent, heated more.

The technical results are achieved, as well, by that before the energy accumulating process start, in case of need, the conventionally hot heat transfer fluid agent is heated or cooled up to the initial working temperature, and/or the conventionally cold heat transfer fluid agent is heated or cooled up to the initial working temperature.

The technical results are achieved, as well, by that the maximum temperature of the conventionally cold heat transfer fluid agent, heated more, is higher than the minimum temperature of the conventionally hot heat transfer fluid agent, heated less.

The technical results are achieved, as well, by that the maximum temperature of the conventionally cold heat transfer fluid agent, heated more, is at the level, or lower than the minimum temperature of the conventionally hot heat transfer fluid agent, heated less.

The technical results are achieved, as well, by that the maximum temperature of the conventionally cold heat transfer fluid agent, heated more, is in the range of 350 - 850 C.

The technical results are achieved, as well, by that the difference between the maximum temperature of the conventionally hot heat transfer fluid agent, heated more, and the minimum temperature of the conventionally hot heat transfer fluid agent, heated less, is more, than 100 C.

The technical results are achieved, as well, by that the lowest pressure of the working medium in the gaseous working medium loop is more, than atmospheric pressure.

The technical results are achieved, as well, by that the minimum approach of the gaseous working medium temperature and that of the conventionally hot heat transfer fluid agent in the heat exchanger "gaseous working medium - conventionally hot heat transfer fluid agent" and/or of the gaseous working medium temperature and that of the conventionally cold heat transfer fluid agent in the heat exchanger "gaseous working medium - conventionally cold heat transfer fluid agent" and/or of the gaseous working medium temperature and that of the cooling medium in the heat exchanger "gaseous working medium cooler" is not exceed 30 C.

In the embodiment of the invention realization the technical results are achieved by that in the method of accumulating, storing and returning of a mechanical energy in the energy accumulating process the mechanical energy, being accumulated, is received from the source of the mechanical energy, being accumulated, and through the link with the apparatus like compressor means, working in the energy accumulating process, the received mechanical energy is supplied to the mentioned apparatus like compressor means, working in the energy accumulating process, in the same time the gaseous working medium, circulating in the gaseous working medium loop, is supplied to the mentioned apparatus like compressor means, working in the energy accumulating process, the gaseous working medium is compressed in the mentioned apparatus like compressor means, working in the energy accumulating process, thereby the gaseous working medium pressure and temperature are increased, after that the gaseous working medium is supplied via a pipeline into the heat exchanger "gaseous working medium - conventionally hot heat transfer fluid agent", where the gaseous working medium is cooled and simultaneously the conventionally hot heat transfer fluid agent is heated, at the same time the conventionally hot heat transfer fluid agent is moved in the conventionally hot heat transfer fluid agent loop through the mentioned heat exchanger "gaseous working medium - conventionally hot heat transfer fluid agent" with the help of the apparatus for providing of the conventionally hot heat transfer fluid agent moving from one part of the tank in the conventionally hot heat transfer fluid agent loop, in which the conventionally hot heat transfer fluid agent is heated less, to another part of the tank with the conventionally hot heat transfer fluid agent, heated more, or from one tank in the conventionally hot heat transfer fluid agent loop, in which the conventionally hot heat transfer fluid agent is heated less, to another tank with the conventionally hot heat transfer fluid agent, heated more, or to others with the conventionally hot heat transfer fluid agent, heated more, or from some tanks in the conventionally hot heat transfer fluid agent loop, in which conventionally hot heat transfer fluid agent is heated less, to the other tanks with the conventionally hot heat transfer fluid agent, heated more, after leaving the mentioned heat exchanger "gaseous working medium - conventionally hot heat transfer fluid agent", the gaseous working medium is supplied via the pipeline to the heat exchanger "gaseous working medium - gaseous working medium", in which gaseous working medium is cooled and the heat is transferred to the gaseous working medium, being heated, circulating in another part of gaseous working medium loop, after leaving the mentioned heat exchanger "gaseous working medium - gaseous working medium" the gaseous working medium is supplied via the pipeline into the apparatus like expander means, working in the energy accumulating process, in which the gaseous working medium is expanded and the gaseous working medium pressure and temperature are reduced, at the same time via the link with the mentioned apparatus like expander means, working in the energy accumulating process, the mechanical energy, releasing in the mentioned apparatus like expander means, working in the energy accumulating process, is removed, after leaving the mentioned apparatus like expander means, working in the energy accumulating process, the gaseous working medium is supplied via a pipeline into the heat exchanger "gaseous working medium - conventionally cold heat transfer fluid agent", where the gaseous working medium is heated and simultaneously the conventionally cold heat transfer fluid agent is cooled, at the same time the conventionally cold heat transfer fluid agent is moved in the conventionally cold heat transfer fluid agent loop, in case of need, through the heat exchanger-cooler of the conventionally cold heat transfer fluid agent loop, in which the conventionally cold heat transfer fluid agent is cooled and after that through the mentioned heat exchanger "gaseous working medium - conventionally cold heat transfer fluid agent", or only through the mentioned heat exchanger "gaseous working medium - conventionally cold heat transfer fluid agent" with the help of the apparatus for providing of the conventionally cold heat transfer fluid agent moving from one part of the tank in the conventionally cold heat transfer fluid agent loop, in which the conventionally cold heat transfer fluid agent is heated more, to another part of the tank with the conventionally cold heat transfer fluid agent, heated less, or from one tank in the conventionally cold heat transfer fluid agent loop, in which the conventionally cold heat transfer fluid agent is heated more, to another tank with the conventionally cold heat transfer fluid agent, heated less, or to others with the conventionally cold heat transfer fluid agent, heated less, or from some tanks in the conventionally cold heat transfer fluid agent loop, in which the conventionally cold heat transfer fluid agent is heated more, to the other tanks with the conventionally cold heat transfer fluid agent, heated less, after leaving the mentioned heat exchanger "gaseous working medium - conventionally cold heat transfer fluid agent" the gaseous working medium, in case of need, is supplied to the heat exchanger-cooler of the gaseous working medium loop, where the gaseous working medium is cooled, after that the gaseous working medium via the pipeline is supplied to the mentioned heat exchanger "gaseous working medium - gaseous working medium", or at once after leaving the mentioned heat exchanger "gaseous working medium - conventionally cold heat transfer fluid agent" the gaseous working medium is supplied via the pipeline to the mentioned heat exchanger "gaseous working medium - gaseous working medium", where the gaseous working medium is heated by the mentioned heat transfer from the gaseous working medium, being cooled, that is circulating in the mentioned part of the gaseous working medium loop between the outlet from the mentioned heat exchanger "gaseous working medium - conventionally hot heat transfer fluid agent", and the inlet to the mentioned apparatus like expander means, working in the energy accumulating process, after leaving the mentioned heat exchanger "gaseous working medium - gaseous working medium", the gaseous working medium again is supplied to the mentioned apparatus like compressor means, working in the energy accumulating process; in the energy returning process the gaseous working medium, circulating in the gaseous working medium loop, is supplied to the apparatus like expander means, working in the energy returning process, in the mentioned apparatus like expander means, working in the energy returning process, the gaseous working medium is expanded, at the same time the gaseous working medium pressure and the temperature are decreased, via the link with the mentioned apparatus like expander means, working in the energy returning process, the mechanical energy, releasing in the mentioned apparatus like expander means, working in the energy returning process, is supplied to the user of the accumulated mechanical energy, after leaving the mentioned apparatus like expander means, working in the energy returning process, the gaseous working medium is supplied via the pipeline to the heat exchanger or to the mentioned heat exchanger "gaseous working medium - the gaseous working medium", where the gaseous working medium is cooled, transferring the heat to the gaseous working medium, being heated, circulating in another part of the gaseous working medium loop, after leaving the mentioned heat exchanger "gaseous working medium - gaseous working medium", in case of need, the gaseous working medium is supplied via the pipeline to the heat exchanger-cooler of the gaseous working medium loop, where the gaseous working medium is cooled and after that the gaseous working medium is supplied via the pipeline to the heat exchanger "gaseous working medium - conventionally cold heat transfer fluid agent", or at once after leaving the mentioned heat exchanger "gaseous working medium - gaseous working medium" the gaseous working medium is supplied via the pipeline to the heat exchanger "gaseous working medium - conventionally cold heat transfer fluid agent", where the gaseous working medium is cooled and simultaneously the conventionally cold heat transfer fluid agent is heated, at the same time the conventionally cold heat transfer fluid agent is moved in the conventionally cold heat transfer fluid agent loop through the mentioned heat exchanger "gaseous working medium - conventionally cold heat transfer fluid agent", and then, in case of need, through the heat exchanger-cooler of the conventionally cold heat transfer fluid agent loop, where the conventionally cold heat transfer fluid agent is cooled, or only through the mentioned heat exchanger "gaseous working medium - conventionally cold heat transfer fluid agent" with the help of the apparatus for providing of the conventionally cold heat transfer fluid agent moving from one part of the tank in the conventionally cold heat transfer fluid agent loop, in which the conventionally cold heat transfer fluid agent is heated less, to another part of the tank with the conventionally cold heat transfer fluid agent, heated more, or from one tank in the conventionally cold heat transfer fluid agent loop, in which the conventionally cold heat transfer fluid agent is heated less, to another tank, with the conventionally cold heat transfer fluid agent, heated more, or to others with the conventionally cold heat transfer fluid agent, heated more, or from some tanks in the conventionally cold heat transfer fluid agent loop, in which the conventionally cold heat transfer fluid agent is heated less, to the other tanks with the conventionally cold heat transfer fluid agent, heated more, after leaving the mentioned heat exchanger "gaseous working medium - conventionally cold heat transfer fluid agent" the gaseous working medium is supplied via the pipeline to the apparatus like compressor means, working in the energy returning process, where the gaseous working medium is compressed and its pressure and temperature are increased, at the same time via the link with the mentioned apparatus like compressor means, working in the energy returning process, the mechanical energy is supplied to the mentioned apparatus like compressor means, working in the energy returning process, after leaving the mentioned apparatus like compressor means, working in the energy returning process, the gaseous working medium is supplied via the pipeline to the mentioned heat exchanger "gaseous working medium - gaseous working medium", where the gaseous working medium is heated by the mentioned heat transfer from the gaseous working medium, being cooled, that is circulating in the mentioned part of the gaseous working medium loop between the outlet from the mentioned apparatus like expander means, working in the energy returning process, and the inlet to the mentioned heat exchanger "gaseous working medium - conventionally cold heat transfer fluid agent," after leaving the mentioned heat exchanger "gaseous working medium - gaseous working medium", the gaseous working medium is supplied via the pipeline to the mentioned heat exchanger "gaseous working medium - conventionally hot heat transfer fluid agent", where the gaseous working medium is heated and simultaneously the conventionally hot heat transfer fluid agent is cooled, at the same time the conventionally hot heat transfer fluid agent is moved in the conventionally hot heat transfer fluid agent loop through the mentioned heat exchanger "gaseous working medium - conventionally hot heat transfer fluid agent" with the help of the apparatus for providing of the conventionally hot heat transfer fluid agent moving from one part of the tank in the conventionally hot heat transfer fluid agent loop, in which the conventionally hot heat transfer fluid agent is heated more, to another part of the tank with the conventionally hot heat transfer fluid agent, heated less, or from one tank in the conventionally hot heat transfer fluid agent loop, in which the conventionally hot heat transfer fluid agent is heated more, to another tank with the conventionally hot heat transfer fluid agent, heated less, or to others with the conventionally hot heat transfer fluid agent, heated less, or from some tanks in the conventionally hot heat transfer fluid agent loop, in which the conventionally hot heat transfer fluid agent is heated more, to the other tanks with the conventionally hot heat transfer fluid agent, heated less, after leaving the mentioned heat exchanger "gaseous working medium - conventionally hot heat transfer fluid agent", gaseous working medium again is supplied via the pipeline to the mentioned apparatus like expander means, working in the energy returning process; in the process of accumulated energy storing the circulation of the gaseous working medium in the gaseous working medium loop is lowered up to the preferable minimum or is terminated, the moving of the conventionally hot heat transfer fluid agent in the conventionally hot heat transfer fluid agent loop and the moving of the conventionally cold heat transfer fluid agent in the conventionally cold heat transfer fluid agent loop are lowered up to the preferable minimum or terminated.

The technical results are achieved, as well, by that in the energy accumulating process the mechanical energy, being accumulated, is received from the source of the mechanical energy, being accumulated, and through the link with the apparatus like compressor means, working in the energy accumulating process, the received mechanical energy is supplied to the mentioned apparatus like compressor means, working in the energy accumulating process, in the same time the gaseous working medium, circulating in the gaseous working medium loop, is supplied to the mentioned apparatus like compressor means, working in the energy accumulating process, the gaseous working medium is compressed in the mentioned apparatus like compressor means, working in the energy accumulating process, thereby the gaseous working medium pressure and temperature are increased, after that the gaseous working medium is supplied via a pipeline into the heat exchanger "gaseous working medium - conventionally hot heat transfer fluid agent", where the gaseous working medium is cooled and simultaneously the conventionally hot heat transfer fluid agent is heated, at the same time the conventionally hot heat transfer fluid agent is moved in the conventionally hot heat transfer fluid agent loop through the mentioned heat exchanger "gaseous working medium - conventionally hot heat transfer fluid agent" with the help of the apparatus for providing of the conventionally hot heat transfer fluid agent moving from one part of the tank in the conventionally hot heat transfer fluid agent loop, in which the conventionally hot heat transfer fluid agent is heated less, to another part of the tank with the conventionally hot heat transfer fluid agent, heated more, or from one tank in the conventionally hot heat transfer fluid agent loop, in which the conventionally hot heat transfer fluid agent is heated less, to another tank with the conventionally hot heat transfer fluid agent, heated more, or to others with the conventionally hot heat transfer fluid agent, heated more, or from some tanks in the conventionally hot heat transfer fluid agent loop, in which the conventionally hot heat transfer fluid agent is heated less, to the other tanks with the conventionally hot heat transfer fluid agent, heated more, after leaving the mentioned heat exchanger "gaseous working medium - conventionally hot heat transfer fluid agent" the gaseous working medium is supplied via the pipeline to the heat exchanger "gaseous working medium - gaseous working medium", where the gaseous working medium is cooled by the heat transfer to the gaseous working medium, being heated, that is circulating in another part of the gaseous working medium loop, after leaving the mentioned heat exchanger "gaseous working medium - gaseous working medium" the gaseous working medium is supplied via the pipeline to the apparatus like expander means, working in the energy accumulating process, where the gaseous working medium is expanded, the gaseous working medium pressure and the temperature are decreased, at the same time via the link with the mentioned apparatus like expander means, working in the energy accumulating process, the mechanical energy, releasing in the mentioned apparatus like expander means, working in the energy accumulating process, is removed, after leaving the mentioned apparatus like expander means, working in the energy accumulating process, the gaseous working medium is supplied via the pipeline into the heat exchanger "gaseous working medium - conventionally cold heat transfer fluid agent", in which gaseous working medium is heated, and simultaneously the conventionally cold heat transfer fluid agent is cooled, at the same time the conventionally cold heat transfer fluid agent is moved in the conventionally cold heat transfer fluid agent loop, in case of need, through the heat exchanger "conventionally cold heat transfer fluid agent cooler", where the conventionally cold heat transfer fluid agent is cooled and then through the mentioned heat exchanger "gaseous working medium - conventionally cold heat transfer fluid agent" or only through the mentioned heat exchanger "gaseous working medium - conventionally cold heat transfer fluid agent" with the help of the apparatus for providing the conventionally cold heat transfer fluid agent moving from one part of the tank in the conventionally cold heat transfer fluid agent loop, in which the conventionally cold heat transfer fluid agent is heated more, to another part of the tank with the conventionally cold heat transfer fluid agent, heated less, or from one tank in the conventionally cold heat transfer fluid agent loop, in which the conventionally cold heat transfer fluid agent is heated more, to another tank with the conventionally cold heat transfer fluid agent, heated less, or to others with the conventionally cold heat transfer fluid agent, heated less, or from some tanks in the conventionally cold heat transfer fluid agent loop, in which the conventionally cold heat transfer fluid agent is heated more, to the other tanks with the conventionally cold heat transfer fluid agent, heated less, after leaving the mentioned heat exchanger "gaseous working medium - conventionally cold heat transfer fluid agent" the gaseous working medium, in case of need, is supplied to the heat exchanger "gaseous working medium cooler", where the gaseous working medium is cooled, after that the gaseous working medium is supplied via the pipeline to the mentioned heat exchanger "gaseous working medium - gaseous working medium" or at once after leaving the mentioned heat exchanger "gaseous working medium - conventionally cold heat transfer fluid agent" the gaseous working medium is supplied via the pipeline to the mentioned heat exchanger "gaseous working medium - gaseous working medium", where the gaseous working medium is heated by the mentioned heat transfer from the gaseous working medium, being cooled, that is circulating in the mentioned part of the gaseous working medium loop between the outlet from the mentioned heat exchanger "gaseous working medium - conventionally hot heat transfer fluid agent" and the inlet to the mentioned apparatus like expander means, working in the energy accumulating process, after leaving the mentioned heat exchanger "gaseous working medium - gaseous working medium" the gaseous working medium again is supplied to the mentioned apparatus like compressor means, working in the energy accumulating process; in the energy returning process the gaseous working medium, circulating in the gaseous working medium loop, is supplied into the apparatus like expander means, working in the energy returning process, the gaseous working medium is expanded in the apparatus like expander means, working in the energy returning process, at the same time the gaseous working medium pressure and temperature are reduced, via the link with the mentioned apparatus like expander means, working in the energy returning process, the mechanical energy, releasing in the apparatus like expander means, working in the energy returning process, is supplied to the user of the accumulated mechanical energy, after leaving the mentioned apparatus like expander means, working in the energy returning process, the gaseous working medium is supplied via the pipeline to the heat exchanger or to the mentioned heat exchanger "gaseous working medium - gaseous working medium", in which the gaseous working medium is cooled, transferring the heat to the gaseous working medium, being heated, that is circulating in another part of the gaseous working medium loop, after leaving the mentioned heat exchanger "gaseous working medium - gaseous working medium", in case of need, the gaseous working medium is supplied via the pipeline to the heat exchanger "gaseous working medium cooler", in which the gaseous working medium is cooled, after that the gaseous working medium is supplied via the pipeline to the heat exchanger "gaseous working medium - conventionally cold heat transfer fluid agent," or at once after leaving the mentioned heat exchanger "gaseous working medium - gaseous working medium", the gaseous working medium is supplied via the pipeline into the heat exchanger "gaseous working medium - conventionally cold heat transfer fluid agent", in which gaseous working medium is cooled, and simultaneously the conventionally cold heat transfer fluid agent is heated, at the same time the conventionally cold heat transfer fluid agent is moved in the conventionally cold heat transfer fluid agent loop through the mentioned heat exchanger "gaseous working medium - conventionally cold heat transfer fluid agent", and then, in case of need, through the heat exchanger "conventionally cold heat transfer fluid agent cooler", in which the conventionally cold heat transfer fluid agent is cooled, or only through the mentioned heat exchanger "gaseous working medium - conventionally cold heat transfer fluid agent" with the help of the apparatus for providing the conventionally cold heat transfer fluid agent moving from one part of the tank in the conventionally cold heat transfer fluid agent loop, in which the conventionally cold heat transfer fluid agent is heated less, to another part of the tank with the conventionally cold heat transfer fluid agent, heated more, or from one tank in the conventionally cold heat transfer fluid agent loop, in which the conventionally cold heat transfer fluid agent is heated less, to another tank with the conventionally cold heat transfer fluid agent, heated more, or to others with the conventionally cold heat transfer fluid agent, heated more, or from some tanks in the conventionally cold heat transfer fluid agent loop, in which the conventionally cold heat transfer fluid agent is heated less, to the other tanks with the conventionally cold heat transfer fluid agent, heated more, after leaving the mentioned heat exchanger "gaseous working medium - conventionally cold heat transfer fluid agent" the gaseous working medium is supplied via the pipeline to the apparatus like compressor means, working in the energy returning process, where the gaseous working medium is compressed, the gaseous working medium pressure and the temperature are increased, at the same time via the link with the mentioned apparatus like compressor means, working in the energy returning process, the mechanical energy is supplied to the mentioned apparatus like compressor means, working in the energy returning process, after leaving the mentioned apparatus like compressor means, working in the energy returning process, the gaseous working medium is supplied via the pipeline to the mentioned heat exchanger "gaseous working medium - gaseous working medium", in which the gaseous working medium is heated by the mentioned heat transfer from the gaseous working medium, being cooled, that is circulating in the mentioned part of the gaseous working medium loop between the outlet from the mentioned apparatus like expander means, working in the energy returning process, and the inlet to the mentioned heat exchanger "gaseous working medium - conventionally cold heat transfer fluid agent", after leaving the mentioned heat exchanger "gaseous working medium - gaseous working medium", the gaseous working medium is supplied via the pipeline into the heat exchanger "gaseous working medium - conventionally hot heat transfer fluid agent", in which gaseous working medium is heated, and simultaneously the conventionally hot heat transfer fluid agent is cooled, at the same time the conventionally hot heat transfer fluid agent is moved in the conventionally hot heat transfer fluid agent loop through the mentioned heat exchanger "gaseous working medium - conventionally hot heat transfer fluid agent" with the help of the apparatus for providing the conventionally hot heat transfer fluid agent moving from one part of the tank in the conventionally hot heat transfer fluid agent loop, in which the conventionally hot heat transfer fluid agent is heated more, to another part of the tank with the conventionally hot heat transfer fluid agent, heated less, or from one tank in the conventionally hot heat transfer fluid agent loop, in which the conventionally hot heat transfer fluid agent is heated more, to another tank with the conventionally hot heat transfer fluid agent, heated less, or to others with the conventionally hot heat transfer fluid agent, heated less, or from some tanks in the conventionally hot heat transfer fluid agent loop, in which the conventionally hot heat transfer fluid agent is heated more, to the other tanks with the conventionally hot heat transfer fluid agent, heated less, after leaving the mentioned heat exchanger "gaseous working medium - conventionally hot heat transfer fluid agent", the gaseous working medium again is supplied via the pipeline to the mentioned apparatus like expander means, working in the energy returning process; in the process of accumulated energy storing the circulation of the gaseous working medium in the gaseous working medium loop is lowered up to the preferable minimum or is terminated, the moving of the conventionally hot heat transfer fluid agent in the conventionally hot heat transfer fluid agent loop and the moving of the conventionally cold heat transfer fluid agent in the conventionally cold heat transfer fluid agent loop are lowered up to the preferable minimum or terminated.

The technical results are achieved, as well, by that the mechanical energy, releasing in the apparatus like expander means, working in the energy accumulating process, is supplied via the link to the apparatus like compressor means, working in the energy accumulating process.

The technical results are achieved, as well, by that the mechanical energy, releasing in the apparatus like expander means, working in the energy returning process, is supplied via the link to the apparatus like compressor means, working in the energy returning process.

The technical results are achieved, as well, by that the energy accumulating process is terminated at depleting of the conventionally hot heat transfer fluid agent, heated less, in the part of the tank in the conventionally hot heat transfer fluid agent loop with the conventionally hot heat transfer fluid agent, heated less, or in the tank in the conventionally hot heat transfer fluid agent loop with the conventionally hot heat transfer fluid agent, heated less, or in the tanks in the conventionally hot heat transfer fluid agent loop with the conventionally hot heat transfer fluid agent, heated less.

The technical results are achieved, as well, by that the energy accumulating process is terminated at filling with the conventionally hot heat transfer fluid agent, heated more, the part of the tank in the conventionally hot heat transfer fluid agent loop with the conventionally hot heat transfer fluid agent, heated more, or at filling the tank in the conventionally hot heat transfer fluid agent loop with the conventionally hot heat transfer fluid agent, heated more, or the tanks in the conventionally hot heat transfer fluid agent loop with the conventionally hot heat transfer fluid agent, heated more.

The technical results are achieved, as well, by that the energy accumulating process is terminated at depleting of the conventionally cold heat transfer fluid agent, heated more, in the part of the tank in the conventionally cold heat transfer fluid agent loop with the conventionally cold heat transfer fluid agent, heated more, or in the tank in the conventionally cold heat transfer fluid agent loop with the conventionally cold heat transfer fluid agent, heated more, or in the tanks in the conventionally cold heat transfer fluid agent loop with the conventionally cold heat transfer fluid agent, heated more.

The technical results are achieved, as well, by that the energy accumulating process is terminated at filling with the conventionally cold heat transfer fluid agent, heated less, the part of the tank in the conventionally cold heat transfer fluid agent loop with the conventionally cold heat transfer fluid agent, heated less, or at filling the tank in the conventionally cold heat transfer fluid agent loop with the conventionally cold heat transfer fluid agent, heated less, or the tanks in the conventionally cold heat transfer fluid agent loop with the conventionally cold heat transfer fluid agent, heated less.

The technical results are achieved, as well, by that the energy returning process is terminated at depleting of the conventionally hot heat transfer fluid agent, heated more, in the part of the tank in the conventionally hot heat transfer fluid agent loop with the conventionally hot heat transfer fluid agent, heated more, or in the tank in the conventionally hot heat transfer fluid agent loop with the conventionally hot heat transfer fluid agent, heated more, or in the tanks in the conventionally hot heat transfer fluid agent loop with the conventionally hot heat transfer fluid agent, heated more.

The technical results are achieved, as well, by that the energy returning process is terminated at filling with the conventionally hot heat transfer fluid agent, heated less, the part of the tank in the conventionally hot heat transfer fluid agent loop with the conventionally hot heat transfer fluid agent, heated less, or at filling the tank in the conventionally hot heat transfer fluid agent loop with the conventionally hot heat transfer fluid agent, heated less, or the tanks in the conventionally hot heat transfer fluid agent loop with the conventionally hot heat transfer fluid agent, heated less.

The technical results are achieved, as well, by that the energy returning process is terminated at depleting of the conventionally cold heat transfer fluid agent, heated less, in the part of the tank in the conventionally cold heat transfer fluid agent loop with the conventionally cold heat transfer fluid agent, heated less or in the tank in the conventionally cold heat transfer fluid agent loop with the conventionally cold heat transfer fluid agent, heated less, or in the tanks in the conventionally cold heat transfer fluid agent loop with the conventionally cold heat transfer fluid agent, heated less.

The technical results are achieved, as well, by that the energy accumulating process is terminated at filling with the conventionally cold heat transfer fluid agent, heated more, the part of the tank in the conventionally cold heat transfer fluid agent loop with the conventionally cold heat transfer fluid agent, heated more, or at filling the tank in the conventionally cold heat transfer fluid agent loop with the conventionally cold heat transfer fluid agent, heated more, or the tanks in the conventionally cold heat transfer fluid agent loop with the conventionally cold heat transfer fluid agent, heated more.

The technical results are achieved, as well, by that at the energy accumulating process during the conventionally hot heat transfer fluid agent moving through the mentioned heat exchanger "gaseous working medium - conventionally hot heat transfer fluid agent" the quantity of the conventionally hot heat transfer fluid agent, taking part in the heat exchange, is varied as heating with the help of the partial supply of the conventionally hot heat transfer fluid agent, heated less from the part of the tank in the conventionally hot heat transfer fluid agent loop with the conventionally hot heat transfer fluid agent, heated less, or from the tank in the conventionally hot heat transfer fluid agent loop with the conventionally hot heat transfer fluid agent, heated less, or from the tanks in the conventionally hot heat transfer fluid agent loop with the conventionally hot heat transfer fluid agent, heated less, or with the help of the partial withdrawal of the conventionally hot heat transfer fluid agent, heated more into the part of the tank in the conventionally hot heat transfer fluid agent loop with the conventionally hot heat transfer fluid agent, heated more, or into the tank in the conventionally hot heat transfer fluid agent loop with the conventionally hot heat transfer fluid agent, heated more, or into the tanks in the conventionally hot heat transfer fluid agent loop with the conventionally hot heat transfer fluid agent, heated more.

The technical results are achieved, as well, by that at the energy accumulating process during the conventionally cold heat transfer fluid agent moving through the mentioned heat exchanger "gaseous working medium - conventionally cold heat transfer fluid agent" the quantity of the conventionally cold heat transfer fluid agent, taking part in the heat exchange, is varied as cooling with the help of the partial supply of the conventionally cold heat transfer fluid agent, heated more, from the part of the tank in the conventionally cold heat transfer fluid agent loop with the conventionally cold heat transfer fluid agent, heated more, or from the tank in the conventionally cold heat transfer fluid agent loop with the conventionally cold heat transfer fluid agent, heated more, or from the tanks in the conventionally cold heat transfer fluid agent loop with the conventionally cold heat transfer fluid agent, heated more, or with the help of the partial withdrawal of the conventionally cold heat transfer fluid agent, heating less, into the part of the tank in the conventionally cold heat transfer fluid agent loop with the conventionally cold heat transfer fluid agent, heated less, or into the tank in the conventionally cold heat transfer fluid agent loop with the conventionally cold heat transfer fluid agent, heated less, or into the tanks in the conventionally cold heat transfer fluid agent loop with the conventionally cold heat transfer fluid agent, heated less.

The technical results are achieved, as well, by that at the energy returning process during conventionally hot heat transfer fluid agent transporting through the mentioned heat exchanger "gaseous working medium - conventionally hot heat transfer fluid agent" the quantity of the conventionally hot heat transfer fluid agent, taking part in the heat exchange, is varied as cooling with the help of the partial supply of the conventionally hot heat transfer fluid agent, heated more from the part of the tank in the conventionally hot heat transfer fluid agent loop with the conventionally hot heat transfer fluid agent, heated more, or from the tank in the conventionally hot heat transfer fluid agent loop with the conventionally hot heat transfer fluid agent, heated more, or from the tanks in the conventionally hot heat transfer fluid agent loop with the conventionally hot heat transfer fluid agent, heated more, or with the help of the partial withdrawal of the conventionally hot heat transfer fluid agent, heated less into the part of the tank in the conventionally hot heat transfer fluid agent loop with the conventionally hot heat transfer fluid agent, heated less, or into the tank in the conventionally hot heat transfer fluid agent loop with the conventionally hot heat transfer fluid agent, heated less, or into the tanks in the conventionally hot heat transfer fluid agent loop with the conventionally hot heat transfer fluid agent, heated less.

The technical results are achieved, as well, by that at the energy returning process during the conventionally cold heat transfer fluid agent moving through the mentioned heat exchanger "gaseous working medium - conventionally cold heat transfer fluid agent" the quantity of the conventionally cold heat transfer fluid agent, taking part in the heat exchange, is varied as heating with the help of the partial supply of the conventionally cold heat transfer fluid agent, heated less, from the part of the tank in the conventionally cold heat transfer fluid agent loop with the conventionally cold heat transfer fluid agent, heated less, or from the tank in the conventionally cold heat transfer fluid agent loop with the conventionally cold heat transfer fluid agent, heated less, or from the tanks in the conventionally cold heat transfer fluid agent loop with the conventionally cold heat transfer fluid agent, heated less, or with the help of the partial withdrawal of the conventionally cold heat transfer fluid agent, heated more into the part of the tank in the conventionally cold heat transfer fluid agent loop with the conventionally cold heat transfer fluid agent, heated more, or into the tank in the conventionally cold heat transfer fluid agent loop with the conventionally cold heat transfer fluid agent, heated more, or into the tanks in the conventionally cold heat transfer fluid agent loop with the conventionally cold heat transfer fluid agent, heated more.

The technical results are achieved, as well, by that before the energy accumulating process start, in case of need, the conventionally hot heat transfer fluid agent is heated or cooled up to the initial working temperature, and/or the conventionally cold heat transfer fluid agent is heated or cooled up to the initial working temperature.

The technical results are achieved, as well, by that the maximum temperature of the conventionally cold heat transfer fluid agent, heated more, is at the level, or lower than the minimum temperature of the conventionally hot heat transfer fluid agent, heated less.

The technical results are achieved, as well, by that the maximum temperature of the conventionally hot heat transfer fluid agent, heated more, is in the range of 350 - 850 C.

The technical results are achieved, as well, by that the difference between the maximum temperature of the conventionally hot heat transfer fluid agent, heated more, and the minimum temperature of the conventionally hot heat transfer fluid agent, heated less, is more, than 100 C.

The technical results are achieved, as well, by that the minimum pressure of the working medium in the gaseous working medium loop is more, than atmospheric pressure.

The technical results are achieved, as well, by that the minimum approach of the gaseous working medium temperature and that of the conventionally hot heat transfer fluid agent in the heat exchanger "gaseous working medium - conventionally hot heat transfer fluid agent" and/or of the gaseous working medium temperature and that of the conventionally cold heat transfer fluid agent in the heat exchanger "gaseous working medium - conventionally cold heat transfer fluid agent" and/or of the gaseous working medium temperature and that of the cooling medium in the heat exchanger "gaseous working medium cooler" is less than 30 C.

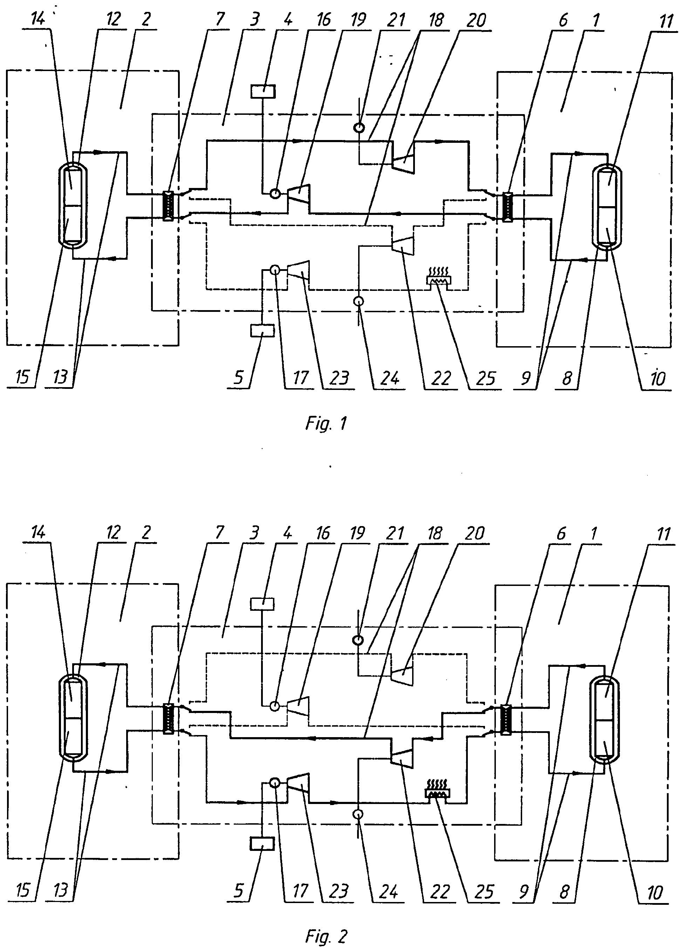

The essence of the stated invention is explained with drawings, where Fig.1 shows the diagram of the installation for accumulating, storing and returning of a mechanical energy, working in energy accumulating, and Fig.2 - in energy returning, with one conventionally hot heat transfer fluid agent loop, one conventionally cold heat transfer fluid agent loop, one gaseous working medium loop, with one tank in the each heat transfer fluid agent loop.
Figures 1-38 show concepts which are helpful to understand the invention, the invention being solely defined by the respective subject-matter of appended independent claims 1 and 11.

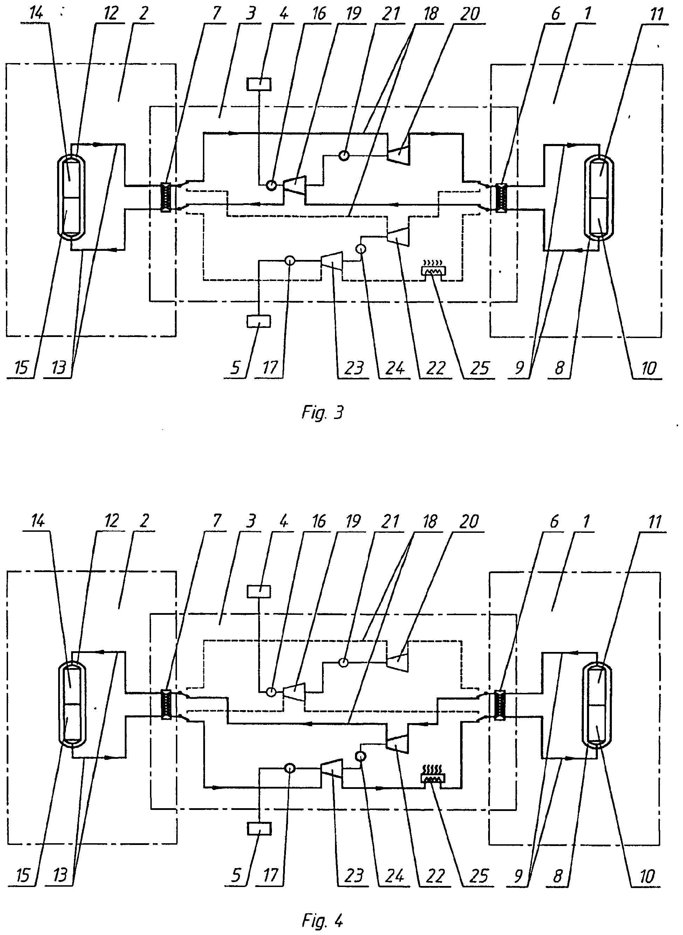

Fig.3 shows the diagram of the installation for accumulating, storing and return of a mechanical energy, working in energy accumulating, and Fig.4 - in the energy returning, with one conventionally hot heat transfer fluid agent loop, one conventionally cold heat transfer fluid agent loop, one gaseous working medium loop, with the heat exchanger - cooler of the gaseous working medium after the expander, working in the energy returning process, with one tank in each heat transfer fluid agent loop, in which the mechanical energy, releasing in the expanders of the gaseous working medium loop, is consumed by the compressors of the gaseous working medium loop.

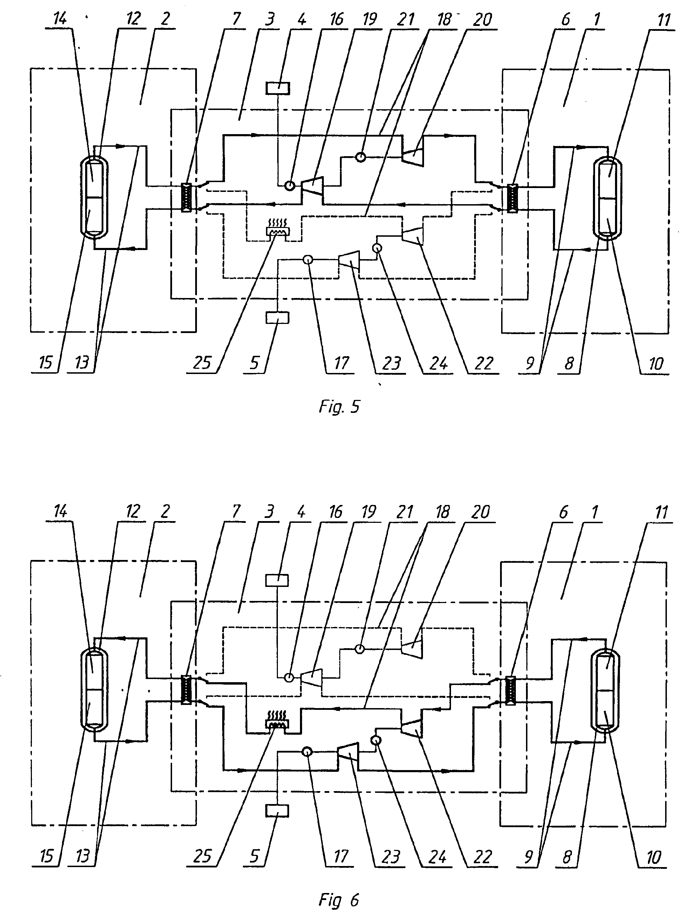

Fig.5 shows the diagram of the installation for accumulating, storing and returning of a mechanical energy, working in energy accumulating, and Fig.6 - in energy returning, with one conventionally hot heat transfer fluid agent loop, one conventionally cold heat transfer fluid agent loop, one gaseous working medium loop, with the heat exchanger - cooler of the gaseous working medium after the compressor, working in the energy returning process, with one tank in the each heat transfer fluid agent loop, in which the mechanical energy, releasing in the expanders of the gaseous working medium loop, is consumed by the compressors of the gaseous working medium loop.

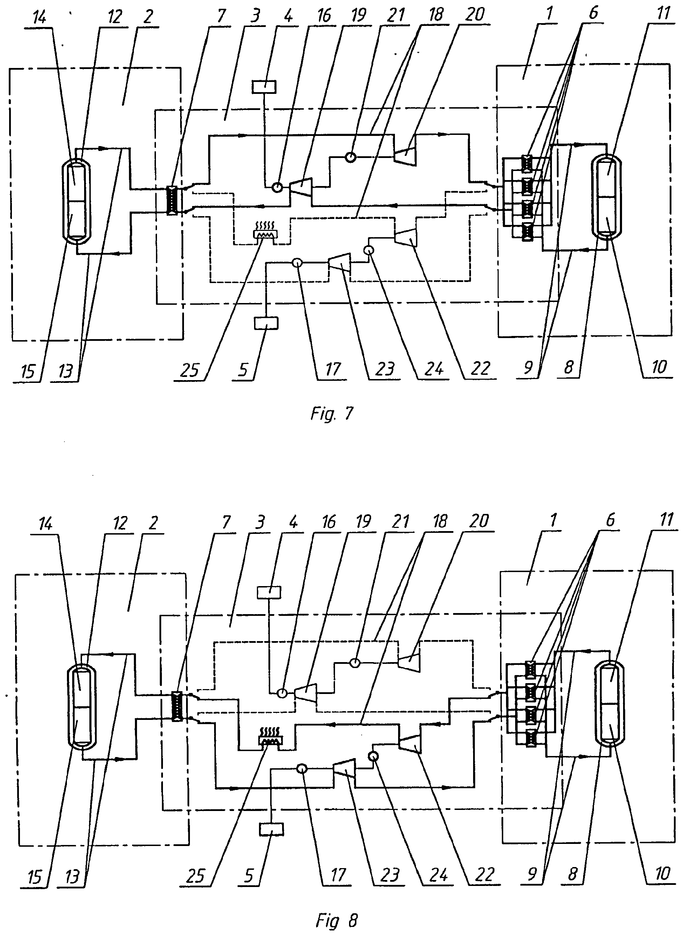

Fig.7 shows the diagram of the installation for accumulating, storing and returning of a mechanical energy, working in energy accumulating, and Fig.8 - in energy returning, with one conventionally hot heat transfer fluid agent loop, one conventionally cold heat transfer fluid agent loop, one gaseous working medium loop, with four parallel heat exchangers "gaseous working medium - conventionally cold heat transfer fluid agent", with the heat exchanger - cooler of the gaseous working medium after the compressor, working in the energy returning process, with one tank in the each heat transfer fluid agent loop, in which the mechanical energy, releasing in the expanders of the gaseous working medium loop, is consumed by the compressors of the gaseous working medium loop.

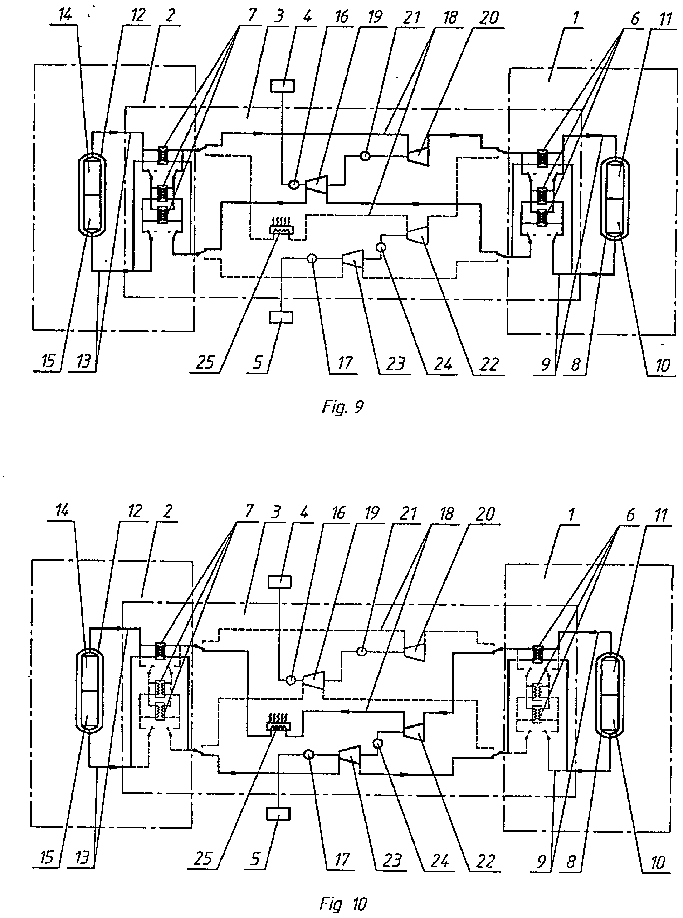

Fig.9 shows the diagram of the installation for accumulating, storing and returning of a mechanical energy, working in energy accumulating, and Fig.10 - in energy returning, with one conventionally hot heat transfer fluid agent loop, one conventionally cold heat transfer fluid agent loop, one gaseous working medium loop, with three parallel heat exchangers "gaseous working medium - conventionally cold heat transfer fluid agent", from which three are working in energy accumulating, but one is working in energy returning, with three parallel heat exchangers "gaseous working medium - conventionally hot heat transfer fluid agent", from which three are working in energy accumulating, but one is working in energy returning, with the heat exchanger - cooler of the gaseous working medium after the compressor, working in the energy returning process, with one tank in the each heat transfer fluid agent loop, in which the mechanical energy, releasing in the expanders of the gaseous working medium loop, is consumed by the compressors of the gaseous working medium loop.

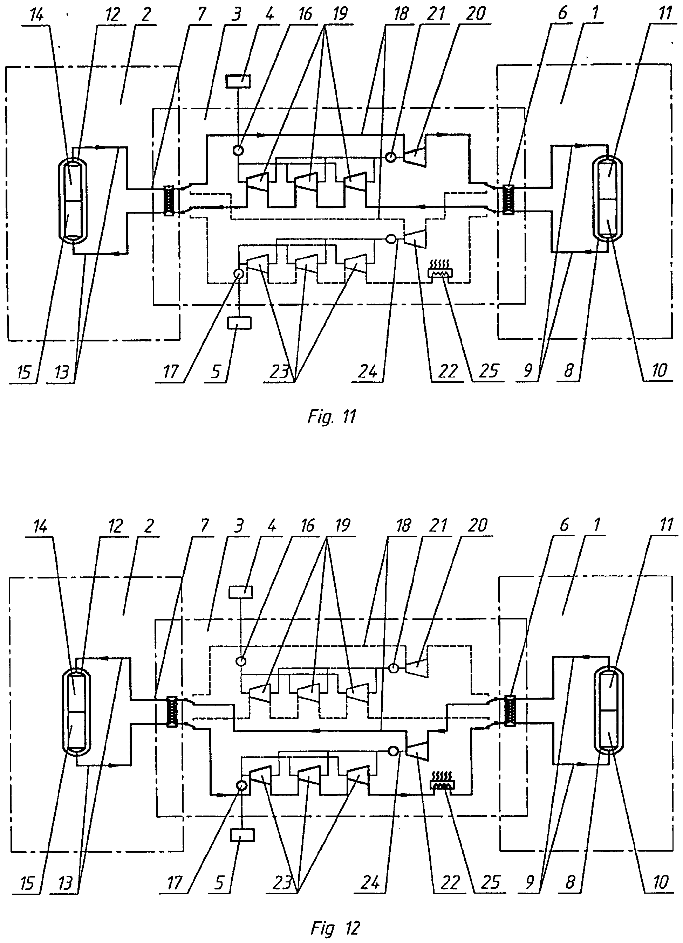

Fig.11 shows the diagram of the installation for accumulating, storing and returning of a mechanical energy, working in energy accumulating, and Fig.12 - in energy returning, with one conventionally hot heat transfer fluid agent loop, one conventionally cold heat transfer fluid agent loop, one gaseous working medium loop, with three compressors, working in the energy accumulating process in the gaseous working medium loop, and with three expanders, working in the energy returning process in the gaseous working medium loop, with the heat exchanger - cooler of the gaseous working medium after the expander, working in the energy returning process, with one tank in the each heat transfer fluid agent loop, in which the mechanical energy, releasing in the expanders of the gaseous working medium loop, is consumed by the compressors of the gaseous working medium loop.

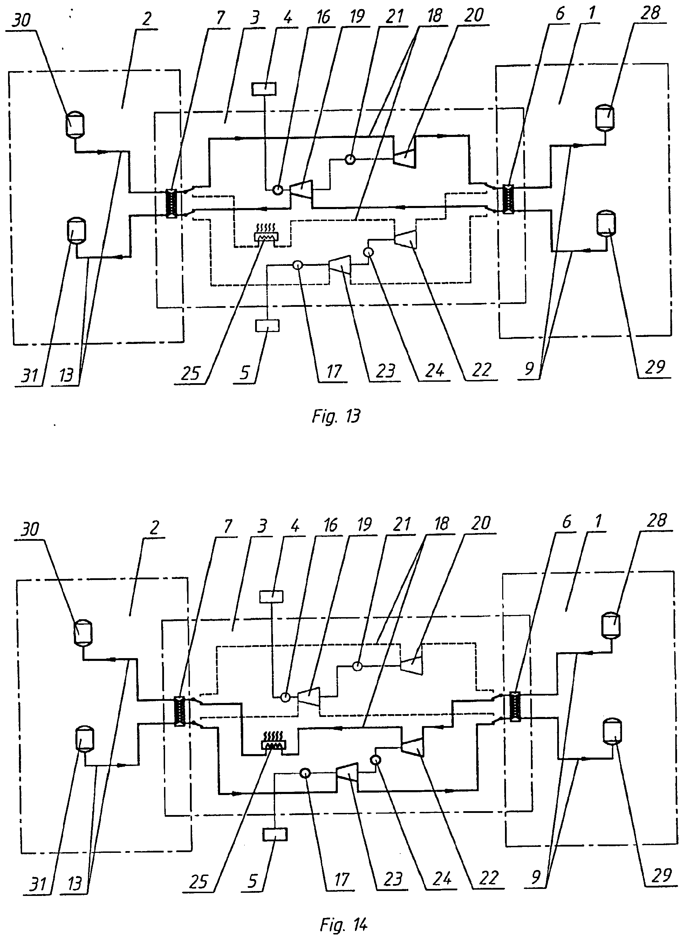

Fig.13 shows the diagram of the installation for accumulating, storing and returning of a mechanical energy, working in energy accumulating, and Fig.14 - in energy returning, with one conventionally hot heat transfer fluid agent loop, one conventionally cold heat transfer fluid agent loop, one gaseous working medium loop, with two tanks in the conventionally hot heat transfer fluid agent loop, with two tanks in the conventionally cold heat transfer fluid agent loop, with the heat exchanger - cooler of the gaseous working medium after the compressor, working in the energy returning process, in which the mechanical energy, releasing in the expanders of the gaseous working medium loop, is consumed by the compressors of the gaseous working medium loop.

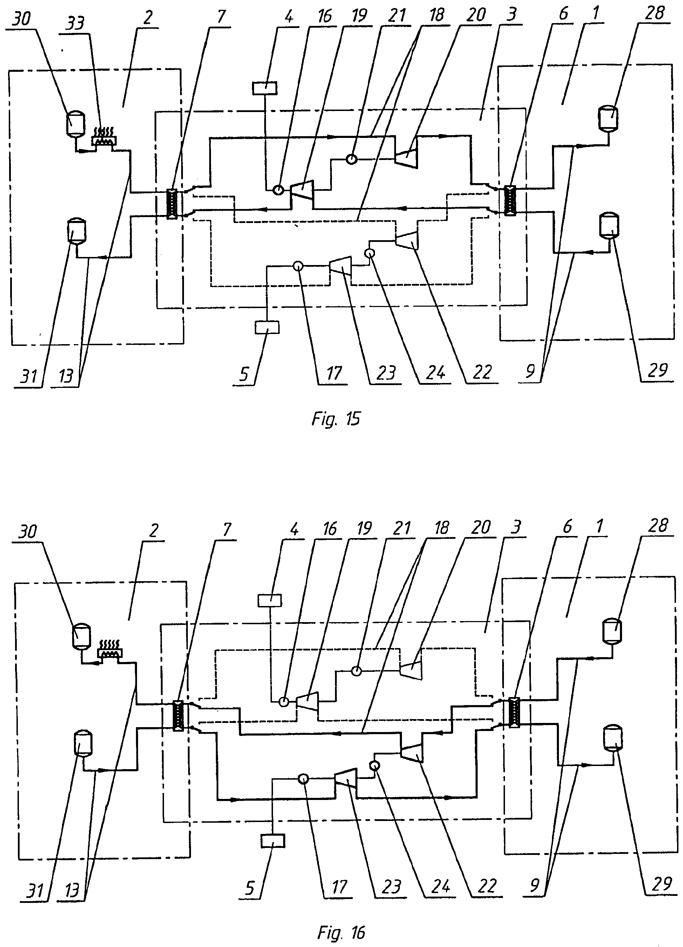

Fig.15 shows the diagram of the installation for accumulating, storing and returning of a mechanical energy, working in energy accumulating, and Fig.16 - in energy returning, with one conventionally hot heat transfer fluid agent loop, one conventionally cold heat transfer fluid agent loop, one gaseous working medium loop, with two tanks in the conventionally hot heat transfer fluid agent loop, with two tanks in the conventionally cold heat transfer fluid agent loop, without the heat exchanger - cooler of the gaseous working medium, with the heat exchanger - cooler of the conventionally hot heat transfer fluid agent, in which the mechanical energy, releasing in the expanders of the gaseous working medium loop, is consumed by the compressors of the gaseous working medium loop,

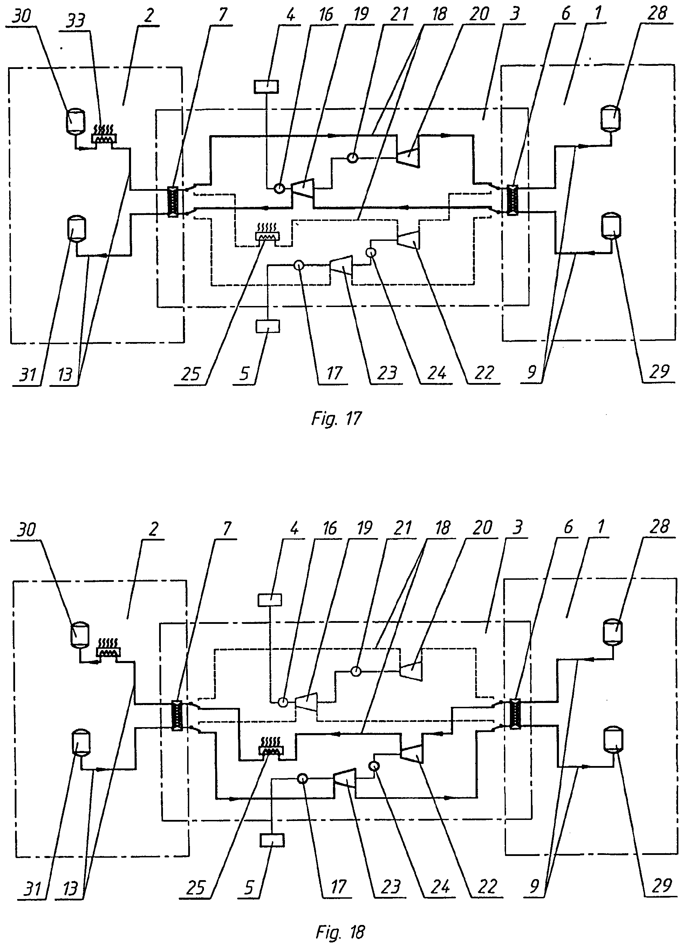

Fig.17 shows the diagram of the installation for accumulating, storing and returning of a mechanical energy, working in energy accumulating, and Fig. 18 - in energy returning, with one conventionally hot heat transfer fluid agent loop, one conventionally cold heat transfer fluid agent loop, one gaseous working medium loop, with two tanks in the conventionally hot heat transfer fluid agent loop, with two tanks in the conventionally cold heat transfer fluid agent loop, with the heat exchanger - cooler of the gaseous working medium after the compressor, working in the energy returning process, with the heat exchanger - cooler of the conventionally hot heat transfer fluid agent, in which the mechanical energy, releasing in the expanders of the gaseous working medium loop, is consumed by the compressors of the gaseous working medium loop.

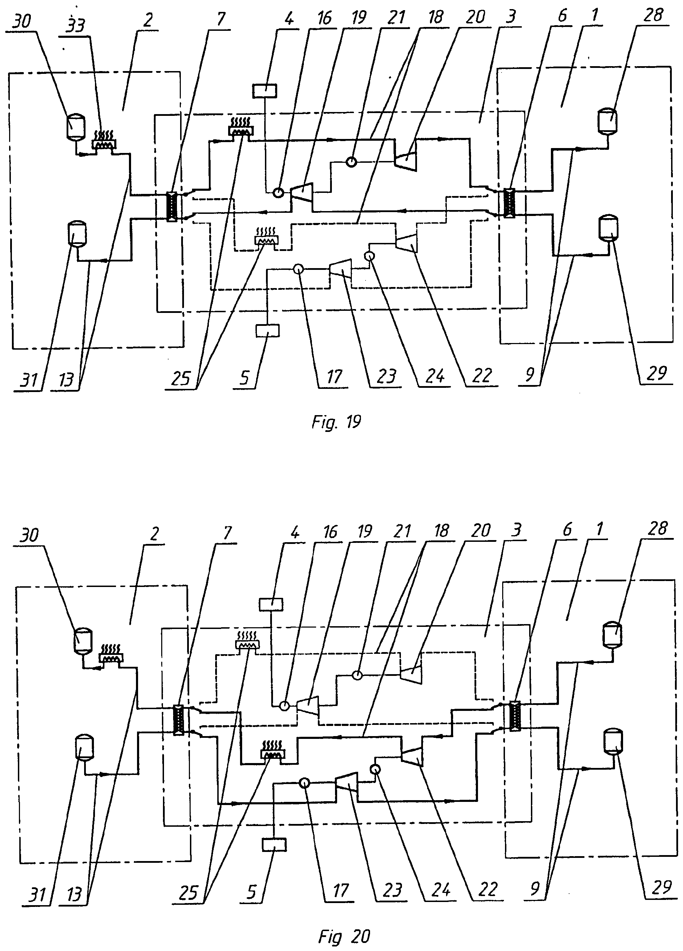

Fig.19 shows the diagram of the installation for accumulating, storing and returning of a mechanical energy, working in energy accumulating, and Fig.20 - in energy returning, with one conventionally hot heat transfer fluid agent loop, one conventionally cold heat transfer fluid agent loop, one gaseous working medium loop, with two tanks in the conventionally hot heat transfer fluid agent loop, with two tanks in the conventionally cold heat transfer fluid agent loop, with the heat exchanger - cooler of the gaseous working medium after the compressor, working in the energy returning process, with the heat exchanger - cooler of the gaseous working medium before the expander, working in the energy accumulating process, with the heat exchanger - cooler of the conventionally hot heat transfer fluid agent, in which the mechanical energy, releasing in the expanders of the gaseous working medium loop, is consumed by the compressors of the gaseous working medium loop.

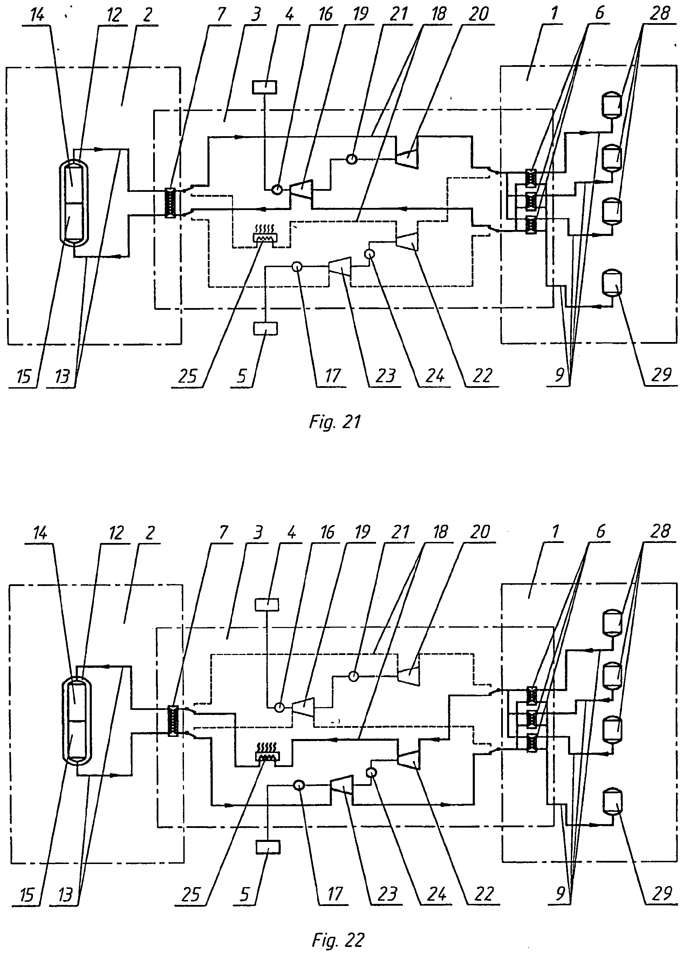

Fig.21 shows the diagram of the installation for accumulating, storing and returning of a mechanical energy, working in energy accumulating, and Fig.22 - in energy returning, with one conventionally hot heat transfer fluid agent loop, one conventionally cold heat transfer fluid agent loop, one gaseous working medium loop, with the heat exchanger - cooler of the gaseous working medium after the compressor, working in the energy returning process, with one tank in the conventionally hot heat transfer fluid agent loop, with four tanks in the conventionally cold heat transfer fluid agent loop, with three parallel heat exchangers "gaseous working medium - conventionally cold heat transfer fluid agent", in which the mechanical energy, releasing in the expanders of the gaseous working medium loop, is consumed by the compressors of the gaseous working medium loop.

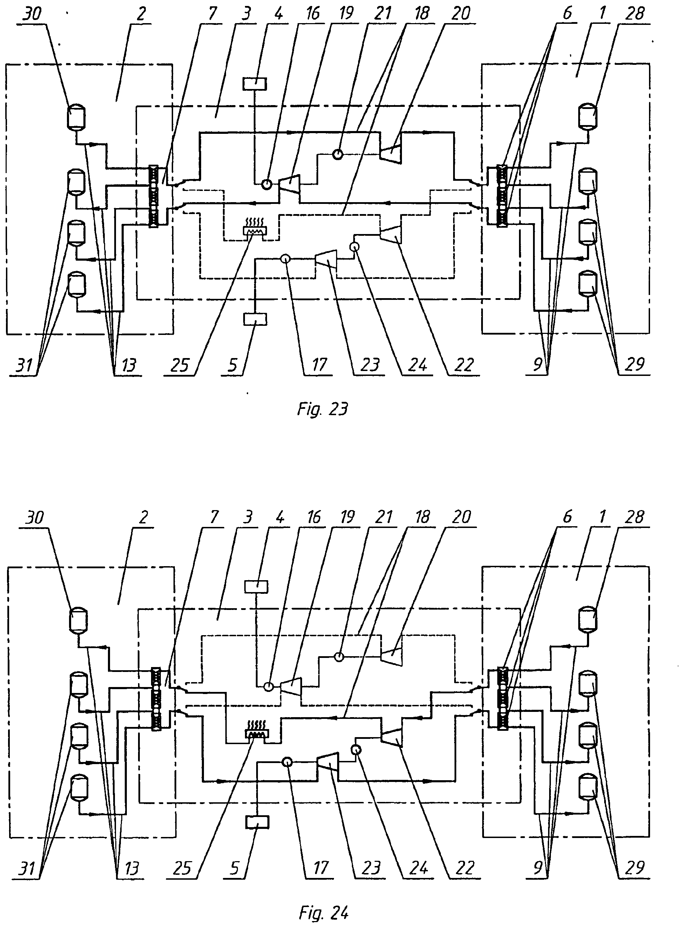

Fig.23 shows the diagram of the installation for accumulating, storing and returning of a mechanical energy, working in energy accumulating, and Fig.24 - in energy returning, with one conventionally hot heat transfer fluid agent loop, one conventionally cold heat transfer fluid agent loop, one gaseous working medium loop, with the heat exchanger - cooler of the gaseous working medium after the compressor, working in the energy returning process, with four tanks in the conventionally hot heat transfer fluid agent loop, with four tanks in the conventionally cold heat transfer fluid agent loop, with three series heat exchangers "gaseous working medium - conventionally cold heat transfer fluid agent", with three series heat exchangers "gaseous working medium - conventionally hot heat transfer fluid agent", with inflow and outflow of the additional flows of the heat transfer fluid agents in the heat transfer process with the gaseous working medium, in which the mechanical energy, releasing in the expanders of the gaseous working medium loop, is consumed by the compressors of the gaseous working medium loop.

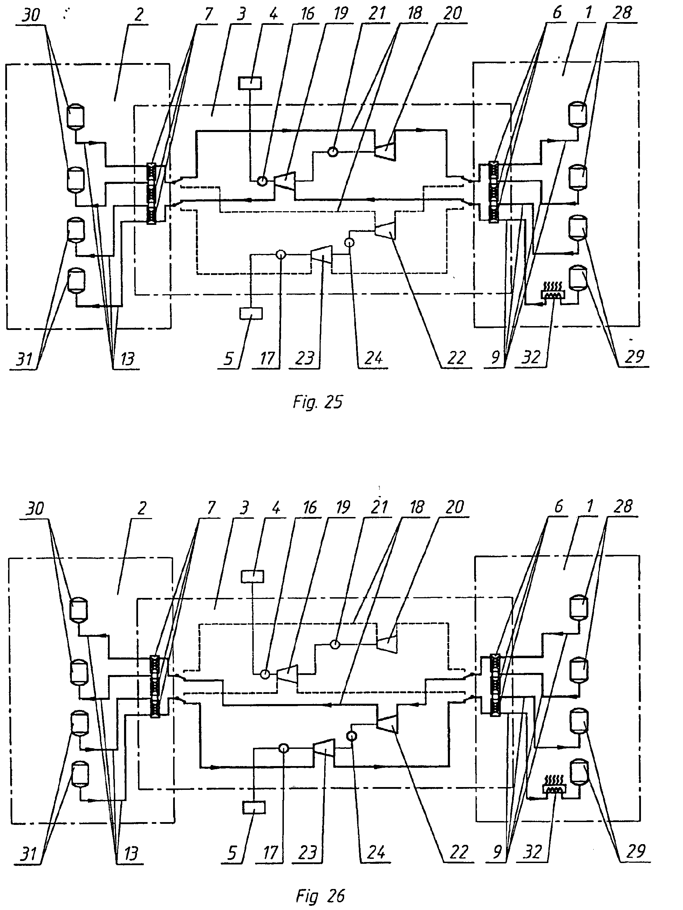

Fig.25 shows the diagram of the installation for accumulating, storing and returning of a mechanical energy, working in energy accumulating, and Fig.26 - in energy returning, with one conventionally hot heat transfer fluid agent loop, one conventionally cold heat transfer fluid agent loop, one gaseous working medium loop, without the heat exchanger - cooler of the gaseous working medium, with the heat exchanger - cooler of the conventionally cold heat transfer fluid agent, with four tanks in the conventionally hot heat transfer fluid agent loop, with four tanks in the conventionally cold heat transfer fluid agent loop, with three series heat exchangers "gaseous working medium - conventionally cold heat transfer fluid agent", with three series heat exchangers "gaseous working medium - conventionally hot heat transfer fluid agent", with inflow and outflow of the additional flows of the heat transfer fluid agents in the heat transfer process with the gaseous working medium, in which the mechanical energy, releasing in the expanders of the gaseous working medium loop, is consumed by the compressors of the gaseous working medium loop.

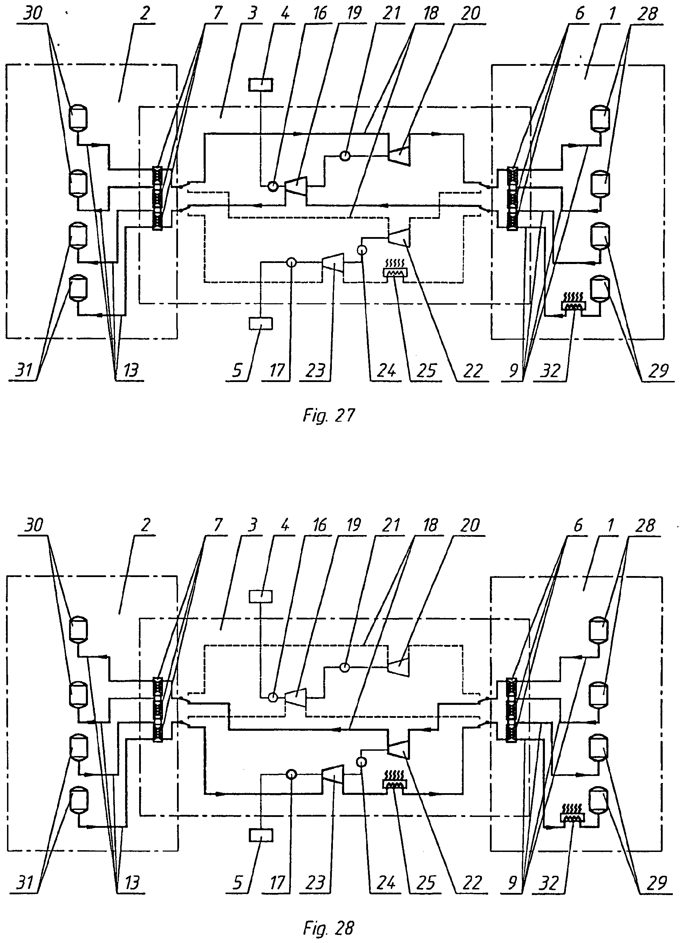

Fig.27 shows the diagram of the installation for accumulating, storing and returning of a mechanical energy, working in energy accumulating, and Fig.28 - in energy returning, with one conventionally hot heat transfer fluid agent loop, one conventionally cold heat transfer fluid agent loop, one gaseous working medium loop, with the heat exchanger - cooler of the gaseous working medium after the expander, working in the energy returning process, with the heat exchanger - cooler of the conventionally cold heat transfer fluid agent, with four tanks in the conventionally hot heat transfer fluid agent loop, with four tanks in the conventionally cold heat transfer fluid agent loop, with three series heat exchangers "gaseous working medium - conventionally cold heat transfer fluid agent", with three series heat exchangers "gaseous working medium - conventionally hot heat transfer fluid agent", with inflow and outflow of the additional flows of the heat transfer fluid agents in the heat transfer process with the gaseous working medium, in which the mechanical energy, releasing in the expanders of the gaseous working medium loop, is consumed by the compressors of the gaseous working medium loop.

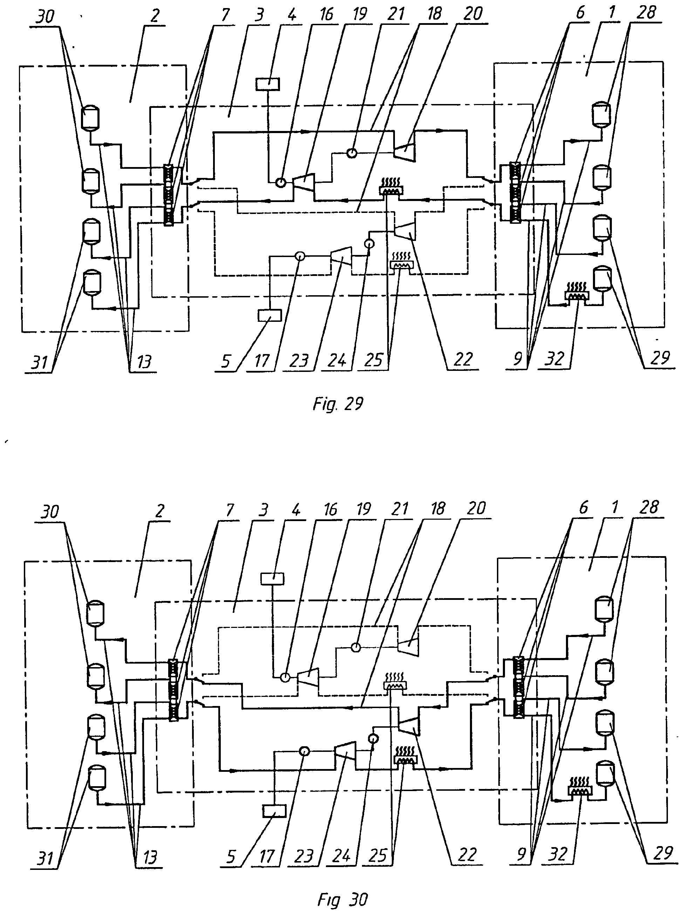

Fig.29 shows the diagram of the installation for accumulating, storing and returning of a mechanical energy, working in energy accumulating, and Fig.30 - in energy returning, with one conventionally hot heat transfer fluid agent loop, one conventionally cold heat transfer fluid agent loop, one gaseous working medium loop, with the heat exchanger - cooler of the gaseous working medium after the expander, working in the energy returning process, with the heat exchanger - cooler of the gaseous working medium before the compressor, working in the energy accumulating process, with the heat exchanger - cooler of the conventionally cold heat transfer fluid agent, with four tanks in the conventionally hot heat transfer fluid agent loop, with four tanks in the conventionally cold heat transfer fluid agent loop, with three series heat exchangers "gaseous working medium - conventionally cold heat transfer fluid agent", with three series heat exchangers "gaseous working medium - conventionally hot heat transfer fluid agent", with inflow and outflow of the additional flows of the heat transfer fluid agents in the heat transfer process with the gaseous working medium, in which the mechanical energy, releasing in the expanders of the gaseous working medium loop, is consumed by the compressors of the gaseous working medium loop.

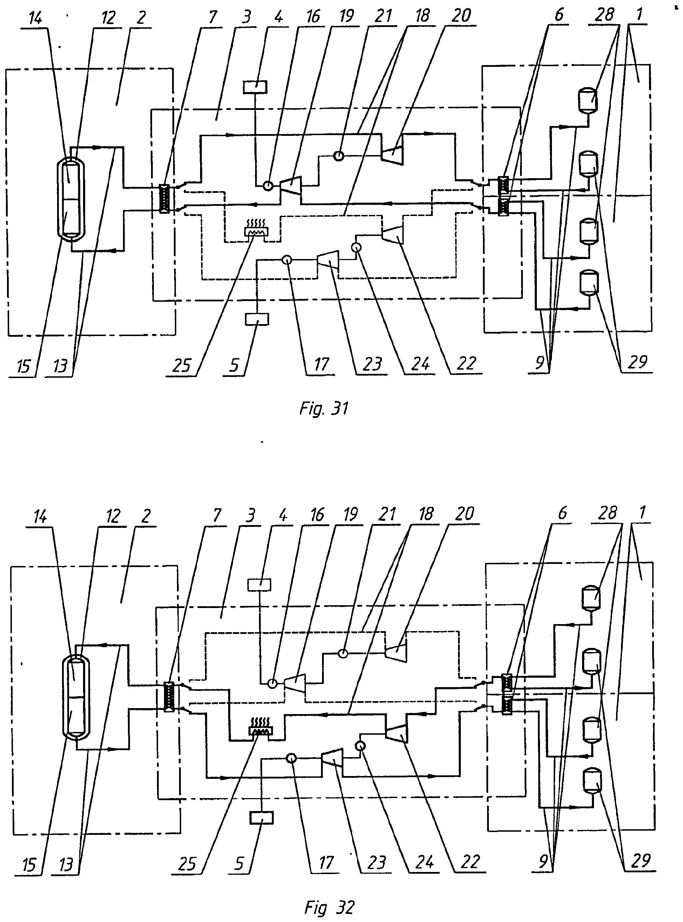

Fig.31 shows the diagram of the installation for accumulating, storing and returning of a mechanical energy, working in energy accumulating, and Fig.32 - in energy returning, with one conventionally hot heat transfer fluid agent loop, with two conventionally cold heat transfer fluid agent loops, with one gaseous working medium loop, with the heat exchanger - cooler of the gaseous working medium after the compressor, working in the energy returning process, with one tank in the conventionally hot heat transfer fluid agent loop, with two tanks in the each of the conventionally cold heat transfer fluid agent loops, in which the mechanical energy, releasing in the expanders of the gaseous working medium loop, is consumed by the compressors of the gaseous working medium loop.

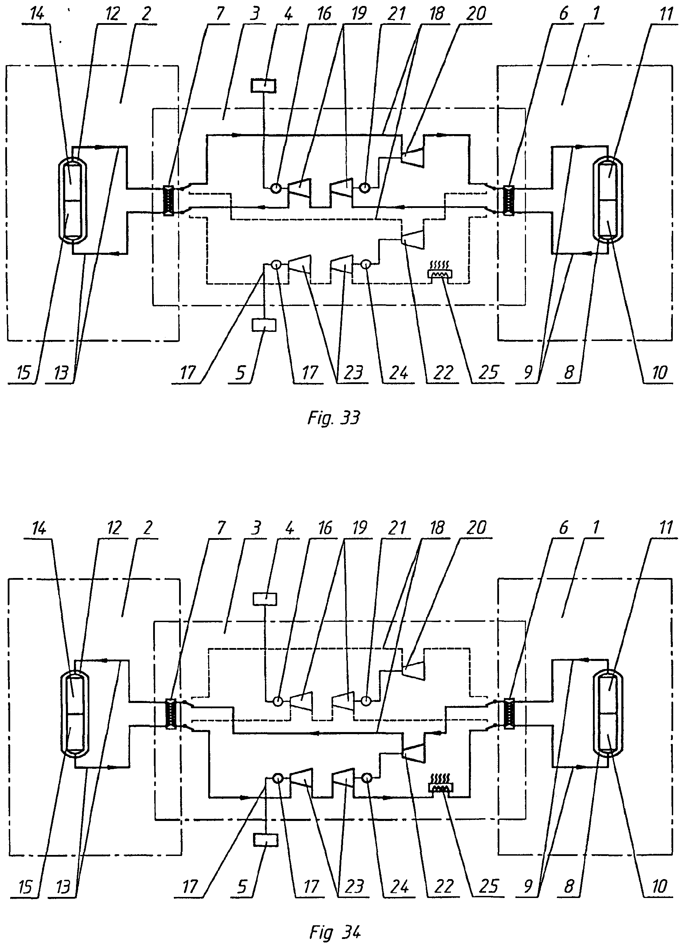

Fig.33 shows the diagram of the installation for accumulating, storing and returning of a mechanical energy, working in energy accumulating, and Fig.34 - in energy returning, with one conventionally hot heat transfer fluid agent loop, one conventionally cold heat transfer fluid agent loop, one gaseous working medium loop, with the heat exchanger - cooler of the gaseous working medium after the expander, working in the energy returning process, with two compressors, working in the energy accumulating process, connected in series, two expanders, working in the energy returning process, connected in series, with one tank in the each heat transfer fluid agent loop, in which the mechanical energy, releasing in the expanders of the gaseous working medium loop, is consumed by the compressors of the gaseous working medium loop.

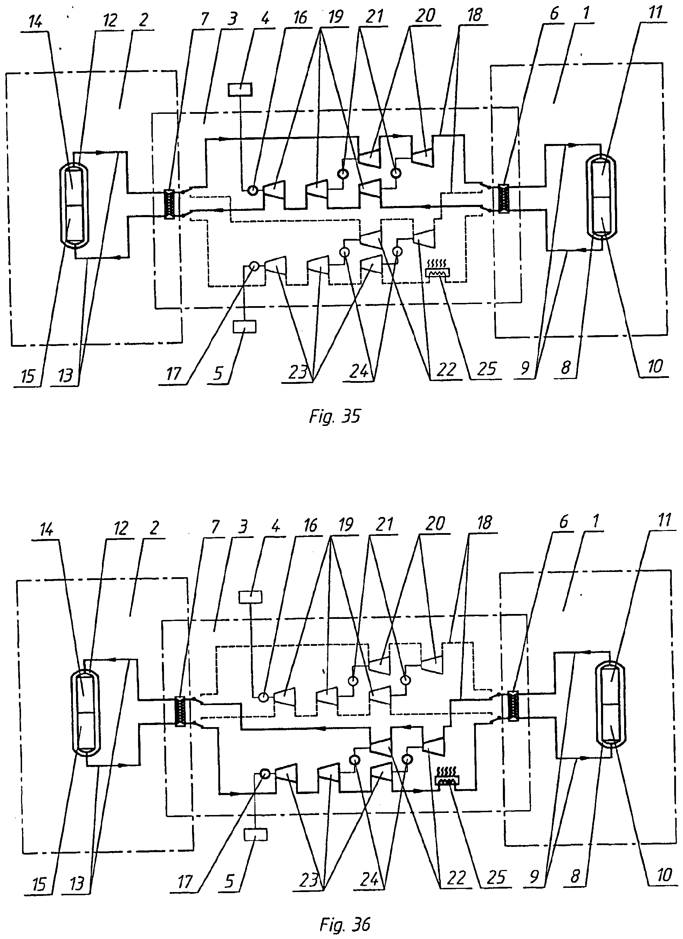

Fig.35 shows the diagram of the installation for accumulating, storing and returning of a mechanical energy, working in energy accumulating, and Fig.36 - in energy returning, with one conventionally hot heat transfer fluid agent loop, one conventionally cold heat transfer fluid agent loop, one gaseous working medium loop, with the heat exchanger - cooler of the gaseous working medium after the expander, working in the energy returning process, with three series compressors, working in the energy accumulating process, with two series expanders, working in the energy accumulating process, three series expanders, working in the energy returning process, two series compressors, working in the energy returning process, with one tank in the each heat transfer fluid agent loop, in which the mechanical energy, releasing in the expanders of the gaseous working medium loop, is consumed by the compressors of the gaseous working medium loop.

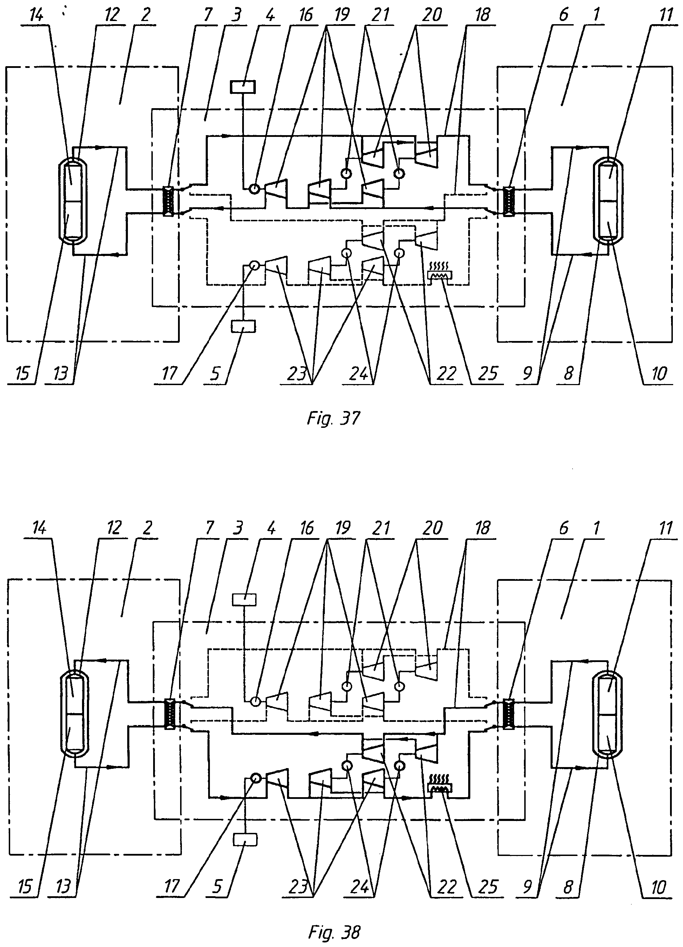

Fig.37 shows the diagram of the installation for accumulating, storing and returning of a mechanical energy, working in energy accumulating, and Fig.38 - in energy returning, with one conventionally hot heat transfer fluid agent loop, one conventionally cold heat transfer fluid agent loop, one gaseous working medium loop, with the heat exchanger - cooler of the gaseous working medium after the expander, working in the energy returning process, with three compressors, working in the energy accumulating process, from which two are connected in parallel, but the third - in series with them, with two parallel expanders, working in the energy accumulating process, three expanders, working in the energy returning process, from which two are connected in parallel, but the third - in series with them, two parallel compressors, working in the energy returning process, with one tank in the each heat transfer fluid agent loop, in which the mechanical energy, releasing in the expanders of the gaseous working medium loop, is consumed by the compressors of the gaseous working medium loop.

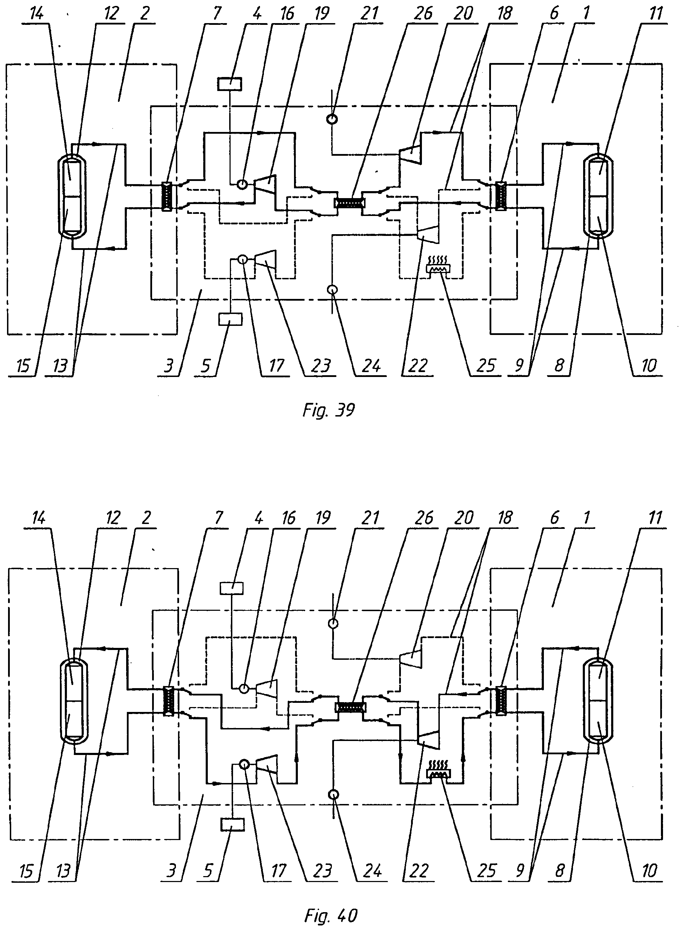

Fig.39 shows the diagram of the installation for accumulating, storing and returning of a mechanical energy, working in energy accumulating, and Fig.40 - in energy returning, with one conventionally hot heat transfer fluid agent loop, one conventionally cold heat transfer fluid agent loop, one gaseous working medium loop, with the heat exchanger - cooler of the gaseous working medium after the expander, working in the energy returning process, with the heat exchanger "gaseous working medium - gaseous working medium", with one tank in the each heat transfer fluid agent loop.

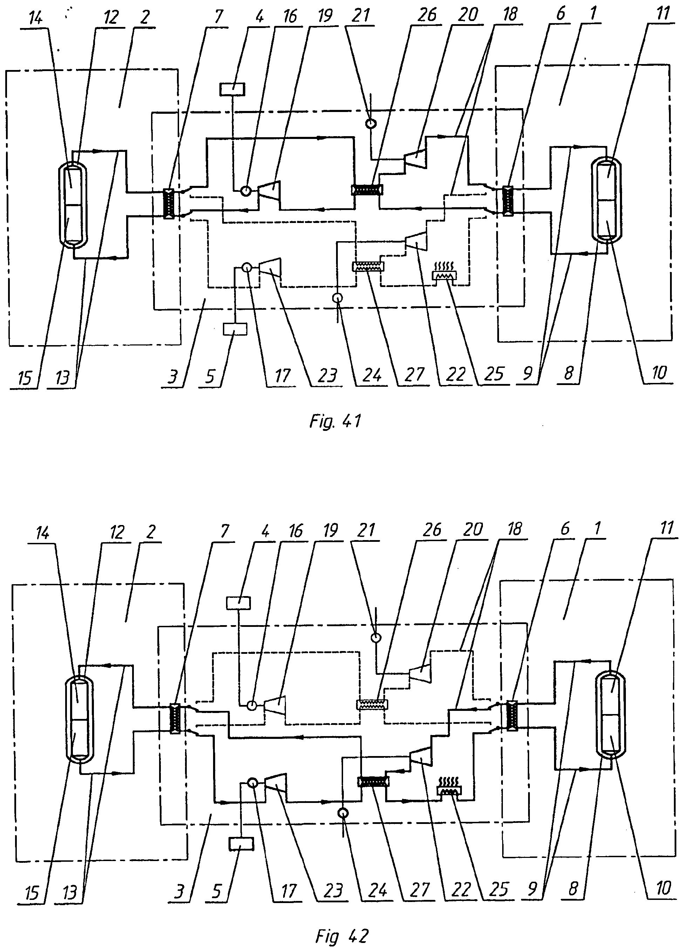

Fig.41 shows the diagram of the installation for accumulating, storing and returning of a mechanical energy, working in energy accumulating, and Fig.42 - in energy returning, with one conventionally hot heat transfer fluid agent loop, one conventionally cold heat transfer fluid agent loop, one gaseous working medium loop, the heat exchanger - cooler of the gaseous working medium after the expander, working in the energy returning process, with one heat exchanger "gaseous working medium - gaseous working medium", working in the energy accumulating process, with one heat exchanger "gaseous working medium - gaseous working medium", working in the energy returning process, with one tank in the each heat transfer fluid agent loop.

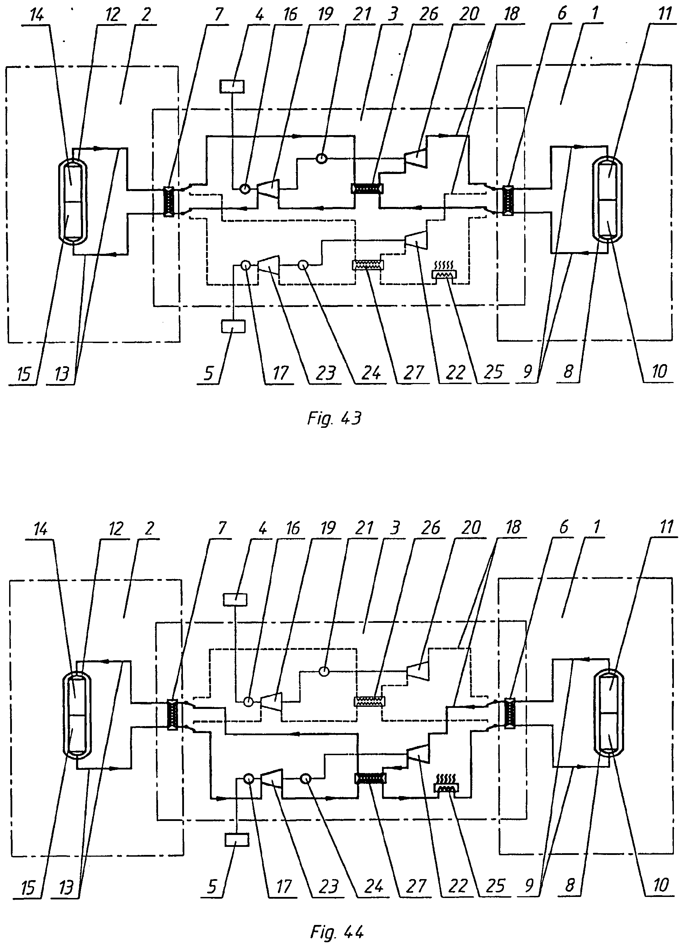

Fig.43 shows the diagram of the installation for accumulating, storing and returning of a mechanical energy, working in energy accumulating, and Fig.44 - in energy returning, with one conventionally hot heat transfer fluid agent loop, one conventionally cold heat transfer fluid agent loop, one gaseous working medium loop, with the heat exchanger - cooler of the gaseous working medium after the expander, working in the energy returning process, with one heat exchanger "gaseous working medium - gaseous working medium", working in the energy accumulating process, with one heat exchanger "gaseous working medium - gaseous working medium", working in the energy returning process, with one tank in the each heat transfer fluid agent loop, in which the mechanical energy, releasing in the expanders of the gaseous working medium loop, is consumed by the compressors of the gaseous working medium loop.

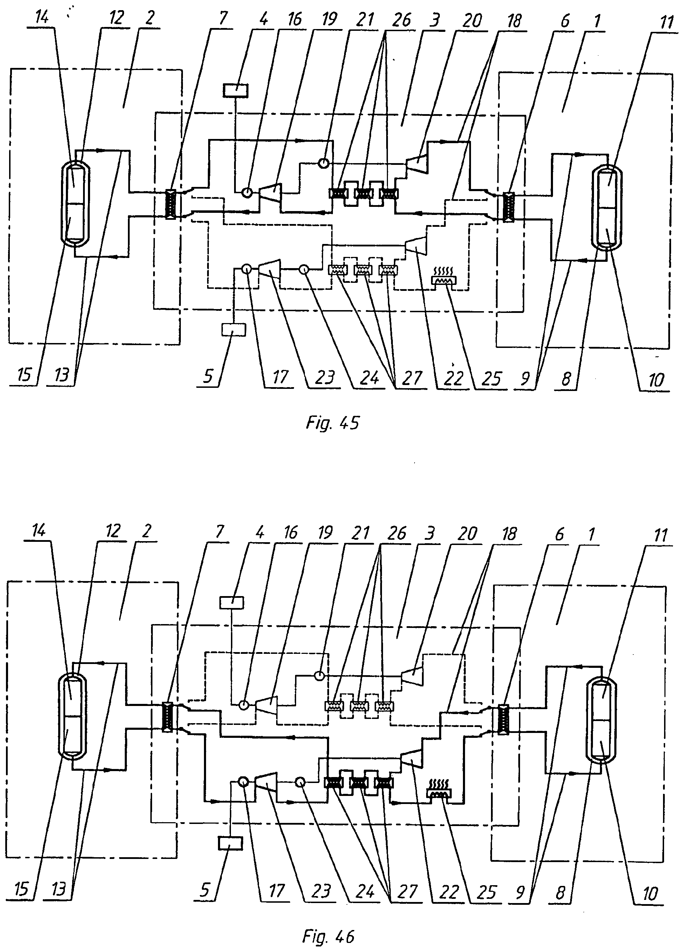

Fig.45 shows the diagram of the installation for accumulating, storing and returning of a mechanical energy, working in energy accumulating, and Fig.46 - in energy returning, with one conventionally hot heat transfer fluid agent loop, one conventionally cold heat transfer fluid agent loop, one gaseous working medium loop, with the heat exchanger - cooler of the gaseous working medium after the expander, working in the energy returning process, with three series heat exchangers "gaseous working medium - gaseous working medium", working in the energy accumulating process, with three series heat exchangers "gaseous working medium - gaseous working medium", working in the energy returning process, with one tank in the each heat transfer fluid agent loop, in which the mechanical energy, releasing in the expanders of the gaseous working medium loop, is consumed by the compressors of the gaseous working medium loop.

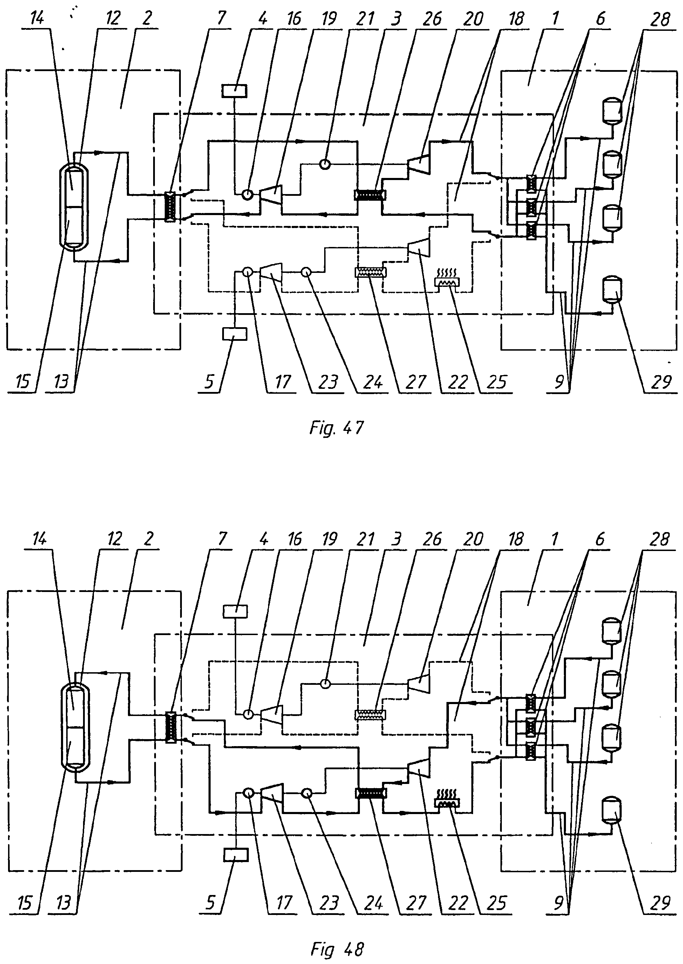

Fig.47 shows the diagram of the installation for accumulating, storing and returning of a mechanical energy, working in energy accumulating, and Fig.48 - in energy returning, with one conventionally hot heat transfer fluid agent loop, one conventionally cold heat transfer fluid agent loop, one gaseous working medium loop, with three parallel heat exchangers "gaseous working medium - conventionally cold heat transfer fluid agent", with the heat exchanger - cooler of the gaseous working medium after the expander, working in the energy returning process, with one heat exchanger "gaseous working medium - gaseous working medium", working in the energy accumulating process, with one heat exchanger "gaseous working medium - gaseous working medium", working in the energy returning process, with one tank in the conventionally hot heat transfer fluid agent loop, with four tanks in the conventionally cold heat transfer fluid agent loop, in which the mechanical energy, releasing in the expanders of the gaseous working medium loop, is consumed by the compressors of the gaseous working medium loop.

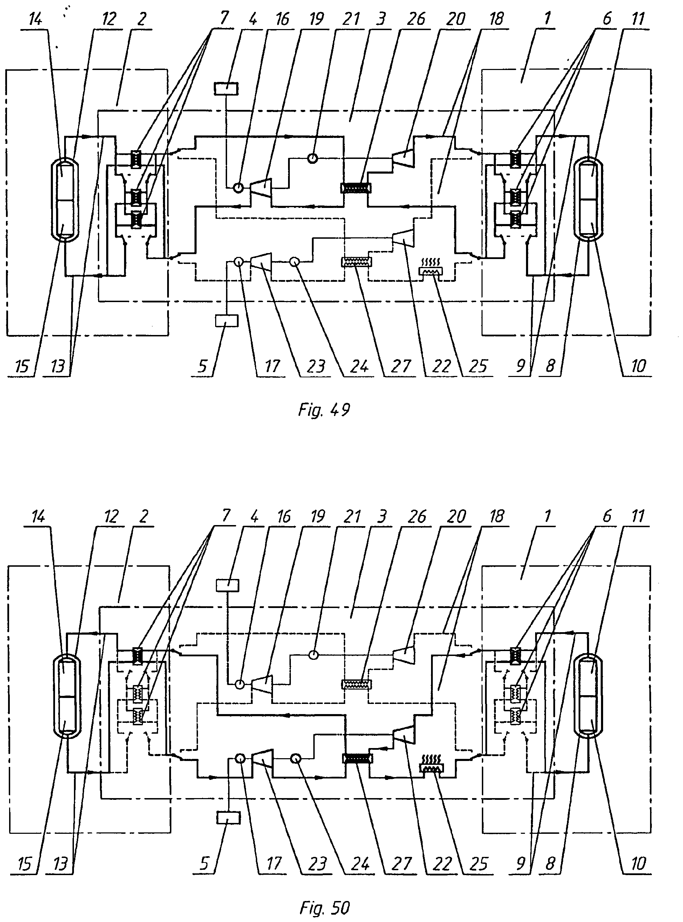

Fig.49 shows the diagram of the installation for accumulating, storing and returning of a mechanical energy, working in energy accumulating, and Fig.50 - in energy returning, with one conventionally hot heat transfer fluid agent loop, one conventionally cold heat transfer fluid agent loop, one gaseous working medium loop, with three parallel heat exchangers "gaseous working medium - conventionally cold heat transfer fluid", from which three are working in energy accumulating, but one is working in energy returning, with three parallel heat exchangers, "gaseous working medium - conventionally hot heat transfer fluid", from which three are working in energy accumulating, but one is working in energy returning, with the heat exchanger - cooler of the gaseous working medium after the expander, working in the energy returning process, with one heat exchanger "gaseous working medium - gaseous working medium", working in the energy accumulating process, with one heat exchanger "gaseous working medium - gaseous working medium", working in the energy returning process, with one tank in the each heat transfer fluid agent loop, in which the mechanical energy, releasing in the expanders of the gaseous working medium loop, is consumed by the compressors of the gaseous working medium loop.

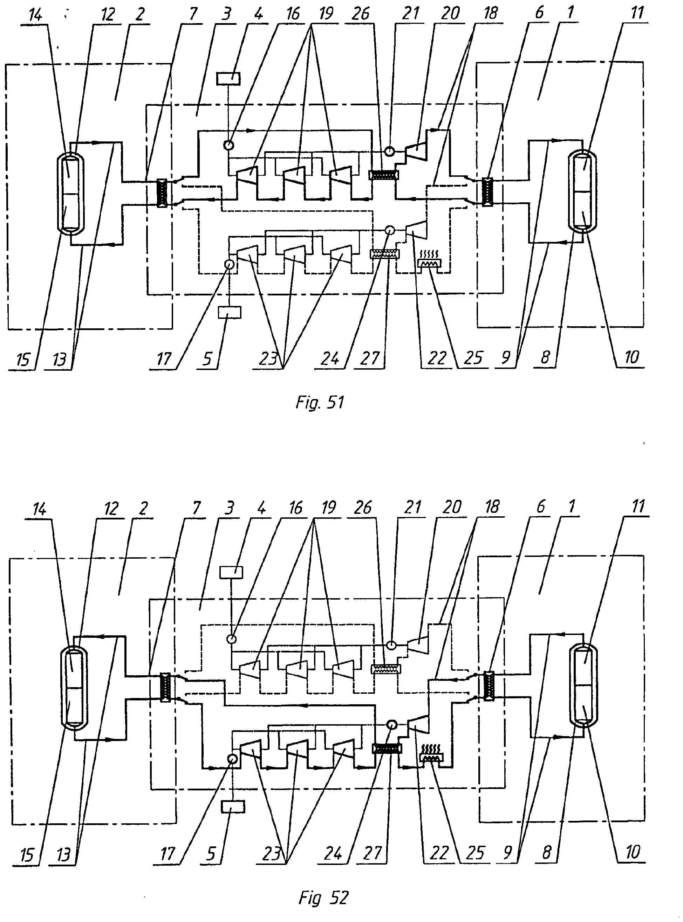

Fig.51 shows the diagram of the installation for accumulating, storing and returning of a mechanical energy, working in energy accumulating, Fig.52 - in energy returning, with one conventionally hot heat transfer fluid agent loop, one conventionally cold heat transfer fluid agent loop, one gaseous working medium loop, with three compressors, working in the energy accumulating process, with three expanders, working in the energy returning process, with the heat exchanger - cooler of the gaseous working medium after the expander, working in the energy returning process, with one heat exchanger "gaseous working medium - gaseous working medium", working in the energy accumulating process, with one heat exchanger "gaseous working medium - gaseous working medium", working in the energy returning process, with one tank in the each heat transfer fluid agent loop, in which the mechanical energy, releasing in the expanders of the gaseous working medium loop, is consumed by the compressors of the gaseous working medium loop.

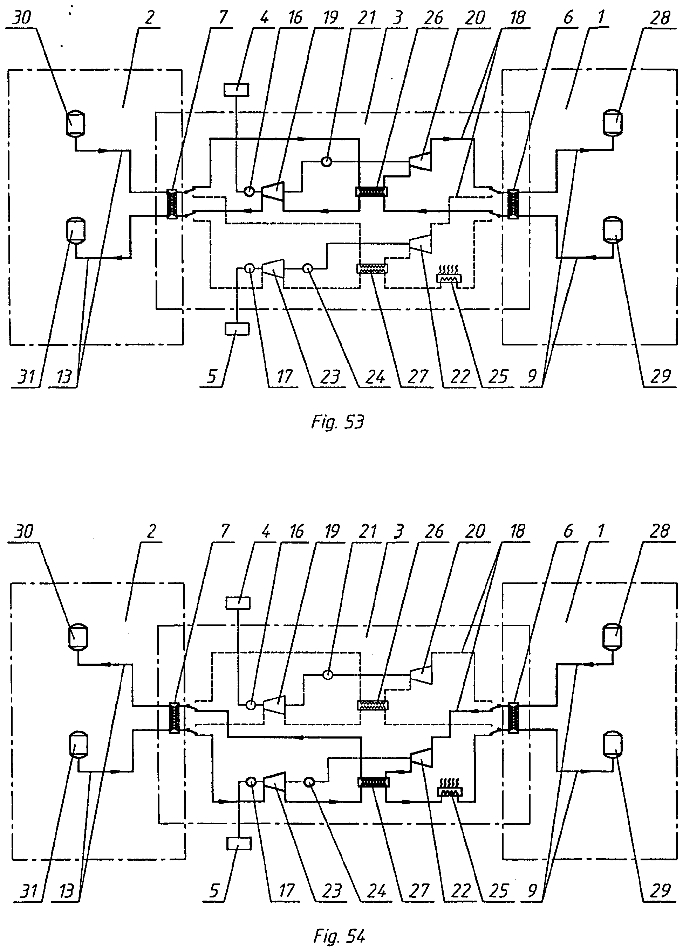

Fig.53 shows the diagram of the installation for accumulating, storing and returning of a mechanical energy, working in energy accumulating, and Fig.54 - in energy returning, with one conventionally hot heat transfer fluid agent loop, one conventionally cold heat transfer fluid agent loop, one gaseous working medium loop, with two tanks in the conventionally hot heat transfer fluid agent loop, with two tanks in the conventionally cold heat transfer fluid agent loop, with the heat exchanger - cooler of the gaseous working medium after the expander, working in the energy returning process, with one heat exchanger "gaseous working medium - gaseous working medium", working in the energy accumulating process, with one heat exchanger "gaseous working medium - gaseous working medium", working in the energy returning process, in which the mechanical energy, releasing in the expanders of the gaseous working medium loop, is consumed by the compressors of the gaseous working medium loop.

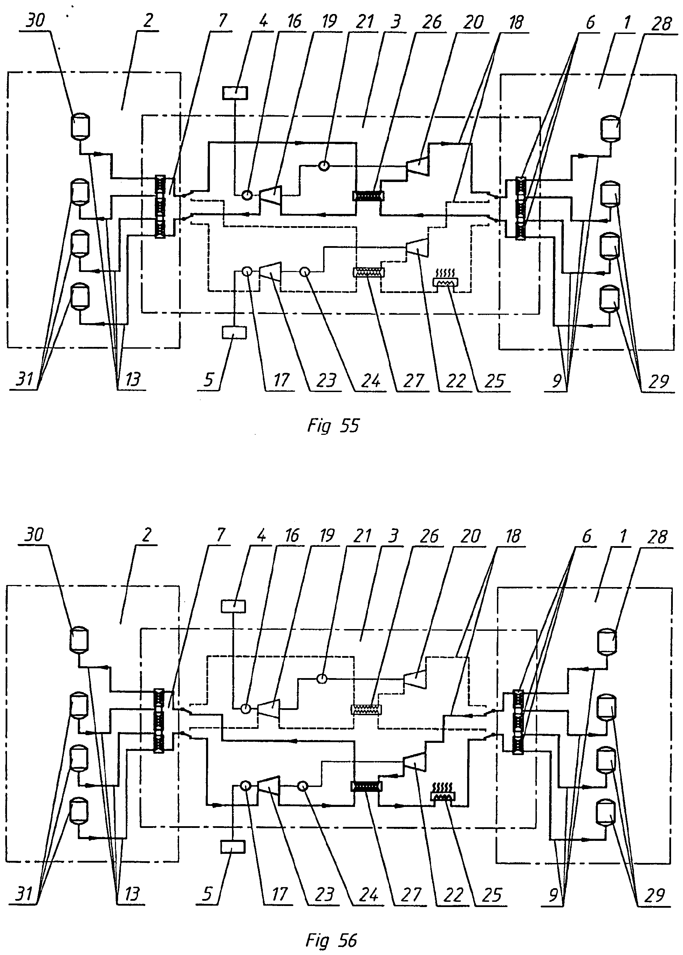

Fig.55 shows the diagram of the installation for accumulating, storing and returning of a mechanical energy, working in energy accumulating, and Fig.56 - in energy returning, with one conventionally hot heat transfer fluid agent loop, one conventionally cold heat transfer fluid agent loop, one gaseous working medium loop, with the heat exchanger - cooler of the gaseous working medium after the expander, working in the energy returning process, with four tanks in the conventionally hot heat transfer fluid agent loop, with four tanks in the conventionally cold heat transfer fluid agent loop, with three series heat exchangers "gaseous working medium - conventionally cold heat transfer fluid agent", with three series heat exchangers "gaseous working medium - conventionally hot heat transfer fluid agent", with inflow and outflow of the additional flows of the heat transfer fluid agents in the heat transfer process with the gaseous working medium, with one heat exchanger "gaseous working medium - gaseous working medium", working in the energy accumulating process, with one heat exchanger "gaseous working medium - gaseous working medium", working in the energy returning process, in which the mechanical energy, releasing in the expanders of the gaseous working medium loop, is consumed by the compressors of the gaseous working medium loop.

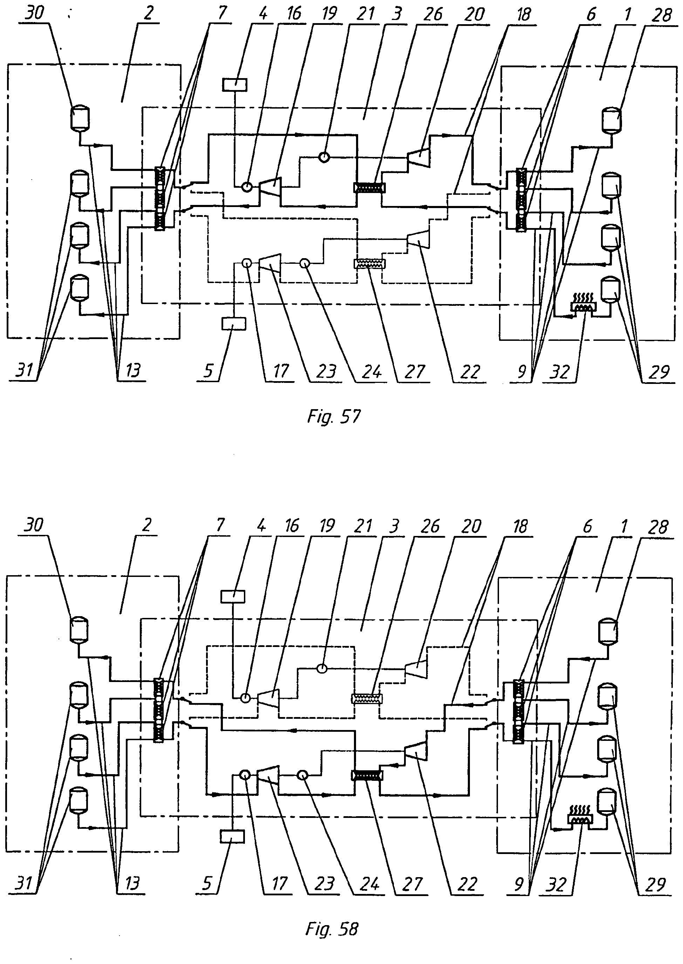

Fig.57 shows the diagram of the installation for accumulating, storing and returning of a mechanical energy, working in energy accumulating, and Fig.58 - in energy returning, with one conventionally hot heat transfer fluid agent loop, one conventionally cold heat transfer fluid agent loop, one gaseous working medium loop, without the heat exchanger - cooler of the gaseous working medium, with the heat exchanger - cooler of the conventionally cold heat transfer fluid agent, with four tanks in the conventionally hot heat transfer fluid agent loop, with four tanks in the conventionally cold heat transfer fluid agent loop, with three series heat exchangers "gaseous working medium - conventionally cold heat transfer fluid agent", with three series heat exchangers "gaseous working medium - conventionally hot heat transfer fluid agent", with inflow and outflow of the additional flows of the heat transfer fluid agents in the heat transfer process with the gaseous working medium, with one heat exchanger "gaseous working medium - gaseous working medium", working in the energy accumulating process, with one heat exchanger "gaseous working medium - gaseous working medium", working in the energy returning process, in which the mechanical energy, releasing in the expanders of the gaseous working medium loop, is consumed by the compressors of the gaseous working medium loop.

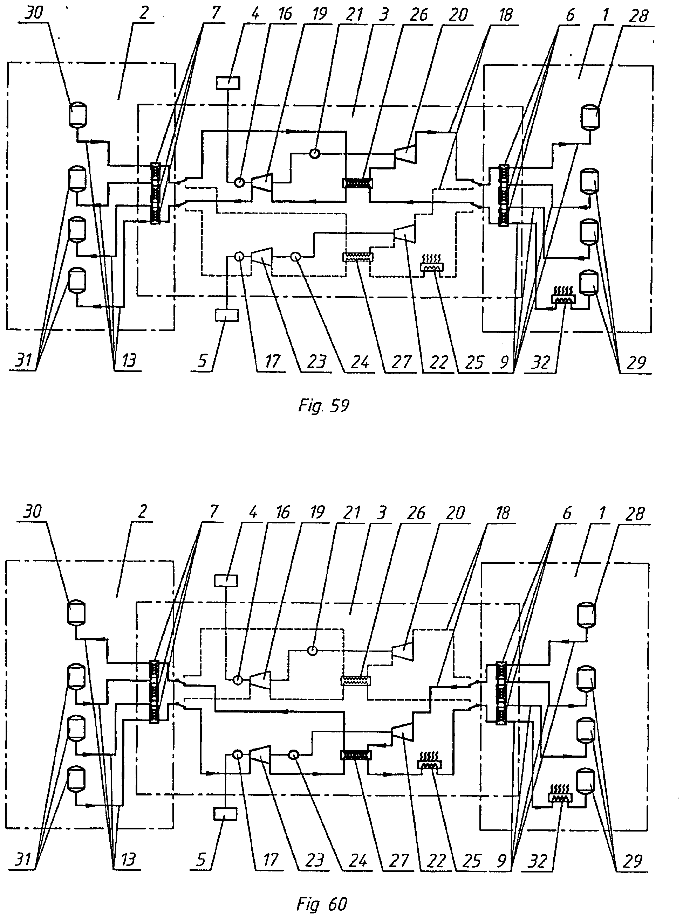

Fig.59 shows the diagram of the installation for accumulating, storing and returning of a mechanical energy, working in energy accumulating, and Fig.60 - in energy returning, with one conventionally hot heat transfer fluid agent loop, one conventionally cold heat transfer fluid agent loop, one gaseous working medium loop, with the heat exchanger - cooler of the gaseous working medium after the expander, working in the energy returning process, with the heat exchanger - cooler of the conventionally cold heat transfer fluid agent, with four tanks in the conventionally hot heat transfer fluid agent loop, with four tanks in the conventionally cold heat transfer fluid agent loop, with three series heat exchangers "gaseous working medium - conventionally cold heat transfer fluid agent", with three series heat exchangers "gaseous working medium - conventionally hot heat transfer fluid agent", with inflow and outflow of the additional flows of the heat transfer fluid agents in the heat transfer process with the gaseous working medium, with one heat exchanger "gaseous working medium - gaseous working medium", working in the energy accumulating process, with one heat exchanger "gaseous working medium - gaseous working medium", working in the energy returning process, in which the mechanical energy, releasing in the expanders of the gaseous working medium loop, is consumed by the compressors of the gaseous working medium loop.

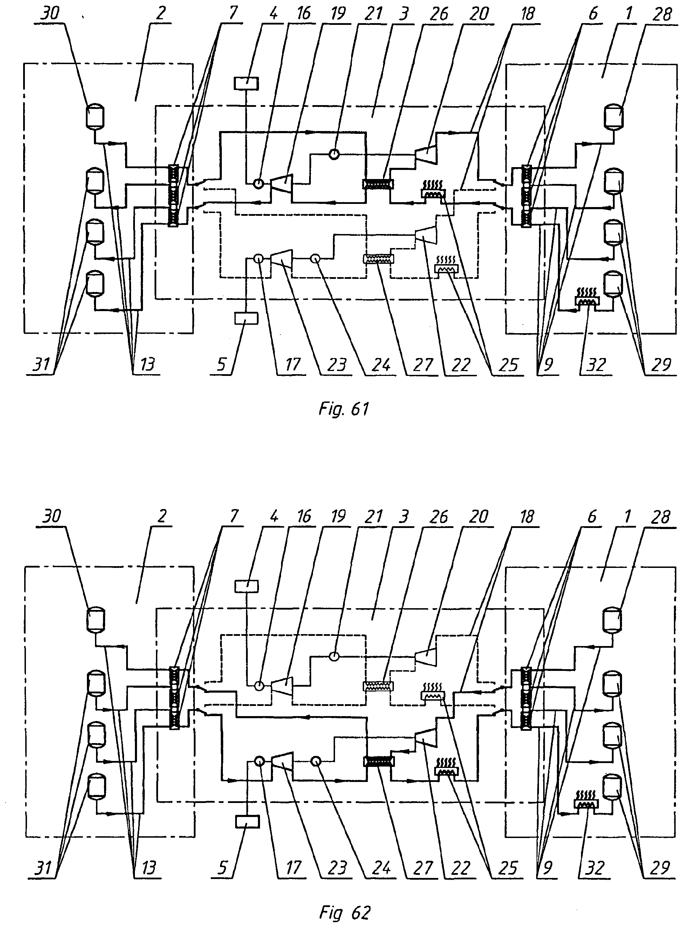

Fig.61 shows the diagram of the installation for accumulating, storing and returning of a mechanical energy, working in energy accumulating, and Fig.62 - in energy returning, with one conventionally hot heat transfer fluid agent loop, one conventionally cold heat transfer fluid agent loop, one gaseous working medium loop, with the heat exchanger - cooler of the gaseous working medium after the expander, working in the energy returning process, with the heat exchanger - cooler of the gaseous working medium before the compressor, working in the energy accumulating process, with the heat exchanger - cooler of the conventionally cold heat transfer fluid agent, with four tanks in the conventionally hot heat transfer fluid agent loop, with four tanks in the conventionally cold heat transfer fluid agent loop, with three series heat exchangers "gaseous working medium - conventionally cold heat transfer fluid agent", with three series heat exchangers "gaseous working medium - conventionally hot heat transfer fluid agent", with inflow and outflow of the additional flows of the heat transfer fluid agents in the heat transfer process with the gaseous working medium, with one heat exchanger "gaseous working medium - gaseous working medium", working in the energy accumulating process, with one heat exchanger "gaseous working medium - gaseous working medium", working in the energy returning process, in which the mechanical energy, releasing in the expanders of the gaseous working medium loop, is consumed by the compressors of the gaseous working medium loop.

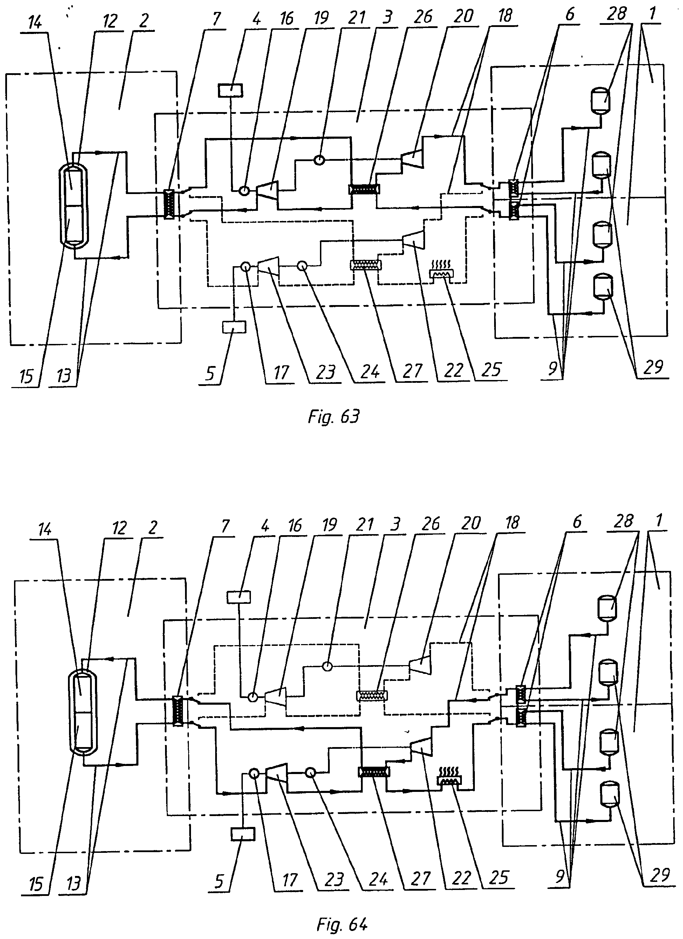

Fig.63 shows the diagram of the installation for accumulating, storing and returning of a mechanical energy, working in energy accumulating, and Fig.64 - in energy returning, with one conventionally hot heat transfer fluid agent loop, two conventionally cold heat transfer fluid agent loops, one gaseous working medium loop, with the heat exchanger - cooler of the gaseous working medium after the expander, working in the energy returning process, with one tank in the conventionally hot heat transfer fluid agent loop, with two tanks in each of the conventionally cold heat transfer fluid agent loops, with one heat exchanger "gaseous working medium - gaseous working medium", working in the energy accumulating process, with one heat exchanger "gaseous working medium - gaseous working medium", working in the energy returning process, in which the mechanical energy, releasing in the expanders of the gaseous working medium loop, is consumed by the compressors of the gaseous working medium loop.

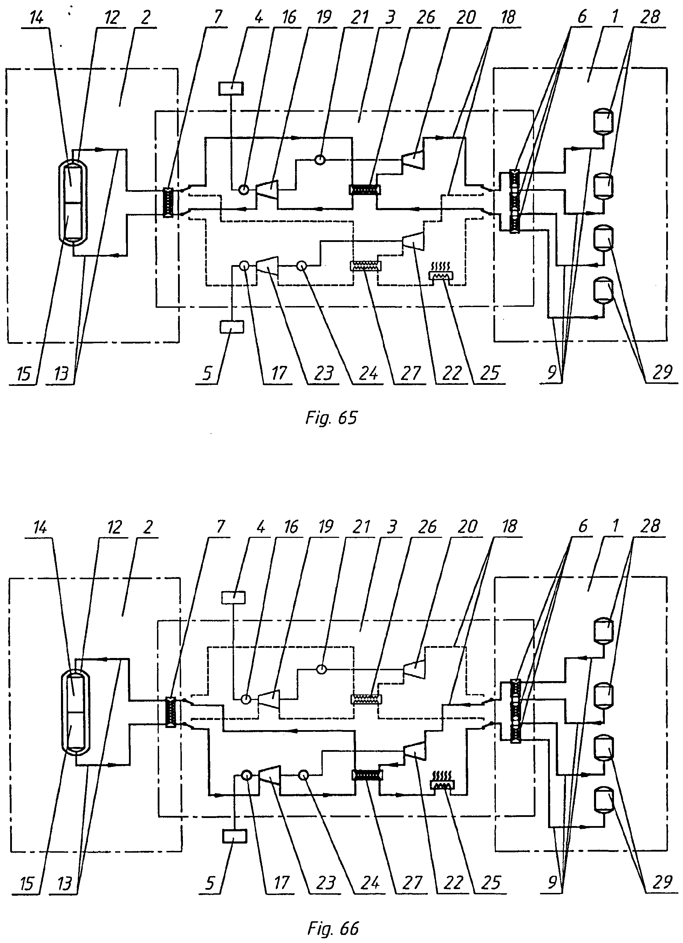

Fig.65 shows the diagram of the installation for accumulating, storing and returning of a mechanical energy, working in energy accumulating, and Fig.66 - in energy returning, with one conventionally hot heat transfer fluid agent loop, one conventionally cold heat transfer fluid agent loop, one gaseous working medium loop, with the heat exchanger - cooler of the gaseous working medium after the expander, working in the energy returning process, with one tank in the conventionally hot heat transfer fluid agent loop, with four tanks in the conventionally cold heat transfer fluid agent loop, with three series heat exchangers "gaseous working medium - conventionally cold heat transfer fluid agent", with inflow and outflow of the additional flows of the conventionally cold heat transfer fluid agent in the heat transfer process with the gaseous working medium, with one heat exchanger "gaseous working medium - gaseous working medium", working in the energy accumulating process, with one heat exchanger "gaseous working medium - gaseous working medium", working in the energy returning process, in which the mechanical energy, releasing in the expanders of the gaseous working medium loop, is consumed by the compressors of the gaseous working medium loop.

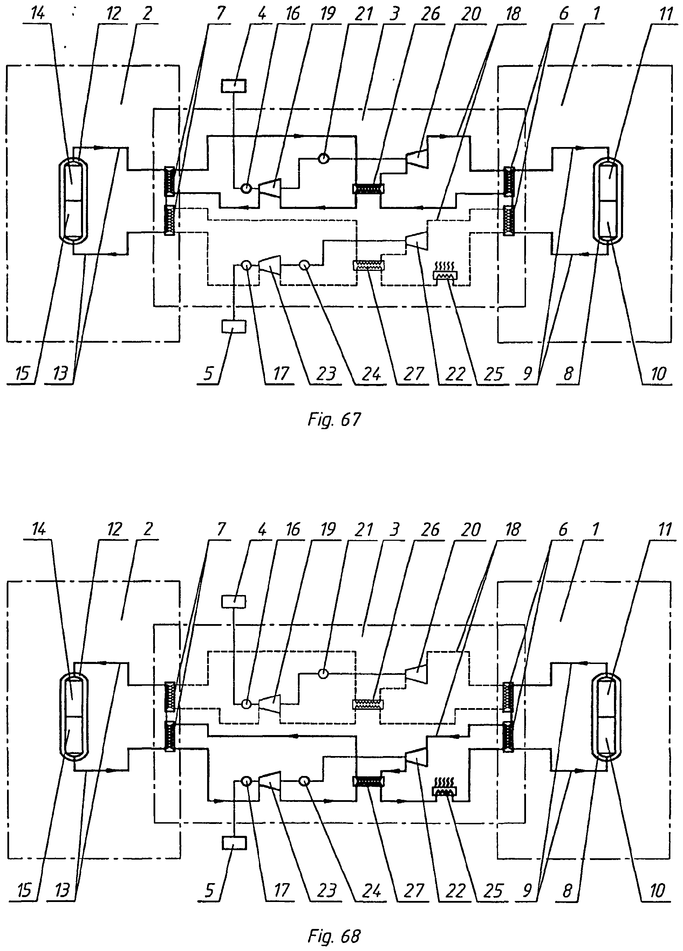

Fig.67 shows the diagram of the installation for accumulating, storing and returning of a mechanical energy, working in energy accumulating, and Fig.68 - in energy returning, with one conventionally hot heat transfer fluid agent loop, one conventionally cold heat transfer fluid agent loop, one gaseous working medium loop, with two not connected between them pipeline systems in the gaseous working medium loop, with the heat exchanger - cooler of the gaseous working medium after the expander, working in the energy returning process, with one heat exchanger "gaseous working medium - gaseous working medium", working in the energy accumulating process, with one heat exchanger "gaseous working medium - gaseous working medium", working in the energy returning process, with one tank in the each heat transfer fluid agent loop, in which the mechanical energy, releasing in the expanders of the gaseous working medium loop, is consumed by the compressors of the gaseous working medium loop.

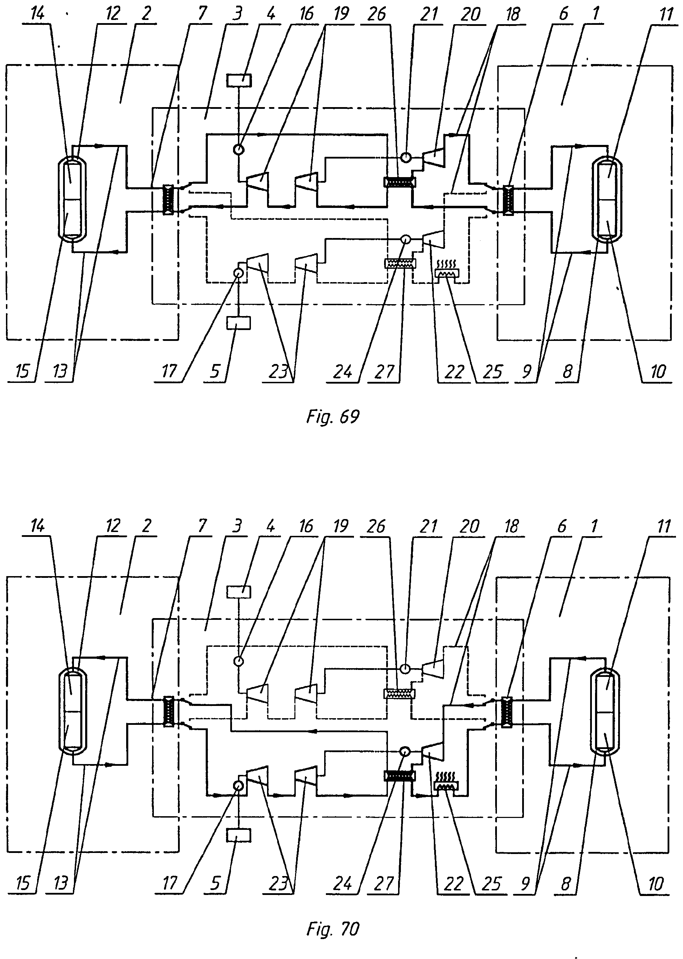

Fig.69 shows the diagram of the installation for accumulating, storing and returning of a mechanical energy, working in energy accumulating, and Fig.70 - in energy returning, with one conventionally hot heat transfer fluid agent loop, one conventionally cold heat transfer fluid agent loop, one gaseous working medium loop, with the heat exchanger - cooler of the gaseous working medium after the expander, working in the energy returning process, with two compressors, connected in series, working in the energy accumulating process, two expanders, connected in series, working in the energy returning process, with one tank in the each heat transfer fluid agent loop, with one heat exchanger "gaseous working medium - gaseous working medium", working in the energy accumulating process, with one heat exchanger "gaseous working medium - gaseous working medium", working in the energy returning process, in which the mechanical energy, releasing in the expanders of the gaseous working medium loop, is consumed by the compressors of the gaseous working medium loop.

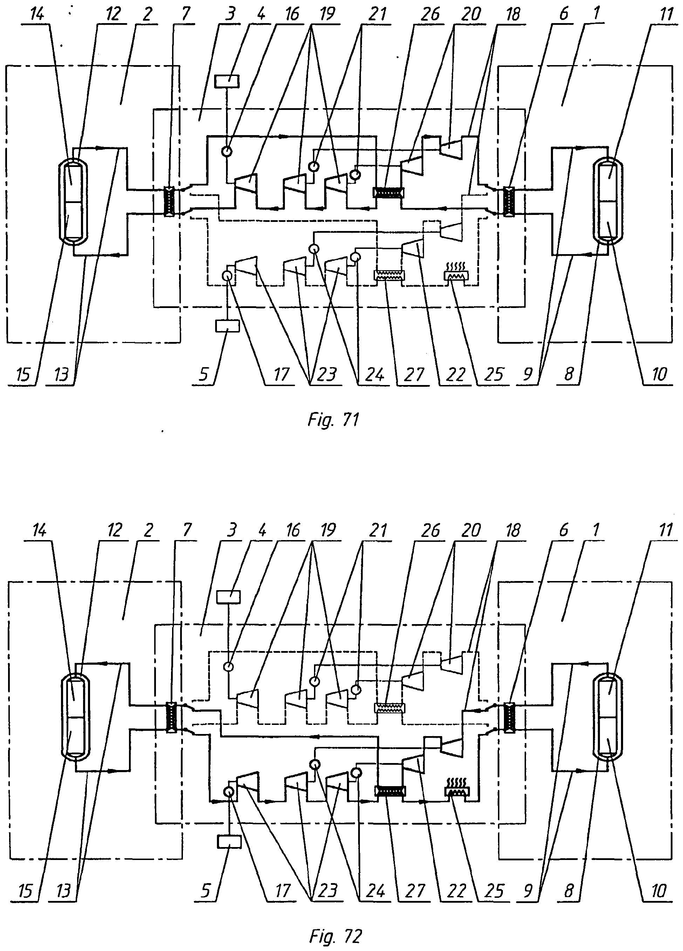

Fig.71 shows the diagram of the installation for accumulating, storing and returning of a mechanical energy, working in energy accumulating, and Fig.72 - in energy returning, with one conventionally hot heat transfer fluid agent loop, one conventionally cold heat transfer fluid agent loop, one gaseous working medium loop, with the heat exchanger - cooler of the gaseous working medium after the expander, working in the energy returning process, with three series compressors, working in the energy accumulating process, with two series expanders, working in the energy accumulating process, with three series expanders, working in the energy returning process, with two series compressors, working in the energy returning process, with one tank in the each heat transfer fluid agent loop, with one heat exchanger "gaseous working medium - gaseous working medium", working in the energy accumulating process, with one heat exchanger "gaseous working medium - gaseous working medium", working in the energy returning process, in which the mechanical energy, releasing in the expanders of the gaseous working medium loop, is consumed by the compressors of the gaseous working medium loop.

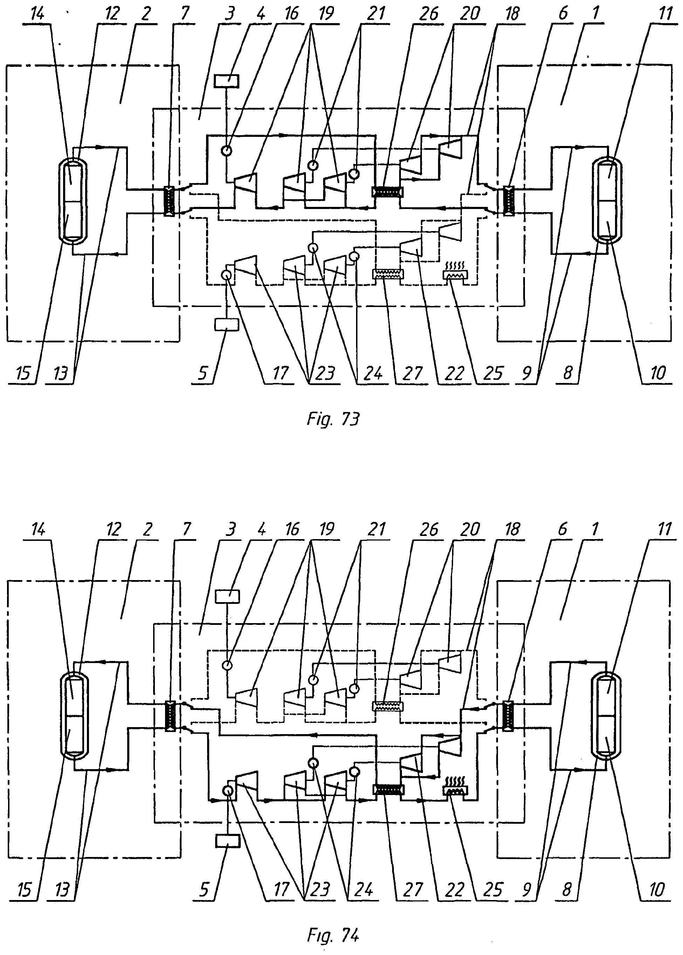

Fig 73 shows the diagram of the installation for accumulating, storing and returning of a mechanical energy, working in energy accumulating, and Fig.74 -in energy returning, with one conventionally hot heat transfer fluid agent loop, one conventionally cold heat transfer fluid agent loop, one gaseous working medium loop, with the heat exchanger - cooler of the gaseous working medium after an expander, working in the energy returning process, with three compressors, working in the energy accumulating process, from which two are connected in parallel, and the third - in series with them, with two parallel expanders, working in the energy accumulating process, with three expanders, working in the energy returning process, from which two are connected in parallel, and the third - in series with them, with two parallel compressors, working in the energy returning process, with one tank in the each heat transfer fluid agent loop, with one heat exchanger " gaseous working medium - gaseous working medium", working in the energy accumulating process, with one heat exchanger "gaseous working medium - gaseous working medium", working in the energy returning process, in which the mechanical energy, releasing in the expanders in the gaseous working medium loop, is consumed by compressors in the gaseous working medium loop.

### Example 1

An installation for accumulating, storing and returning of a mechanical energy, shown in Fig.1 in the energy accumulating process, and in Fig.2 in the energy returning process, comprises the conventionally cold heat transfer fluid agent loop 1, the conventionally hot heat transfer fluid agent loop 2 and the gaseous working medium loop 3, connected via the link 16 with the source of the mechanical energy, being accumulated, 4 and via the link 17 with the accumulated mechanical energy user 5. The loop 1 is made with the possibility to cool the loop heat transfer fluid agent in the interaction with the loop 3 via the heat exchanger 6 "gaseous working medium - conventionally cold heat transfer fluid agent" in the energy accumulating process, and to heat the loop heat transfer fluid agent in the energy returning process, the loop 2 is made with the possibility to heat the heat transfer fluid agent in the interaction with the loop 3 via the heat exchanger 7 "gaseous working medium - conventionally hot heat transfer fluid agent" in the energy accumulating process, and to cool the heat transfer fluid agent in the energy returning process. Besides the heat exchanger 6 the loop 1 contains the tank 8, the pipeline system 9, the apparatus or the system for providing of heat transfer agent moving in the loop (not shown in the figures) through the heat exchanger 6 in the energy accumulating process from one part 10 of the tank 8 with the loop heat transfer fluid agent, heated more, into another part 11 of the tank 8 with the loop heat transfer fluid agent, heated less, and in the energy returning process from one part 11 of the tank 8 with the loop heat transfer fluid agent, heated less, into another part 10 of the tank 8 with the loop heat transfer fluid agent, heated more. Besides the heat exchanger 7 the loop 2 contains the tank 12, the pipeline system 13, the apparatus or the system for providing of heat transfer agent moving in the loop (not shown in the figures) through the heat exchanger 7 in the energy accumulating process from one part 14 of the tank 12 with the loop heat transfer fluid agent, heated less, into another part 15 of the tank 12 with the loop heat transfer fluid agent, heated more, and in the energy returning process from one part 15 of the tank 12 with the loop heat transfer fluid agent, heated more, into another part 14 of the tank 12 with the loop heat transfer fluid agent, heated less. The loop 3, besides the heat exchangers 6 and 7, the link 16 with the source 4 of the mechanical energy, being accumulated, and the link 17 with the accumulated mechanical energy user 5, contains the pipeline system 18, the compressor 19 for providing of the gaseous working medium compression in the energy accumulating process, the expander 20 for providing of the gaseous working medium expansion in the energy accumulating process, the link 21 for removing from the expander 20 the mechanical energy, releasing in it in the energy accumulating process, the compressor 22 for providing of the gaseous working medium compression in the energy returning process, the link 24 for supplying to the compressor 22 the mechanical energy, being consumed in it in the energy returning process, the expander 23 for providing of the gaseous working medium expansion in the energy returning process, the heat exchanger - cooler 25 for cooling of the gaseous working medium, leaving the expander 23 in the energy returning process.

### Example 2

An installation for accumulating, storing and returning of a mechanical energy, shown in Fig.3 in the energy accumulating process, and in Fig.4 in the energy returning process, is analogous with the installation, according to the example 1, but where in the capacity of the user of the mechanical energy, releasing in the expander 20 in the energy accumulating process, is the compressor 19, connected with the expander 20 via the link 21, and the source of the mechanical energy, being consumed by the compressor 22 in the energy returning process, is the expander 23, connected to the compressor 22 via the link 24.

### Example 3

An installation for accumulating, storing and returning of a mechanical energy, shown in Fig.5 in the energy accumulating process, and in Fig.6 in the energy returning process, is analogous with the installation, according to the example 2, but where the heat exchanger - cooler 25 is placed in the loop 3 so that to cool the gaseous working medium, leaving the compressor 22 in the energy returning process.

### Example 4

An installation for accumulating, storing and returning of a mechanical energy, shown in Fig.7 in the energy accumulating process, and in Fig.8 in the energy returning process, is analogous with the installation, according to the example 3, but where there are used some, in this case four heat exchangers 6 "gaseous working medium - conventionally cold heat transfer fluid agent", connected in parallel, both in the gaseous working medium loop 3 and in the heat transfer fluid agent loop 1.

### Example 5

An installation for accumulating, storing and returning of a mechanical energy, shown in Fig.9 in the energy accumulating process, and in Fig.10 in the energy returning process, is analogous with the installation, according to the example 4, but where there are three heat exchangers 6 "gaseous working medium - conventionally cold heat transfer fluid agent", connected in parallel, both in the gaseous working medium loop 3 and in the heat transfer fluid agent loop 1, and three heat exchangers 7 "gaseous working medium - conventionally hot heat transfer fluid agent", connected in parallel, both in the gaseous working medium loop 3 and in the heat transfer fluid agent loop 2, where in the energy accumulating process all the heat exchangers 6 and all the heat exchangers 7 are used, but in the energy returning process one heat exchanger 6 and one heat exchanger 7 are used.

### Example 6

An installation for accumulating, storing and returning of a mechanical energy, shown in Fig.11 in the energy accumulating process, and in Fig.12 in the energy returning process, is analogous with the installation, according to the example 2, but where in the gaseous working medium loop 3 there are three compressors 19, connected in series, and three expanders 23, connected in series.

### Example 7

An installation for accumulating, storing and returning of a mechanical energy, shown in Fig.13 in the energy accumulating process, and in Fig.14 in the energy returning process comprises the conventionally cold heat transfer fluid agent loop 1, the conventionally hot heat transfer fluid agent loop 2 and the gaseous working medium loop 3, connected via the link 16 with the source of the mechanical energy, being accumulated, 4 and via the link 17 with the accumulated mechanical energy user 5. The loop 1 is made with the possibility to cool the loop heat transfer fluid agent in the interaction with the loop 3 via the heat exchanger 6 "gaseous working medium - conventionally cold heat transfer fluid agent" in the energy accumulating process, and to heat the loop heat transfer fluid agent in the energy returning process, the loop 2 is made with the possibility to heat the loop heat transfer fluid agent in the interaction with the loop 3 via the heat exchanger 7 "gaseous working medium - conventionally hot heat transfer fluid agent" in the energy accumulating process, and to cool the loop heat transfer fluid agent in the energy returning process. Besides the heat exchanger 6 the loop 1 contains the tank 28 with the loop heat transfer agent, heated less, the tank 29 with the loop heat transfer agent, heated more, the pipeline system 9, the apparatus or the system for providing of heat transfer agent moving in the loop (not shown in the figures) through the heat exchanger 6 in the energy accumulating process from the tank 29 with the loop heat transfer fluid agent, heated more, into the tank 28 with the loop heat transfer fluid agent, heated less, and in the energy returning process from the tank 28 with the loop heat transfer fluid agent, heated less, into the tank 29 with the loop heat transfer fluid agent, heated more. Besides the heat exchanger 7 the loop 2 contains the tank 30 with the loop heat transfer agent, heated less, the tank 31 with the loop heat transfer agent, heated more, the pipeline system 13, the apparatus or the system for providing of heat transfer agent moving in the loop (not shown in the figures) through the heat exchanger 7 in the energy accumulating process from the tank 30 with the loop heat transfer fluid agent, heated less, into the tank 31 with the loop heat transfer fluid agent, heated more, and in the energy returning process from the tank 31 with the loop heat transfer fluid agent, heated more, into the tank 30 with the loop heat transfer fluid agent, heated less. The loop 3, besides the heat exchangers 6 and 7, the link 16 with the source 4 of the mechanical energy, being accumulated, and the link 17 with the accumulated mechanical energy user 5, contains the pipeline system 18, the compressor 19 for providing of the gaseous working medium compression in the energy accumulating process, the expander 20 for providing of the gaseous working medium expansion in the energy accumulating process, the link 21 for transferring from the expander 20 the mechanical energy, releasing in it in the energy accumulating process, to the compressor 19, the compressor 22 for providing of the gaseous working medium compression in the energy returning process, the expander 23 for providing of the gaseous working medium expansion in the energy returning process, the link 24 for transferring from the expander 23 to the compressor 22 the mechanical energy, being consumed by the compressor 22 in the energy returning process, the heat exchanger - cooler 25 for cooling the loop gaseous working medium after leaving the compressor 22 in the energy returning process.

### Example 8

An installation for accumulating, storing and returning of a mechanical energy, shown in Fig.15 in the energy accumulating process, and in Fig.16 in the energy returning process, is analogous with the installation, according to the example 7, but where the gaseous working medium heat exchanger - cooler is excluded from the gaseous working medium loop 3 structure, and the conventionally hot heat transfer fluid agent loop 2 additionally contains the heat exchanger-cooler 33 of the loop heat transfer fluid agent for providing of the loop heat transfer agent cooling in the energy accumulating process before heat transfer agent entering into the heat exchanger 7 "gaseous working medium - conventionally hot heat transfer fluid agent" and/or for providing of the loop heat transfer agent cooling in the energy returning process after heat transfer agent leaving the heat exchanger 7 "gaseous working medium - conventionally hot heat transfer fluid agent".

### Example 9

An installation for accumulating, storing and returning of a mechanical energy, shown in Fig.17 in the energy accumulating process, and in Fig.18 in the energy returning process, is analogous with the installation, according to the example 7, but where the conventionally hot heat transfer fluid agent loop 2 additionally contains the heat exchanger-cooler 33 of the loop heat transfer agent for providing of the loop heat transfer agent cooling in the energy accumulating process before heat transfer agent entering into the heat exchanger 7 "gaseous working medium - conventionally hot heat transfer fluid agent" and/or for providing of the loop heat transfer agent cooling in the energy returning process after heat transfer agent leaving the heat exchanger 7 "gaseous working medium - conventionally hot heat transfer fluid agent".

### Example 10

An installation for accumulating, storing and returning of a mechanical energy, shown in Fig.19 in the energy accumulating process, and in Fig.20 in the energy returning process, is analogous with the installation, according to the example 9, but where the gaseous working medium loop 3 as an addition to the available heat exchanger - cooler 25 of the gaseous working medium, providing cooling of the working medium, leaving the compressor 22 in the energy returning process, contains one more heat exchanger - cooler 25 of the gaseous working medium for providing of cooling of the working medium, leaving in the energy accumulating process the heat exchanger 7 "gaseous working medium - conventionally hot heat transfer fluid agent".

### Example 11

An installation for accumulating, storing and returning of a mechanical energy, shown in Fig.21 in the energy accumulating process, and in Fig.22 in the energy returning process comprises the conventionally cold heat transfer fluid agent loop 1, the conventionally hot heat transfer fluid agent loop 2 and the gaseous working medium loop 3, connected via the link 16 with the source of the mechanical energy, being accumulated, 4 and via the link 17 with the accumulated mechanical energy user 5. The loop 1 is made with the possibility to cool the loop heat transfer fluid agent in the interaction with the loop 3 via three connected in parallel heat exchangers 6 "gaseous working medium - conventionally cold heat transfer fluid agent" in the energy accumulating process, and to heat the loop heat transfer fluid agent in the energy returning process, the loop 2 is made with the possibility to heat the loop heat transfer fluid agent in the interaction with the loop 3 via the heat exchanger 7 "gaseous working medium - conventionally hot heat transfer fluid agent" in the energy accumulating process, and to cool the loop heat transfer fluid agent in the energy returning process. Besides three heat exchangers 6 the loop 1 contains three tanks 28 with the loop heat transfer fluid agent, heated less, one tank 29 with the loop heat transfer agent, heated more, the pipeline system 9, the apparatus or the system for providing of heat transfer agent moving in the loop (not shown in the figures) through the heat exchangers 6 in the energy accumulating process from the tank 29 with the loop heat transfer fluid agent, heated more, into three tanks 28 with the loop heat transfer fluid agent, heated less, and in the energy returning process from three tanks 28 with the loop heat transfer fluid agent, heated less, into the tank 29 with the loop heat transfer fluid agent, heated more. Besides the heat exchanger 7 the loop 2 contains the tank 12, the pipeline system 13, the apparatus or the system for providing of heat transfer agent moving in the loop (not shown in the figures) through the heat exchanger 7 in the energy accumulating process from one part 14 of the tank 12 with the loop heat transfer fluid agent, heated less, into another part 15 of the tank 12 with the loop heat transfer fluid agent, heated more, and in the energy returning process from one part 15 of the tank 12 with the loop heat transfer fluid agent, heated more, into another part 14 of the tank 12 with the loop heat transfer fluid agent, heated less. The loop 3, besides three heat exchangers 6 and one heat exchanger 7, the link 16 with the source 4 of the mechanical energy, being accumulated, and the link 17 with the accumulated mechanical energy user 5, contains the pipeline system 18, the compressor 19 for providing of the gaseous working medium compression in the energy accumulating process, the expander 20 for providing of the gaseous working medium expansion in the energy accumulating process, the link 21 for transferring from the expander 20 the mechanical energy, releasing in it in the energy accumulating process, to the compressor 19, the compressor 22 for providing of the gaseous working medium compression in the energy returning process, the expander 23 for providing of the gaseous working medium expansion in the energy returning process, the link 24 for transferring from the expander 23 to the compressor 22 the mechanical energy, being consumed by the compressor 22 in the energy returning process, the heat exchanger - cooler 25 for cooling of the gaseous working medium, leaving the compressor 22 in the energy returning process.

### Example 12

An installation for accumulating, storing and returning of a mechanical energy, shown in Fig.23 in the energy accumulating process, and in Fig.24 in the energy returning process comprises the conventionally cold heat transfer fluid agent loop 1, the conventionally hot heat transfer fluid agent loop 2 and the gaseous working medium loop 3, connected via the link 16 with the source of the mechanical energy, being accumulated, 4 and via the link 17 with the accumulated mechanical energy user 5. The loop 1 is made with the possibility to cool the loop heat transfer fluid agent in the interaction with the loop 3 via three connected in series heat exchangers 6 "gaseous working medium - conventionally cold heat transfer fluid agent" in the energy accumulating process, and to heat the loop heat transfer fluid agent in the energy returning process, the loop 2 is made with the possibility to heat the loop heat transfer fluid agent in the interaction with the loop 3 via three connected in series heat exchangers 7 "gaseous working medium - conventionally hot heat transfer fluid agent" in the energy accumulating process, and to cool the loop heat transfer fluid agent in the energy returning process. Besides three connected in series heat exchangers 6 the loop 1 contains the tank 28 with the loop heat transfer fluid agent, heated less, three tanks 29 with the loop heat transfer fluid agent, heated more, the pipeline system 9, realized so that during energy accumulating in the process of the heat transfer between the loop 1 heat transfer fluid agent and the loop 3 gaseous working medium to provide the possibility of the inflow into the heat exchangers 6 connection places of the additional flows of the loop 1 heat transfer fluid agent from the tanks 29 with the loop heat transfer fluid agent, heated more, and during energy returning in the process of the heat transfer between the loop 1 heat transfer fluid agent and the gaseous working medium to provide the possibility of the outflow from the heat exchangers 6 connection places of the branched flows of the loop heat transfer fluid agent into the tanks 29 with the loop heat transfer fluid agent, heated more, the apparatus or the system for providing of heat transfer fluid agent moving in the loop (not shown in figures) through the heat exchangers 6 in the energy accumulating process from the tanks 29 with the loop heat transfer fluid agent, heated more, into the tank 28 with the loop heat transfer fluid agent, heated less, and in the energy returning process from the tank 28 with the loop heat transfer fluid agent, heated less, into the tanks 29 with the loop heat transfer fluid agent, heated more. Besides three connected in series heat exchangers 7 the loop 2 contains the tank 30 with the loop heat transfer agent, heated less, three tanks 31 with the loop heat transfer agent, heated more, the pipeline system 13, realized so that during energy accumulating in the process of the heat transfer between the loop 2 heat transfer fluid agent and the loop 3 gaseous working medium to provide the possibility of the outflow from the heat exchangers 7 connection places of the branched flows of the loop heat transfer fluid agent into the tanks 31 with the loop heat transfer fluid agent, heated more, and during energy returning in the process of the heat transfer between the loop 2 heat transfer fluid agent and the loop 3 gaseous working medium to provide the possibility of the inflow into the heat exchangers 7 connection places of the additional flows of the loop 2 heat transfer fluid agent from the tanks 31 with the loop heat transfer fluid agent, heated more, the apparatus or the system for providing of heat transfer fluid agent moving in the loop (not shown in figures) through the heat exchangers 7 in the energy accumulating process from the tank 30 with the loop heat transfer fluid agent, heated less, into the tanks 31 with the loop heat transfer fluid agent, heated more, and in the energy returning process from the tanks 31 with the loop heat transfer fluid agent, heated more, into the tank 30 with the loop heat transfer fluid agent, heated less. The loop 3, besides three heat exchangers 6 and three heat exchangers 7, the link 16 with the source 4 of the mechanical energy, being accumulated, and the link 17 with the accumulated mechanical energy user 5, contains the pipeline system 18, the compressor 19 for providing of the gaseous working medium compression in the energy accumulating process, the expander 20 for providing of the gaseous working medium expansion in the energy accumulating process, the link 21 for transferring from the expander 20 the mechanical energy, releasing in it in the energy accumulating process, to the compressor 19, the compressor 22 for providing of the gaseous working medium compression in the energy returning process, the expander 23 for providing of the gaseous working medium expansion in the energy returning process, the link 24 for transferring from the expander 23 to the compressor 22 the mechanical energy, being consumed by the compressor 22 in the energy returning process, the heat exchanger - cooler 25 for cooling of the gaseous working medium, leaving the compressor 22 in the energy returning process.

### Example 13

An installation for accumulating, storing and returning of a mechanical energy, shown in Fig.25 in the energy accumulating process, and in Fig.26 in the energy returning process is analogous with the installation, according to the example 12, but where the gaseous working medium heat exchanger - cooler is excluded from the gaseous working medium loop 3 structure, and the conventionally cold heat transfer fluid agent loop 1 additionally contains the heat exchanger-cooler 32 of the loop heat transfer agent for providing of the loop heat transfer agent cooling in the energy accumulating process before heat transfer agent entering into the heat exchanger 6 "gaseous working medium - conventionally cold heat transfer fluid agent" and/or for providing of the loop heat transfer agent cooling in the energy returning process after heat transfer agent leaving the heat exchanger 6 "gaseous working medium - conventionally cold heat transfer fluid agent".

### Example 14

An installation for accumulating, storing and returning of a mechanical energy, shown in Fig.27 in the energy accumulating process, and in Fig.28 in the energy returning process is analogous with the installation, according to the example 13, but where the gaseous working medium loop 3 additionally contains the heat exchanger - cooler 25 of the gaseous working medium, leaving from the expander 23 in the energy returning process.

### Example 15

An installation for accumulating, storing and returning of a mechanical energy, shown in Fig.29 in the energy accumulating process, and in Fig.30 in the energy returning process is analogous with the installation, according to the example 14, but where the gaseous working medium loop 3 contains as an addition to the available heat exchanger - cooler 25 of the gaseous working medium, providing cooling of the gaseous working medium, leaving the expander 23 in the energy returning process, contains one more heat exchanger - cooler 25 of the gaseous working medium for providing of cooling of the gaseous working medium, leaving in the energy accumulating process the heat exchanger 6 "gaseous working medium - conventionally cold heat transfer fluid agent".

### Example 16

An installation for accumulating, storing and returning of a mechanical energy, shown in Fig.31 in the energy accumulating process, and in Fig.32 in the energy returning process comprises two conventionally cold heat transfer fluid agent loop 1, the conventionally hot heat transfer fluid agent loop 2 and the gaseous working medium loop 3, connected via the link 16 with the source of the mechanical energy, being accumulated, 4 and via the link 17 with the accumulated mechanical energy user 5. Each loop 1 is made with the possibility to cool the loop heat transfer fluid agent in the interaction with the loop 3 via the heat exchanger 6 "gaseous working medium - conventionally cold heat transfer fluid agent" in the energy accumulating process, and to heat the loop heat transfer fluid agent in the energy returning process, the loop 2 is made with the possibility to heat the loop heat transfer fluid agent in the interaction with the loop 3 via the heat exchanger 7 "gaseous working medium - conventionally hot heat transfer fluid agent" in the energy accumulating process, and to cool the loop heat transfer fluid agent in the energy returning process. Besides the heat exchanger 6 every loop 1 contains the tank 28 with the loop heat transfer fluid agent, heated less, the tank 29 with the loop heat transfer fluid agent, heated more, the pipeline system 9, the apparatus or the system for providing of heat transfer fluid agent moving in the loop (not shown in the figures) through the heat exchanger 6 in the energy accumulating process from the tank 29 with the loop heat transfer fluid agent, heated more, into the tank 28 with the loop heat transfer fluid agent, heated less, and in the energy returning process from the tank 28 with the loop heat transfer fluid agent, heated less, into the tank 29 with the loop heat transfer fluid agent, heated more. Besides the heat exchanger 7 the loop 2 contains the tank 12, the pipeline system 13, the apparatus or the system for providing of heat transfer agent moving in the loop (not shown in the figures) through the heat exchanger 7 in the energy accumulating process from one part 14 of the tank 12 with the loop heat transfer fluid agent, heated less, into another part 15 of the tank 12 with the loop heat transfer fluid agent, heated more, and in the energy returning process from one part 15 of the tank 12 with the loop heat transfer fluid agent, heated more, into another part 14 of the tank 12 with the loop heat transfer fluid agent, heated less. The loop 3, besides the heat exchangers 6 and 7, the link 16 with the source 4 of the mechanical energy, being accumulated, and the link 17 with the accumulated mechanical energy user 5, contains the pipeline system 18, the compressor 19 for providing of the gaseous working medium compression in the energy accumulating process, the expander 20 for providing of the gaseous working medium expansion in the energy accumulating process, the link 21 for transferring from the expander 20 the mechanical energy, releasing in it in the energy accumulating process, to the compressor 19, the compressor 22 for providing of the gaseous working medium compression in the energy returning process, the expander 23 for providing of the gaseous working medium expansion in the energy returning process, the link 24 for transferring from the expander 23 to the compressor 22 the mechanical energy, being consumed by the compressor 22 in the energy returning process, the heat exchanger - cooler 25 for cooling the loop gaseous working medium after leaving the compressor 22 in the energy returning process.

### Example 17

An installation for accumulating, storing and returning of a mechanical energy, shown in Fig.33 in the energy accumulating process, and in Fig.34 in the energy returning process, is analogous with the installation, according to the example 2, but where in the gaseous working medium loop 3 there are used two compressors 19, connected in series, moreover, one of them is connected via the link 16 with the source of the energy, being accumulated 4, and another is connected via the link 21 with the expander 20, as well two expanders 23, connected in series, moreover, one of them is connected via the link 17 with the accumulated energy user 5, and another is connected via the link 24 with the compressor 22.

### Example 18

An installation for accumulating, storing and returning of a mechanical energy, shown in Fig.35 in the energy accumulating process, and in Fig.36 in the energy returning process, is analogous with the installation, according to the example 2, but where in the gaseous working medium loop 3 there are used three compressors 19, connected in series, and two expanders 20, connected in series, moreover, one of the compressors 19 is connected via the link 16 with the source of the energy, being accumulated 4, and two other compressors 19 are connected via links 21 in pairs with two expanders 20, as well three expanders 23, connected in series, and two compressors 22, connected in series, moreover, one of the expanders 23 is connected via the link 17 with the accumulated energy user 5, and two other expanders 23 are connected via the links 24 in pairs with two compressors 22.

### Example 19

An installation for accumulating, storing and returning of a mechanical energy, shown in Fig.37 in the energy accumulating process, and in Fig.38 in the energy returning process, is analogous with the installation, according to the example 2, but where in the gaseous working medium loop 3 there are used three compressors 19, two from which are connected in parallel to each other, and the third - in series with them, and two expanders 20, connected in parallel, moreover, one of the compressors 19, connected in series with two other compressors 19, is connected via the link 16 with the source of the energy, being accumulated 4, and every one of two other compressors 19, connected in parallel, is connected via the link 21 in pairs with one of the expanders 20, as well three expanders 23, from which two are connected in parallel to each other, and the third - in series with them, and two compressors 22, connected in parallel, moreover, one of expanders 23, connected in series with two other expanders 23, is connected via the link 17 with the accumulated energy user 5, and each of two other expanders 23, connected in parallel, is connected via the link 24 in pairs with one of the compressors 22.

### Example 20

An installation for accumulating, storing and returning of a mechanical energy, shown in Fig.39 in the energy accumulating process, and in Fig.40 in the energy returning process, comprises the conventionally cold heat transfer fluid agent loop 1, the conventionally hot heat transfer fluid agent loop 2 and the gaseous working medium loop 3, connected via the link 16 with the source of the mechanical energy, being accumulated, 4 and via the link 17 with the accumulated mechanical energy user 5. The loop 1 is made with the possibility to cool the loop heat transfer fluid agent in the interaction with the loop 3 via the heat exchanger 6 "gaseous working medium - conventionally cold heat transfer fluid agent" in the energy accumulating process, and to heat the loop heat transfer fluid agent in the energy returning process, the loop 2 is made with the possibility to heat the loop heat transfer fluid agent in the interaction with the loop 3 via the heat exchanger 7 "gaseous working medium - conventionally hot heat transfer fluid agent" in the energy accumulating process, and to cool the loop heat transfer fluid agent in the energy returning process. Besides the heat exchanger 6 the loop 1 contains the tank 8, the pipeline system 9, the apparatus or the system for providing of heat transfer agent moving in the loop (not shown in the figures) through the heat exchanger 6 in the energy accumulating process from one part 10 of the tank 8 with the loop heat transfer fluid agent, heated more, into another part 11 of the tank 8 with the loop heat transfer fluid agent, heated less, and in the energy returning process from one part 11 of the tank 8 with the loop heat transfer fluid agent, heated less, into another part 10 of the tank 8 with the loop heat transfer fluid agent, heated more. Besides the heat exchanger 7 the loop 2 contains the tank 12, the pipeline system 13, the apparatus or the system for providing of heat transfer agent moving in the loop (not shown in the figures) through the heat exchanger 7 in the energy accumulating process from one part 14 of the tank 12 with the loop heat transfer fluid agent, heated less, into another part 15 of the tank 12 with the loop heat transfer fluid agent, heated more, and in the energy returning process from one part 15 of the tank 12 with the loop heat transfer fluid agent, heated more, into another part 14 of the tank 12 with the loop heat transfer fluid agent, heated less. The loop 3, besides the heat exchangers 6 and 7, the link 16 with the source 4 of the mechanical energy, being accumulated, and the link 17 with the accumulated mechanical energy user 5, contains the pipeline system 18, the compressor 19 for providing of the gaseous working medium compression in the energy accumulating process, the expander 20 for providing of the gaseous working medium expansion in the energy accumulating process, the link 21 for removing from the expander 20 the mechanical energy, releasing in it in the energy accumulating process, the compressor 22 for providing of the gaseous working medium compression in the energy returning process, the link 24 for supplying to the compressor 22 the mechanical energy, being consumed in it in the energy returning process, the expander 23 for providing of the gaseous working medium expansion in the energy returning process, the heat exchanger 26 "gaseous working medium - gaseous working medium" for providing of the heat transfer between the loop gaseous working medium, leaving the heat exchanger 7 and the loop gaseous working medium, leaving the heat exchanger 6, in the energy accumulating process, as well for providing of the heat transfer between the gaseous working medium, leaving the expander 23, and the gaseous working medium, leaving the compressor 22, in the energy returning process, the heat exchanger - cooler 25 for cooling of the gaseous working medium, leaving the heat exchanger 26 before entering into the heat exchanger 6 in the energy returning process.

### Example 21

An installation for accumulating, storing and returning of a mechanical energy, shown in Fig.41 in the energy accumulating process, and in Fig.42 in the energy returning process, comprises the conventionally cold heat transfer fluid agent loop 1, the conventionally hot heat transfer fluid agent loop 2 and the gaseous working medium loop 3, connected via the link 16 with the source of the mechanical energy, being accumulated, 4 and via the link 17 with the accumulated mechanical energy user 5. The loop 1 is made with the possibility to cool the loop heat transfer fluid agent in the interaction with the loop 3 via the heat exchanger 6 "gaseous working medium - conventionally cold heat transfer fluid agent" in the energy accumulating process, and to heat the loop heat transfer fluid agent in the energy returning process, the loop 2 is made with the possibility to heat the loop heat transfer fluid agent in the interaction with the loop 3 via the heat exchanger 7 "gaseous working medium - conventionally hot heat transfer fluid agent" in the energy accumulating process, and to cool the loop heat transfer fluid agent in the energy returning process. Besides the heat exchanger 6 the loop 1 contains the tank 8, the pipeline system 9, the apparatus or the system for providing of heat transfer agent moving in the loop (not shown in the figures) through the heat exchanger 6 in the energy accumulating process from one part 10 of the tank 8 with the loop heat transfer fluid agent, heated more, into another part 11 of the tank 8 with the loop heat transfer fluid agent, heated less, and in the energy returning process from one part 11 of the tank 8 with the loop heat transfer fluid agent, heated less, into another part 10 of the tank 8 with the loop heat transfer fluid agent, heated more. Besides the heat exchanger 7 the loop 2 contains the tank 12, the pipeline system 13, the apparatus or the system for providing of heat transfer agent moving in the loop (not shown in the figures) through the heat exchanger 7 in the energy accumulating process from one part 14 of the tank 12 with the loop heat transfer fluid agent, heated less, into another part 15 of the tank 12 with the loop heat transfer fluid agent, heated more, and in the energy returning process from one part 15 of the tank 12 with the loop heat transfer fluid agent, heated more, into another part 14 of the tank 12 with the loop heat transfer fluid agent, heated less. The loop 3, besides the heat exchangers 6 and 7, the link 16 with the source 4 of the mechanical energy, being accumulated, and the link 17 with the accumulated mechanical energy user 5, contains the pipeline system 18, the compressor 19 for providing of the gaseous working medium compression in the energy accumulating process, the expander 20 for providing of the gaseous working medium expansion in the energy accumulating process, the link 21 for removing from the expander 20 the mechanical energy, releasing in it in the energy accumulating process, the compressor 22 for providing of the gaseous working medium compression in the energy returning process, the link 24 for supplying to the compressor 22 the mechanical energy, being consumed in it in the energy returning process, the expander 23 for providing of the gaseous working medium expansion in the energy returning process, the heat exchanger 26 "gaseous working medium - gaseous working medium", providing the heat transfer between the loop gaseous working medium, leaving the heat exchanger 7 and the loop gaseous working medium, leaving the heat exchanger 6, in the energy accumulating process, the heat exchanger 27 "gaseous working medium - gaseous working medium", providing the heat transfer between the loop gaseous working medium, leaving the expander 23, and the gaseous working medium, leaving the compressor 22, in the energy returning process, the heat exchanger - cooler 25 for cooling of the gaseous working medium, leaving the heat exchanger 27 before entering into the heat exchanger 6 in the energy returning process.

### Example 22

An installation for accumulating, storing and returning of a mechanical energy, shown in Fig.43 in the energy accumulating process, and in Fig.44 in the energy returning process, is analogous with the installation, according to the example 21, but where in the capacity of the user of the mechanical energy, releasing in the expander 20 in the energy accumulating process, is the compressor 19, connected via the link 21 with the expander 20, and in the capacity of the source of the mechanical energy, consuming by the compressor 22 in the energy returning process, is the expander 23, connected via the link 24 with the compressor 22.

### Example 23

An installation for accumulating, storing and returning of a mechanical energy, shown in Fig.45 in the energy accumulating process, and in Fig.46 in the energy returning process, is analogous with the installation, according to the example 22, but where there are used three heat exchangers 26 "gaseous working medium - gaseous working medium", connected in series and providing in the energy accumulating process the heat transfer between the loop gaseous working medium, leaving the heat exchanger 7, and the loop gaseous working medium, leaving the heat exchanger 6, as well three heat exchangers 27 "gaseous working medium - gaseous working medium", connected in series, and providing in the energy returning process the heat transfer between the loop gaseous working medium, leaving the expander 23, and the gaseous working medium, leaving the compressor 22.

### Example 24

An installation for accumulating, storing and returning of a mechanical energy, shown in Fig.47 in the energy accumulating process, and in Fig.48 in the energy returning process, comprises the conventionally cold heat transfer fluid agent loop 1, the conventionally hot heat transfer fluid agent loop 2, the gaseous working medium loop 3, connected via the link 16 with the source of the mechanical energy, being accumulated, 4 and via the link 17 with the accumulated mechanical energy user 5. The loop 1 is made with the possibility to cool the loop heat transfer fluid agent in the interaction with the loop 3 via three, connected in parallel heat exchangers 6 "gaseous working medium - conventionally cold heat transfer fluid agent" in the energy accumulating process, and to heat the loop heat transfer fluid agent in the energy returning process, the loop 2 is made with the possibility to heat the loop heat transfer fluid agent in the interaction with the loop 3 via the heat exchanger 7 "gaseous working medium - conventionally hot heat transfer fluid agent" in the energy accumulating process, and to cool the loop heat transfer fluid agent in the energy returning process. Besides three heat exchangers 6 the loop 1 contains three tanks 28, with the loop heat transfer fluid agent, heated less, one tank 29 with the loop heat transfer agent, heated more, the pipeline system 9, the apparatus or the system for providing of heat transfer agent moving in the loop (not shown in the figures) through the heat exchangers 6 in the energy accumulating process from the tank 29 with the loop heat transfer fluid agent, heated more, into three tanks 28 with the loop heat transfer fluid agent, heated less, and in the energy returning process from three tanks 28 with the loop heat transfer fluid agent, heated less, into the tank 29 with the loop heat transfer fluid agent, heated more. Besides the heat exchanger 7 the loop 2 contains the tank 12, the pipeline system 13, the apparatus or the system for providing of heat transfer agent moving in the loop (not shown in the figures) through the heat exchanger 7 in the energy accumulating process from one part 14 of the tank 12 with the loop heat transfer fluid agent, heated less, into another part 15 of the tank 12 with the loop heat transfer fluid agent, heated more, and in the energy returning process from one part 15 of the tank 12 with the loop heat transfer fluid agent, heated more, into another part 14 of the tank 12 with the loop heat transfer fluid agent, heated less. The loop 3, besides the heat exchangers 6 and 7, the link 16 with the source 4 of the mechanical energy, being accumulated, and the link 17 with the accumulated mechanical energy user 5, contains the pipeline system 18, the compressor 19 for providing of the gaseous working medium compression in the energy accumulating process, the expander 20 for providing of the gaseous working medium expansion in the energy accumulating process, the link 21 for transferring from the expander 20 the mechanical energy, releasing in it in the energy accumulating process, to the compressor 19, the compressor 22 for providing of the gaseous working medium compression in the energy returning process, the expander 23 for providing of the gaseous working medium expansion in the energy returning process, the link 24 for transferring the mechanical energy, consuming by the compressor 22 in the energy returning process, from the expander 23 to the compressor 22, the heat exchanger 26 "gaseous working medium - gaseous working medium", providing the heat transfer between the loop gaseous working medium, leaving the heat exchanger 7 and the loop gaseous working medium, leaving the heat exchanger 6, in the energy accumulating process, and the heat exchanger 27 "gaseous working medium - gaseous working medium", providing the heat transfer between the loop gaseous working medium, leaving the expander 23, and the gaseous working medium, leaving the compressor 22, in the energy returning process, the heat exchanger - cooler 25 for cooling of the gaseous working medium, leaving the heat exchanger 27 before entering into the heat exchanger 6 in the energy returning process.

### Example 25

An installation for accumulating, storing and returning of a mechanical energy, shown in Fig.49 in the energy accumulating process, and in Fig.50 in the energy returning process, is analogous with the installation, according to the example 22, but where there are three heat exchangers 6 "gaseous working medium - conventionally cold heat transfer fluid agent", connected in parallel, both in the gaseous working medium loop 3 and in the heat transfer fluid agent loop 1, and three heat exchangers 7 "gaseous working medium - conventionally hot heat transfer fluid agent", connected in parallel, both in the gaseous working medium loop 3 and in the heat transfer fluid agent loop 2, where in the energy accumulating process all the heat exchangers 6 and all the heat exchangers 7 are used, but in the energy returning process one heat exchanger 6 and one heat exchanger 7 are used.

### Example 26

An installation for accumulating, storing and returning of a mechanical energy, shown in Fig.51 in the energy accumulating process, and in Fig.52 in the energy returning process, is analogous with the installation, according to the example 22, but where in the gaseous working medium loop 3 there are three compressors 19, connected in series, and three expanders 23, connected in series.

### Example 27

An installation for accumulating, storing and returning of a mechanical energy, shown in Fig.53 in the energy accumulating process, and in Fig.54 in the energy returning process comprises the conventionally cold heat transfer fluid agent loop 1, the conventionally hot heat transfer fluid agent loop 2 and the gaseous working medium loop 3, connected via the link 16 with the source of the mechanical energy, being accumulated, 4 and via the link 17 with the accumulated mechanical energy user 5. The loop 1 is made with the possibility to cool the loop heat transfer fluid agent in the interaction with the loop 3 via the heat exchanger 6 "gaseous working medium - conventionally cold heat transfer fluid agent" in the energy accumulating process, and to heat the loop heat transfer fluid agent in the energy returning process, the loop 2 is made with the possibility to heat the loop heat transfer fluid agent in the interaction with the loop 3 via the heat exchanger 7 "gaseous working medium - conventionally hot heat transfer fluid agent" in the energy accumulating process, and to cool the loop heat transfer fluid agent in the energy returning process. Besides the heat exchanger 6 the loop 1 contains the tank 28 with the loop heat transfer agent, heated less, the tank 29 with the loop heat transfer agent, heated more, the pipeline system 9, the apparatus or the system for providing of heat transfer agent moving in the loop (not shown in the figures) through the heat exchanger 6 in the energy accumulating process from the tank 29 with the loop heat transfer fluid agent, heated more, into the tank 28 with the loop heat transfer fluid agent, heated less, and in the energy returning process from the tank 28 with the loop heat transfer fluid agent, heated less, into the tank 29 with the loop heat transfer fluid agent, heated more. Besides the heat exchanger 7 the loop 2 contains the tank 30 with the loop heat transfer agent, heated less, the tank 31 with the loop heat transfer agent, heated more, the pipeline system 13, the apparatus or the system for providing of heat transfer agent moving in the loop (not shown in the figures) through the heat exchanger 7 in the energy accumulating process from the tank 30 with the loop heat transfer fluid agent, heated less, into the tank 31 with the loop heat transfer fluid agent, heated more, and in the energy returning process from the tank 31 with the loop heat transfer fluid agent, heated more, into the tank 30 with the loop heat transfer fluid agent, heated less. The loop 3, besides the heat exchangers 6 and 7, the link 16 with the source 4 of the mechanical energy, being accumulated, and the link 17 with the accumulated mechanical energy user 5, contains the pipeline system 18, the compressor 19 for providing of the gaseous working medium compression in the energy accumulating process, the expander 20 for providing of the gaseous working medium expansion in the energy accumulating process, the link 21 for transferring from the expander 20 the mechanical energy, releasing in it in the energy accumulating process, to the compressor 19, the compressor 22 for providing of the gaseous working medium compression in the energy returning process, the expander 23 for providing of the gaseous working medium expansion in the energy returning process, the link 24 for transferring from the expander 23 to the compressor 22 the mechanical energy, being consumed by the compressor 22 in the energy returning process, the heat exchanger 26 "gaseous working medium - gaseous working medium", providing the heat transfer between the loop gaseous working medium, leaving the heat exchanger 7 and the loop gaseous working medium, leaving the heat exchanger 6, in the energy accumulating process, the heat exchanger 27 "gaseous working medium - gaseous working medium", providing the heat transfer between the loop gaseous working medium, leaving the expander 23, and the gaseous working medium, leaving the compressor 22, in the energy returning process, the heat exchanger - cooler 25 for cooling of the gaseous working medium leaving the heat exchanger 27 before entering into the heat exchanger 6 in the energy returning process.

### Example 28

An installation for accumulating, storing and returning of a mechanical energy, shown in Fig.55 in the energy accumulating process, and in Fig.56 in the energy returning process, comprises the conventionally cold heat transfer fluid agent loop 1, the conventionally hot heat transfer fluid agent loop 2, the gaseous working medium loop 3, connected via the link 16 with the source of the mechanical energy, being accumulated, 4 and via the link 17 with the accumulated mechanical energy user 5. The loop 1 is made with the possibility to cool the loop heat transfer fluid agent in the interaction with the loop 3 via three, connected in series, heat exchangers 6 "gaseous working medium - conventionally cold heat transfer fluid agent" in the energy accumulating process, and to heat the loop heat transfer fluid agent in the energy returning process, the loop 2 is made with the possibility to heat the loop heat transfer fluid agent in the interaction with the loop 3 via three, connected in series, heat exchangers 7 "gaseous working medium - conventionally hot heat transfer fluid agent" in the energy accumulating process, and to cool the loop heat transfer fluid agent in the energy returning process. Besides three connected in series heat exchangers 6 the loop 1 contains the tank 28 with the loop heat transfer fluid agent, heated less, three tanks 29 with the loop heat transfer agent, heated more, the pipeline system 9, realized so that during energy accumulating in the process of the heat transfer between the loop 1 heat transfer fluid agent and the loop 3 gaseous working medium to provide the possibility of the inflow into the heat exchangers 6 connection places of the additional flows of the loop 1 heat transfer fluid agent from the tanks 29 with the loop heat transfer agent, heated more, and during energy returning in the process of the heat transfer between the loop 1 heat transfer fluid agent and the gaseous working medium to provide the possibility of the outflow from the heat exchangers 6 connection places of the branched flows of the loop heat transfer fluid agent into the tanks 29 with the loop heat transfer agent, heated more, the apparatus or the system for providing of heat transfer agent moving in the loop (not shown in figures) through the heat exchangers 6 in the energy accumulating process from the tanks 29 with the loop heat transfer fluid agent, heated more, into the tank 28 with the loop heat transfer fluid agent, heated less, and in the energy returning process from the tank 28 with the loop heat transfer fluid agent, heated less, into the tanks 29 with the loop heat transfer fluid agent, heated more. Besides three connected in series heat exchangers 7 the loop 2 contains the tank 30 with the loop heat transfer agent, heated less, three tanks 31 with the loop heat transfer agent, heated more, the pipeline system 13, realized so that during energy accumulating in the process of the heat transfer between the loop 2 heat transfer fluid agent and the loop 3 gaseous working medium to provide the possibility of the outflow from the heat exchangers 7 connection places of the branched flows of the loop heat transfer fluid agent into the tanks 31 with the loop heat transfer agent, heated more, and during energy returning in the process of the heat transfer between the loop 2 heat transfer fluid agent and the loop 3 gaseous working medium to provide the possibility of the inflow into the heat exchangers 7 connection places of the additional flows of the loop 2 heat transfer fluid agent from the tanks 31 with the loop heat transfer agent, heated more, the apparatus or the system for providing of heat transfer agent moving in the loop (not shown in figures) through the heat exchangers 7 in the energy accumulating process from the tank 30 with the loop heat transfer fluid agent, heated less, into the tanks 31 with the loop heat transfer fluid agent, heated more, and in the energy returning process from the tanks 31 with the loop heat transfer fluid agent, heated more, into the tank 30 with the loop heat transfer fluid agent, heated less. The loop 3, besides heat exchangers 6 and 7, the link 16 with the source 4 of the mechanical energy, being accumulated, and the link 17 with the accumulated mechanical energy user 5, contains the pipeline system 18, the compressor 19 for providing of the gaseous working medium compression in the energy accumulating process, the expander 20 for providing of the gaseous working medium expansion in the energy accumulating process, the link 21 for transferring from the expander 20 the mechanical energy, releasing in it in the energy accumulating process, to the compressor 19, the compressor 22 for providing of the gaseous working medium compression in the energy returning process, the expander 23 for providing of the gaseous working medium expansion in the energy returning process, the link 24 for transferring from the expander 23 to the compressor 22 the mechanical energy, being consumed by the compressor 22 in the energy returning process, the heat exchanger 26 "gaseous working medium - gaseous working medium", providing the heat transfer between the loop gaseous working medium, leaving the heat exchanger 7 and the loop gaseous working medium, leaving the heat exchanger 6, in the energy accumulating process, the heat exchanger 27 "gaseous working medium - gaseous working medium", providing the heat transfer between the loop gaseous working medium, leaving the expander 23, and the gaseous working medium, leaving the compressor 22, in the energy returning process, the heat exchanger - cooler 25 for cooling of the gaseous working medium, leaving the heat exchanger 27 before entering into the heat exchanger 6 in the energy returning process.

### Example 29

An installation for accumulating, storing and returning of a mechanical energy, shown in Fig.57 in the energy accumulating process, and in Fig.58 in the energy returning process, is analogous with the installation, according to the example 28, but where the gaseous working medium heat exchanger - cooler is excluded from the gaseous working medium loop 3 structure, and the conventionally cold heat transfer fluid agent loop 1 contains additionally the heat exchanger-cooler 32 of the loop heat transfer agent for providing of the loop heat transfer agent cooling in the energy accumulating process before heat transfer agent entering into the heat exchanger 6 "gaseous working medium - conventionally cold heat transfer fluid agent" and/or for providing of the loop heat transfer agent cooling in the energy returning process after heat transfer agent leaving the heat exchanger 6 "gaseous working medium - conventionally cold heat transfer fluid agent".

### Example 30

An installation for accumulating, storing and returning of a mechanical energy, shown in Fig.59 in the energy accumulating process, and in Fig.60 in the energy returning process, is analogous with the installation, according to the example 28, but where the conventionally cold heat transfer fluid agent loop 1 contains additionally the heat exchanger-cooler 32 of the loop heat transfer agent for providing of the loop heat transfer agent cooling in the energy accumulating process before heat transfer agent entering into the heat exchanger 6 "gaseous working medium - conventionally cold heat transfer fluid agent" and/or for providing of the loop heat transfer agent cooling in the energy returning process after heat transfer agent leaving the heat exchanger 6 "gaseous working medium - conventionally cold heat transfer fluid agent".

### Example 31

An installation for accumulating, storing and returning of a mechanical energy, shown in Fig.61 in the energy accumulating process, and in Fig.62 in the energy returning process, is analogous with the installation, according to the example 30, but where the gaseous working medium loop 3 as an addition to the available heat exchanger - cooler 25 of the gaseous working medium, providing cooling of the working medium, leaving the heat exchanger 27 "gaseous working medium - "gaseous working medium" in the energy returning process, contains one more heat exchanger - cooler 25 of the gaseous working medium, providing cooling of the working medium, leaving in the energy accumulating process the heat exchanger 6 "gaseous working medium - conventionally cold heat transfer fluid agent".

### Example 32

An installation for accumulating, storing and returning of a mechanical energy, shown in Fig.63 in the energy accumulating process, and in Fig.64 in the energy returning process, comprises two conventionally cold heat transfer fluid agent loop 1, the conventionally hot heat transfer fluid agent loop 2 and the gaseous working medium loop 3, connected via the link 16 with the source of the mechanical energy, being accumulated, 4 and via the link 17 with the accumulated mechanical energy user 5. Each loop 1 is made with the possibility to cool the loop heat transfer fluid agent in the interaction with the loop 3 via the heat exchanger 6 "gaseous working medium - conventionally cold heat transfer fluid agent" in the energy accumulating process, and to heat the loop heat transfer fluid agent in the energy returning process, the loop 2 is made with the possibility to heat the loop heat transfer fluid agent in the interaction with the loop 3 via the heat exchanger 7 "gaseous working medium - conventionally hot heat transfer fluid agent" in the energy accumulating process, and to cool the loop heat transfer fluid agent in the energy returning process. Besides the heat exchanger 6 each loop 1 contains the tank 28 with the loop heat transfer agent, heated less, the tank 29 with the loop heat transfer agent, heated more, the pipeline system 9, the apparatus or the system for providing of heat transfer agent moving in the loop (not shown in the figures) through the heat exchanger 6 in the energy accumulating process from the tank 29 with the loop heat transfer fluid agent, heated more, into the tank 28 with the loop heat transfer fluid agent, heated less, and in the energy returning process from the tank 28 with the loop heat transfer fluid agent, heated less, into the tank 29 with the loop heat transfer fluid agent, heated more. Besides the heat exchanger 7 the loop 2 contains the tank 12, the pipeline system 13, the apparatus or the system for providing of heat transfer agent moving in the loop (not shown in the figures) through the heat exchanger 7 in the energy accumulating process from one part 14 of the tank 12 with the loop heat transfer fluid agent, heated less, into another part 15 of the tank 12 with the loop heat transfer fluid agent, heated more, and in the energy returning process from one part 15 of the tank 12 with the loop heat transfer fluid agent, heated more, into another part 14 of the tank 12 with the loop heat transfer fluid agent, heated less. The loop 3, besides the heat exchangers 6 and 7, the link 16 with the source 4 of the mechanical energy, being accumulated, and the link 17 with the accumulated mechanical energy user 5, contains the pipeline system 18, the compressor 19 for providing of the gaseous working medium compression in the energy accumulating process, the expander 20 for providing of the gaseous working medium expansion in the energy accumulating process, the link 21 for transferring from the expander 20 the mechanical energy, releasing in it in the energy accumulating process, to the compressor 19, the compressor 22 for providing of the gaseous working medium compression in the energy returning process, the expander 23 for providing of the gaseous working medium expansion in the energy returning process, the link 24 for transferring from the expander 23 to the compressor 22 the mechanical energy, being consumed by the compressor 22 in the energy returning process, the heat exchanger 26 "gaseous working medium - gaseous working medium", providing the heat transfer between the loop gaseous working medium, leaving the heat exchanger 7 and the loop gaseous working medium, leaving the heat exchanger 6, in the energy accumulating process, the heat exchanger 27 "gaseous working medium - gaseous working medium", providing the heat transfer between the loop gaseous working medium, leaving the expander 23, and the gaseous working medium, leaving the compressor 22, in the energy returning process, the heat exchanger - cooler 25 for cooling of the gaseous working medium leaving the heat exchanger 27 before entering into the heat exchanger 6 in the energy returning process.

### Example 33

An installation for accumulating, storing and returning of a mechanical energy, shown in Fig.65 in the energy accumulating process, and in Fig.66 in the energy returning process comprises the conventionally cold heat transfer fluid agent loop 1, the conventionally hot heat transfer fluid agent loop 2, the gaseous working medium loop 3, connected via the link 16 with the source of the mechanical energy, being accumulated, 4 and via the link 17 with the accumulated mechanical energy user 5. The loop 1 is made with the possibility to cool the loop heat transfer fluid agent in the interaction with the loop 3 via three connected in series heat exchangers 6 "gaseous working medium - conventionally cold heat transfer fluid agent" in the energy accumulating process, and to heat the loop heat transfer fluid agent in the energy returning process, the loop 2 is made with the possibility to heat the loop heat transfer fluid agent in the interaction with the loop 3 via the heat exchanger 7 "gaseous working medium - conventionally hot heat transfer fluid agent" in the energy accumulating process, and to cool the loop heat transfer fluid agent in the energy returning process. Besides three connected in series heat exchangers 6 the loop 1 contains two tanks 28 with the loop heat transfer fluid agent, heated less, two tanks 29 with the loop heat transfer agent, heated more, the pipeline system 9, realized so that during energy accumulating in the process of the heat transfer between the loop 1 heat transfer fluid agent and the loop 3 gaseous working medium to provide the possibility of the inflow into the heat exchangers 6 connection places of the additional flows of the loop 1 heat transfer fluid agent from the tanks 29 with the loop heat transfer agent, heated more, and of the outflow from the heat exchangers 6 connection places of the branched flows of the loop heat transfer fluid agent into the tanks 28 with the loop heat transfer agent, heated less, and during energy returning in the process of the heat transfer between the loop 1 heat transfer fluid agent and the gaseous working medium to provide the possibility of the inflow into the heat exchangers 6 connection places of the additional flows of the loop heat transfer fluid agent from the tanks 28 with the loop heat transfer agent, heated less, and of the outflow from the heat exchangers 6 connection places of the branched flows of the loop heat transfer fluid agent into the tanks 29 with the loop heat transfer agent, heated more, the apparatus or the system for providing of heat transfer agent moving in the loop (not shown in figures) through the heat exchangers 6 in the energy accumulating process from the tanks 29 with the loop heat transfer fluid agent, heated more, into the tanks 28 with the loop heat transfer fluid agent, heated less, and in the energy returning process from the tanks 28 with the loop heat transfer fluid agent, heated less, into the tanks 29 with the loop heat transfer fluid agent, heated more. Besides the heat exchanger 7 the loop 2 contains the tank 12, the pipeline system 13, the apparatus or the system for providing of heat transfer agent moving in the loop (not shown in the figures) through the heat exchanger 7 in the energy accumulating process from one part 14 of the tank 12 with the loop heat transfer fluid agent, heated less, into another part 15 of the tank 12 with the loop heat transfer fluid agent, heated more, and in the energy returning process from one part 15 of the tank 12 with the loop heat transfer fluid agent, heated more, into another part 14 of the tank 12 with the loop heat transfer fluid agent, heated less. The loop 3, besides heat exchangers 6 and 7, the link 16 with the source 4 of the mechanical energy, being accumulated, and the link 17 with the accumulated mechanical energy user 5, contains the pipeline system 18, the compressor 19 for providing of the gaseous working medium compression in the energy accumulating process, the expander 20 for providing of the gaseous working medium expansion in the energy accumulating process, the link 21 for transferring from the expander 20 the mechanical energy, releasing in it in the energy accumulating process, to the compressor 19, the compressor 22 for providing of the gaseous working medium compression in the energy returning process, the expander 23 for providing of the gaseous working medium expansion in the energy returning process, the link 24 for transferring from the expander 23 to the compressor 22 the mechanical energy, being consumed by the compressor 22 in the energy returning process, the heat exchanger 26 "gaseous working medium - gaseous working medium", providing the heat transfer between the loop gaseous working medium, leaving the heat exchanger 7 and the loop gaseous working medium, leaving the heat exchanger 6, in the energy accumulating process, the heat exchanger 27 "gaseous working medium - gaseous working medium", providing the heat transfer between the loop gaseous working medium, leaving the expander 23, and the gaseous working medium, leaving the compressor 22, in the energy returning process, the heat exchanger - cooler 25 for cooling of the gaseous working medium leaving the heat exchanger 27 before entering into the heat exchanger 6 in the energy returning process.

### Example 34

An installation for accumulating, storing and returning of a mechanical energy, shown in Fig.67 in the energy accumulating process, and in Fig.68 in the energy returning process, comprises the conventionally cold heat transfer fluid agent loop 1, the conventionally hot heat transfer fluid agent loop 2, the gaseous working medium loop 3, connected via the link 16 with the source of the mechanical energy, being accumulated, 4 and via the link 17 with the accumulated mechanical energy user 5. The loop 1 is made with the possibility to cool the loop heat transfer fluid agent in the interaction with the loop 3 via one of two heat exchangers 6 "gaseous working medium - conventionally cold heat transfer fluid agent" in the energy accumulating process, and in the interaction with the loop 3 via another heat exchanger 6 to heat the loop heat transfer fluid agent in the energy returning process, the loop 2 is made with the possibility to heat the loop heat transfer fluid agent in the interaction with the loop 3 via one of two heat exchangers 7 "gaseous working medium - conventionally hot heat transfer fluid agent" in the energy accumulating process, and in the interaction with the loop 3 via another heat exchanger 7 to cool the loop heat transfer fluid agent in the energy returning process. Besides two connected in series heat exchangers 6 the loop 1 contains the tank 8, the pipeline system 9, the apparatus or the system for providing of heat transfer agent moving in the loop (not shown in the figures) through the heat exchangers 6 in the energy accumulating process from one part 10 of the tank 8 with the loop heat transfer fluid agent, heated more, into another part 11 of the tank 8 with the loop heat transfer fluid agent, heated less, and in the energy returning process from one the part 11 of the tank 8 with the loop heat transfer fluid agent, heated less, into another part 10 of the tank 8 with the loop heat transfer fluid agent, heated more. Besides two connected in series heat exchangers 7 the loop 2 contains the tank 12, the pipeline system 13, the apparatus or the system for providing of heat transfer agent moving in the loop (not shown in the figures) through the heat exchangers 7 in the energy accumulating process from one part 14 of the tank 12 with the loop heat transfer fluid agent, heated less, into another part 15 of the tank 12 with the loop heat transfer fluid agent, heated more, and in the energy returning process from one part 15 of the tank 12 with the loop heat transfer fluid agent, heated more, into another part 14 of the tank 12 with the loop heat transfer fluid agent, heated less. The loop 3, besides two heat exchangers 6 and two heat exchangers 7, the link 16 with the source 4 of the mechanical energy, being accumulated, and the link 17 with the accumulated mechanical energy user 5, contains two pipeline systems 18 without communication between them, one of them is used for energy accumulating, and another - for energy returning, the compressor 19 for providing of the gaseous working medium compression in the energy accumulating process, the expander 20 for providing of the gaseous working medium expansion in the energy accumulating process, the link 21 for transferring from the expander 20 the mechanical energy, releasing in it in the energy accumulating process, to the compressor 19, the compressor 22 for providing of the gaseous working medium compression in the energy returning process, the expander 23 for providing of the gaseous working medium expansion in the energy returning process, the link 24 for transferring from the expander 23 to the compressor 22 the mechanical energy, being consumed by the compressor 22 in the energy returning process, the heat exchanger 26 "gaseous working medium - gaseous working medium", providing the heat transfer between the loop gaseous working medium, leaving the heat exchanger 7 and the loop gaseous working medium, leaving the heat exchanger 6, in the energy accumulating process, the heat exchanger 27 "gaseous working medium - gaseous working medium", providing the heat transfer between the loop gaseous working medium, leaving the expander 23, and the gaseous working medium, leaving the compressor 22, in the energy returning process, the heat exchanger - cooler 25 for cooling of the gaseous working medium leaving the heat exchanger 27 before entering into the heat exchanger 6 in the energy returning process.

### Example 35

An installation for accumulating, storing and returning of a mechanical energy, shown in Fig.69 in the energy accumulating process, and in Fig.70 in the energy returning process, is analogous with the installation, according to the example 22, but where in the gaseous working medium loop 3 there are used two compressors 19, connected in series, moreover, one of them is connected via the link 16 with the source of the energy, being accumulated 4, and another is connected via the link 21 with the expander 20, as well two expanders 23, connected in series, moreover, one of them is connected via the link 17 with the accumulated energy user 5, and another is connected via the link 24 with the compressor 22.

### Example 36

An installation for accumulating, storing and returning of a mechanical energy, shown in Fig.71 in the energy accumulating process, and in Fig.72 in the energy returning process, is analogous with the installation, according to the example 22, but where in the gaseous working medium loop 3 there are used three compressors 19, connected in series, and two expanders 20, connected in series, moreover, one of the compressors 19 is connected via the link 16 with the source of the mechanical energy, being accumulated 4, and two other compressors 19 are connected via links 21 in pairs with two expanders 20, as well three expanders 23, connected in series, and two compressors 22, connected in series, moreover, one of the expanders 23 is connected via the link 17 with the accumulated mechanical energy user 5, and two other expanders 23 are connected via the links 24 in pairs with two compressors 22.

### Example 37

An installation for accumulating, storing and returning of a mechanical energy, shown in Fig.73 in the energy accumulating process, and in Fig.74 in the energy returning process, is analogous with the installation, according to the example 22, but where in the gaseous working medium loop 3 there are used three compressors 19, two from which are connected in parallel to each other, and the third - in series with them, and two expanders 20, connected in parallel, moreover, one of the compressors 19, connected in series with two other compressors 19, is connected via the link 16 with the source of the mechanical energy, being accumulated 4, and every one of two other compressors 19, connected in parallel, is connected via the link 21 in pairs with one of the expanders 20, as well three expanders 23, from which two are connected in parallel to each other, and the third - in series with them, and two compressors 22, connected in parallel, moreover, one of expanders 23, connected in series with two other expanders 23, is connected via the link 17 with the accumulated mechanical energy user 5, and each of two other expanders 23, connected in parallel, is connected via the link 24 in pairs with one of the compressors 22.

### Example 38

A method of accumulating, storing and returning of a mechanical energy in the installation, which diagram is shown in Fig.1 in the energy accumulating process, and in Fig.2 in the energy returning process, in which in the energy accumulating process the mechanical energy, being accumulated, that is received from the source of the mechanical energy, being accumulated 4, is supplied via the link 16 to the compressor 19, providing in the energy accumulating process the compression of the gaseous working medium, circulating in the gaseous working medium loop 3. The loop 3 gaseous working medium is supplied to the compressor 19. The loop 3 gaseous working medium is compressed in the compressor 19 in consequence the gaseous working medium pressure and the temperature are increased. After leaving the compressor 19 the loop 3 working medium is supplied via the pipeline of the pipeline system 18 into the heat exchanger 7 "gaseous working medium - conventionally hot heat transfer fluid agent", where it is realized the heat transfer between the working medium and the loop 2 conventionally hot heat transfer fluid agent, cooling the loop 3 working medium and simultaneously heating the loop 2 heat transfer fluid agent. In the heat transfer process in the heat exchanger 7 between the loop 3 working medium and the loop 2 heat transfer agent, the loop 2 heat transfer agent is moved via the pipelines of the loop 2 pipeline system 13 through the heat exchanger 7 with the help of the apparatus or the system for the loop heat transfer agent moving (in figures are not shown) from one part 14 of the tank 12 with the loop heat transfer fluid agent, heated less, into another part 15 of the tank 12 with the loop heat transfer fluid agent, heated more. After leaving the heat exchanger 7 the loop 3 working medium is supplied via the pipeline of the pipeline system 18 into the expander 20, providing the loop 3 working medium expansion in the energy accumulating process. The loop 3 working medium is expanded in the expander 20 in consequence the working medium pressure and the temperature are decreased. The mechanical energy, releasing in the expander 20, is removed via the link 21. After leaving the expander 20 the loop 3 working medium is supplied via the pipeline of the pipeline system 18 into the heat exchanger 6 "gaseous working medium - conventionally cold heat transfer fluid agent", where it is realized the heat transfer between the working medium and the loop 1 conventionally cold heat transfer fluid agent, heating the loop 3 working medium and simultaneously cooling the loop 1 heat transfer fluid agent. In the heat transfer process in the heat exchanger 6 between the loop 3 working medium and the loop 1 heat transfer agent the loop 1 heat transfer agent is moved via the pipelines of the loop 1 pipeline system 9 through the heat exchanger 6 with the help of the apparatus or the system for the loop heat transfer agent moving (in figures are not shown) from one part 10 of the tank 8 with the loop heat transfer fluid agent, heated more, into another part 11 of the tank 8 with the loop heat transfer fluid agent, heated less. After leaving the heat exchanger 6 the loop 3 working medium again is supplied via the pipeline of the pipeline system 18 into the compressor 19. In the energy returning process the gaseous working medium, circulating in the gaseous working medium loop 3, is supplied to the expander 23, providing the loop 3 working medium expansion in the energy returning process, the working medium is expanded in consequence the working medium pressure and the temperature are decreased. The mechanical energy, releasing in the expander 23 in the working medium expansion process, is removed via the link 17 to the accumulated mechanical energy user 5. After leaving the expander 23 the loop 3 working medium via the pipeline of the pipeline system 18 is supplied to the heat exchanger - cooler 25, providing the loop working medium cooling in the energy returning process, where the loop working medium is cooled. After leaving the heat exchanger - cooler 25 the loop 3 working medium via the pipeline of the pipeline system 18 is supplied to the heat exchanger 6 "gaseous working medium - conventionally cold heat transfer fluid agent", where it is realized the heat transfer between the working medium and the loop 1 conventionally cold heat transfer fluid agent, cooling the loop 3 working medium and simultaneously heating the loop 1 heat transfer fluid agent. In the heat transfer process in the heat exchanger 6 between the loop 3 working medium and the loop 1 heat transfer agent the loop 1 heat transfer agent is moved via the pipelines of the loop 1 pipeline system 9 through the heat exchanger 6 with the help of the apparatus or the system for the loop heat transfer agent moving (in figures are not shown) from one part 11 of the tank 8 with the loop heat transfer fluid agent, heated less, into another part 10 of the tank 8 with the loop heat transfer fluid agent, heated more. After leaving the heat exchanger 6 the loop 3 working medium is supplied via the pipeline of the pipeline system 18 into the compressor 22, providing the loop 3 working medium compression in the energy returning process, the working medium is compressed in consequence the working medium pressure and the temperature are increased. The mechanical energy, consuming in the compressor 22, is supplied via the link 24. After leaving the compressor 22 the loop 3 working medium is supplied into the heat exchanger 7 "gaseous working medium - conventionally hot heat transfer fluid agent", where it is realized the heat transfer between the working medium and the loop 2 conventionally hot heat transfer fluid agent, heating the loop 3 working medium and simultaneously cooling the loop 2 heat transfer fluid agent. In the heat transfer process in the heat exchanger 7 between the loop 3 working medium and the loop 2 heat transfer fluid agent the loop 2 heat transfer fluid agent is moved via the pipelines of the loop 2 pipeline system 13 through the heat exchanger 7 with the help of the apparatus or the system for the loop heat transfer agent moving (in figures are not shown) from one part 15 of the tank 12 with the loop heat transfer fluid agent, heated more, into another part 14 of the tank 12 with the loop heat transfer fluid agent, heated less. After leaving the heat exchanger 7 the loop 3 working medium again is supplied via the pipeline of the pipeline system 18 to the expander 23. In the process of the accumulated energy storing the gaseous working medium circulation in the loop 3 is decreased up to the minimum or is terminated, the conventionally hot heat transfer fluid agent moving in the loop 2 and the conventionally cold heat transfer fluid agent moving in the loop 1 are decreased up to the minimum or are terminated.

### Example 39

A method of accumulating, storing and returning of a mechanical energy in the installation, which diagram is shown in Fig.3 in the energy accumulating process, and in Fig.4 in the energy returning process, is analogous with the Method, according to the Example 38, but where the mechanical energy, releasing in the expander 20 in the energy accumulating process, is supplied via the link 21 to the compressor 19, and the mechanical energy, consuming by the compressor 22 in the energy returning process, is supplied via the link 24 from the expander 23.

### Example 40

A method of accumulating, storing and returning of a mechanical energy in the installation, which diagram is shown in Fig.5 in the energy accumulating process, and in Fig.6 in the energy returning process, is analogous with the Method, according to the Example 39, but where the loop 3 gaseous working medium in the energy returning process after leaving the expander 23 via the pipeline of the loop 3 pipeline system 18 at once is supplied into the heat exchanger 6 "gaseous working medium - conventionally cold heat transfer fluid agent", but after leaving the compressor 22 before supplying to the heat exchanger 7 "gaseous working medium - conventionally hot heat transfer fluid agent", first is supplied via the pipeline of the pipeline system 18 into the heat exchanger - cooler 25, providing the loop working medium cooling in the energy returning process, in which the loop working medium is cooled, and already after leaving from the heat exchanger - cooler 25 the working medium via the pipeline of the pipeline system 18 is supplied to the heat exchanger 7"gaseous working medium - conventionally hot heat transfer fluid agent".

### Example 41

A method of accumulating, storing and returning of a mechanical energy in the installation, which diagram is shown in Fig.13 in the energy accumulating process and in Fig.14 in the energy returning process, in which in the energy accumulating process the mechanical energy, being accumulated, that is received from the source of the mechanical energy, being accumulated 4, is supplied via the link 16 to the compressor 19, providing in the energy accumulating process the compression of the gaseous working medium, circulating in the gaseous working medium loop 3. The loop 3 working medium is supplied to the compressor 19. The loop 3 working medium is compressed in the compressor 19 in consequence the gaseous working medium pressure and the temperature are increased. After leaving the compressor 19 the loop 3 working medium is supplied via the pipeline of the pipeline system 18 into the heat exchanger 7 "gaseous working medium - conventionally hot heat transfer fluid agent", where it is realized the heat transfer between the working medium and the loop 2 conventionally hot heat transfer fluid agent, cooling the loop 3 working medium and simultaneously heating the loop 2 heat transfer fluid agent. In the heat transfer process in the heat exchanger 7 between the loop 3 working medium and the loop 2 heat transfer fluid agent, the loop 2 heat transfer fluid agent is moved via the pipelines of the loop 2 pipeline system 13 through the heat exchanger 7 with the help of the apparatus or the system for the loop heat transfer agent moving (in figures are not shown) from the tank 30 with the loop heat transfer fluid agent, heated less, into the tank 31 with the loop heat transfer fluid agent, heated more. After leaving the heat exchanger 7 the loop 3 working medium is supplied via the pipeline of the pipeline system 18 into the expander 20, providing the loop 3 working medium expansion in the energy accumulating process. The loop 3 working medium is expanded in the expander 20 in consequence the working medium pressure and the temperature are decreased. The mechanical energy, releasing in the expander 20 in the energy accumulating process, is supplied via the link 21 to the compressor 19. After leaving the expander 20 the loop 3 working medium is supplied via the pipeline of the pipeline system 18 into the heat exchanger 6 "gaseous working medium - conventionally cold heat transfer fluid agent", where it is realized the heat transfer between the working medium and the loop 1 conventionally cold heat transfer fluid agent, heating the loop 3 working medium and simultaneously cooling the loop 1 heat transfer fluid agent. In the heat transfer process in the heat exchanger 6 between the loop 3 working medium and the loop 1 heat transfer agent the loop 1 heat transfer agent is moved via the pipelines of the loop 1 pipeline system 9 through the heat exchanger 6 with the help of the apparatus or the system for the loop heat transfer agent moving (in figures are not shown) from the tank 29 with the loop heat transfer fluid agent, heated more, into the tank 28 with the loop heat transfer fluid agent, heated less. After leaving the heat exchanger 6 the loop 3 working medium again is supplied via the pipeline of the pipeline system 18 into the compressor 19. In the energy returning process the gaseous working medium, circulating in the gaseous working medium loop 3, is supplied to the expander 23, providing the loop 3 working medium expansion in the energy returning process, the working medium is expanded, in consequence the working medium pressure and the temperature are decreased. The mechanical energy, releasing in the expander 23 in the working medium expansion process, is removed via the link 17 to the accumulated mechanical energy user 5. After leaving the expander 23 the loop 3 working medium via the pipeline of the pipeline system 18 is supplied to the heat exchanger 6 "gaseous working medium - conventionally cold heat transfer fluid agent", where it is realized the heat transfer between the working medium and the loop 1 conventionally cold heat transfer agent, cooling the loop 3 working medium and simultaneously heating the loop 1 heat transfer fluid agent. In the heat transfer process in the heat exchanger 6 between the loop 3 working medium and the loop 1 heat transfer agent the loop 1 heat transfer agent is moved via the pipelines of the loop 1 pipeline system 9 through the heat exchanger 6 with the help of the apparatus or the system for the loop heat transfer agent moving (in figures are not shown) from the tank 28 with the loop heat transfer fluid agent, heated less, into the tank 29 with the loop heat transfer fluid agent, heated more. After leaving the heat exchanger 6 the loop 3 working medium is supplied via the pipeline of the pipeline system 18 into the compressor 22, providing the loop 3 working medium compression in the energy returning process, where the working medium is compressed in consequence the working medium pressure and the temperature are increased. The mechanical energy, consuming in the compressor 22 in the energy returning process, is supplied via the link 24 from the expander 23. After leaving the compressor 22 the loop 3 working medium is supplied via the pipeline of the pipeline system 18 into the heat exchanger - cooler 25, providing the loop working medium cooling in the energy returning process, where the loop working medium is cooled. After leaving the heat exchanger - cooler 25 the loop 3 working medium is supplied via the pipeline of the pipeline system 18 into the heat exchanger 7 "gaseous working medium - conventionally hot heat transfer fluid agent", where it is realized the heat transfer between the working medium and the loop 2 conventionally hot heat transfer fluid agent, heating the loop 3 working medium and simultaneously cooling the loop 2 heat transfer fluid agent. In the heat transfer process in the heat exchanger 7 between the loop 3 working medium and the loop 2 heat transfer agent, the loop 2 heat transfer agent is moved via the pipelines of the loop 2 pipeline system 13 through the heat exchanger 7 with the help of the apparatus or the system for the loop heat transfer agent moving (in figures are not shown) from the tank 31 with the loop heat transfer fluid agent, heated more, into the tank 30 with the loop heat transfer fluid agent, heated less. After leaving the heat exchanger 7 the loop 3 working medium again is supplied via the pipeline of the pipeline system 18 into the expander 23. In the process of the accumulated energy storing the gaseous working medium circulation in the loop 3 is decreased up to the minimum or is terminated, the conventionally hot heat transfer fluid agent moving in the loop 2 and the conventionally cold heat transfer fluid agent moving in the loop 1 are decreased up to the minimum or are terminated.

### Example 42

A method of accumulating, storing and returning of a mechanical energy in the installation, which diagram is shown in Fig.15 in the energy accumulating process, and in Fig.16 in the energy returning process, is analogous with the Method, according to the Example 41, but where the loop 3 gaseous working medium in the energy returning process after leaving the compressor 22 via the pipeline of the pipeline system 18 at once is supplied into the heat exchanger 7 "gaseous working medium - conventionally hot heat transfer fluid agent", but the loop 2 heat transfer fluid agent in the energy accumulating process before supplying to the heat exchanger 7, and in the energy returning process after leaving the heat exchanger 7 is supplied into the exchanger - cooler 33 of the conventionally hot heat transfer fluid agent.

### Example 43

A method of accumulating, storing and returning of a mechanical energy in the installation, which diagram is shown in Fig.17 in the energy accumulating process, and in Fig.18 in the energy returning process, is analogous with the Method, according to the Example 41, but where the loop 2 heat transfer fluid agent in the energy accumulating process before supplying to the heat exchanger 7, and in the energy returning process after leaving the heat exchanger 7 is supplied into the exchanger - cooler 33 of the conventionally hot heat transfer fluid agent, where the loop heat transfer fluid agent is cooled.

### Example 44

A method of accumulating, storing and returning of a mechanical energy in the installation, which diagram is shown in Fig.19 in the energy accumulating process, and in Fig.20 in the energy returning process, is analogous with the Method, according to the Example 43, but where the loop 3 gaseous working medium in the energy accumulating process after leaving the heat exchanger 7 "gaseous working medium - conventionally hot heat transfer fluid agent" first is supplied via the pipeline of the pipeline system 18 to the heat exchanger - cooler 25, providing the loop working medium cooling in the energy accumulating process, where the loop working medium is cooled, and already after leaving the heat exchanger - cooler 25 the working medium via the pipeline of the pipeline system 18 is supplied to the expander 20.

### Example 45

A method of accumulating, storing and returning of a mechanical energy in the installation, which diagram is shown in Fig.21 in the energy accumulating process and in Fig.22 in the energy returning process, where in the energy accumulating process the mechanical energy, being accumulated, that is received from the source of the mechanical energy, being accumulated 4, is supplied via the link 16 to the compressor 19, providing in the energy accumulating process the compression of the gaseous working medium, circulating in the gaseous working medium loop 3. The loop 3 working medium is supplied to the compressor 19. The loop 3 working medium is compressed in the compressor 19 in consequence the gaseous working medium pressure and the temperature are increased. After leaving the compressor 19 the loop 3 working medium is supplied via the pipeline of the pipeline system 18 into the heat exchanger 7 "gaseous working medium - conventionally hot heat transfer fluid agent", where it is realized the heat transfer between the working medium and the loop 2 conventionally hot heat transfer fluid agent, cooling the loop 3 working medium and simultaneously heating the loop 2 heat transfer fluid agent. In the heat transfer process in the heat exchanger 7 between the loop 3 working medium and the loop 2 heat transfer agent, the loop 2 heat transfer agent is moved via the pipelines of the loop 2 pipeline system 13 through the heat exchanger 7 with the help of the apparatus or the system for the loop heat transfer agent moving (in figures are not shown) from one part 14 of the tank 12 with the loop heat transfer fluid agent, heated less, into another part 15 of the tank 12 with the loop heat transfer fluid agent, heated more. After leaving the heat exchanger 7 the loop 3 working medium is supplied via the pipeline of the pipeline system 18 into the expander 20, providing the loop 3 working medium expansion in the energy accumulating process. The loop 3 working medium is expanded in the expander 20 in consequence the working medium pressure and the temperature are decreased. The mechanical energy, releasing in the expander 20 in the energy accumulating process, is supplied via the link 21 to the compressor 19. After leaving the expander 20 the loop 3 working medium is supplied via the pipeline of the pipeline system 18 into three heat exchangers 6 "gaseous working medium - conventionally cold heat transfer fluid agent", connected in parallel, where it is realized the heat transfer between the working medium and the loop 1 conventionally cold heat transfer fluid agent, heating the loop 3 working medium and simultaneously cooling the loop 1 heat transfer fluid agent. In the heat transfer process in the heat exchangers 6 between the loop 3 working medium and the loop 1 heat transfer fluid agent the loop 1 heat transfer fluid agent is moved via the pipelines of the loop 1 pipeline system 9 through the heat exchangers 6 with the help of the apparatus or the system for the loop heat transfer agent moving (in figures are not shown) from the tank 29 with the loop heat transfer fluid agent, heated more, into three tanks 28 with the loop heat transfer fluid agent, heated less. After leaving the heat exchangers 6 the loop 3 working medium again is supplied via the pipeline of the pipeline system 18 into the compressor 19. In the energy returning process the gaseous working medium, circulating in the gaseous working medium loop 3, is supplied to the expander 23, providing the loop 3 working medium expansion in the energy returning process, the working medium is expanded, in consequence the working medium pressure and the temperature are decreased. The mechanical energy, releasing in the expander 23 in the working medium expansion process, is removed via the link 17 to the accumulated mechanical energy user 5. After leaving the expander 23 the loop 3 working medium via the pipeline of the pipeline system 18 is supplied to three heat exchangers 6 "gaseous working medium - conventionally cold heat transfer fluid agent", connected in parallel, where it is realized the heat transfer between the working medium and the loop 1 conventionally cold heat transfer fluid agent, cooling the loop 3 working medium and simultaneously heating the loop 1 heat transfer fluid agent. In the heat transfer process in the heat exchangers 6 between the loop 3 working medium and the loop 1 heat transfer fluid agent the loop 1 heat transfer agent is moved via the pipelines of the loop 1 pipeline system 9 through the heat exchangers 6 with the help of the apparatus or the system for the loop heat transfer agent moving (in figures are not shown) from the tanks 28 with the loop heat transfer fluid agent, heated less, into the tank 29 with the loop heat transfer fluid agent, heated more. After leaving the heat exchangers 6 the loop 3 working medium is supplied via the pipeline of the pipeline system 18 into the compressor 22, providing the loop 3 working medium compression in the energy returning process, the working medium is compressed in consequence the working medium pressure and the temperature are increased. The mechanical energy, consuming in the compressor 22 in the energy returning process, is supplied via the link 24 from the expander 23. After leaving the compressor 22 the loop 3 working medium is supplied via the pipeline of the pipeline system 18 into the heat exchanger - cooler 25, providing the loop working medium cooling in the energy returning process, where the loop working medium is cooled. After leaving the heat exchanger - cooler 25 the working medium is supplied via the pipeline of the pipeline system 18 into the heat exchanger 7 "gaseous working medium - conventionally hot heat transfer fluid agent", where it is realized the heat transfer between the working medium and the loop 2 conventionally hot heat transfer fluid agent, heating the loop 3 working medium and simultaneously cooling the loop 2 heat transfer fluid agent. In the heat transfer process in the heat exchanger 7 between the loop 3 working medium and the loop 2 heat transfer agent, the loop 2 heat transfer agent is moved via the pipelines of the loop 2 pipeline system 13 through the heat exchanger 7 with the help of the apparatus or the system for the loop heat transfer agent moving (in figures are not shown) from one part 15 of the tank 12 with the loop heat transfer fluid agent, heated more, into another part 14 of the tank 12 with the loop heat transfer fluid agent, heated less. After leaving the heat exchanger 7 the loop 3 working medium again is supplied via the pipeline of the pipeline system 18 into the expander 23. In the process of the accumulated energy storing the gaseous working medium circulation in the loop 3 is decreased up to the minimum or is terminated, the conventionally hot heat transfer fluid agent moving in the loop 2 and the conventionally cold heat transfer fluid agent moving in the loop 1 are decreased up to the minimum or are terminated.

### Example 46

A method of accumulating, storing and returning of a mechanical energy in the installation, which diagram is shown in Fig.23 in the energy accumulating process and in Fig.24 in the energy returning process, where in the energy accumulating process the mechanical energy, being accumulated, that is received from the source of the mechanical energy, being accumulated 4, is supplied via the link 16 to the compressor 19, providing in the energy accumulating process the compression of the gaseous working medium, cir- culating in the gaseous working medium loop 3. The loop 3 working medium is supplied to the compressor 19. The loop 3 working medium is compressed in the compressor 19 in consequence the gaseous working medium pressure and the temperature are increased. After leaving the compressor 19 the loop 3 working medium is supplied via the pipeline of the pipeline system 18 into three heat exchangers 7 "gaseous working medium - conventionally hot heat transfer fluid agent", connected in series, where it is realized the heat transfer between the working medium and the loop 2 conventionally hot heat transfer fluid agent, cooling the loop 3 working medium and simultaneously heating the loop 2 heat transfer fluid agent. In the heat transfer process in the heat exchangers 7 between the loop 3 working medium and the loop 2 heat transfer agent, the loop 2 heat transfer agent is moved via the pipelines of the loop 2 pipeline system 13 through the heat exchangers 7 with the help of the apparatus or the system for the loop heat transfer agent moving (in figures are not shown) from the tank 30 with the loop heat transfer fluid agent, heated less, into three tanks 31 with the loop heat transfer fluid agent, heated more. At the same time the loop 2 heat transfer fluid agent quantity, taking part in the heat transfer, is changed as heating by the partial outflow of the loop 2 heat transfer fluid agent, heated more, to the tanks 31 with the loop 2 heat transfer fluid agent, heated more. After leaving the heat exchanger 7 the loop 3 working medium is supplied via the pipeline of the pipeline system 18 into the expander 20, providing the loop 3 working medium expansion in the energy accumulating process. The loop 3 working medium is expanded in the expander 20 in consequence the working medium pressure and the temperature are decreased. The mechanical energy, releasing in the expander 20 in the energy accumulating process, is supplied via the link 21 to the compressor 19. After leaving the expander 20 the loop 3 working medium is supplied via the pipeline of the pipeline system 18 into three heat exchangers 6 "gaseous working medium - conventionally cold heat transfer fluid agent", connected in series, where it is realized the heat transfer between the working medium and the loop 1 conventionally cold heat transfer fluid agent, heating the loop 3 working medium and simultaneously cooling the loop 1 heat transfer fluid agent. In the heat transfer process in the heat exchangers 6 between the loop 3 working medium and the loop 1 heat transfer agent the loop 1 heat transfer agent is moved via the pipelines of the loop 1 pipeline system 9 through the heat exchangers 6 with the help of the apparatus or the system for the loop heat transfer agent moving (in figures are not shown) from three tanks 29 with the loop heat transfer fluid agent, heated more, into the tank 28 with the loop heat transfer fluid agent, heated less, at the same time the loop 1 heat transfer fluid agent quantity, taking part in the heat transfer, is changed as cooling by the partial inflow of the loop 1 heat transfer fluid agent, heated more, from the tanks 29 with the loop 1 heat transfer fluid agent, heated more. After leaving the heat exchangers 6 the loop 3 working medium again is supplied via the pipeline of the pipeline system 18 into the compressor 19. In the energy returning process the gaseous working medium, circulating in the gaseous working medium loop 3, is supplied to the expander 23, providing the loop 3 working medium expansion in the energy returning process, the working medium is expanded, in consequence the gaseous working medium pressure and the temperature are decreased. The mechanical energy, releasing in the expander 23 in the working medium expansion process, is removed via the link 17 to the accumulated mechanical energy user 5. After leaving the expander 23 the loop 3 working medium is supplied via the pipeline of the pipeline system 18 into three heat exchangers 6 "gaseous working medium - conventionally cold heat transfer fluid agent", connected in series, where it is realized the heat transfer between the working medium and the loop 1 conventionally cold heat transfer fluid agent, cooling the loop 3 working medium and simultaneously heating the loop 1 heat transfer fluid agent. In the heat transfer process in the heat exchangers 6 between the loop 3 working medium and the loop 1 heat transfer agent, the loop 1 heat transfer agent is moved via the pipelines of the loop 1 pipeline system 9 through the heat exchangers 6 with the help of the apparatus or the system for the loop heat transfer agent moving (in figures are not shown) from the tank 28 with the loop heat transfer fluid agent, heated less, into three tanks 29 with the loop heat transfer fluid agent, heated more, at the same time the loop 1 heat transfer fluid agent quantity, taking part in the heat transfer, is changed as heating by the partial outflow of the loop 1 heat transfer fluid agent, heated more, to the tanks 29 with the loop 1 heat transfer fluid agent, heated more. After leaving the heat exchangers 6 the loop 3 working medium again is supplied via the pipeline of the pipeline system 18 into the compressor 22, providing the loop 3 working medium compression in the energy returning process, the working medium is compressed, in consequence the working medium pressure and the temperature are increased. The mechanical energy, consuming by the compressor 22 in the energy returning process, is supplied via the link 24 from the expander 23. After leaving the compressor 22 the loop 3 working medium is supplied via the pipeline of the pipeline system 18 to the heat exchanger - cooler 25, providing the loop working medium cooling in the energy returning process, where the loop working medium is cooled. After leaving the heat exchanger - cooler 25 the working medium is supplied via the pipeline of the pipeline system 18 into three heat exchangers 7 "gaseous working medium - conventionally hot heat transfer fluid agent", connected in series, where it is realized the heat transfer between the working medium and the loop 2 conventionally hot heat transfer fluid agent, heating the loop 3 working medium and simultaneously cooling the loop 2 conventionally hot heat transfer fluid agent. In the heat transfer process in the heat exchanger 7 between the loop 3 working medium and the loop 2 heat transfer agent, the loop 2 heat transfer agent is moved via the pipelines of the loop 2 pipeline system 13 through the heat exchangers 7 with the help of the apparatus or the system for providing the loop heat transfer agent moving (in figures are not shown) from three tanks 31 with the loop heat transfer fluid agent, heated more, into the tank 30 with the loop heat transfer fluid agent, heated less. At the same time the loop 2 heat transfer fluid agent quantity, taking part in the heat transfer, is changed as cooling by the partial inflow of the loop 2 heat transfer fluid agent, heated more, from the tanks 31 with the loop 2 heat transfer fluid agent, heated more. After leaving the heat exchangers 7 the loop 3 working medium again is supplied via the pipeline of the pipeline system 18 into the expander 23. In the process of the accumulated energy storing the gaseous working medium circulation in the gaseous working medium loop 3 is decreased up to the minimum or is terminated, the conventionally hot heat transfer fluid agent moving in loop 2 and the conventionally cold heat transfer fluid agent moving in the loop 1 are decreased up to the minimum or are terminated.

### Example 47

A method of accumulating, storing and returning of a mechanical energy in the installation, which diagram is shown in Fig.25 in the energy accumulating process, and in Fig.26 in the energy returning process, is analogous with the Method, according to the Example 46, but where the loop 3 gaseous working medium in the energy returning process after leaving the compressor 22 via the pipeline of the pipeline system 18 at once is supplied into the heat exchangers 7 "gaseous working medium - conventionally hot heat transfer fluid agent", but the loop 1 heat transfer fluid agent in the energy accumulating process before supplying to the heat exchanger 6, and in the energy returning process after leaving the heat exchanger 6 is supplied into the exchanger - cooler 32 of the conventionally cold heat transfer fluid agent, where the loop heat transfer fluid agent is cooled.

### Example 48

A method of accumulating, storing and returning of a mechanical energy in the installation, which diagram is shown in Fig.27 in the energy accumulating process, and in Fig.28 in the energy returning process, is analogous with the Method, according to the Example 46, but where the loop 1 heat transfer fluid agent in the energy accumulating process before supplying to the heat exchanger 6, and in the energy returning process after leaving the heat exchanger 6 is supplied into the exchanger - cooler 32 of the conventionally cold heat transfer fluid agent, where the loop heat transfer fluid agent is cooled.

### Example 49

A method of accumulating, storing and returning of a mechanical energy in the installation, which diagram is shown in Fig.29 in the energy accumulating process, and in Fig.30 in the energy returning process, is analogous with the Method, according to the Example 48, but where the loop 3 gaseous working medium in the energy accumulating process after leaving the heat exchanger 6 "gaseous working medium - conventionally cold heat transfer fluid agent" first is supplied via the pipeline of the pipeline system 18 to the heat exchanger - cooler 25, providing the loop working medium cooling in the energy accumulating process, where the loop working medium is cooled, and already after leaving the heat exchanger - cooler 25 the working medium via the pipeline of the pipeline system 18 is supplied to the compressor 19.

### Example 50

A method of accumulating, storing and returning of a mechanical energy in the installation, which diagram is shown in Fig.31 in the energy accumulating process and in Fig.32 in the energy returning process, where in the energy accumulating process the mechanical energy, being accumulated, that is received from the source of the mechanical energy, being accumulated 4, is supplied via the link 16 to the compressor 19, providing in the energy accumulating process the compression of the gaseous working medium, circulating in the gaseous working medium loop 3. The loop 3 working medium is supplied to the compressor 19. The loop 3 working medium is compressed in the compressor 19 in consequence the gaseous working medium pressure and the temperature are increased. After leaving the compressor 19 the loop 3 working medium is supplied via the pipeline of the pipeline system 18 into the heat exchanger 7 "gaseous working medium - conventionally hot heat transfer fluid agent", where it is realized the heat transfer between the working medium and the loop 2 conventionally hot heat transfer fluid agent, cooling the loop 3 working medium and simultaneously heating the loop 2 heat transfer fluid agent. In the heat transfer process in the heat exchanger 7 between the loop 3 working medium and the loop 2 heat transfer agent, the loop 2 heat transfer agent is moved via the pipelines of the loop 2 pipeline system 13 through the heat exchanger 7 with the help of the apparatus or the system for the loop heat transfer agent moving (in figures are not shown) from one part 14 of the tank 12 with the loop heat transfer fluid agent, heated less, into another part 15 of the tank 12 with the loop heat transfer fluid agent, heated more. After leaving the heat exchanger 7 the loop 3 working medium is supplied via the pipeline of the pipeline system 18 into the expander 20, providing the loop 3 working medium expansion in the energy accumulating process. The loop 3 working medium is expanded in the expander 20 in consequence the working medium pressure and the temperature are decreased. The mechanical energy, releasing in the expander 20 in the energy accumulating process, is supplied via the link 21 to the compressor 19. After leaving the expander 20 the loop 3 working medium is supplied via the pipeline of the pipeline system 18 sequentially in two heat exchangers 6 "gaseous working medium - conventionally cold heat transfer fluid agent", where sequentially it is realized the heat transfer between the loop 3 working medium and conventionally cold heat transfer fluid agents of two loop 1, heating the loop 3 working medium and simultaneously cooling heat transfer fluid agents of two loop 1. In the heat transfer process in the heat exchangers 6 between the loop 3 working medium and loop 1 heat transfer agents, the loop 1 heat transfer agents are moved via the pipelines of the loops 1 pipeline system 9 through the heat exchangers 6 with the help of the apparatuses or the systems for the loops heat transfer agents moving (in figures are not shown) from the tanks 29 with the loops 1 heat transfer fluid agents, heated more, into the tanks 28 with the loops 1 heat transfer fluid agents, heated less. After leaving the heat exchanger 6 the loop 3 working medium again is supplied via the pipeline of the pipeline system 18 into the compressor 19. In the energy returning process the gaseous working medium, circulating in the gaseous working medium loop 3, is supplied to the expander 23, providing the loop 3 working medium expansion in the energy returning process, the working medium is expanded in consequence the working medium pressure and the temperature are decreased. The mechanical energy, releasing in the expander 23 in the working medium expansion process, is removed via the link 17 to the accumulated mechanical energy user 5. After leaving the expander 23 the loop 3 working medium via the pipeline of the pipeline system 18 sequentially is supplied to two heat exchangers 6 "gaseous working medium - conventionally cold heat transfer fluid agent", where it is realized the heat transfer between the working medium and conventionally cold heat transfer fluid agents of two loops 1, cooling the loop 3 working medium and simultaneously heating the loops 1 heat transfer fluid agents. In the heat transfer process in the heat exchangers 6 between the loop 3 working medium and the loops 1 heat transfer agents the loops 1 heat transfer agents are moved via the pipelines of the loops 1 pipeline system 9 through the heat exchangers 6 with the help of the apparatuses or the systems for the loops heat transfer agents moving (in figures are not shown) from the tanks 28 with the loops 1 heat transfer fluid agents, heated less, into the tanks 29 with the loops 1 heat transfer fluid agents, heated more. After leaving the heat exchangers 6 the loop 3 working medium is supplied via the pipeline of the pipeline system 18 into the compressor 22, providing the loop 3 working medium compression in the energy returning process, the working medium is compressed in consequence the working medium pressure and the temperature are increased. The mechanical energy, consuming in the compressor 22 in the energy returning process, is supplied via the link 24 from the expander 23. After leaving the compressor 22 the loop 3 working medium is supplied via the pipeline of the pipeline system 18 into the heat exchanger - cooler 25, providing the loop working medium cooling in the energy returning process, where the loop working medium is cooled. After leaving the heat exchanger - cooler 25 the working medium is supplied via the pipeline of the pipeline system 18 into the heat exchanger 7 "gaseous working medium - conventionally hot heat transfer fluid agent", where it is realized the heat transfer between the working medium and the loop 2 conventionally hot heat transfer fluid agent, heating the loop 3 working medium and simultaneously cooling the loop 2 heat transfer fluid agent. In the heat transfer process in the heat exchanger 7 between the loop 3 working medium and the loop 2 heat transfer agent, the loop 2 heat transfer agent is moved via the pipelines of the loop 2 pipeline system 13 through the heat exchanger 7 with the help of the apparatus or the system for the loop heat transfer agent moving (in figures are not shown) from one part 15 of the tank 12 with the loop heat transfer fluid agent, heated more, into another part 14 of the tank 12 with the loop heat transfer fluid agent, heated less. After leaving the heat exchanger 7 the loop 3 working medium again is supplied via the pipeline of the pipeline system 18 into the expander 23. In the process of the accumulated energy storing the gaseous working medium circulation in the gaseous working medium loop 3 is decreased up to the minimum or is terminated, the conventionally hot heat transfer fluid agent moving loop 2 and the conventionally cold heat transfer fluid agent moving in the loop 1 are decreased up to the minimum or are terminated.

### Example 51

A method of accumulating, storing and returning of a mechanical energy in the installation, which diagram is shown in Fig.39 in the energy accumulating process and in Fig.40 in the energy returning process, where in the energy accumulating process the mechanical energy, being accumulated, that is received from the source of the mechanical energy, being accumulated 4, is supplied via the link 16 to the compressor 19, providing in the energy accumulating process the compression of the gaseous working medium, circulating in the gaseous working medium loop 3. The loop 3 working medium is supplied to the compressor 19. The loop 3 working medium is compressed in the compressor 19 in consequence the gaseous working medium pressure and the temperature are increased. After leaving the compressor 19 the loop 3 working medium is supplied via the pipeline of the pipeline system 18 into the heat exchanger 7 "gaseous working medium - conventionally hot heat transfer fluid agent", where it is realized the heat transfer between the working medium and the loop 2 conventionally hot heat transfer fluid agent, cooling the loop 3 working medium and simultaneously heating the loop 2 heat transfer fluid agent. In the heat transfer process in the heat exchanger 7 between the loop 3 working medium and the loop 2 heat transfer agent, the loop 2 heat transfer agent is moved via the pipelines of the loop 2 pipeline system 13 through the heat exchanger 7 with the help of the apparatus or the system for providing the loop heat transfer agent moving (in figures are not shown) from one part 14 of the tank 12 with the loop heat transfer fluid agent, heated less, into another part 15 of the tank 12 with the loop heat transfer fluid agent, heated more. After leaving the heat exchanger 7 the loop 3 working medium is supplied via the pipeline of the pipeline system 18 into the heat exchanger 26 "gaseous working medium - gaseous working medium", where the loop gaseous working medium is cooled, transferring the heat to the gaseous working medium, being heated, that is circulating in another part of the loop 3, after leaving the heat exchanger 26 the loop 3 working medium is supplied via the pipeline of the pipeline system 18 to the expander 20, providing the loop 3 working medium expansion in the energy accumulating process. The loop 3 working medium is expanded in the expander 20 in consequence the gaseous working medium pressure and the temperature are decreased. The mechanical energy, releasing in the expander 20, is removed via the link 21. After leaving the expander 20 the loop 3 working medium is supplied via the pipeline of the pipeline system 18 into the heat exchanger 6 "gaseous working medium - conventionally cold heat transfer fluid agent", where it is realized the heat transfer between the working medium and the loop 1 conventionally cold heat transfer fluid agent, heating the loop 3 working medium and simultaneously cooling the loop 1 heat transfer fluid agent. In the heat transfer process in the heat exchanger 6 between the loop 3 working medium and the loop 1 heat transfer agent the loop 1 heat transfer agent is moved via the pipelines of the loop 1 pipeline system 9 through the heat exchanger 6 with the help of the apparatus or the system for providing the loop heat transfer agent moving (in figures are not shown) from one part 10 of the tank 8 with the loop heat transfer fluid agent, heated more, into another part 11 of the tank 8 with the loop heat transfer fluid agent, heated less. After leaving the heat exchanger 6 the loop 3 working medium is supplied via the pipeline of the pipeline system 18 into the heat exchanger 26 "gaseous working medium - gaseous working medium", where the loop 3 working medium is heated by the mentioned heat transfer from the gaseous working medium, being cooled, that is circulating in another part of the loop3. After leaving the heat exchanger 26 the loop 3 working medium again is supplied to the inlet of the compressor 19. In the energy returning process the gaseous working medium, circulating in the gaseous working medium loop 3, is supplied to the expander 23, providing the loop 3 gaseous working medium expansion in the energy returning process, the working medium is expanded in consequence the gaseous working medium pressure and the temperature are decreased. The mechanical energy, releasing in the expander 23 in the working medium expansion process, is removed via the link 17 to the accumulated mechanical energy user 5. After leaving the expander 23 the loop 3 working medium via the pipeline of the pipeline system 18 is supplied to the heat exchanger 26 "gaseous working medium - gaseous working medium", where the loop gaseous working medium is cooled, transferring the heat to the gaseous working medium, being heated, that is circulating in another part of the loop3. After leaving the heat exchanger 26 the loop 3 working medium via the pipeline of the pipeline system 18 is supplied to the heat exchanger - cooler 25, providing the loop working medium cooling in the energy returning process, where the loop working medium is cooled. After leaving the heat exchanger - cooler 25 the loop 3 working medium is supplied via the pipeline of the pipeline system 18 into the heat exchanger 6 "gaseous working medium - conventionally cold heat transfer fluid agent", where it is realized the heat transfer between the working medium and the loop 1 conventionally cold heat transfer fluid agent, cooling the loop 3 working medium and simultaneously heating the loop 1 heat transfer fluid agent. In the heat transfer process in the heat exchanger 6 between the loop 3 working medium and the loop 1 heat transfer agent the loop 1 heat transfer agent is moved via the pipelines of the loop 1 pipeline system 9 through the heat exchanger 6 with the help of the apparatus or the system for providing the loop heat transfer agent moving (in figures are not shown) from one part 11 of the tank 8 with the loop heat transfer fluid agent, heated less, into another part 10 of the tank 8 with the loop heat transfer fluid agent, heated more. After leaving the heat exchanger 6 the loop 3 working medium is supplied via the pipeline of the pipeline system 18 into the compressor 22, providing the loop 3 working medium compression in the energy returning process, the working medium is compressed in consequence the working medium pressure and the temperature are increased. The mechanical energy, consuming in the compressor 22 is supplied via the link 24. After leaving the compressor 22 the loop 3 working medium via the pipeline of the pipeline system 18 is supplied to the heat exchanger 26 "gaseous working medium - gaseous working medium", where the loop 3 gaseous working medium is heated by the mentioned heat transfer from the gaseous working medium, being cooled, that is circulating in another part of the loop3. After leaving the heat exchanger 26 the loop 3 working medium via the pipeline of the pipeline system 18 is supplied to the heat exchanger 7 "gaseous working medium - conventionally hot heat transfer fluid agent", where it is realized the heat transfer between the working medium and the loop 2 conventionally hot heat transfer fluid agent, heating the loop 3 working medium and simultaneously cooling the loop 2 heat transfer fluid agent. In the heat transfer process in the heat exchanger 7 between the loop 3 working medium and the loop 2 heat transfer agent, the loop 2 heat transfer agent is moved via the pipelines of the loop 2 pipeline system 13 through the heat exchanger 7 with the help of the apparatus or the system for providing the loop heat transfer agent moving (in figures are not shown) from one part 15 of the tank 12 with the loop heat transfer fluid agent, heated more, into another part 14 of the tank 12 with the loop heat transfer fluid agent, heated less. After leaving the heat exchanger 7 the loop 3 working medium again is supplied via the pipeline of the pipeline system 18 into the expander 23. In the process of the accumulated energy storing the gaseous working medium circulation in the gaseous working medium loop 3 is decreased up to the minimum or is terminated, the conventionally hot heat transfer fluid agent moving in the loop 2 and the conventionally cold heat transfer fluid agent moving in the loop 1 are decreased up to the minimum or are terminated.

### Example 52

A method of accumulating, storing and returning of a mechanical energy in the installation, which diagram is shown in Fig.43 in the energy accumulating process, and in Fig.44 in the energy returning process, is analogous with the Method, according to the Example 51, but where the mechanical energy, releasing in the expander 20 in the energy accumulating process, is supplied via the link 21 to the compressor 19, and the mechanical energy, consuming by the compressor 22 in the energy returning process, is supplied via the link 24 from the expander 23.

### Example 53

A method of accumulating, storing and returning of a mechanical energy in the installation, which diagram is shown in Fig.47 in the energy accumulating process and in Fig.48 in the energy returning process, where in the energy accumulating process the mechanical energy, being accumulated, that is received from the source of the mechanical energy, being accumulated 4, is supplied via the link 16 to the compressor 19, providing in the energy accumulating process the compression of the gaseous working medium, circulating in the gaseous working medium loop 3. The loop 3 working medium is supplied to the compressor 19. The loop 3 working medium is compressed in the compressor 19 in consequence the gaseous working medium pressure and the temperature are increased. After leaving the compressor 19 the loop 3 working medium is supplied via the pipeline of the pipeline system 18 into the heat exchanger 7 "gaseous working medium - conventionally hot heat transfer fluid agent", where it is realized the heat transfer between the working medium and the loop 2 conventionally hot heat transfer fluid agent, cooling the loop 3 working medium and simultaneously heating the loop 2 conventionally hot heat transfer fluid agent. In the heat transfer process in the heat exchanger 7 between the loop 3 working medium and the loop 2 heat transfer agent, the loop 2 heat transfer agent is moved via the pipelines of the loop 2 pipeline system 13 through the heat exchanger 7 with the help of the apparatus or the system for providing the loop heat transfer agent moving (in figures are not shown) from one part 14 of the tank 12 with the loop heat transfer fluid agent, heated less, into another part 15 of the tank 12 with the loop heat transfer fluid agent, heated more. After leaving the heat exchanger 7 the loop 3 working medium is supplied via the pipeline of the pipeline system 18 into the heat exchanger 26 "gaseous working medium - gaseous working medium", working in the energy accumulating process, where the loop gaseous working medium is cooled, transferring the heat to the gaseous working medium, being heated, that is circulating in another part of the loop 3, after leaving the heat exchanger 26 the loop 3 working medium is supplied via the pipeline of the pipeline system 18 to the expander 20, providing the loop 3 working medium expansion in the energy accumulating process. The loop 3 working medium is expanded in the expander 20 in consequence the working medium pressure and the temperature are decreased. The mechanical energy, releasing in the expander 20 in the energy accumulating process, is removed via the link 21 to the compressor 19. After leaving the expander 20 the loop 3 working medium is supplied via the pipeline of the pipeline system 18 into three heat exchangers 6 "gaseous working medium - conventionally cold heat transfer fluid agent", connected in parallel, where it is realized the heat transfer between the working medium and the loop 1 conventionally cold heat transfer fluid agent, heating the loop 3 working medium and simultaneously cooling the loop 1 heat transfer fluid agent. In the heat transfer process in the heat exchangers 6 between the loop 3 working medium and the loop 1 heat transfer fluid agent the loop 1 heat transfer fluid agent is moved via the pipelines of the loop 1 pipeline system 9 through the heat exchangers 6 with the help of the apparatus or the system for providing the loop heat transfer agent moving (in figures are not shown) from the tank 29 with the loop heat transfer fluid agent, heated more, into three tanks 28 with the loop heat transfer fluid agent, heated less. After leaving the heat exchangers 6 the loop 3 working medium is supplied via the pipeline of the pipeline system 18 into the heat exchanger 26 "gaseous working medium - gaseous working medium", working in the energy accumulating process, where the loop 3 gaseous working medium is heated by the mentioned heat transfer from the gaseous working medium, being cooled, that is circulating in another part of the loop 3. After leaving the heat exchanger 26 the loop 3 working medium again is supplied to the inlet of the compressor 19. In the energy returning process the gaseous working medium, circulating in the gaseous working medium loop 3, is supplied to the expander 23, providing the loop 3 gaseous working medium expansion in the energy returning process, the working medium is expanded in consequence the working medium pressure and the temperature are decreased. The mechanical energy, releasing in the expander 23 in the working, medium expansion process, is removed via the link 17 to the accumulated mechanical energy user 5. After leaving the expander 23 the loop 3 working medium via the pipeline of the pipeline system 18 is supplied to the heat exchanger 27 "gaseous working medium - gaseous working medium", working in the energy returning process, where the loop gaseous working medium is cooled, transferring the heat to the gaseous working medium, being heated, that is circulating in another part of the loop 3. After leaving the heat exchanger 27 the loop 3 working medium via the pipeline of the pipeline system 18 is supplied to the heat exchanger - cooler 25, providing the loop working medium cooling in the energy returning process, where the loop working medium is cooled. After leaving the heat exchanger - cooler 25 the loop 3 working medium is supplied via the pipeline of the pipeline system 18 into three heat exchangers 6 "gaseous working medium - conventionally cold heat transfer fluid agent", connected in parallel, where it is realized the heat transfer between the working medium and the loop 1 conventionally cold heat transfer fluid agent, cooling the loop 3 working medium and simultaneously heating the loop 1 heat transfer fluid agent. In the heat transfer process in the heat exchangers 6 between the loop 3 working medium and the loop 1 heat transfer agent, the loop 1 heat transfer agent is moved via the pipelines of the loop 1 pipeline system 9 through the heat exchangers 6 with the help of the apparatus or the system for providing the loop heat transfer agent moving (in figures are not shown) from the tanks 28 with the loop heat transfer fluid agent, heated less, into the tank 29 with the loop heat transfer fluid agent, heated more. After leaving the heat exchangers 6 the loop 3 working medium is supplied via the pipeline of the pipeline system 18 into the compressor 22, providing the loop 3 working medium compression in the energy returning process, the working medium is compressed in consequence the working medium pressure and the temperature are increased. The mechanical energy, consuming in the compressor 22 is supplied via the link 24 from the expander 23. After leaving the compressor 22 the loop 3 working medium via the pipeline of the pipeline system 18 is supplied to the heat exchanger 27 "gaseous working medium - gaseous working medium", where the loop 3 gaseous working medium is heated by the mentioned heat transfer from the gaseous working medium, being cooled, that is circulating in another part of the loop 3. After leaving the heat exchanger 27 the loop 3 working medium via the pipeline of the pipeline system18 is supplied to the heat exchanger 7 "gaseous working medium - conventionally hot heat transfer fluid agent", where it is realized the heat transfer between the working medium and the loop 2 conventionally hot heat transfer fluid agent, heating the loop 3 working medium and simultaneously cooling the loop 2 heat transfer fluid agent. In the heat transfer process in the heat exchanger 7 between the loop 3 working medium and the loop 2 heat transfer agent, the loop 2 heat transfer agent is moved via the pipelines of the loop 2 pipeline system 13 through the heat exchanger 7 with the help of the apparatus or the system for providing the loop heat transfer agent moving (in figures are not shown) from one part 15 of the tank 12 with the loop heat transfer fluid agent, heated more, into another part 14 of the tank 12 with the loop heat transfer fluid agent, heated less. After leaving the heat exchanger 7 the loop 3 working medium again is supplied via the pipeline of the pipeline system 18 into the expander 23. In the process of the accumulated energy storing the gaseous working medium circulation in the gaseous working medium loop 3 is decreased up to the minimum or is terminated, the conventionally hot heat transfer fluid agent moving in the loop 2 and the conventionally cold heat transfer fluid agent moving in the loop 1 are decreased up to the minimum or are terminated.

### Example 54

A method of accumulating, storing and returning of a mechanical energy in the installation, which diagram is shown in Fig.53 in the energy accumulating process and in Fig.54 in the energy returning process, where in the energy accumulating process the mechanical energy, being accumulated, that is received from the source of the mechanical energy, being accumulated 4, is supplied via the link 16 to the compressor 19, providing in the energy accumulating process the compression of the gaseous working medium, circulating in the gaseous working medium loop 3. The loop 3 working medium is supplied to the compressor 19. The loop 3 working medium is compressed in the compressor 19 in consequence the gaseous working medium pressure and the temperature are increased. After leaving the compressor 19 the loop 3 working medium is supplied via the pipeline of the pipeline system 18 into the heat exchanger 7 "gaseous working medium - conventionally hot heat transfer fluid agent", where it is realized the heat transfer between the working medium and the loop 2 conventionally hot heat transfer fluid agent, cooling the loop 3 working medium and simultaneously heating the loop 2 heat transfer fluid agent. In the heat transfer process in the heat exchanger 7 between the loop 3 working medium and the loop 2 heat transfer agent, the loop 2 heat transfer agent is moved via the pipelines of the loop 2 pipeline system 13 through the heat exchanger 7 with the help of the apparatus or the system for providing the loop heat transfer agent moving (in figures are not shown) from the tank 30 with the loop heat transfer fluid agent, heated less, into the tank 31 with the loop heat transfer fluid agent, heated more. After leaving the heat exchanger 7 the loop 3 working medium is supplied via the pipeline of the pipeline system 18 into the heat exchanger 26 "gaseous working medium - gaseous working medium", working in the energy accumulating process, where the loop gaseous working medium is cooled, transferring the heat to the gaseous working medium, being heated, that is circulating in another part of the loop 3, after leaving the heat exchanger 26 the loop 3 working medium is supplied via the pipeline of the pipeline system 18 to the expander 20, providing the loop 3 working medium expansion in the energy accumulating process. The loop 3 working medium is expanded in the expander 20 in consequence the working medium pressure and the temperature are decreased. The mechanical energy, releasing in the expander 20 in the energy accumulating process, is removed via the link 21 to the compressor 19. After leaving the expander 20 the loop 3 working medium is supplied via the pipeline of the pipeline system 18 into the heat exchanger 6 "gaseous working medium - conventionally cold heat transfer fluid agent", where it is realized the heat transfer between the working medium and the loop 1 conventionally cold heat transfer fluid agent, heating the loop 3 working medium and simultaneously cooling the loop 1 heat transfer fluid agent. In the heat transfer process in the heat exchanger 6 between the loop 3 working medium and the loop 1 heat transfer agent the loop 1 heat transfer agent is moved via the pipelines of the loop 1 pipeline system 9 through the heat exchanger 6 with the help of the apparatus or the system for providing the loop heat transfer agent moving (in figures are not shown) from the tank 29 with the loop heat transfer fluid agent, heated more, into the tank 28 with the loop heat transfer fluid agent, heated less. After leaving the heat exchanger 6 the loop 3 working medium is supplied via the pipeline of the pipeline system 18 into the heat exchanger 26 "gaseous working medium - gaseous working medium", working in the energy accumulating process, where the loop 3 working medium is heated by the mentioned heat transfer from the gaseous working medium, being cooled, that is circulating in another part of the loop 3. After leaving the heat exchanger 26 the loop 3 working medium again is supplied to the inlet of the compressor 19. In the energy returning process the gaseous working medium, circulating in the gaseous working medium loop 3, is supplied to the expander 23, providing the loop 3 working medium expansion in the energy returning process, the working medium is expanded in consequence the working medium pressure and the temperature are decreased. The mechanical energy, releasing in the expander 23 in the working medium expansion process, is removed via the link 17 to the accumulated mechanical energy user 5. After leaving the expander 23 the loop 3 working medium via the pipeline of the pipeline system 18 is supplied to the heat exchanger 27 "gaseous working medium - gaseous working medium", working in the energy returning process, where the loop gaseous working medium is cooled, transferring the heat to the gaseous working medium, being heated, that is circulating in another part of the loop 3. After leaving the heat exchanger 27 the loop 3 working medium via the pipeline of the pipeline system 18 is supplied to the heat exchanger - cooler 25, providing the loop working medium cooling in the energy returning process, where the loop working medium is cooled. After leaving the heat exchanger - cooler 25 the loop 3 working medium is supplied via the pipeline of the pipeline system 18 into the heat exchanger 6 "gaseous working medium - conventionally cold heat transfer fluid agent", where it is realized the heat transfer between the working medium and the loop 1 conventionally cold heat transfer fluid agent, cooling the loop 3 working medium and simultaneously heating the loop 1 heat transfer fluid agent. In the heat transfer process in the heat exchanger 6 between the loop 3 working medium and the loop 1 heat transfer agent, the loop 1 heat transfer agent is moved via the pipelines of the loop 1 pipeline system 9 through the heat exchanger 6 with the help of the apparatus or the system for providing the loop heat transfer agent moving (in figures are not shown) from the tank 28 with the loop heat transfer fluid agent, heated less, into the tank 29 with the loop heat transfer fluid agent, heated more. After leaving the heat exchanger 6 the loop 3 working medium is supplied via the pipeline of the pipeline system 18 into the compressor 22, providing the loop 3 working medium compression in the energy returning process, the working medium is compressed in consequence the gaseous working medium pressure and the temperature are increased. The mechanical energy, consuming in the compressor 22, in the energy returning process, is supplied via the link 24 from the expander 23. After leaving the compressor 22 the loop 3 working medium via the pipeline of the pipeline system18 is supplied to the heat exchanger 27 "gaseous working medium - gaseous working medium", working in the energy returning process, where the loop 3 working medium is heated by the mentioned heat transfer from the gaseous working medium, being cooled, that is circulating in another part of the loop 3. After leaving the heat exchanger 27 the loop 3 working medium via the pipeline of the pipeline system 18 is supplied to the heat exchanger 7 "gaseous working medium - conventionally hot heat transfer fluid agent", where it is realized the heat transfer between the working medium and the loop 2 conventionally hot heat transfer fluid agent, heating the loop 3 working medium and simultaneously cooling the loop 2 heat transfer fluid agent. In the heat transfer process in the heat exchanger 7 between the loop 3 working medium and the loop 2 heat transfer agent, the loop 2 heat transfer agent is moved via the pipelines of the loop 2 pipeline system 13 through the heat exchanger 7 with the help of the apparatus or the system for providing the loop heat transfer agent moving (in figures are not shown) from the tank 31 with the loop heat transfer fluid agent, heated more, into the tank 30 with the loop heat transfer fluid agent, heated less. After leaving the heat exchanger 7 the loop 3 working medium again is supplied via the pipeline of the pipeline system 18 into the expander 23. In the process of the accumulated energy storing the gaseous working medium circulation in the gaseous working medium loop 3 is decreased up to the minimum or is terminated, the conventionally hot heat transfer fluid agent moving in the loop 2 and the conventionally cold heat transfer fluid agent moving in the loop 1 are decreased up to the minimum or are terminated.

### Example 55

A method of accumulating, storing and returning of a mechanical energy in the installation, which diagram is shown in Fig.55 in the energy accumulating process and in Fig.56 in the energy returning process, where in the energy accumulating process the mechanical energy, being accumulated, that is received from the source of the mechanical energy, being accumulated 4, is supplied via the link 16 to the compressor 19, providing in the energy accumulating process the compression of the gaseous working medium, circulating in the gaseous working medium loop 3. The loop 3 working medium is supplied to the compressor 19. The loop 3 working medium is compressed in the compressor 19 in consequence the gaseous working medium pressure and the temperature are increased. After leaving the compressor 19 the loop 3 working medium is supplied via the pipeline of the pipeline system 18 into three heat exchangers 7 "gaseous working medium - conventionally hot heat transfer fluid agent", connected in series, where it is realized the heat transfer between the working medium and the loop 2 conventionally hot heat transfer fluid agent, cooling the loop 3 working medium and simultaneously heating the loop 2 heat transfer fluid agent. In the heat transfer process in the heat exchangers 7 between the loop 3 working medium and the loop 2 heat transfer agent, the loop 2 heat transfer agent is moved via the pipelines of the loop 2 pipeline system 13 through the heat exchangers 7 with the help of the apparatus or the system for providing the loop heat transfer agent moving (in figures are not shown) from the tank 30 with the loop heat transfer fluid agent, heated less, into three tanks 31 with the loop heat transfer fluid agent, heated more, at the same time the loop 2 heat transfer fluid agent quantity, taking part in the heat transfer, is changed as heating by the partial outflow of the loop 2 heat transfer fluid agent, heated more, to the tanks 31 with the loop 2 heat transfer fluid agent, heated more. After leaving the heat exchanger 7 the loop 3 working medium is supplied via the pipeline of the pipeline system 18 into the heat exchanger 26 "gaseous working medium - gaseous working medium", working in the energy accumulating process, where the loop gaseous working medium is cooled, transferring the heat to the gaseous working medium, being heated, that is circulating in another part of the loop 3, after leaving the heat exchanger 26 the loop 3 working medium is supplied via the pipeline of the pipeline system 18 to the expander 20, providing the loop 3 working medium expansion in the energy accumulating process. The loop 3 working medium is expanded in the expander 20 in consequence the working medium pressure and the temperature are decreased. The mechanical energy, releasing in the expander 20 in the energy accumulating process, is removed via the link 21 to the compressor 19. After leaving the expander 20 the loop 3 working medium is supplied via the pipeline of the pipeline system 18 into three heat exchangers 6 "gaseous working medium - conventionally cold heat transfer fluid agent", connected in series, where it is realized the heat transfer between the working medium and the loop 1 conventionally cold heat transfer fluid agent, heating the loop 3 working medium and simultaneously cooling the loop 1 heat transfer fluid agent. In the heat transfer process in the heat exchangers 6 between the loop 3 working medium and the loop 1 heat transfer fluid agent the loop 1 heat transfer fluid agent is moved via the pipelines of the loop 1 pipeline system 9 through the heat exchangers 6 with the help of the apparatus or the system for providing the loop heat transfer agent moving (in figures are not shown) from three tanks 29 with the loop heat transfer fluid agent, heated more, into the tank 28 with the loop heat transfer fluid agent, heated less, at the same time the loop 1 heat transfer fluid agent quantity, taking part in the heat transfer, is changed as cooling by the partial inflow of the loop 1 heat transfer fluid agent, heated more, from the tanks 29 with the loop 1 heat transfer fluid agent, heated more. After leaving the heat exchanger 6 the loop 3 working medium is supplied via the pipeline of the pipeline system 18 into the heat exchanger 26 "gaseous working medium - gaseous working medium", working in the energy accumulating process, where the loop 3 working medium is heated by the mentioned heat transfer from the gaseous working medium, being cooled, that is circulating in another part of the loop 3. After leaving the heat exchanger 26 the loop 3 working medium again is supplied to the inlet of the compressor 19. In the energy returning process the gaseous working medium, circulating in the gaseous working medium loop 3, is supplied to the expander 23, providing the loop 3 working medium expansion in the energy returning process, the working medium is expanded in consequence the working medium pressure and the temperature are decreased. The mechanical energy, releasing in the expander 23 in the working medium expansion process, is removed via the link 17 to the accumulated mechanical energy user 5. After leaving the expander 23 the loop 3 working medium via the pipeline of the pipeline system 18 is supplied to the heat exchanger 27 "gaseous working medium - gaseous working medium", working in the energy returning process, where the loop gaseous working medium is cooled, transferring the heat to the gaseous working medium, being heated, that is circulating in another part of the loop 3. After leaving the heat exchanger 27 the loop 3 working medium via the pipeline of the pipeline system 18 is supplied to the heat exchanger - cooler 25, providing the loop working medium cooling in the energy returning process, where the loop working medium is cooled. After leaving the heat exchanger - cooler 25 the loop 3 working medium is supplied via the pipeline of the pipeline system 18 into three heat exchangers 6 "gaseous working medium - conventionally cold heat transfer fluid agent", connected in series, where it is realized the heat transfer between the working medium and the loop 1 conventionally cold heat transfer fluid agent, cooling the loop 3 working medium and simultaneously heating the loop 1 heat transfer fluid agent. In the heat transfer process in the heat exchangers 6 between the loop 3 working medium and the loop 1 heat transfer agent, the loop 1 heat transfer agent is moved via the pipelines of the loop 1 pipeline system 9 through the heat exchangers 6 with the help of the apparatus or the system for providing the loop heat transfer agent moving (in figures are not shown) from the tank 28 with the loop heat transfer fluid agent, heated less, into three tanks 29 with the loop heat transfer fluid agent, heated more, at the same time the loop 1 heat transfer fluid agent quantity, taking part in the heat transfer, is changed as heating by the partial outflow of the loop 1 heat transfer fluid agent, heated more, to the tanks 29 with the conventionally cold heat transfer fluid agent, heated more. After leaving the heat exchanger 6 the loop 3 working medium is supplied via the pipeline of the pipeline system 18 into the compressor 22, providing the loop 3 working medium compression in the energy returning process, the working medium is compressed in consequence the working medium pressure and the temperature are increased. The mechanical energy, consuming in the compressor 22 in the energy returning process, is supplied via the link 24 from the expander 23. After leaving the compressor 22 the loop 3 working medium via the pipeline of the pipeline system18 is supplied to the heat exchanger 27 "gaseous working medium - gaseous working medium", working in the energy returning process, where the loop 3 working medium is heated by the mentioned heat transfer from the gaseous working medium, being cooled, that is circulating in another part of the loop 3. After leaving the heat exchanger 27 the loop 3 working medium is supplied to three heat exchangers 7 "gaseous working medium - conventionally hot heat transfer fluid agent", connected in series, where it is realized the heat transfer between the working medium and the loop 2 conventionally hot heat transfer fluid agent, heating the loop 3 working medium and simultaneously cooling the loop 2 heat transfer fluid agent. In the heat transfer process in the heat exchangers 7 between, the loop 3 working medium and the loop 2 heat transfer agent, the loop 2 heat transfer agent is moved via the pipelines of the loop 2 pipeline system 13 through the heat exchangers 7 with the help of the apparatus or the system for providing the loop heat transfer (in figures are not shown) from three tanks 31 with the loop heat transfer fluid agent, heated more, to the tank 30, with the loop heat transfer fluid agent, heated less, at the same time the loop 2 heat transfer fluid agent quantity, taking part in the heat transfer, is changed as cooling by the partial inflow of the loop 2 heat transfer fluid agent, heated more, from the tanks 31 with the loop 2 heat transfer fluid agent, heated more. After leaving the heat exchanger 7 the loop 3 working medium again is supplied via the pipeline of the pipeline system 18 into the expander 23. In the process of the accumulated energy storing the gaseous working medium circulation in the gaseous working medium loop 3 is decreased up to the minimum or is terminated, the conventionally hot heat transfer fluid agent moving in the loop 2 and the conventionally cold heat transfer fluid agent moving in the loop 1 are decreased up to the minimum or are terminated. The invention achieves its technical results by at least respectively all features of appended independent claims 1 and 11. The further features and embodiments described in the foregoing may supplement the features contained in the independent claims.

## Claims

1. An installation for accumulating, storing and returning of a mechanical energy, comprising of at least, one loop (1) of an conventionally cold heat transfer fluid agent, at least, one loop (2) of an conventionally hot heat transfer fluid agent, at least, one loop (3) of gaseous working medium, connected with, at least, one source (4) of the mechanical energy, being accumulated, and with, at least, one using equipment (5) of the accumulated mechanical energy, in which the energy, being accumulated, is transformed into the gaseous working medium heat energy, and the accumulated heat energy by means of the gaseous working medium is transformed into mechanical energy, and, at least, one heat exchanger-cooler (25); the conventionally cold heat transfer fluid agent loop (1) is made with the possibility in the interaction with the gaseous working medium loop (3) through, at least, one heat exchanger (6) "gaseous working medium - conventionally cold heat transfer fluid agent" in the energy accumulating process to cool the loop heat transfer fluid agent, but in the energy returning process - to heat the loop heat transfer fluid agent, the conventionally hot heat transfer fluid agent loop (2) is made with the possibility in the interaction with the gaseous working medium loop (3) through, at least, one heat exchanger (7) "gaseous working medium - conventionally hot heat transfer fluid agent" in the energy accumulating process to heat the loop heat transfer fluid agent, but in the energy returning process - to cool the loop heat transfer fluid agent; besides the mentioned one or some heat exchangers "gaseous working medium - conventionally cold heat transfer fluid agent" the loop of the conventionally cold heat transfer fluid agent contains, at least, one tank (8), at least, one pipeline system (9), at least, one apparatus or system for providing of the heat transfer fluid agent moving in the loop through one or some mentioned heat exchangers (6) "gaseous working medium - conventionally cold heat transfer fluid agent" from one part (10,11) of the tank (8) to another (11,10) or from one tank (28,29,) to another (29,28) or to others or from some tanks (28,29) to other ones (29,28), besides the mentioned one or some heat exchangers (7) "gaseous working medium - conventionally hot heat transfer fluid agent" the loop (2) of the conventionally hot heat transfer fluid agent contains, at least, one tank (12), at least, one pipeline system (13), at least, one apparatus or system for providing of the heat transfer fluid agent moving in the loop through mentioned one or some mentioned heat exchangers (7) "gaseous working medium - conventionally hot heat transfer fluid agent" from one part (14,15) of the tank (12) to another (15,14) or from one tank (30,31) to another or to others, or from some tanks (30,31) to other ones, the gaseous working medium loop (3) besides the mentioned heat exchangers (6,7), the mentioned link (16) with the source (4) of the mechanical energy , being accumulated, and the link (17) with the using equipment (5) of the accumulated mechanical energy contains, at least, one pipeline system (18) for providing of gaseous working medium moving in the loop, at least, one apparatus like compressor means (19) for providing of the gaseous working medium compression, which works in the energy accumulating process, at least, one apparatus like expander means (20) for providing of the gaseous working medium expansion, which works in the energy accumulating process, at least, one link (21) with, at least, one using equipment of the mechanical energy, releasing in the process of the energy accumulating in one mentioned apparatus like expander means (20) or in some mentioned apparatuses like expander means, which works or respectively which work in the energy accumulating process, at least, one apparatus like compressor means (22) for providing of the gaseous working medium compression, which works in the energy returning process, at least, one apparatus like expander means (23) for providing of the gaseous working medium expansion, which works in the energy returning process, at least, one link (24) with, at least, one source of the mechanical energy, being used in the energy returning process in one mentioned apparatus like compressor means (22) or in some mentioned apparatuses like compressor means, which works or respectively which work in the energy returning process, at least, one heat exchanger (26) "gaseous working medium - gaseous working medium", working in the energy accumulating process in the part of the loop between the outlet from mentioned one or one of some mentioned heat exchangers (6) "gaseous working medium - conventionally cold heat transfer fluid agent", the nearest to the inlet to the mentioned apparatus like compressor means (19), working in the energy accumulating process, and the mentioned inlet to mentioned one or one of some mentioned apparatuses like compressor means (19), working in the energy accumulating process, the nearest to the mentioned outlet from the mentioned heat exchanger (6)"gaseous working medium - conventionally cold heat transfer fluid agent", and in the part of the loop between the outlet from mentioned one or one of some mentioned heat exchangers (7) "gaseous working medium - conventionally hot heat transfer fluid agent", the nearest to the inlet to the mentioned apparatus like expander means (20), working in the energy accumulating process, and the mentioned inlet to mentioned one or one of some mentioned apparatuses like expander means (20), working in the energy accumulating process, the nearest to the mentioned outlet from the mentioned heat exchanger (7) "gaseous working medium - conventionally hot heat transfer fluid agent", and/or at least, one heat exchanger (,27) "gaseous working medium - gaseous working medium", working in the energy returning process in the part of the loop between the outlet from mentioned one or one of some mentioned apparatuses like compressor means (22), working in the energy returning process, the nearest to the inlet to the mentioned heat exchanger (7) "gaseous working medium - conventionally hot heat transfer fluid agent", and the mentioned inlet to mentioned one or one of some mentioned heat exchangers (7) "gaseous working medium - conventionally hot heat transfer fluid agent", the nearest to the mentioned outlet from the mentioned apparatus like compressor means (22), working in the energy returning process, and in the part of the loop between the outlet from mentioned one or one of some mentioned apparatuses like expander means (23), working in the energy returning process, the nearest to the inlet to the mentioned heat exchanger (6) "gaseous working medium - conventionally cold heat transfer fluid agent", and the mentioned inlet to mentioned one or one of some mentioned heat exchangers (6) "gaseous working medium - conventionally cold heat transfer fluid agent", the nearest to the mentioned outlet from the mentioned apparatus like expander means (23), working in the energy returning process, and/or at least, one heat exchanger (26) "gaseous working medium - gaseous working medium", working in the energy accumulating process in the part of the loop between the outlet from mentioned one or one of some mentioned heat exchangers (6) "gaseous working medium - conventionally cold heat transfer fluid agent", the nearest to the inlet to the mentioned apparatus like compressor means (19), working in the energy accumulating process, and the mentioned inlet to mentioned one or one of some mentioned apparatuses like compressor means (19), working in the energy accumulating process, the nearest to the mentioned outlet from the mentioned heat exchanger (6) "gaseous working medium - conventionally cold heat transfer fluid agent", and in the part of the loop between the outlet from mentioned one or one of some mentioned heat exchangers (7) "gaseous working medium - conventionally hot heat transfer fluid agent", the nearest to the inlet to the mentioned apparatus like expander means (20), working in the energy accumulating process, and the mentioned inlet to mentioned one or one of some mentioned apparatuses like expander means (20), working in the energy accumulating process, the nearest to the mentioned apparatus like expander means (20), working in the energy accumulating process, and working in the energy returning process in the part of the loop between the outlet from mentioned one or one of some mentioned apparatuses like compressor means (22), working in the energy returning process, the nearest to the inlet to the mentioned heat exchanger (7) "gaseous working medium - conventionally hot heat transfer fluid agent", and the mentioned inlet to mentioned one or one of some mentioned heat exchangers (7) "gaseous working medium - conventionally hot heat transfer fluid agent", the nearest to the outlet from the mentioned apparatus like compressor means (22), working in the energy returning process, and in the part of the loop between the outlet from mentioned one or one of some mentioned apparatuses like expander means (23), working in the energy returning process, the nearest to the inlet to the mentioned heat exchanger (6) "gaseous working medium - conventionally cold heat transfer fluid agent", and the mentioned inlet to mentioned one or one of some mentioned heat exchangers (6) "gaseous working medium - conventionally cold heat transfer fluid agent", the nearest to the mentioned outlet from the mentioned apparatus like expander means (23), working in the energy returning process.

2. An installation according to the claim 1, wherein the heat exchanger- cooler (25) is made as a heat exchanger "gaseous working medium cooler" in the gaseous working medium loop (3) for providing of gaseous working medium cooling in the energy returning process, working in the part of the loop between the outlet from mentioned one or one of some mentioned heat exchangers (26,27) "gaseous working medium - gaseous working medium", the nearest to the inlet to the mentioned heat exchanger (6) "gaseous working medium - conventionally cold heat transfer fluid agent" and the mentioned inlet to mentioned one or one of some mentioned heat exchangers (6) "gaseous working medium - conventionally cold heat transfer fluid agent", the nearest to the mentioned outlet from the mentioned heat exchanger (26,27) "gaseous working medium - gaseous working medium", and/or as a heat exchanger (25) "gaseous working medium cooler" in the gaseous working medium loop (3) for providing of gaseous working medium cooling in the energy accumulating process, working in the part of the loop between the outlet from mentioned one or one of some mentioned heat exchangers (6) "gaseous working medium - conventionally cold heat transfer fluid agent", the nearest to the inlet to the mentioned heat exchanger (26) "gaseous working medium - gaseous working medium" and the mentioned inlet to mentioned one or one of some mentioned heat exchangers (26) "gaseous working medium - gaseous working medium ", the nearest to the men
tioned outlet from the mentioned heat exchanger (6) "gaseous working medium - conventionally cold heat transfer fluid agent", and/or as a heat exchanger (32) "conventionally cold heat transfer fluid agent cooler" in the loop (1) of the conventionally cold heat transfer fluid agent for providing of conventionally cold heat transfer fluid agent cooling, working in the energy accumulating process in the part of the loop between the outlet from the mentioned part (10) of the mentioned loop tank (8), or the outlet from the mentioned loop tank (29), or the outlet from the mentioned loop tanks (29) and the inlet to the mentioned heat exchanger, or mentioned heat exchangers (6) "gaseous working medium - conventionally cold heat transfer fluid agent", and/or working in the energy returning process in part of the loop between the outlet from the mentioned heat exchanger, or mentioned heat exchangers (6) "gaseous working medium - conventionally cold heat transfer fluid agent" and the inlet to the mentioned part (10) of the loop tank (8), or the mentioned loop tank (29), or the mentioned loop tanks (29).

3. An installation according to the claim 1 or claim 2, wherein an apparatus like compressor means (19), working in the energy accumulating process, is used in the capacity of the using equipment of the mechanical energy, releasing in the apparatus like expander means (20), working in the energy accumulating process.

4. An installation according to any of claims 1 to 3, wherein an apparatus like expander means (23), working in the energy returning process, is used in the capacity of the source of the mechanical energy, being used in the apparatus like compressor means (22), working in the energy returning process.

5. An installation according to any of claims 1 to 4, wherein there is a mechanical link (21) between an apparatus like expander means (20), working in the energy accumulating process, and the using equipment of the mechanical energy, releasing in the energy accumulating process in the apparatus like expander means (20), working in the energy accumulating process.

6. An installation according to any of claims 1 to 5, wherein there is a mechanical link (24) between an apparatus like compressor means (22), working in the energy returning process, and the source of the mechanical energy, being used in the energy returning process in the apparatus like compressor means (22), working in the energy returning process.

7. An installation according to any of claims 1 to 6, wherein the conventionally cold heat transfer fluid agent loop (1) is made so that it is possible to control the
quantity of the conventionally cold heat transfer fluid agent in the loop.

8. An installation according to any of claims 1 to 7, wherein the conventionally hot heat transfer fluid agent loop (2) is made so that it is possible to control the quantity of the conventionally hot heat transfer fluid agent in the loop.

9. An installation according to any of claims 1 to 8, wherein the gaseous working medium loop (3) is made so that it is possible to control the quantity of the gaseous working medium in the loop.

10. An installation according to any of claims 1 to 9, wherein any of the tanks (8,12,28,29,30,31) is heat insulated and is made so that it is possible to bring the heat transfer fluid agent into the working condition and to maintain the heat transfer fluid agent in the working condition.

11. A method of accumulating, storing and returning of a mechanical energy in the installation according to the claim 1, wherein the mechanical energy, being accumulated, is received in the energy accumulating process from the source (4) of the mechanical energy, being accumulated, and through the link (16) with the apparatus like compressor means (19), working in the energy accumulating process, the received mechanical energy is supplied to the mentioned apparatus like compressor means (19), working in the energy accumulating process, in the same time the gaseous working medium, circulating in the gaseous working medium loop (3), is supplied to the mentioned apparatus like compressor means (19), working in the energy accumulating process, the gaseous working medium is compressed in the mentioned apparatus like compressor means (19), working in the energy accumulating process, thereby the gaseous working medium pressure and temperature are increased, after that the gaseous working medium is supplied via a pipeline (18) into the heat exchanger (7) "gaseous working medium - conventionally hot heat transfer fluid agent", where the gaseous working medium is cooled and simultaneously the conventionally hot heat transfer fluid agent is heated, at the same time the conventionally hot heat transfer fluid agent is moved in the conventionally hot heat transfer fluid agent loop (2) through the mentioned heat exchanger (7) "gaseous working medium - conventionally hot heat transfer fluid agent" with the help of the apparatus for providing of the conventionally hot heat transfer fluid agent moving from one part (14) of the tank (12) in the conventionally hot heat transfer fluid agent loop (2), in which the conventionally hot heat transfer fluid agent is heated less, to another part (15) of the tank (12) with the conventionally hot heat transfer fluid agent, heated more,
or from one tank (30) in the conventionally hot heat transfer fluid agent loop (2), in which the conventionally hot heat transfer fluid agent is heated less, to another tank (31) with the conventionally hot heat transfer fluid agent, heated more, or to others (31) with the conventionally hot heat transfer fluid agent, heated more, or from some tanks (30) in the conventionally hot heat transfer fluid agent loop (2), in which conventionally hot heat transfer fluid agent is heated less, to the other tanks (31) with the conventionally hot heat transfer fluid agent, heated more, after leaving the mentioned heat exchanger (7) "gaseous working medium - conventionally hot heat transfer fluid agent", the gaseous working medium is supplied via the pipeline (18) to the heat exchanger (26) "gaseous working medium - gaseous working medium", in which gaseous working medium is cooled and the heat is transferred to the gaseous working medium, being heated, circulating in another part of gaseous working medium loop (3), after leaving the mentioned heat exchanger (26) "gaseous working medium - gaseous working medium" the gaseous working medium is supplied via the pipeline (18) into the apparatus like expander means (20), working in the energy accumulating process, in which the gaseous working medium is expanded and the gaseous working medium pressure and temperature are reduced, at the same time via the link (21) with the mentioned apparatus like expander means (20), working in the energy accumulating process, the mechanical energy, releasing in the mentioned apparatus like expander means (20), working in the energy accumulating process, is removed, after leaving the mentioned apparatus like expander means (20), working in the energy accumulating process, the gaseous working medium is supplied via a pipeline (18) into the heat exchanger (6) "gaseous working medium - conventionally cold heat transfer fluid agent", where the gaseous working medium is heated and simultaneously the conventionally cold heat transfer fluid agent is cooled, at the same time the conventionally cold heat transfer fluid agent is moved in the conventionally cold heat transfer fluid agent loop (1), in case of need, through the heat exchanger-cooler (32) of the conventionally cold heat transfer fluid agent loop (1), in which the conventionally cold heat transfer fluid agent is cooled and after that through the mentioned heat exchanger (6) "gaseous working medium - conventionally cold heat transfer fluid agent", or only through the mentioned heat exchanger (6) "gaseous working medium - conventionally cold heat transfer fluid agent" with the help of the apparatus for providing of the conventionally cold heat transfer fluid agent moving from one part (10) of the tank (8) in the conventionally cold heat transfer fluid agent loop (1), in which the conventionally cold heat transfer fluid agent is heated more, to an
other part (11) of the tank (8) with the conventionally cold heat transfer fluid agent, heated less, or from one tank (29) in the conventionally cold heat transfer fluid agent loop (1), in which the conventionally cold heat transfer fluid agent is heated more, to another tank (28) with the conventionally cold heat transfer fluid agent, heated less, or to others (28) with the conventionally cold heat transfer fluid agent, heated less, or from some tanks (29) in the conventionally cold heat transfer fluid agent loop (1), in which the conventionally cold heat transfer fluid agent is heated more, to the other tanks (28) with the conventionally cold heat transfer fluid agent, heated less, after leaving the mentioned heat exchanger (6) "gaseous working medium - conventionally cold heat transfer fluid agent" the gaseous working medium, in case of need, is supplied to the heat exchanger-cooler (25) of the gaseous working medium loop (3), where the gaseous working medium is cooled, after that the gaseous working medium via the pipeline (18) is supplied to the mentioned heat exchanger (26) "gaseous working medium - gaseous working medium", or at once after leaving the mentioned heat exchanger (6) "gaseous working medium - conventionally cold heat transfer fluid agent" the gaseous working medium is supplied via the pipeline (18) to the mentioned heat exchanger (26) "gaseous working medium - gaseous working medium", where the gaseous working medium is heated by the mentioned heat transfer from the gaseous working medium, being cooled, that is circulating in the mentioned part of the gaseous working medium loop (3) between the outlet from the mentioned heat exchanger (7) "gaseous working medium - conventionally hot heat transfer fluid agent", and the inlet to the mentioned apparatus like expander means (20), working in the energy accumulating process, after leaving the mentioned heat exchanger (26) "gaseous working medium - gaseous working medium", the gaseous working medium again is supplied to the mentioned apparatus like compressor means (19), working in the energy accumulating process; in the energy returning process the gaseous working medium, circulating in the gaseous working medium loop (3), is supplied to the apparatus like expander means (23), working in the energy returning process, in the mentioned apparatus like expander means (23), working in the energy returning process, the gaseous working medium is expanded, at the same time the gaseous working medium pressure and the temperature are decreased, via the link (17) with the mentioned apparatus like expander means (23), working in the energy returning process, the mechanical energy, releasing in the mentioned apparatus like expander means (23), working in the energy returning process, is supplied to the user (5) of the accumulated mechanical energy, after leaving the mentioned appa
ratus like expander means (23), working in the energy returning process, the gaseous working medium is supplied via the pipeline (18) to the heat exchanger (27) or to the mentioned heat exchanger (26,27) "gaseous working medium - the gaseous working medium", where the gaseous working medium is cooled, transferring the heat to the gaseous working medium, being heated, circulating in another part of the gaseous working medium loop (3), after leaving the mentioned heat exchanger (26,27) "gaseous working medium - gaseous working medium", in case of need, the gaseous working medium is supplied via the pipeline (18) to the heat exchanger-cooler (25) of the gaseous working medium loop (3), where the gaseous working medium is cooled and after that the gaseous working medium is supplied via the pipeline to the heat exchanger (6) "gaseous working medium - conventionally cold heat transfer fluid agent", or at once after leaving the mentioned heat exchanger (26,27) "gaseous working medium - gaseous working medium" the gaseous working medium is supplied via the pipeline (18) to the heat exchanger (6) "gaseous working medium - conventionally cold heat transfer fluid agent", where the gaseous working medium is cooled and simultaneously the conventionally cold heat transfer fluid agent is heated, at the same time the conventionally cold heat transfer fluid agent is moved in the conventionally cold heat transfer fluid agent loop (1) through the mentioned heat exchanger (6) "gaseous working medium - conventionally cold heat transfer fluid agent", and then, in case of need, through the heat exchanger-cooler (32) of the conventionally cold heat transfer fluid agent loop (1), where the conventionally cold heat transfer fluid agent is cooled, or only through the mentioned heat exchanger (6) "gaseous working medium - conventionally cold heat transfer fluid agent" with the help of the apparatus for providing of the conventionally cold heat transfer fluid agent moving from one part (11) of the tank (8) in the conventionally cold heat transfer fluid agent loop (1), in which the conventionally cold heat transfer fluid agent is heated less, to another part (10) of the tank (8) with the conventionally cold heat transfer fluid agent, heated more, or from one tank (28) in the conventionally cold heat transfer fluid agent loop (1), in which the conventionally cold heat transfer fluid agent is heated less, to another tank (29), with the conventionally cold heat transfer fluid agent, heated more, or to others (29) with the conventionally cold heat transfer fluid agent, heated more, or from some tanks (28) in the conventionally cold heat transfer fluid agent loop (1), in which the conventionally cold heat transfer fluid agent is heated less, to the other tanks (29) with the conventionally cold heat transfer fluid agent, heated more, after leaving the mentioned heat exchanger (6) "gaseous working
medium - conventionally cold heat transfer fluid agent" the gaseous working medium is supplied via the pipeline (18) to the mentioned apparatus like compressor means (22), working in the energy returning process, where the gaseous working medium is compressed and its pressure and temperature are increased, at the same time via the link (24) with the mentioned apparatus like compressor means (22), working in the energy returning process, the mechanical energy is supplied to the mentioned apparatus like compressor means (22), working in the energy returning process, after leaving the mentioned apparatus like compressor means (22), working in the energy returning process, the gaseous working medium is supplied via the pipeline to the mentioned heat exchanger (26,27) "gaseous working medium - gaseous working medium", where the gaseous working medium is heated by the mentioned heat transfer from the gaseous working medium, being cooled, that is circulating in the mentioned part of the gaseous working medium loop (3) between the outlet from the mentioned apparatus like expander means (23), working in the energy returning process, and the inlet to the mentioned heat exchanger (6) "gaseous working medium - conventionally cold heat transfer fluid agent," after leaving the mentioned heat exchanger (26,27) "gaseous working medium - gaseous working medium", the gaseous working medium is supplied via the pipeline (18) to the mentioned heat exchanger (7) "gaseous working medium - conventionally hot heat transfer fluid agent", where the gaseous working medium is heated and simultaneously the conventionally hot heat transfer fluid agent is cooled, at the same time the conventionally hot heat transfer fluid agent is moved in the conventionally hot heat transfer fluid agent loop (2) through the mentioned heat exchanger (7) "gaseous working medium - conventionally hot heat transfer fluid agent" with the help of the apparatus for providing of the conventionally hot heat transfer fluid agent moving from one part (15) of the tank (12) in the conventionally hot heat transfer fluid agent loop (2), in which the conventionally hot heat transfer fluid agent is heated more, to another part (14) of the tank (8) with the conventionally hot heat transfer fluid agent, heated less, or from one tank (31) in the conventionally hot heat transfer fluid agent loop (2), in which the conventionally hot heat transfer fluid agent is heated more, to another tank (30) with the conventionally hot heat transfer fluid agent, heated less, or to others (30) with the conventionally hot heat transfer fluid agent, heated less, or from some tanks (31) in the conventionally hot heat transfer fluid agent loop (2), in which the conventionally hot heat transfer fluid agent is heated more, to the other tanks (30) with the conventionally hot heat transfer fluid agent, heated less, after leaving the mentioned heat exchanger (7) "gas
eous working medium - conventionally hot heat transfer fluid agent", gaseous working medium again is supplied via the pipeline (18) to the mentioned apparatus like expander means (23), working in the energy returning process; in the process of accumulated energy storing the circulation of the gaseous working medium in the gaseous working medium loop (3) is lowered up to the preferable minimum or is terminated, the moving of the conventionally hot heat transfer fluid agent in the conventionally hot heat transfer fluid agent loop (2) and the moving of the conventionally cold heat transfer fluid agent in the conventionally cold heat transfer fluid agent loop (1) are lowered up to the preferable minimum or terminated.

12. A method of accumulating, storing and returning of a mechanical energy in the installation according to the claim 2, wherein the mechanical energy, being accumulated, is received in the energy accumulating process from the source (4) of the mechanical energy, being accumulated, and through the link (16) with the apparatus like compressor means (19), working in the energy accumulating process, the received mechanical energy is supplied to the mentioned apparatus like compressor means (19), working in the energy accumulating process, in the same time the gaseous working medium, circulating in the gaseous working medium loop (3), is supplied to the mentioned apparatus like compressor means (19), working in the energy accumulating process, the gaseous working medium is compressed in the mentioned apparatus like compressor means (19), working in the energy accumulating process, thereby the gaseous working medium pressure and temperature are increased, after that the gaseous working medium is supplied via a pipeline (18) into the heat exchanger (7) "gaseous working medium - conventionally hot heat transfer fluid agent", where the gaseous working medium is cooled and simultaneously the conventionally hot heat transfer fluid agent is heated, at the same time the conventionally hot heat transfer fluid agent is moved in the conventionally hot heat transfer fluid agent loop (2) through the mentioned heat exchanger (7) "gaseous working medium - conventionally hot heat transfer fluid agent" with the help of the apparatus for providing of the conventionally hot heat transfer fluid agent moving from one part (14) of the tank (12) in the conventionally hot heat transfer fluid agent loop (2), in which the conventionally hot heat transfer fluid agent is heated less, to another part (15) of the tank (12) with the conventionally hot heat transfer fluid agent, heated more, or from one tank (30) in the conventionally hot heat transfer fluid agent loop (2), in which the conventionally hot heat transfer fluid agent is heated less, to another tank (31) with the conventionally hot
heat transfer fluid agent, heated more, or to others (31) with the conventionally hot heat transfer fluid agent, heated more, or from some tanks (30) in the conventionally hot heat transfer fluid agent loop (2), in which the conventionally hot heat transfer fluid agent is heated less, to the other tanks (31) with the conventionally hot heat transfer fluid agent, heated more, after leaving the mentioned heat exchanger (7) "gaseous working medium - conventionally hot heat transfer fluid agent" the gaseous working medium is supplied via the pipeline to the heat exchanger (26) "gaseous working medium - gaseous working medium", where the gaseous working medium is cooled by the heat transfer to the gaseous working medium, being heated, that is circulating in another part of the gaseous working medium loop (3), after leaving the mentioned heat exchanger (26) "gaseous working medium - gaseous working medium" the gaseous working medium is supplied via the pipeline (18) to the apparatus like expander means (20), working in the energy accumulating process, where the gaseous working medium is expanded, the gaseous working medium pressure and the temperature are decreased, at the same time via the link (21) with the mentioned apparatus like expander means (20), working in the energy accumulating process, the mechanical energy, releasing in the mentioned apparatus like expander means (20), working in the energy accumulating process, is removed, after leaving the mentioned apparatus like expander means (20), working in the energy accumulating process, the gaseous working medium is supplied via the pipeline (18) into the heat exchanger (6) "gaseous working medium - conventionally cold heat transfer fluid agent", in which gaseous working medium is heated, and simultaneously the conventionally cold heat transfer fluid agent is cooled, at the same time the conventionally cold heat transfer fluid agent is moved in the conventionally cold heat transfer fluid agent loop (1), in case of need, through the heat exchanger (32) "conventionally cold heat transfer fluid agent cooler", where the conventionally cold heat transfer fluid agent is cooled and then through the mentioned heat exchanger (6) "gaseous working medium - conventionally cold heat transfer fluid agent" or only through the mentioned heat exchanger (6) "gaseous working medium - conventionally cold heat transfer fluid agent" with the help of the apparatus for providing the conventionally cold heat transfer fluid agent moving from one part (10) of the tank (8) in the conventionally cold heat transfer fluid agent loop (1), in which the conventionally cold heat transfer fluid agent is heated more, to another part (11) of the tank (8) with the conventionally cold heat transfer fluid agent, heated less, or from one tank (29) in the conventionally cold heat transfer fluid agent loop (1), in which the conventionally cold
heat transfer fluid agent is heated more, to another tank (28) with the conventionally cold heat transfer fluid agent, heated less, or to others (28) with the conventionally cold heat transfer fluid agent, heated less, or from some tanks (29) in the conventionally cold heat transfer fluid agent loop (1), in which the conventionally cold heat transfer fluid agent is heated more, to the other tanks (28) with the conventionally cold heat transfer fluid agent, heated less, after leaving the mentioned heat exchanger (6) "gaseous working medium - conventionally cold heat transfer fluid agent" the gaseous working medium, in case of need, is supplied to the heat exchanger (25) "gaseous working medium cooler", where the gaseous working medium is cooled, after that the gaseous working medium is supplied via the pipeline (18) to the mentioned heat exchanger (26) "gaseous working medium - gaseous working medium" or at once after leaving the mentioned heat exchanger (6) "gaseous working medium - conventionally cold heat transfer fluid agent" the gaseous working medium is supplied via the pipeline to the mentioned heat exchanger (26) "gaseous working medium - gaseous working medium", where the gaseous working medium is heated by the mentioned heat transfer from the gaseous working medium, being cooled, that is circulating in the mentioned part of the gaseous working medium loop (3) between the outlet from the mentioned heat exchanger (7) "gaseous working medium - conventionally hot heat transfer fluid agent" and the inlet to the mentioned apparatus like expander means (20), working in the energy accumulating process, after leaving the mentioned heat exchanger (26) "gaseous working medium - gaseous working medium" the gaseous working medium again is supplied to the mentioned apparatus like compressor means (19), working in the energy accumulating process; in the energy returning process the gaseous working medium, circulating in the gaseous working medium loop (3), is supplied into the apparatus like expander means (23), working in the energy returning process, the gaseous working medium is expanded in the apparatus like expander means (23), working in the energy returning process, at the same time the gaseous working medium pressure and temperature are reduced, via the link (17) with the mentioned apparatus like expander means (23), working in the energy returning process, the mechanical energy, releasing in the apparatus like expander means (23), working in the energy returning process, is supplied to the user (5) of the accumulated mechanical energy, after leaving the mentioned apparatus like expander means (23), working in the energy returning process, the gaseous working medium is supplied via the pipeline to the heat exchanger (27) or to the mentioned heat exchanger (26,27) "gaseous working medium - gaseous working medium", in
which the gaseous working medium is cooled, transferring the heat to the gaseous working medium, being heated, that is circulating in another part of the gaseous working medium loop (3), after leaving the mentioned heat exchanger (26,27) "gaseous working medium - gaseous working medium", in case of need, the gaseous working medium is supplied via the pipeline (18) to the heat exchanger (25) "gaseous working medium cooler", in which the gaseous working medium is cooled, after that the gaseous working medium is supplied via the pipeline (18) to the heat exchanger (6) "gaseous working medium - conventionally cold heat transfer fluid agent," or at once after leaving the mentioned heat exchanger (26,27) "gaseous working medium - gaseous working medium", the gaseous working medium is supplied via the pipeline into the heat exchanger (6) "gaseous working medium - conventionally cold heat transfer fluid agent", in which gaseous working medium is cooled, and simultaneously the conventionally cold heat transfer fluid agent is heated, at the same time the conventionally cold heat transfer fluid agent is moved in the conventionally cold heat transfer fluid agent loop (1) through the mentioned heat exchanger (6) "gaseous working medium - conventionally cold heat transfer fluid agent", and then, in case of need, through the heat exchanger (32)"conventionally cold heat transfer fluid agent cooler", in which the conventionally cold heat transfer fluid agent is cooled, or only through the mentioned heat exchanger (6) "gaseous working medium - conventionally cold heat transfer fluid agent" with the help of the apparatus for providing the conventionally cold heat transfer fluid agent moving from one part (11) of the tank (8) in the conventionally cold heat transfer fluid agent loop (1), in which the conventionally cold heat transfer fluid agent is heated less, to another part (10) of the tank (8) with the conventionally cold heat transfer fluid agent, heated more, or from one tank (28) in the conventionally cold heat transfer fluid agent loop (1), in which the conventionally cold heat transfer fluid agent is heated less, to another tank (29) with the conventionally cold heat transfer fluid agent, heated more, or to others (29) with the conventionally cold heat transfer fluid agent, heated more, or from some tanks (28) in the conventionally cold heat transfer fluid agent loop (1), in which the conventionally cold heat transfer fluid agent is heated less, to the other tanks (29) with the conventionally cold heat transfer fluid agent, heated more, after leaving the mentioned heat exchanger (6) "gaseous working medium - conventionally cold heat transfer fluid agent" the gaseous working medium is supplied via the pipeline (18) to the mentioned apparatus like compressor means (22), working in the energy returning process, where the gaseous working medium is compressed, the gaseous working medium pres
sure and the temperature are increased, at the same time via the link (24) with the mentioned apparatus like compressor means (22), working in the energy returning process, the mechanical energy is supplied to the mentioned apparatus like compressor means (22), working in the energy returning process, after leaving the mentioned apparatus like compressor means (22), working in the energy returning process, the gaseous working medium is supplied via the pipeline (18) to the mentioned heat exchanger (26,27) "gaseous working medium - gaseous working medium", in which the gaseous working medium is heated by the mentioned heat transfer from the gaseous working medium, being cooled, that is circulating in the mentioned part of the gaseous working medium loop (3) between the outlet from the mentioned apparatus like expander means (23), working in the energy returning process, and the inlet to the mentioned heat exchanger (6) "gaseous working medium - conventionally cold heat transfer fluid agent", after leaving the mentioned heat exchanger (26,27) "gaseous working medium - gaseous working medium", the gaseous working medium is supplied via the pipeline (18) into the heat exchanger (7) "gaseous working medium - conventionally hot heat transfer fluid agent", in which gaseous working medium is heated, and simultaneously the conventionally hot heat transfer fluid agent is cooled, at the same time the conventionally hot heat transfer fluid agent is moved in the conventionally hot heat transfer fluid agent loop (2) through the mentioned heat exchanger (7) "gaseous working medium - conventionally hot heat transfer fluid agent" with the help of the apparatus for providing the conventionally hot heat transfer fluid agent moving from one part (15) of the tank (12) in the conventionally hot heat transfer fluid agent loop (2), in which the conventionally hot heat transfer fluid agent is heated more, to another part (14) of the tank (12) with the conventionally hot heat transfer fluid agent, heated less, or from one tank (31) in the conventionally hot heat transfer fluid agent loop (2), in which the conventionally hot heat transfer fluid agent is heated more, to another tank (30) with the conventionally hot heat transfer fluid agent, heated less, or to others (30) with the conventionally hot heat transfer fluid agent, heated less, or from some tanks (31) in the conventionally hot heat transfer fluid agent loop (2), in which the conventionally hot heat transfer fluid agent is heated more, to the other tanks (30) with the conventionally hot heat transfer fluid agent, heated less, after leaving the mentioned heat exchanger (7) "gaseous working medium - conventionally hot heat transfer fluid agent", the gaseous working medium again is supplied via the pipeline (18) to the mentioned apparatus like expander means (23), working in the energy returning process; in the process of accumulated energy storing the circulation of the gaseous working medium in the gaseous working medium loop (3) is lowered up to the preferable minimum or is terminated, the moving of the conventionally hot heat transfer fluid agent in the conventionally hot heat transfer fluid agent loop (2) and the moving of the conventionally cold heat transfer fluid agent in the conventionally cold heat transfer fluid agent loop (1) are lowered up to the preferable minimum or terminated.

13. A method according to the claim 11 or claim 12, wherein the mechanical energy, releasing in the apparatus like expander means (20), working in the energy accumulating process, is supplied via the link (21) to the apparatus like compressor means (19), working in the energy accumulating process.

14. A method according to any of claims 11 to 13, wherein the mechanical energy, releasing in the apparatus like expander means (23), working in the energy returning process, is supplied via the link (24) to the apparatus like compressor means (22), working in the energy returning process.

15. A method according to any of claims 11 to 14, wherein before the energy accumulating process start, in case of need, the conventionally hot heat transfer fluid agent is heated or cooled up to the initial working temperature, and/or the conventionally cold heat transfer fluid agent is heated or cooled up to the initial working temperature.

## Patentansprüche

1. Anlage zum Aufnehmen, Speichern und Abgeben einer mechanischen Energie, umfassend mindestens einen Kreislauf (1) eines regulär kalten Wärmeübertragungsfluids, mindestens einen Kreislauf (2) eines regulär warmen Wärmeübertragungsfluids, mindestens einen Kreislauf (3) eines gasförmigen Arbeitsmediums, der mit mindestens einer Quelle (4) für die aufgenommene mechanische Energie und mit mindestens einer Verbraucherapparatur (5) für die aufgenommene mechanische Energie verbunden ist, in welchen die aufgenommene Energie in Wärmeenergie des gasförmigen Arbeitsmediums umgewandelt wird und die aufgenommene Wärmeenergie mittels des gasförmigen Arbeitsmediums in mechanische Energie umgewandelt wird, und mindestens einen kühlenden Wärmetauscher (25), wobei der Kreislauf (1) des regulär kalten Wärmeübertragungsfluids in der Lage ist, in Wechselwirkung mit dem Kreislauf (3) des gasförmigen Arbeitsmediums durch mindestens einen Wärmetauscher (6) "gasförmiges Arbeitsmedium - regulär kaltes Wärmeübertragungsfluid" im Energieaufnahmeprozess das Wärmeübertragungsfluid des Kreislaufs zu kühlen, im Energieabgabeprozess jedoch das Wärmeübertragungsfluid des Kreislaufs zu erwärmen, wobei der Kreislauf (2) des regulär warmen Wärmeübertragungsfluids in der Lage ist, in Wechselwirkung mit dem Kreislauf (3) des gasförmigen Arbeitsmediums durch mindestens einen Wärmetauscher (7) "gasförmiges Arbeitsmedium - regulärwarmes Wärmeübertragungsfluid" im Energieaufnahmeprozess das Wärmeübertragungsfluid des Kreislaufs zu erwärmen, im Energieabgabeprozess jedoch das Wärmeübertragungsfluid des Kreislaufs zu kühlen, wobei neben dem einen oder den mehreren Wärmetauschern "gasförmiges Arbeitsmedium - regulär kaltes Wärmeübertragungsfluid" der Kreislauf des regulärkalten Wärmeübertragungsfluids mindestens einen Tank (8), mindestens ein Rohrleitungssystem (9) und mindestens eine Vorrichtung oder ein System zum Bereitstellen eines Flusses des Wärmeübertragungsfluids im Kreislauf durch den einen oder die mehreren Wärmetauscher (6) "gasförmiges Arbeitsmedium - regulär kaltes Wärmeübertragungsfluid" aus einem Teil (10, 11) des Tanks (8) in einen anderen (11,10) oder aus einem Tank (28, 29) in einen anderen (29, 28) oder in andere oder aus mehreren Tanks (28, 29) in andere (29, 28) enthält, wobei neben dem einen oder den mehreren Wärmetauschern (7) "gasförmiges Arbeitsmedium - regulär warmes Wärmeübertragungsfluid" der Kreislauf (2) des regulär warmen Wärmeübertragungsfluids mindestens einen Tank (12), mindestens ein Rohrleitungssystem (13) und mindestens eine Vorrichtung oder ein System zum Bereitstellen eines Flusses des Wärmeübertragungsfluids im Kreislauf durch den einen oder die mehreren Wärmetauscher (7) "gasförmiges Arbeitsmedium - regulärwarmes Wärmeübertragungsfluid" aus einem Teil (14, 15) des Tanks (12) in einen anderen (15, 14) oder aus einem Tank (30, 31) in einen anderen (31, 30) oder in andere oder aus mehreren Tanks (30, 31) in andere enthält, wobei der Kreislauf (3) des gasförmigen Arbeitsmediums neben den Wärmetauschern (6, 7), der Verbindung (16) zur Quelle (4) für die aufgenommene mechanische Energie und der Verbindung (17) zur Verbraucherapparatur (5) für die aufgenommene mechanische Energie mindestens ein Rohrleitungssystem (18) zum Bereitstellen eines Flusses des gasförmigen Arbeitsmediums im Kreislauf, mindestens ein im Energieaufnahmeprozess arbeitendes Verdichtungsvorrichtungsmittel (19) zum Bereitstellen von Verdichtung des gasförmigen Arbeitsmediums, mindestens ein im Energieaufnahmeprozess arbeitendes Expansionsvorrichtungsmittel (20) zum Bereitstellen von Ausdehnung des gasförmigen Arbeitsmediums, mindestens eine Verbindung (21) zu mindestens einer im Energieaufnahmeprozess arbeitenden Verbraucherapparatur für die im Energieaufnahmeprozess in dem einen Expansionsvorrichtungsmittel (20) oder den mehreren Expansionsvorrichtungsmitteln freigesetzte mechanische Energie, mindestens ein im Energieabgabeprozess arbeitendes Verdichtungsvorrichtungsmittel (22) zum Bereitstellen von Verdichtung des gasförmigen Arbeitsmediums, mindestens ein im Abgabeprozess arbeitendes Expansionsvorrichtungsmittel (23) zum Bereitstellen von Ausdehnung des gasförmigen Arbeitsmediums, mindestens eine Verbindung (24) zu mindestens einer im Energieabgabeprozess arbeitenden Quelle für die im Energieabgabeprozessin dem einen Verdichtungsvorrichtungsmittel (22) oder den mehreren Verdichtungsvorrichtungsmitteln verwendete mechanische Energie, mindestens einen Wärmetauscher (26) "gasförmiges Arbeitsmedium - gasförmiges Arbeitsmedium", der im Energieaufnahmeprozess in dem Teil des Kreislaufs zwischen dem Auslass des einen oder desjenigen der mehreren Wärmetauscher (6) "gasförmiges Arbeitsmedium - regulär kaltes Wärmeübertragungsfluid", der am nächsten am Einlass des im Energieaufnahmeprozess arbeitenden Verdichtungsvorrichtungsmittels (19) liegt, und dem Einlass des einen oder desjenigen der mehreren im Energieaufnahmeprozess arbeitenden Verdichtungsvorrichtungsmittel (19) arbeitet, der am nächsten am Auslass des Wärmetauschers (6) "gasförmiges Arbeitsmedium - regulär kaltes Wärmeübertragungsfluid" liegt, und der in dem Teil des Kreislaufs zwischen dem Auslass des einen oder desjenigen der mehreren Wärmetauscher (7) "gasförmiges Arbeitsmedium - regulär warmes Wärmeübertragungsfluid", der am nächsten am Einlass des im Energieaufnahmeprozess arbeitenden Expansionsvorrichtungsmittels (20) liegt, und dem Einlass des einen oder desjenigen der mehreren im Energieaufnahmeprozess arbeitenden Expansionsvorrichtungsmittel (20) arbeitet, das am nächsten am Auslass des Wärmetauschers (7) "gasförmiges Arbeitsmedium - regulär warmes Wärmeübertragungsfluid" liegt, und/oder mindestens einen Wärmetauscher (27) "gasförmiges Arbeitsmedium - gasförmiges Arbeitsmedium", der im Energieabgabeprozess in dem Teil des Kreislaufs zwischen dem Auslass des einen oder desjenigen der mehreren im Energieabgabeprozess arbeitenden Verdichtungsvorrichtungsmittel (22), das am nächsten am Einlass des Wärmetauschers (7) "gasförmiges Arbeitsmedium - regulär warmes Wärmeübertragungsfluid" liegt, und dem Einlass des einen oder desjenigen der mehreren Wärmetauscher (7) "gasförmiges Arbeitsmedium - regulär warmes Wärmeübertragungsfluid" arbeitet, der am nächsten am Auslass des im Energieabgabeprozess arbeitenden Verdichtungsvorrichtungsmittels (22) liegt, und der in dem Teil des Kreislaufs zwischen dem Auslass des einen oder desjenigen der mehreren im Energieabgabeprozess arbeitenden Expansionsvorrichtungsmittel (23), der am nächsten am Einlass des Wärmetauschers (6) "gasförmiges Arbeitsmedium - regulär kaltes Wärmeübertragungsfluid" liegt, und dem Einlass des einen oder desjenigen der mehreren Wärmetauscher (6) "gasförmiges Arbeitsmedium - regulär kaltes Wärmeübertragungsfluid" arbeitet, der am nächsten am Auslass des im Energieabgabeprozess arbeitenden Expansionsvorrichtungsmittels (23) liegt, und/oder mindestens einen Wärmetauscher (26) "gasförmiges Arbeitsmedium - gasförmiges Arbeitsmedium" umfasst, der im Energieaufnahmeprozess in dem Teil des Kreislaufs zwischen dem Auslass des einen oder desjenigen der mehreren Wärmetauscher (6) "gasförmiges Arbeitsmedium - regulär kaltes Wärmeübertragungsfluid", der am nächsten am Einlass des im Energieaufnahmeprozess arbeitenden Verdichtungsvorrichtungsmittels (19) liegt, und dem Einlass des einen oder desjenigen der mehreren im Energieaufnahmeprozess arbeitenden Verdichtungsvorrichtungsmittel (19) arbeitet, der am nächsten am Auslass des Wärmetauschers (6) "gasförmiges Arbeitsmedium - regulär kaltes Wärmeübertragungsfluid" liegt, und der in dem Teil des Kreislaufs zwischen dem Auslass des einen oder desjenigen der mehreren Wärmetauscher (7) "gasförmiges Arbeitsmedium - regulär warmes Wärmeübertragungsfluid", der am nächsten am Einlass des im Energieaufnahmeprozess arbeitenden Expansionsvorrichtungsmittels (20) liegt, und dem Einlass des einen oder desjenigen der mehreren im Energieaufnahmeprozess arbeitenden Expansionsvorrichtungsmittel (20) arbeitet, das am nächsten am im Energieaufnahmeprozess arbeitenden Expansionsvorrichtungsmittel (20) liegt, und der im Energieabgabeprozess in dem Teil des Kreislaufs zwischen dem Auslass des einen oder desjenigen der mehreren im Energieabgabeprozess arbeitenden Verdichtungsvorrichtungsmittel (22), das am nächsten am Einlass des Wärmetauschers (7) "gasförmiges Arbeitsmedium - regulär warmes Wärmeübertragungsfluid" liegt, und dem Einlass des einen oder desjenigen der mehreren Wärmetauscher (7) "gasförmiges Arbeitsmedium - regulär warmes Wärmeübertragungsfluid" arbeitet, der am nächsten am Auslass des im Energieabgabeprozess arbeitenden Verdichtungsvorrichtungsmittels (22) liegt, und der in dem Teil des Kreislaufs zwischen dem Auslass des einen oder desjenigen der mehreren im Energieabgabeprozess arbeitenden Expansionsvorrichtungsmittel (23), das am nächsten am Einlass des Wärmetauschers (6) "gasförmiges Arbeitsmedium - regulär kaltes Wärmeübertragungsfluid" liegt, und dem Einlass des einen oder desjenigen der mehreren Wärmetauscher (6) "gasförmiges Arbeitsmedium - regulär kaltes Wärmeübertragungsfluid" arbeitet, der am nächsten am Auslass des im Energieabgabeprozess arbeitenden Expansionsvorrichtungsmittels (23) liegt.

2. Anlage nach Anspruch 1, wobei der kühlende Wärmetauscher (25) als ein Wärmetauscher "Kühler für das gasförmige Arbeitsmedium" im Kreislauf (3) des gasförmigen Arbeitsmediums zum Bereitstellen von Kühlung für das gasförmige Arbeitsmedium im Energieabgabeprozess ausgeführt ist, der in dem Teil des Kreislaufs zwischen dem Auslass des einen oder desjenigen der mehreren Wärmetauscher (26, 27) "gasförmiges Arbeitsmedium - gasförmiges Arbeitsmedium", der am nächsten am Einlass des Wärmetauschers (6) "gasförmiges Arbeitsmedium - regulär kaltes Wärmeübertragungsfluid" liegt, und dem Einlass des einen oder desjenigen der mehreren Wärmetauscher (6) "gasförmiges Arbeitsmedium - regulär kaltes Wärmeübertragungsfluid" arbeitet, der am nächstem am Auslass des Wärmetauschers (26, 27) "gasförmiges Arbeitsmedium - gasförmiges Arbeitsmedium" liegt, und/oder als ein Wärmetauscher (25) "Kühler für das gasförmige Arbeitsmedium" im Kreislauf (3) des gasförmigen Arbeitsmediums zum Bereitstellen von Kühlung für das gasförmige Arbeitsmedium im Energieaufnahmeprozess ausgeführt ist, der in dem Teil des Kreislaufs zwischen dem Auslass des einen oder desjenigen der mehreren Wärmetauscher (6) "gasförmiges Arbeitsmedium - regulär kaltes Wärmeübertragungsfluid", der am nächsten am Einlass des Wärmetauschers (26) "gasförmiges Arbeitsmedium - gasförmiges Arbeitsmedium" liegt, und dem Einlass des einen oder desjenigen der mehreren Wärmetauscher (26) "gasförmiges Arbeitsmedium - gasförmiges Arbeitsmedium" arbeitet, der am nächsten am Auslass des Wärmetauschers (6) "gasförmiges Arbeitsmedium regulär kaltes Wärmeübertragungsfluid" liegt, und/oder als ein Wärmetauscher (32) "Kühler für das regulär kalte Wärmeübertragungsfluid" im Kreislauf (1) des regulär kalten Wärmeübertragungsfluids zum Bereitstellen von Kühlung für das regulär kalte Wärmeübertragungsfluid ausgeführt ist, der im Energieaufnahmeprozess in dem Teil des Kreislaufs zwischen dem Auslass des Teils (10) des Tanks (8) des Kreislaufs oder dem Auslass des Tanks (29) des Kreislaufs oder dem Auslass der Tanks (29) des Kreislaufs und dem Einlass des Wärmetauschers oder der Wärmetauscher (6) "gasförmiges Arbeitsmedium - regulär kaltes Wärmeübertragungsfluid" arbeitet, und/oder der im Energieabgabeprozess in dem Teil des Kreislaufs zwischen dem Auslass des Wärmetauschers oder der Wärmetauscher (6) "gasförmiges Arbeitsmedium - regulär kaltes Wärmeübertragungsfluid" und dem Einlass des Teils (10) des Tanks (8) des Kreislaufs oder des Tanks (29) des Kreislaufs oder der Tanks (29) des Kreislaufs arbeitet.

3. Anlage nach Anspruch 1 oder Anspruch 2, wobei als die Verbraucherapparatur für die mechanische Energie, die im Energieaufnahmeprozess arbeitenden Expansionsvorrichtungsmittel (20) freigesetzt wird, ein im Energieaufnahmeprozess arbeitendes Verdichtungsvorrichtungsmittel (19) verwendet wird.

4. Anlage nach einem der Ansprüche 1 bis 3, wobei als die Quelle für die vom im Energieabgabeprozess arbeitenden Verdichtungsvorrichtungsmittel (22) verwendete mechanische Energie ein im Energieabgabeprozess arbeitendes Expansionsvorrichtungsmittel (23) verwendet wird.

5. Anlage nach einem der Ansprüche 1 bis 4, wobei zwischen einem im Energieaufnahmeprozess arbeitenden Expansionsvorrichtungsmittel (20) und der im Energieaufnahmeprozess arbeitenden Verbraucherapparatur für die im Energieaufnahmeprozess im Expansionsvorrichtungsmittel (20) freigesetzte mechanische Energie eine mechanische Verbindung (21) besteht.

6. Anlage nach einem der Ansprüche 1 bis 5, wobei zwischen einem im Energieabgabeprozess arbeitenden Verdichtungsvorrichtungsmittel (22) und der im Energieabgabeprozess arbeitenden Quelle für die im Energieabgabeprozess im Verdichtungsvorrichtungsmittel (22) verwendete mechanische Energie eine mechanische Verbindung (24) besteht.

7. Anlage nach einem der Ansprüche 1 bis 6, wobei der Kreislauf (1) des regulär kalten Wärmeübertragungsfluids so ausgeführt ist, dass es möglich ist, die Menge des regulär kalten Wärmeübertragungsfluids im Kreislauf zu steuern.

8. Anlage nach einem der Ansprüche 1 bis 7, wobei der Kreislauf (2) des regulär warmen Wärmeübertragungsfluids so ausgeführt ist, dass es möglich ist, die Menge des regulär warmen Wärmeübertragungsfluids im Kreislauf zu steuern.

9. Anlage nach einem der Ansprüche 1 bis 8, wobei der Kreislauf (3) des gasförmigen Arbeitsmediums so ausgeführt ist, dass es möglich ist, die Menge des gasförmigen Arbeitsfluids im Kreislauf zu steuern.

10. Anlage nach einem der Ansprüche 1 bis 9, wobei jedweder der Tanks (8, 12, 28, 29, 30, 31) wärmeisoliert und so ausgeführt ist, dass es möglich ist, das Wärmeübertragungsfluid in den Betriebszustand zu bringen und das Wärmeübertragungsfluid im Betriebszustand zu halten.

11. Verfahren zum Aufnehmen, Speichern und Abgeben einer mechanischen Energie in der Anlage nach Anspruch 1, wobei die aufgenommene mechanische Energie im Energieaufnahmeprozess von der Quelle (4) für die aufgenommene mechanische Energie erhalten wird und durch die Verbindung (16) mit dem im Energieaufnahmeprozess arbeitenden Verdichtungsvorrichtungsmittel (19) die erhaltene mechanische Energie dem im Energieaufnahmeprozess arbeitenden Verdichtungsvorrichtungsmittel (19) zugeführt wird, während das im Kreislauf (3) des gasförmigen Arbeitsmediums zirkulierende gasförmige Arbeitsmedium dem im Energieaufnahmeprozess arbeitenden Verdichtungsvorrichtungsmittel (19) zugeführt wird, das gasförmige Arbeitsmedium im, im Energieaufnahmeprozess arbeitenden Verdichtungsvorrichtungsmittel (19) verdichtet wird, wodurch Druck und Temperatur des gasförmigen Arbeitsmediums erhöht werden, anschließend das gasförmige Arbeitsmedium über eine Rohrleitung (18) dem Wärmetauscher (7) "gasförmiges Arbeitsmedium - regulär warmes Wärmeübertragungsfluid" zugeführt wird, wo das gasförmige Arbeitsmedium gekühlt und gleichzeitig das regulär warme Wärmeübertragungsfluid erwärmt wird, während das regulär warme Wärmeübertragungsfluid im Kreislauf (2) des regulär warmen Wärmeübertragungsfluids durch den Wärmetauscher (7) "gasförmiges Arbeitsmedium - regulär warmes Wärmeübertragungsfluid" mithilfe der Vorrichtung zum Bereitstellen des Flusses des regulär warmen Wärmeübertragungsfluids aus einem Teil (14) des Tanks (12) im Kreislauf (2) des regulär warmen Wärmeübertragungsfluids, in welchem das regulär warme Wärmeübertragungsfluid weniger stark erwärmt ist, in einen anderen Teil (15) des Tanks (12) strömt, in dem das regulär warme Wärmeübertragungsfluid stärker erwärmt ist, oder aus einem Tank (30) im Kreislauf (2) des regulär warmen Wärmeübertragungsfluids, in welchem das regulär warme Wärmeübertragungsfluid weniger stark erwärmt ist, in einen anderen Tank (31), in welchem das regulär warme Wärmeübertragungsfluid stärker erwärmt ist, oder in andere Tanks (31), in denen das regulär warme Wärmeübertragungsfluid stärker erwärmt ist, oder von mehreren Tanks (30) im Kreislauf (2) des regulär warmen Wärmeübertragungsfluids, in welchen das regulär warme Wärmeübertragungsfluid weniger stark erwärmt ist, in die anderen Tanks (31) strömt, in welchen das regulär warme Wärmeübertragungsfluid stärker erwärmt ist, wobei nach Verlassen des Wärmetauschers (7) "gasförmiges Arbeitsmedium - regulär warmes Wärmeübertragungsfluid" das gasförmige Arbeitsmedium über die Rohrleitung (18) dem Wärmetauscher (26) "gasförmiges Arbeitsmedium - gasförmiges Arbeitsmedium" zugeführt wird, in welchem das gasförmige Arbeitsmedium gekühlt und die Wärme auf das in einem anderen Teil des Kreislaufs (3) des gasförmigen Arbeitsmediums zirkulierende gasförmige Arbeitsmedium übertragen wird, welches dabei erwärmt wird, nach Verlassen des Wärmetauschers (26) "gasförmiges Arbeitsmedium - gasförmiges Arbeitsmedium" das gasförmige Arbeitsmedium über die Rohrleitung (18) dem im Energieaufnahmeprozess arbeitenden Expansionsvorrichtungsmittel (20) zugeführt wird, in welchem das gasförmige Arbeitsmedium ausgedehnt wird und Druck und Temperatur des gasförmigen Arbeitsmediums verringert werden, während über die Verbindung (21) zum im Energieaufnahmeprozess arbeitenden Expansionsvorrichtungsmittel (20) die im, im Energieaufnahmeprozess arbeitenden Expansionsvorrichtungsmittel (20) freigesetzte mechanische Energie abgeführt wird, nach Verlassen des im Energieaufnahmeprozess arbeitenden Expansionsvorrichtungsmittels (20) das gasförmige Arbeitsmedium über eine Rohrleitung (18) dem Wärmetauscher (6) "gasförmiges Arbeitsmedium - regulär kaltes Wärmeübertragungsfluid" zugeführt wird, wo das gasförmige Arbeitsmedium erwärmt und gleichzeitig das regulär kalte Wärmeübertragungsfluid gekühlt wird, während das regulär kalte Wärmeübertragungsfluid im Kreislauf (1) des regulär kalten Wärmeübertragungsfluids bei Bedarf durch den kühlenden Wärmetauscher (32) des Kreislaufs (1) des regulär kalten Wärmeübertragungsfluids, in welchem das regulär kalte Wärmeübertragungsfluid gekühlt wird, und anschließend durch den Wärmetauscher (6) "gasförmiges Arbeitsmedium - regulär kaltes Wärmeübertragungsfluid", oder nur durch den Wärmetauscher (6) "gasförmiges Arbeitsmedium - regulär kaltes Wärmeübertragungsfluid" mithilfe der Vorrichtung zum Bereitstellen des Flusses des regulär kalten Wärmeübertragungsfluids aus einem Teil (10) des Tanks (8) im Kreislauf (1) des regulär kalten Wärmeübertragungsfluids, in welchem das regulär kalte Wärmeübertragungsfluid stärker erwärmt ist, in einen anderen Teil (11) des Tanks (8) strömt, in welchem das regulär kalte Wärmeübertragungsfluid weniger stark erwärmt ist, oder aus einem Tank (29) im Kreislauf (1) des regulär kalten Wärmeübertragungsfluids, in welchem das regulär kalte Wärmeübertragungsfluid stärker erwärmt ist, in einen anderen Tank (28), in welchem das regulär kalte Wärmeübertragungsfluid weniger stark erwärmt ist, oder in andere Tanks (28), in welchen das regulär kalte Wärmeübertragungsfluid weniger stark erwärmt ist, oder aus mehreren Tanks (29) im Kreislauf (1) des regulär kalten Wärmeübertragungsfluids, in welchen das regulär kalte Wärmeübertragungsfluid stärker erwärmt ist, in die anderen Tanks (28) strömt, in welchen das regulär kalte Wärmeübertragungsfluid weniger stark erwärmt ist, wobei nach Verlassen des Wärmetauschers (6) "gasförmiges Arbeitsmedium - regulär kaltes Wärmeübertragungsfluid" das gasförmige Arbeitsmedium bei Bedarf dem kühlenden Wärmetauscher (25) des Kreislaufs (3) des gasförmigen Arbeitsmediums, wo das gasförmige Arbeitsmedium gekühlt wird, und anschließend das gasförmige Arbeitsmedium über die Rohrleitung (18) dem Wärmetauscher (26) "gasförmiges Arbeitsmedium - gasförmiges Arbeitsmedium" zugeführt wird, oder das gasförmige Arbeitsmedium direkt nach Verlassen des Wärmetauschers (6) "gasförmiges Arbeitsmedium - regulär kaltes Wärmeübertragungsfluid" über die Rohrleitung (18) dem Wärmetauscher (26) "gasförmiges Arbeitsmedium - gasförmiges Arbeitsmedium" zugeführt wird, wo das gasförmige Arbeitsmedium durch die Wärmeübertragung vom gasförmigen Arbeitsmedium erwärmt wird, welches gekühlt wird und in dem Teil des Kreislaufs (3) des gasförmigen Arbeitsmediums zwischen dem Auslass des Wärmetauschers (7) "gasförmiges Arbeitsmedium - regulär warmes Wärmeübertragungsfluid" und dem Einlass des im Energieaufnahmeprozess arbeitenden Expansionsvorrichtungsmittels (20) zirkuliert, und nach Verlassen des Wärmetauschers (26) "gasförmiges Arbeitsmedium - gasförmiges Arbeitsmedium" das gasförmige Arbeitsmedium wieder dem im Energieaufnahmeprozess arbeitenden Verdichtungsvorrichtungsmittel (19) zugeführt wird, wobei im Energieabgabeprozess das im Kreislauf (3) des gasförmigen Arbeitsmediums zirkulierende gasförmige Arbeitsmedium dem im Energieabgabeprozess arbeitenden Expansionsvorrichtungsmittel (23) zugeführt wird, im im Energieabgabeprozess arbeitenden Expansionsvorrichtungsmittel (23) das gasförmige Arbeitsmedium ausgedehnt wird und dabei Druck und Temperatur des gasförmigen Arbeitsmediums verringert werden, wobei über die Verbindung (17) mit dem im Energieabgabeprozess arbeitenden Expansionsvorrichtungsmittel (23) die im, im Energieabgabeprozess arbeitenden Expansionsvorrichtungsmittel (23) freigesetzte mechanische Energie dem Verbraucher (5) der aufgenommenen mechanischen Energie zugeführt wird, wobei nach Verlassen des im Energieabgabeprozess arbeitenden Expansionsvorrichtungsmittels (23) das gasförmige Arbeitsmedium über die Rohrleitung (18) dem Wärmetauscher (27) oder dem Wärmetauscher (26, 27) "gasförmiges Arbeitsmedium - gasförmiges Arbeitsmedium" zugeführt wird, wo das gasförmige Arbeitsmedium gekühlt wird und dabei die Wärme an das in einem anderen Teil des Kreislaufs (3) des gasförmigen Arbeitsmediums zirkulierende gasförmige Arbeitsmedium überträgt, welches dabei erwärmt wird, nach Verlassen des Wärmetauschers (26, 27) "gasförmiges Arbeitsmedium - gasförmiges Arbeitsmedium" das gasförmige Arbeitsmedium bei Bedarf über die Rohrleitung (18) dem kühlenden Wärmetauscher (25) des Kreislaufs (3) des gasförmigen Arbeitsmediums, wo das gasförmige Arbeitsmedium gekühlt wird, und anschließend das gasförmige Arbeitsmedium über die Rohrleitung dem Wärmetauscher (6) "gasförmiges Arbeitsmedium - regulär kaltes Wärmeübertragungsfluid" zugeführt wird, oder direkt nach Verlassen des Wärmetauschers (26, 27) "gasförmiges Arbeitsmedium - gasförmiges Arbeitsmedium" das gasförmige Arbeitsmedium über die Rohrleitung (18) dem Wärmetauscher (6) "gasförmiges Arbeitsmedium - regulär kaltes Wärmeübertragungsfluid" zugeführt wird, wo das gasförmige Arbeitsmedium gekühlt wird und gleichzeitig das regulär kalte Wärmeübertragungsfluid erwärmt wird, während das regulär kalte Wärmeübertragungsfluid im Kreislauf (1) des regulär kalten Wärmeübertragungsfluids durch den Wärmetauscher (6) "gasförmiges Arbeitsmedium - regulär kaltes Wärmeübertragungsfluid" und anschließend bei Bedarf durch den kühlenden Wärmetauscher (32) des Kreislaufs (1) des regulär kalten Wärmeübertragungsfluids, wo das regulär kalte Wärmeübertragungsfluid gekühlt wird, oder nur durch den Wärmetauscher (6) "gasförmiges Arbeitsmedium - regulär kaltes Wärmeübertragungsfluid" mithilfe der Vorrichtung zum Bereitstellen des Flusses des regulär kalten Wärmeübertragungsfluids aus einem Teil (11) des Tanks (8) im Kreislauf (1) des regulär kalten Wärmeübertragungsfluids, in welchem das regulär kalte Wärmeübertragungsfluid weniger stark erwärmt ist, in einen anderen Teil (10) des Tanks (8) strömt, in welchem das regulär kalte Wärmeübertragungsfluid stärker erwärmt ist, oder aus einem Tank (28) im Kreislauf (1) des regulär kalten Wärmeübertragungsfluids, in welchem das regulär kalte Wärmeübertragungsfluid weniger stark erwärmt ist, in einen anderen Tank (29), in welchem das regulär kalte Wärmeübertragungsfluid stärker erwärmt ist, oder in andere Tanks (29), in welchen das regulär kalte Wärmeübertragungsfluid stärker erwärmt ist, oder aus mehreren Tanks (28) im Kreislauf (1) des regulär kalten Wärmeübertragungsfluids, in welchen das regulär kalte Wärmeübertragungsfluid weniger stark erwärmt ist, in die anderen Tanks (29) strömt, in welchen das regulär kalte Wärmeübertragungsfluid stärker erwärmt ist, wobei nach Verlassen des Wärmetauschers (6) "gasförmiges Arbeitsmedium - regulär kaltes Wärmeübertragungsfluid" das gasförmige Arbeitsmedium über die Rohrleitung (18) dem im Energieabgabeprozess arbeitenden Verdichtungsvorrichtungsmittel (22) zugeführt wird, wo das gasförmige Arbeitsmedium verdichtet wird und dessen Druck und Temperatur erhöht werden, während über die Verbindung (24) zum im Energieabgabeprozess arbeitenden Verdichtungsvorrichtungsmittel (22) die mechanische Energie dem im Energieabgabeprozess arbeitenden Verdichtungsvorrichtungsmittel (22) zugeführt wird, nach Verlassen des im Energieabgabeprozess arbeitenden Verdichtungsvorrichtungsmittels (22) das gasförmige Arbeitsmedium über die Rohrleitung dem Wärmetauscher (26, 27) "gasförmiges Arbeitsmedium - gasförmiges Arbeitsmedium" zugeführt wird, wo das gasförmige Arbeitsmedium durch die Wärmeübertragung vom dabei abkühlenden gasförmigen Arbeitsmedium erwärmt wird, welches in dem Teil des Kreislaufs (3) des gasförmigen Arbeitsmediums zwischen dem Auslass des im Energieabgabeprozess arbeitenden Expansionsvorrichtungsmittels (23) und dem Einlass des Wärmetauschers (6) "gasförmiges Arbeitsmedium - regulär kaltes Wärmeübertragungsfluid" zirkuliert, nach Verlassen des Wärmetauschers (26, 27) "gasförmiges Arbeitsmedium - gasförmiges Arbeitsmedium" das gasförmige Arbeitsmedium über die Rohrleitung (18) dem Wärmetauscher (7) "gasförmiges Arbeitsmedium - regulär warmes Wärmeübertragungsfluid" zugeführt wird, wo das gasförmige Arbeitsmedium erwärmt und gleichzeitig das regulär warme Wärmeübertragungsfluid gekühlt wird, während das regulärwarme Wärmeübertragungsfluid im Kreislauf (2) des regulär warmen Wärmeübertragungsfluids durch den Wärmetauscher (7) "gasförmiges Arbeitsmedium - regulär warmes Wärmeübertragungsfluid" mithilfe der Vorrichtung zum Bereitstellen des Flusses des regulär warmen Wärmeübertragungsfluids aus einem Teil (15) des Tanks (12) im Kreislauf (2) des regulär warmen Wärmeübertragungsfluids, in welchem das regulär warme Wärmeübertragungsfluid stärker erwärmt ist, in einen anderen Teil (14) des Tanks (8) strömt, in welchem das regulär warme Wärmeübertragungsfluid weniger stark erwärmt ist, oder aus einem Tank (31) im Kreislauf (2) des regulär warmen Wärmeübertragungsfluids, in welchem das regulär warme Wärmeübertragungsfluid stärker erwärmt ist, in einen anderen Tank (30), in welchem das regulär warme Wärmeübertragungsfluid weniger stark erwärmt ist, oder in andere Tanks (30), in welchen das regulär warme Wärmeübertragungsfluid weniger stark erwärmt ist, oder aus mehreren Tanks (31) im Kreislauf (2) des regulär warmen Wärmeübertragungsfluids, in welchen das regulär warme Wärmeübertragungsfluid stärker erwärmt ist, in die anderen Tanks (30) strömt, in welchen das regulär warme Wärmeübertragungsfluid weniger stark erwärmt ist, und wobei nach Verlassen des Wärmetauschers (7) "gasförmiges Arbeitsmedium - regulär warmes Wärmeübertragungsfluid" das gasförmige Arbeitsmedium über die Rohrleitung (18) wieder dem im Energieabgabeprozess arbeitenden Expansionsvorrichtungsmittel (23) zugeführt wird, wobei im Prozess des Speicherns der aufgenommenen Energie die Zirkulation des gasförmigen Arbeitsmediums im Kreislauf (3) des gasförmigen Arbeitsmediums auf das bevorzugte Minimum gesenkt oder eingestellt wird und der Fluss des regulär warmen Wärmeübertragungsfluids im Kreislauf (2) des regulär warmen Wärmeübertragungsfluids und der Fluss des regulär kalten Wärmeübertragungsfluids im Kreislauf (1) des regulär kalten Wärmeübertragungsfluids auf das bevorzugte Minimum gesenkt oder eingestellt werden.

12. Verfahren zum Aufnehmen, Speichern und Abgeben einer mechanischen Energie in der Anlage nach Anspruch 2, wobei die aufgenommene mechanische Energie im Energieaufnahmeprozess von der Quelle (4) für die aufgenommene mechanische Energie erhalten wird und durch die Verbindung (16) mit dem im Energieaufnahmeprozess arbeitenden Verdichtungsvorrichtungsmittel (19) die erhaltene mechanische Energie dem im Energieaufnahmeprozess arbeitenden Verdichtungsvorrichtungsmittel (19) zugeführt wird, während das im Kreislauf (3) des gasförmigen Arbeitsmediums zirkulierende gasförmige Arbeitsmedium dem im Energieaufnahmeprozess arbeitenden Verdichtungsvorrichtungsmittel (19) zugeführt wird, das gasförmige Arbeitsmedium im im Energieaufnahmeprozess arbeitenden Verdichtungsvorrichtungsmittel (19) verdichtet wird, wodurch Druck und Temperatur des gasförmigen Arbeitsmediums erhöht werden, anschließend das gasförmige Arbeitsmedium über eine Rohrleitung (18) dem Wärmetauscher (7) "gasförmiges Arbeitsmedium - regulär warmes Wärmeübertragungsfluid" zugeführt wird, wo das gasförmige Arbeitsmedium gekühlt und gleichzeitig das regulär warme Wärmeübertragungsfluid erwärmt wird, während das regulär warme Wärmeübertragungsfluid im Kreislauf (2) des regulär warmen Wärmeübertragungsfluids durch den Wärmetauscher (7) "gasförmiges Arbeitsmedium - regulär warmes Wärmeübertragungsfluid" mithilfe der Vorrichtung zum Bereitstellen des Flusses des regulär warmen Wärmeübertragungsfluids aus einem Teil (14) des Tanks (12) im Kreislauf (2) des regulär warmen Wärmeübertragungsfluids, in welchem das regulär warme Wärmeübertragungsfluid weniger stark erwärmt ist, in einen anderen Teil (15) des Tanks (12) strömt, in dem das regulär warme Wärmeübertragungsfluid stärker erwärmt ist, oder aus einem Tank (30) im Kreislauf (2) des regulär warmen Wärmeübertragungsfluids, in welchem das regulär warme Wärmeübertragungsfluid weniger stark erwärmt ist, in einen anderen Tank (31), in welchem das regulär warme Wärmeübertragungsfluid stärker erwärmt ist, oder in andere Tanks (31), in denen das regulär warme Wärmeübertragungsfluid stärker erwärmt ist, oder aus mehreren Tanks (30) im Kreislauf (2) des regulär warmen Wärmeübertragungsfluids, in welchen das regulär warme Wärmeübertragungsfluid weniger stark erwärmt ist, in die anderen Tanks (31) strömt, in welchen das regulär warme Wärmeübertragungsfluid stärker erwärmt ist, wobei nach Verlassen des Wärmetauschers (7) "gasförmiges Arbeitsmedium - regulär warmes Wärmeübertragungsfluid" das gasförmige Arbeitsmedium über die Rohrleitung (18) dem Wärmetauscher (26) "gasförmiges Arbeitsmedium - gasförmiges Arbeitsmedium" zugeführt wird, in welchem das gasförmige Arbeitsmedium durch die Wärmeübertragung auf das in einem anderen Teil des Kreislaufs (3) des gasförmigen Arbeitsmediums zirkulierende und dabei erwärmte gasförmige Arbeitsmedium gekühlt wird, nach Verlassen des Wärmetauschers (26) "gasförmiges Arbeitsmedium - gasförmiges Arbeitsmedium" das gasförmige Arbeitsmedium über die Rohrleitung (18) dem im Energieaufnahmeprozess arbeitenden Expansionsvorrichtungsmittel (20) zugeführt wird, wo das gasförmige Arbeitsmedium ausgedehnt wird und Druck und Temperatur des gasförmigen Arbeitsmediums verringert werden, während über die Verbindung (21) zum im Energieaufnahmeprozess arbeitenden Expansionsvorrichtungsmittel (20) die im im Energieaufnahmeprozess arbeitenden Expansionsvorrichtungsmittel (20) freigesetzte mechanische Energie abgeführt wird, nach Verlassen des im Energieaufnahmeprozess arbeitenden Expansionsvorrichtungsmittels (20) das gasförmige Arbeitsmedium über die Rohrleitung (18) dem Wärmetauscher (6) "gasförmiges Arbeitsmedium - regulär kaltes Wärmeübertragungsfluid" zugeführt wird, in welchem das gasförmige Arbeitsmedium erwärmt und gleichzeitig das regulär kalte Wärmeübertragungsfluid gekühlt wird, während das regulär kalte Wärmeübertragungsfluid im Kreislauf (1) des regulär kalten Wärmeübertragungsfluids bei Bedarf durch den Wärmetauscher (32) "Kühler für das regulär kalte Wärmeübertragungsfluid" wo das regulär kalte Wärmeübertragungsfluid gekühlt wird, und anschließend durch den Wärmetauscher (6) "gasförmiges Arbeitsmedium - regulär kaltes Wärmeübertragungsfluid", oder nur durch den Wärmetauscher (6) "gasförmiges Arbeitsmedium - regulär kaltes Wärmeübertragungsfluid" mithilfe der Vorrichtung zum Bereitstellen des Flusses des regulär kalten Wärmeübertragungsfluids aus einem Teil (10) des Tanks (8) im Kreislauf (1) des regulär kalten Wärmeübertragungsfluids, in welchem das regulär kalte Wärmeübertragungsfluid stärker erwärmt ist, in einen anderen Teil (11) des Tanks (8) strömt, in welchem das regulär kalte Wärmeübertragungsfluid weniger stark erwärmt ist, oder aus einem Tank (29) im Kreislauf (1) des regulär kalten Wärmeübertragungsfluids, in welchem das regulär kalte Wärmeübertragungsfluid stärker erwärmt ist, in einen anderen Tank (28), in welchem das regulär kalte Wärmeübertragungsfluid weniger stark erwärmt ist, oder in andere Tanks (28), in welchen das regulär kalte Wärmeübertragungsfluid weniger stark erwärmt ist, oder aus mehreren Tanks (29) im Kreislauf (1) des regulär kalten Wärmeübertragungsfluids, in welchen das regulär kalte Wärmeübertragungsfluid stärker erwärmt ist, in die anderen Tanks (28) strömt, in welchen das regulär kalte Wärmeübertragungsfluid weniger stark erwärmt ist, wobei nach Verlassen des Wärmetauschers (6) "gasförmiges Arbeitsmedium - regulär kaltes Wärmeübertragungsfluid" das gasförmige Arbeitsmedium bei Bedarf dem Wärmetauscher (25) "Kühler für das gasförmige Arbeitsmedium", wo das gasförmige Arbeitsmedium gekühlt wird, und anschließend das gasförmige Arbeitsmedium über die Rohrleitung (18) dem Wärmetauscher (26) "gasförmiges Arbeitsmedium - gasförmiges Arbeitsmedium" zugeführt wird, oder das gasförmige Arbeitsmedium direkt nach Verlassen des Wärmetauschers (6) "gasförmiges Arbeitsmedium - regulär kaltes Wärmeübertragungsfluid" über die Rohrleitung (18) dem Wärmetauscher (26) "gasförmiges Arbeitsmedium - gasförmiges Arbeitsmedium" zugeführt wird, wo das gasförmige Arbeitsmedium durch die Wärmeübertragung vomdabei abkühlenden gasförmigen Arbeitsmedium erwärmt wird, das in dem Teil des Kreislaufs (3) des gasförmigen Arbeitsmediums zwischen dem Auslass des Wärmetauschers (7) "gasförmiges Arbeitsmedium - regulär warmes Wärmeübertragungsfluid" und dem Einlass des im Energieaufnahmeprozess arbeitenden Expansionsvorrichtungsmittels (20) zirkuliert, und nach Verlassen des Wärmetauschers (26) "gasförmiges Arbeitsmedium - gasförmiges Arbeitsmedium" das gasförmige Arbeitsmedium wieder dem im Energieaufnahmeprozess arbeitenden Verdichtungsvorrichtungsmittel (19) zugeführt wird, wobei im Energieabgabeprozess das im Kreislauf (3) des gasförmigen Arbeitsmediums zirkulierende gasförmige Arbeitsmedium dem im Energieabgabeprozess arbeitenden Expansionsvorrichtungsmittel (23) zugeführt wird, im im Energieabgabeprozess arbeitenden Expansionsvorrichtungsmittel (23) das gasförmige Arbeitsmedium ausgedehnt wird und dabei Druck und Temperatur des gasförmigen Arbeitsmediums verringert werden, wobei über die Verbindung (17) mit dem im Energieabgabeprozess arbeitenden Expansionsvorrichtungsmittel (23) die im im Energieabgabeprozess arbeitenden Expansionsvorrichtungsmittel (23) freigesetzte mechanische Energie dem Verbraucher (5) der aufgenommenen mechanischen Energie zugeführt wird, wobei nach Verlassen des im Energieabgabeprozess arbeitenden Expansionsvorrichtungsmittels (23) das gasförmige Arbeitsmedium über die Rohrleitung (18) dem Wärmetauscher (27) oder dem Wärmetauscher (26, 27) "gasförmiges Arbeitsmedium - gasförmiges Arbeitsmedium" zugeführt wird, in welchem das gasförmige Arbeitsmedium gekühlt wird, während es die Wärme an das in einem anderen Teil des Kreislaufs (3) des gasförmigen Arbeitsmediums zirkulierende gasförmige Arbeitsmedium überträgt, welches dabei erwärmt wird, nach Verlassen des Wärmetauschers (26, 27) "gasförmiges Arbeitsmedium - gasförmiges Arbeitsmedium" das gasförmige Arbeitsmedium bei Bedarf über die Rohrleitung (18) dem Wärmetauscher (25) "Kühler für das gasförmige Arbeitsmedium", in welchem das gasförmige Arbeitsmedium gekühlt wird, und anschließend das gasförmige Arbeitsmedium über die Rohrleitung (18) dem Wärmetauscher (6) "gasförmiges Arbeitsmedium - regulär kaltes Wärmeübertragungsfluid" zugeführt wird, oder direkt nach Verlassen des Wärmetauschers (26, 27) "gasförmiges Arbeitsmedium - gasförmiges Arbeitsmedium" das gasförmige Arbeitsmedium über die Rohrleitung (18) dem Wärmetauscher (6) "gasförmiges Arbeitsmedium - regulär kaltes Wärmeübertragungsfluid" zugeführt wird, in welchem das gasförmige Arbeitsmedium gekühlt und gleichzeitig das regulär kalte Wärmeübertragungsfluid erwärmt wird, während das regulär kalte Wärmeübertragungsfluid im Kreislauf (1) des regulär kalten Wärmeübertragungsfluids durch den Wärmetauscher (6) "gasförmiges Arbeitsmedium - regulär kaltes Wärmeübertragungsfluid" und anschließend bei Bedarf durch den Wärmetauscher (32) "Kühler des regulär kalten Wärmeübertragungsfluids", in welchem das regulär kalte Wärmeübertragungsfluid gekühlt wird, oder nur durch den Wärmetauscher (6) "gasförmiges Arbeitsmedium - regulär kaltes Wärmeübertragungsfluid" mithilfe der Vorrichtung zum Bereitstellen des Flusses des regulär kalten Wärmeübertragungsfluids aus einem Teil (11) des Tanks (8) im Kreislauf (1) des regulär kalten Wärmeübertragungsfluids, in welchem das regulär kalte Wärmeübertragungsfluid weniger stark erwärmt ist, in einen anderen Teil (10) des Tanks (8) strömt, in welchem das regulär kalte Wärmeübertragungsfluid stärker erwärmt ist, oder aus einem Tank (28) im Kreislauf (1) des regulär kalten Wärmeübertragungsfluids, in welchem das regulär kalte Wärmeübertragungsfluid weniger stark erwärmt ist, in einen anderen Tank (29), in welchem das regulär kalte Wärmeübertragungsfluid stärker erwärmt ist, oder in andere Tanks (29), in welchen das regulär kalte Wärmeübertragungsfluid stärker erwärmt ist, oder aus mehreren Tanks (28) im Kreislauf (1) des regulär kalten Wärmeübertragungsfluids, in welchen das regulär kalte Wärmeübertragungsfluid weniger stark erwärmt ist, in die anderen Tanks (29) strömt, in welchen das regulär kalte Wärmeübertragungsfluid stärker erwärmt ist, wobei nach Verlassen des Wärmetauschers (6) "gasförmiges Arbeitsmedium - regulär kaltes Wärmeübertragungsfluid" das gasförmige Arbeitsmedium über die Rohrleitung (18) dem im Energieabgabeprozess arbeitenden Verdichtungsvorrichtungsmittel (22) zugeführt wird, wo das gasförmige Arbeitsmedium verdichtet wird und Druck und Temperatur des gasförmigen Arbeitsmediums erhöht werden, während über die Verbindung (24) zum im Energieabgabeprozess arbeitenden Verdichtungsvorrichtungsmittel (22) die mechanische Energie dem im Energieabgabeprozess arbeitenden Verdichtungsvorrichtungsmittel (22) zugeführt wird, nach Verlassen des im Energieabgabeprozess arbeitenden Verdichtungsvorrichtungsmittels (22) das gasförmige Arbeitsmedium über die Rohrleitung (18) dem Wärmetauscher (26, 27) "gasförmiges Arbeitsmedium - gasförmiges Arbeitsmedium" zugeführt wird, in welchem das gasförmige Arbeitsmedium durch die Wärmeübertragung vom dabei abkühlenden gasförmigen Arbeitsmedium erwärmt wird, welches in dem Teil des Kreislaufs (3) des gasförmigen Arbeitsmediums zwischen dem Auslass des im Energieabgabeprozess arbeitenden Expansionsvorrichtungsmittels (23) und dem Einlass des Wärmetauschers (6) "gasförmiges Arbeitsmedium - regulär kaltes Wärmeübertragungsfluid" zirkuliert, nach Verlassen des Wärmetauschers (26, 27) "gasförmiges Arbeitsmedium - gasförmiges Arbeitsmedium" das gasförmige Arbeitsmedium über die Rohrleitung (18) dem Wärmetauscher (7) "gasförmiges Arbeitsmedium - regulär warmes Wärmeübertragungsfluid" zugeführt wird, in welchem das gasförmige Arbeitsmedium erwärmt und gleichzeitig das regulär warme Wärmeübertragungsfluid gekühlt wird, während das regulär warme Wärmeübertragungsfluid im Kreislauf (2) des regulär warmen Wärmeübertragungsfluids durch den Wärmetauscher (7) "gasförmiges Arbeitsmedium - regulär warmes Wärmeübertragungsfluid" mithilfe der Vorrichtung zum Bereitstellen des Flusses des regulär warmen Wärmeübertragungsfluids aus einem Teil (15) des Tanks (12) im Kreislauf (2) des regulär warmen Wärmeübertragungsfluids, in welchem das regulär warme Wärmeübertragungsfluid stärker erwärmt ist, in einen anderen Teil (14) des Tanks (12) strömt, in welchem das regulär warme Wärmeübertragungsfluid weniger stark erwärmt ist, oder aus einem Tank (31) im Kreislauf (2) des regulär warmen Wärmeübertragungsfluids, in welchem das regulär warme Wärmeübertragungsfluid stärker erwärmt ist, in einen anderen Tank (30), in welchem das regulär warme Wärmeübertragungsfluid weniger stark erwärmt ist, oder in andere Tanks (30), in welchen das regulär warme Wärmeübertragungsfluid weniger stark erwärmt ist, oder aus mehreren Tanks (31) im Kreislauf (2) des regulär warmen Wärmeübertragungsfluids, in welchen das regulär warme Wärmeübertragungsfluid stärker erwärmt ist, in die anderen Tanks (30) strömt, in welchen das regulär warme Wärmeübertragungsfluid weniger stark erwärmt ist, und wobei nach Verlassen des Wärmetauschers (7) "gasförmiges Arbeitsmedium - regulär warmes Wärmeübertragungsfluid" das gasförmige Arbeitsmedium über die Rohrleitung (18) wieder dem im Energieabgabeprozess arbeitenden Expansionsvorrichtungsmittel (23) zugeführt wird, wobei im Prozess des Speicherns der aufgenommenen Energie die Zirkulation des gasförmigen Arbeitsmediums im Kreislauf (3) des gasförmigen Arbeitsmediums auf das bevorzugte Minimum gesenkt oder eingestellt wird und der Fluss des regulär warmen Wärmeübertragungsfluids im Kreislauf (2) des regulär warmen Wärmeübertragungsfluids und der Fluss des regulär kalten Wärmeübertragungsfluids im Kreislauf (1) des regulär kalten Wärmeübertragungsfluids auf das bevorzugte Minimum gesenkt oder eingestellt werden.

13. Verfahren nach Anspruch 11 oder Anspruch 12, wobei die im im Energieaufnahmeprozess arbeitenden Expansionsvorrichtungsmittel (20) freigesetzte mechanische Energie über die Verbindung (21) dem im Energieaufnahmeprozess arbeitenden Verdichtungsvorrichtungsmittel (19) zugeführt wird.

14. Verfahren nach einem der Ansprüche 11 bis 13, wobei die im im Energieabgabeprozess arbeitenden Expansionsvorrichtungsmittel (23) freigesetzte mechanische Energie über die Verbindung (24) dem im Energieabgabeprozess arbeitenden Verdichtungsvorrichtungsmittel (22) zugeführt wird.

15. Verfahren nach einem der Ansprüche 11 bis 14, wobei vor Beginn des Energieaufnahmeprozesses bei Bedarf das regulär warme Wärmeübertragungsfluid auf die Ausgangsbetriebstemperatur erwärmt oder gekühlt wird und/oder das regulär kalte Wärmeübertragungsfluid auf die Ausgangsbetriebstemperatur erwärmt oder gekühlt wird.

## Revendications

1. Installation d'accumulation, de stockage et de renvoi d'énergie mécanique, comprenant au moins une boucle (1) d'agent fluidique de transfert thermique conventionnellement froid, une boucle (2) d'agent fluidique de transfert thermique conventionnellement chaud, au moins une boucle (3) de fluide opératoire gazeux connectée à au moins une source (4) de l'énergie mécanique qui est accumulée et à au moins un équipement utilisateur (5) de l'énergie mécanique accumulée, dans laquelle l'énergie qui est accumulée est transformée en énergie thermique de fluide opératoire gazeux ; et l'énergie thermique accumulée au moyen du fluide opératoire gazeux est transformée en énergie mécanique et au moins un échangeur thermique-refroidisseur (25) ; la boucle d'agent fluidique de transfert thermique conventionnellement chaud (1) est réalisée avec la possibilité, dans l'interaction avec la boucle de fluide opératoire gazeux (3) par l'intermédiaire d'au moins un échangeur thermique (6) « fluide opératoire gazeux - agent fluidique de transfert thermique conventionnellement froid » dans le processus d'accumulation d'énergie, de refroidir l'agent fluidique de transfert thermique de la boucle mais dans le processus de renvoi d'énergie, de chauffer l'agent fluidique de transfert thermique de la boucle, la boucle d'agent fluidique de transfert thermique conventionnellement chaud (2) est réalisée avec la possibilité, dans l'interaction avec la boucle de fluide opératoire gazeux (3), par l'intermédiaire d'au moins un échangeur thermique (7) « fluide opératoire gazeux - agent fluidique de transfert thermique conventionnellement chaud » dans le processus d'accumulation d'énergie, de chauffer l'agent fluidique de transfert thermique de la boucle mais, dans le processus de renvoi d'énergie, pour refroidir l'agent fluidique de transfert thermique de la boucle ; hormis l'échangeur ou quelques des échangeurs thermiques mentionnés « fluide opératoire gazeux - agent fluidique de transfert thermique conventionnellement froid », la boucle d'agent fluidique de transfert thermique conventionnellement froid contient au moins un réservoir (8), au moins un système de conduite (9), au moins un appareil ou un système de fourniture d'agent fluidique de transfert thermique se déplaçant dans la boucle à travers un ou quelques des échangeurs thermiques mentionnés (6) « fluide opératoire gazeux - agent fluidique de transfert thermique conventionnellement froid » depuis une partie (10, 11) de réservoir (8) jusqu'à une autre (11, 10) ou depuis un réservoir (28, 29) jusqu'à un autre (29, 28) ou jusqu'à d'autres ou depuis quelques réservoirs (28, 29) jusqu'à d'autres (29, 28), hormis les échangeurs ou quelques des échangeurs thermiques mentionnés (7) « fluide opératoire gazeux - agent fluidique de transfert thermique conventionnellement chaud », la boucle (2) d'agent fluidique de transfert thermique conventionnellement chaud contient au moins un réservoir (12), au moins un système de conduite (13), au moins un appareil ou un système de fourniture de l'agent fluidique de transfert thermique se déplaçant dans la boucle à travers un ou quelques des échangeurs thermiques mentionnés (7) « fluide opératoire gazeux - agent fluidique de transfert thermique conventionnellement chaud » jusqu'à une autre depuis une partie (14, 15) du réservoir (12) jusqu'à une autre (15, 14) ou depuis un réservoir (30, 31) jusqu'à un autre (31, 30) ou jusqu'à d'autres ou depuis quelques réservoirs (30, 31) jusqu'à d'autres, la boucle de fluide opératoire gazeux (3), hormis les échangeurs thermiques mentionnés (6, 7), le lien mentionné (16) avec la source (4) d'énergie mécanique étant accumulé et le lien (17) avec l'équipement utilisateur (5) de l'énergie mécanique accumulée contenant au moins un système de conduite (18) pour la fourniture de fluide opératoire gazeux se déplaçant dans la boucle, au moins un moyen de compression de type appareil (19) pour assurer la compression du fluide opératoire gazeux qui fonctionne dans le processus d'accumulation d'énergie, au moins un moyen d'expansion de type appareil (20) pour assurer l'expansion du fluide opératoire gazeux qui fonctionne dans le processus d'accumulation d'énergie, au moins un lien (21) avec au moins un équipement utilisateur de l'énergie mécanique sortant dans le processus d'accumulation d'énergie dans un moyen d'expansion mentionné de type appareil (20) ou dans quelques moyens d'expansion mentionnés de type appareils qui est et qui fonctionne ou qui fonctionnent respectivement dans le processus d'accumulation d'énergie, au moins un moyen de compression de type appareil (22) pour assurer la compression du fluide opératoire gazeux qui fonctionne dans le processus de renvoi d'énergie, au moins un moyen d'expansion de type appareil (23) pour assurer l'expansion du fluide opératoire gazeux qui fonctionne dans le processus de renvoi d'énergie, au moins un lien (24) avec au moins une source de l'énergie mécanique étant utilisée dans le processus de renvoi d'énergie dans un moyen de compression mentionné de type appareil (22) ou dans quelques moyens de compression mentionnés de type appareils qui fonctionne ou qui fonctionnent respectivement dans le processus de renvoi d'énergie, au moins un échangeur thermique (26) « fluide opératoire gazeux - fluide opératoire gazeux » fonctionnant dans le processus d'accumulation d'énergie dans la partie de la boucle située entre la sortie d'un ou de l'un des quelques échangeurs thermiques mentionnés (6) « fluide opératoire gazeux - agent fluidique de transfert thermique conventionnellement froid », le plus près de l'entrée dans le moyen de compression mentionné de type appareil (19) fonctionnant dans le processus d'accumulation d'énergie et de l'entrée mentionnée dans l'un ou dans l'un des quelques moyens de compression mentionnés de type appareils (19) fonctionnant dans le processus d'accumulation d'énergie, le plus près de la sortie mentionnée de l'échangeur thermique mentionné (6) « fluide opératoire gazeux - agent fluidique de transfert thermique conventionnellement froid » et dans la partie de la boucle située entre la sortie de l'un ou de l'un des quelques échangeurs thermiques mentionnés (7) « fluide opératoire gazeux - agent fluidique de transfert thermique conventionnellement chaud », le plus près de l'entrée dans le moyen d'expansion mentionnée de type appareil (20) fonctionnant dans le processus d'accumulation d'énergie et de l'entrée mentionnée dans l'un ou dans quelques des moyens d'expansion mentionnés de type appareils (20) fonctionnant dans le processus d'accumulation d'énergie, le plus près de la sortie mentionnée de l'échangeur thermique mentionné (7) « fluide opératoire gazeux - agent fluidique de transfert thermique conventionnellement chaud » et/ou au moins un échangeur thermique (27) « fluide opératoire gazeux - fluide opératoire gazeux » d'échangeurs thermique fonctionnant dans le processus de renvoi d'énergie dans la partie de la boucle située entre la sortie de l'un ou de l'un des quelques moyens de compression mentionnés de type appareils (22) fonctionnant dans le processus de renvoi d'énergie, le plus près de l'entrée dans l'échangeur thermique mentionné (7) « fluide opératoire gazeux - agent fluidique de transfert thermique conventionnellement chaud » (22) et de l'entrée mentionnée dans l'un ou dans l'un des plusieurs échangeurs thermiques mentionnés (7) « fluide opératoire gazeux - agent fluidique de transfert thermique conventionnellement chaud », le plus près de la sortie mentionnée du moyen de compression mentionnée de type appareil (22) fonctionnant dans le processus de renvoi d'énergie et dans la partie de la boucle située entre la sortie de l'un ou de l'un des quelques moyens d'expansion mentionnés de type appareils (23) fonctionnant dans le processus de renvoi d'énergie, le plus près de l'entrée dans l'échangeur thermique mentionné (6) « fluide opératoire gazeux - agent fluidique de transfert thermique conventionnellement froid » et de l'entrée mentionnée dans le dans l'un des quelques échangeurs thermiques mentionnés (6) « fluide opératoire gazeux - agent fluidique de transfert thermique conventionnellement froid », le plus près de la sortie mentionnée du moyen d'expansion mentionnée de type appareil (23) fonctionnant dans le processus de renvoi d'énergie et/ou au moins un échangeur thermique (26) « fluide opératoire gazeux - fluide opératoire gazeux » fonctionnant dans le processus d'accumulation d'énergie dans la partie de la boucle située entre la sortie de l'un ou de l'un des quelques échangeurs thermiques mentionnés (6) « fluide opératoire gazeux - agent fluidique de transfert thermique conventionnellement froid », le plus près de l'entrée dans le moyen de compression mentionné de type appareil (19) fonctionnant dans le processus d'accumulation d'énergie et dans l'entrée mentionnée dans l'un des quelques moyens de compression mentionnés de type appareils (19) fonctionnant dans le processus d'accumulation d'énergie, le plus près de la sortie mentionnée de l'échangeur thermique mentionné (6) « fluide opératoire gazeux - agent fluidique de transfert thermique conventionnellement froid » et dans la partie de la boucle située entre la sortie de l'un ou de l'un des quelques échangeurs thermiques mentionnés (7) « fluide opératoire gazeux - agent fluidique de transfert thermique conventionnellement chaud », le plus près de l'entrée dans le moyen d'expansion mentionné de type appareil (20) fonctionnant dans le processus d'accumulation d'énergie et de l'entrée mentionnée dans l'un ou l'un des quelques moyens d'expansion mentionnés de type appareils (20) fonctionnant dans le processus d'accumulation d'énergie, le plus près de l'un ou de l'un des quelques moyens d'expansion mentionnés de type appareils (20) fonctionnant dans le processus d'accumulation d'énergie et fonctionnant dans le processus de renvoi d'énergie dans la partie de la boucle située entre la sortie de l'un ou de l'un des quelques moyens de compression mentionnés de type appareils (22) fonctionnant dans le processus de renvoi d'énergie, le plus près de l'entrée dans l'échangeur thermique mentionné (7) « fluide opératoire gazeux - agent fluidique de transfert thermique conventionnellement chaud » et de l'entrée mentionnés (7) dans l'un ou dans l'un des quelques échangeurs thermiques mentionnés « fluide opératoire gazeux - agent fluidique de transfert thermique conventionnellement chaud », le plus près de la sortie du moyen de compression mentionné de type appareil (22) fonctionnant dans le processus de renvoi d'énergie et dans la partie de la boucle située entre la sortie de l'un ou de l'un des quelques moyens d'expansion mentionnés de type appareils (23) fonctionnant dans le processus de renvoi d'énergie, le plus près de l'entrée dans l'échangeur thermique mentionné (6) « fluide opératoire gazeux - agent fluidique de transfert thermique conventionnellement froid » et de l'entrée mentionnée dans l'un ou l'un des quelques échangeurs thermiques mentionnés (6) « fluide opératoire gazeux - agent fluidique de transfert thermique conventionnellement froid », le plus près de la sortie mentionnée du moyen d'expansion mentionné de type appareil (23) fonctionnant dans le processus de renvoi d'énergie.

2. Installation selon la revendication 1, dans lequel l'échangeur thermique-refroidisseur(25) est réalisé sous forme d'un échangeur thermique « refroidisseur de fluide opératoire gazeux » dans la boucle de fluide opératoire gazeux (3) pour assurer un refroidissement de fluide opératoire gazeux dans le processus de renvoi d'énergie fonctionnant dans la partie de la boucle située entre la sortie de l'un ou de l'un des quelques échangeurs thermiques mentionnés (26, 27) « fluide opératoire gazeux - fluide opératoire gazeux », le plus près de l'entrée dans l'échangeur thermique mentionné (6) « fluide opératoire gazeux - agent fluidique de transfert thermique conventionnellement froid » et de l'entrée mentionnée dans l'un ou dans l'un des quelques échangeurs thermiques mentionnés (26, 27) « fluide opératoire gazeux - fluide opératoire gazeux » et/ou d'un échangeur thermique (25) « refroidisseur de fluide opératoire gazeux » dans la boucle de fluide opératoire gazeux (3) pour assurer un refroidissement de fluide opératoire gazeux dans le processus d'accumulation d'énergie fonctionnant dans la partie de la boucle située entre la sortie de l'un ou de l'un des quelques échangeurs thermiques mentionnés (6) « fluide opératoire gazeux - agent fluidique de transfert thermique conventionnellement froid », le plus près de l'entrée dans l'échangeur thermique mentionné (26) « fluide opératoire gazeux - fluide opératoire gazeux » et de l'entrée mentionnée dans l'un ou l'un des quelques échangeurs thermiques mentionnés (26) « fluide opératoire gazeux - fluide opératoire gazeux », le plus près de la sortie mentionnée de l'échangeur thermique mentionné (6) « fluide opératoire gazeux - agent fluidique de transfert thermique conventionnellement froid » et/ou sous forme d'un échangeur thermique (32) « refroidisseur d'agent fluidique de transfert thermique conventionnellement froid » dans la boucle (1) d'agent fluidique de transfert thermique conventionnellement froid pour assurer un refroidissement d'agent fluidique de transfert thermique conventionnellement froid fonctionnant dans le processus d'accumulation d'énergie dans la partie de la boucle située entre la sortie de la partie mentionnée (10) du réservoir de boucle mentionné (8) ou la sortie du réservoir de boucle mentionné (29) ou la sortie des réservoirs de boucles mentionnés (29) et l'entrée dans l'échangeur thermique mentionné ou les échangeurs thermiques mentionnés (6) « fluide opératoire gazeux - agent fluidique de transfert thermique conventionnellement froid », et/ou fonctionnant dans le processus de renvoi d'énergie dans la partie de la boucle située entre la sortie de l'échangeur thermique mentionné ou des échangeurs thermiques mentionnés (6) « fluide opératoire gazeux - agent fluidique de transfert thermique conventionnellement froid » et l'entrée dans la partie mentionnée (10) du réservoir de boucle (8) ou du réservoir de boucle mentionné (29) ou des réservoirs de boucles mentionnés (29).

3. Installation selon la revendication 1 ou la revendication 2, dans laquelle un moyen de compression de type appareil (19) fonctionnant dans le processus d'accumulation d'énergie est utilisé dans la capacité de l'équipement utilisateur de l'énergie mécanique et sortant dans le moyen d'expansion de type appareil (20) fonctionnant dans le processus d'accumulation d'énergie.

4. Installation selon l'une quelconque des revendications 1 à 3, dans laquelle un moyen d'expansion de type appareil (23) fonctionnant dans le processus de renvoi d'énergie est utilisé dans la capacité de la source d'énergie mécanique qui est utilisée dans le moyen de compression de type appareil (22) fonctionnant dans le processus de renvoi d'énergie.

5. Installation selon l'une quelconque des revendications 1 à 4, dans laquelle il y a un lien mécanique (21) entre un moyen d'expansion de type appareil (20) fonctionnant dans le processus d'accumulation d'énergie, et l'équipement utilisateur de l'énergie mécanique sortant dans le processus d'accumulation d'énergie dans le moyen d'expansion de type appareil (20) fonctionnant dans le processus d'accumulation d'énergie.

6. Installation selon l'une quelconque des revendications 1 à 5, dans laquelle il y a un lien mécanique (24) entre un moyen de compression de type appareil (22) fonctionnant dans le processus de renvoi d'énergie et la source de l'énergie mécanique utilisée dans le processus de renvoi d'énergie dans le moyen de compression de type appareil (22) fonctionnant dans le processus de renvoi d'énergie.

7. Installation selon l'une quelconque des revendications 1 à 6, dans laquelle la boucle d'agent fluidique de transfert thermique conventionnellement froid (1) est réalisée de manière à ce qu'il soit possible de contrôler la quantité d'agent fluidique de transfert thermique conventionnellement froid dans la boucle.

8. Installation selon l'une quelconque des revendications 1 à 7, dans laquelle la boucle d'agent fluidique de transfert thermique conventionnellement chaud (2) est réalisée de manière à ce qu'il soit possible de contrôler la quantité d'agent fluidique de transfert thermique conventionnellement chaud dans la boucle.

9. Installation selon l'une quelconque des revendications 1 à 8, dans laquelle la boucle de fluide opératoire gazeux (3) est réalisée de manière à ce qu'il soit possible de contrôler la quantité de fluide opératoire gazeux dans la boucle.

10. Installation selon l'une quelconque des revendications 1 à 9, dans lequel l'un quelconque des réservoirs (8, 12, 28, 29, 30, 31) est isolé de la chaleur et est réalisée de manière à ce qu'il soit possible d'amener l'agent fluidique de transfert thermique dans la condition opératoire et de maintenir l'agent fluidique de transfert thermique dans la condition opératoire.

11. Procédé d'accumulation, de stockage et de renvoi d'une énergie mécanique dans l'installation selon la revendication 1, dans lequel l'énergie mécanique qui est accumulée est reçue dans le processus d'accumulation d'énergie en provenance de la source (4) de l'énergie mécanique qui est accumulée et à travers le lien (16) avec le moyen de compression de type appareil (19) fonctionnant dans le processus d'accumulation d'énergie, l'énergie mécanique est fournie au moyen de compression mentionné de type appareil (19) fonctionnant dans le processus d'accumulation d'énergie, en même temps le fluide opératoire gazeux circulant dans la boucle de fluide opératoire gazeux (3) est fourni au moyen de compression mentionné de type appareil (19) fonctionnant dans le processus d'accumulation d'énergie, le fluide opératoire gazeux est comprimé dans le moyen de compression mentionné de type appareil (19) fonctionnant dans le processus d'accumulation d'énergie, ce qui a pour effet que la pression et la température du fluide opératoire gazeux augmentent, après quoi le fluide opératoire gazeux est fourni via une conduite (18) à l'échangeur thermique (7) « fluide opératoire gazeux - agent fluidique de transfert thermique conventionnellement chaud », où le fluide opératoire gazeux est refroidi et, simultanément, l'agent fluidique de transfert thermique conventionnellement chaud est chauffé, en même temps l'agent fluidique de transfert thermique conventionnellement chaud est déplacé dans la boucle d'agent fluidique de transfert thermique conventionnellement chaud (2) à travers l'échangeur thermique mentionné (7) « fluide opératoire gazeux - agent fluidique de transfert thermique conventionnellement chaud » avec l'aide de l'appareil destiné à fournir l'agent fluidique de transfert thermique conventionnellement chaud se déplaçant depuis une partie (14) du réservoir (12) dans la boucle d'agent fluidique de transfert thermique conventionnellement chaud (2) dans laquelle l'agent fluidique de transfert thermique conventionnellement chaud est moins chauffé jusqu'à une autre partie (15) du réservoir (12) et avec l'agent fluidique de transfert thermique conventionnellement chaud, chauffé davantage, ou depuis un réservoir (30) dans la boucle d'agent fluidique de transfert thermique conventionnellement chaud (2), dans laquelle l'agent fluidique de transfert thermique conventionnellement chaud est moins chauffé, jusqu'à un autre réservoir (31) avec l'agent fluidique de transfert thermique conventionnellement chaud, chauffé davantage, ou jusqu'aux autres avec l'agent fluidique de transfert thermique conventionnellement chaud, chauffé davantage, ou depuis quelques réservoirs (30) dans la boucle d'agent fluidique de transfert thermique conventionnellement chaud (2) dans laquelle l'agent fluidique de transfert thermique conventionnellement chaud est moins chauffé, jusqu'aux autres réservoirs (31) avec l'agent fluidique de transfert thermique conventionnellement chaud, chauffé davantage, après avoir quitté l'échangeur thermique mentionné (7) « fluide opératoire gazeux - agent fluidique de transfert thermique conventionnellement chaud », le fluide opératoire gazeux est fourni via la conduite (18) à l'échangeur thermique (26) « fluide opératoire gazeux - fluide opératoire gazeux » dans lequel le fluide opératoire gazeux est refroidi et la chaleur est transférée au fluide opératoire gazeux qui est en train de chauffer circulant dans une autre partie de la boucle de fluide opératoire gazeux (3), après avoir quitté l'échangeur thermique mentionné (26) « fluide opératoire gazeux - fluide opératoire gazeux », le fluide opératoire gazeux est fourni via la conduite (18) au moyen d'expansion de type appareil (20) fonctionnant dans le processus d'accumulation d'énergie, dans lequel le fluide opératoire gazeux est dilaté et la pression et la température du fluide opératoire gazeux sont réduites, en même temps, via le lien (21) avec le moyen d'expansion mentionné de type appareil (20) fonctionnant dans le processus d'accumulation d'énergie, l'énergie mécanique sortant dans le moyen d'expansion mentionné de type appareil (20) fonctionnant dans le processus d'accumulation d'énergie est éliminé, après avoir quitté le moyen d'expansion mentionné de type appareil (20) fonctionnant dans le processus d'accumulation d'énergie, le fluide opératoire gazeux est fourni via une conduite (18) à l'échangeur thermique (6) « fluide opératoire gazeux - agent fluidique de transfert thermique conventionnellement froid », où le fluide opératoire gazeux est chauffé et simultanément l'agent fluidique de transfert thermique conventionnellement froid est refroidi, en même temps l'agent de transfert thermique conventionnellement froid est déplacé dans la boucle d'agent fluidique de transfert thermique conventionnellement froid (1), en cas de besoin à travers l'échangeur thermique-refroidisseur (32) de la boucle d'agent fluidique de transfert thermique conventionnellement froid (1) dans laquelle l'agent fluidique de transfert thermique conventionnellement froid est refroidi et ensuite à travers l'échangeur thermique mentionné (6) « fluide opératoire gazeux - agent fluidique de transfert thermique conventionnellement froid » ou seulement à travers l'échangeur thermique mentionné (6) « fluide opératoire gazeux - agent fluidique de transfert thermique conventionnellement froid » avec l'aide de l'appareil destiné à fournir l'agent fluidique de transfert thermique conventionnellement froid se déplaçant depuis une partie (10) du réservoir (8) dans la boucle d'agent fluidique de transfert thermique conventionnellement froid (1) dans laquelle l'agent fluidique de transfert thermique conventionnellement froid est chauffé davantage jusqu'à une autre partie (11) du réservoir (8) avec l'agent fluidique de transfert thermique conventionnellement froid, moins chauffé, ou depuis un réservoir (29) dans la boucle d'agent fluidique de transfert thermique conventionnellement froid (1) dans laquelle l'agent fluidique de transfert thermique conventionnellement froid est chauffé davantage, jusqu'à un autre réservoir (28) avec l'agent fluidique de transfert thermique conventionnellement froid, moins chauffé, ou jusqu'à d'autres (28) avec l'agent fluidique de transfert thermique conventionnellement froid, moins chauffé, ou depuis quelques réservoirs (29) dans la boucle d'agent fluidique de transfert thermique conventionnellement froid (1) dans laquelle l'agent fluidique de transfert thermique conventionnellement froid est chauffé davantage, jusqu'aux autres réservoirs (28) avec l'agent fluidique de transfert thermique conventionnellement froid, moins chauffé, après avoir quitté l'échangeur thermique mentionné (6) « fluide opératoire gazeux - agent fluidique de transfert thermique conventionnellement froid », le fluide opératoire gazeux, en cas de besoin, est fourni à l'échangeur thermique-refroidisseur(25) de la boucle de fluide opératoire gazeux (3) où le fluide opératoire gazeux est refroidi, après quoi le fluide opératoire gazeux est fourni via la conduite (18) à l'échangeur thermique mentionné (26) « fluide opératoire gazeux - fluide opératoire gazeux » ou tout de suite après avoir quitté l'échangeur technique mentionné (6) « fluide opératoire gazeux - agent fluidique de transfert thermique conventionnellement froid », le fluide opératoire gazeux est fourni via la conduite (18) à l'échangeur thermique mentionné (26) « fluide opératoire gazeux - fluide opératoire gazeux » où le fluide opératoire gazeux est chauffé par le transfert thermique mentionné depuis le fluide opératoire gazeux en cours de refroidissement qui circule dans la partie mentionnée de la boucle de fluide opératoire gazeux (3) entre la sortie de l'échangeur thermique mentionné (7) « fluide opératoire gazeux - agent fluidique de transfert thermique conventionnellement chaud » et l'entrée dans le moyen d'expansion mentionné de type appareil » (20) fonctionnant dans le processus d'accumulation d'énergie, après avoir quitté l'échangeur thermique mentionné (26) « fluide opératoire gazeux - fluide opératoire gazeux », le fluide opératoire gazeux est de nouveau fourni au moyen de compression mentionné de type appareil (19) fonctionnant dans le processus d'accumulation d'énergie ; dans le processus de renvoi d'énergie, le fluide opératoire gazeux circulant dans la boucle de fluide opératoire gazeux (3) est fourni au moyen d'expansion de type appareil (23) fonctionnant dans le processus de renvoi d'énergie, au moyen d'expansion mentionné de type appareil (23) fonctionnant dans le processus de renvoi d'énergie, le fluide opératoire gazeux est dilaté, en même temps la pression et la température du fluide opératoire gazeux sont réduites, via le lien (17) avec le moyen d'expansion mentionné de type appareil (23) fonctionnant dans le processus de renvoi d'énergie, l'énergie mécanique sortant dans le moyen d'expansion mentionné de type appareil (23) fonctionnant dans le processus de renvoi d'énergie est fournie à l'utilisateur (5) de l'énergie mécanique accumulée, après avoir quitté le moyen d'expansion mentionné de type appareil (23) fonctionnant dans le processus de renvoi d'énergie, le fluide opératoire gazeux est fourni via la conduite (18) à l'échangeur de chaleur (27) ou à l'échangeur thermique mentionné (26, 27) « fluide opératoire gazeux - fluide opératoire gazeux » où le fluide opératoire gazeux est refroidi en transférant la chaleur au fluide opératoire gazeux qui est chauffé circulant dans une autre partie de la boucle de fluide opératoire gazeux (3), après avoir quitté l'échangeur thermique mentionné (26, 27) « fluide opératoire gazeux - fluide opératoire gazeux », en cas de besoin, le fluide opératoire gazeux est fourni via la conduite (18) à l'échangeur thermique-refroidisseur (25) de la boucle de fluide opératoire gazeux (3) où le fluide opératoire gazeux est refroidi et ensuite le fluide opératoire gazeux est fourni via la conduite (18) à l'échangeur thermique (6) « fluide opératoire gazeux - agent fluidique de transfert thermique conventionnellement froid » ou tout de suite après avoir quitté l'échangeur thermique mentionné (26, 27) « fluide opératoire gazeux - fluide opératoire gazeux », le fluide opératoire gazeux est fourni via la conduite (18) à l'échangeur thermique (6) « fluide opératoire gazeux - agent fluidique de transfert thermique conventionnellement froid » où le fluide opératoire gazeux est refroidi et simultanément l'agent fluidique de transfert thermique conventionnellement froid est chauffé, en même temps l'agent fluidique de transfert thermique conventionnellement froid est déplacé dans la boucle d'agent fluidique de transfert thermique conventionnellement froid (1) à travers l'échangeur thermique mentionné (6) « fluide opératoire gazeux - agent fluidique de transfert thermique conventionnellement froid » et ensuite, en cas de besoin, à travers l'échangeur thermique-refroidisseur (32) de la boucle d'agent fluidique de transfert thermique conventionnellement froid (1) où l'agent d'agent fluidique de transfert thermique conventionnellement froid est refroidi ou seulement à travers l'échangeur thermique mentionné (6) « fluide opératoire gazeux - agent fluidique de transfert thermique conventionnellement froid » avec l'aide de l'appareil de fourniture de l'agent fluidique de transfert thermique conventionnellement froid se déplaçant depuis une partie (11) du réservoir (8) dans la boucle d'agent fluidique de transfert thermique conventionnellement froid (1) dans laquelle l'agent fluidique de transfert thermique conventionnellement froid est moins chauffé, jusqu'à une autre partie (10) du réservoir (8) l'agent fluidique de transfert thermique conventionnellement froid, chauffé davantage, ou depuis un réservoir (28) dans la boucle d'agent fluidique de transfert thermique conventionnellement froid (1) dans laquelle l'agent fluidique de transfert thermique conventionnellement froid est moins chauffé jusqu'à un autre réservoir (29) avec l'agent fluidique de transfert thermique conventionnellement froid, chauffé davantage, ou jusqu'à d'autres (29) avec l'agent fluidique de transfert thermique conventionnellement froid, chauffé davantage, ou depuis quelques réservoirs (28) dans la boucle d'agent fluidique de transfert thermique conventionnellement froid (1) dans laquelle l'agent fluidique de transfert thermique conventionnellement froid est moins chauffé jusqu'aux autres réservoirs (29) avec l'agent fluidique de transfert thermique conventionnellement froid, chauffé davantage, après avoir quitté l'échangeur thermique mentionné (6) « fluide opératoire gazeux - agent fluidique de transfert thermique conventionnellement froid », le fluide opératoire gazeux est fourni via la conduite (18) au moyen de compression mentionné de type appareil (22) fonctionnant dans le processus de renvoi d'énergie où le fluide opératoire gazeux est comprimé et sa pression et sa température sont augmentées, en même temps, via le lien (24) avec le moyen de compression mentionné de type appareil (22) fonctionnant dans le processus de renvoi d'énergie, l'énergie mécanique est fournie au moyen de compression mentionné de type appareil (22) fonctionnant dans le processus de renvoi d'énergie, après avoir quitté le moyen de compression mentionné de type appareil (22) fonctionnant dans le processus de renvoi d'énergie, le fluide opératoire gazeux est fourni via la conduite (18) à l'échangeur de chaleur mentionné (26, 27) « fluide opératoire gazeux - fluide opératoire gazeux » où le fluide opératoire gazeux est chauffé par le transfert thermique mentionné depuis le fluide opératoire gazeux en cours de refroidissement qui circule dans la partie mentionnée de la boucle de fluide opératoire gazeux (3) entre la sortie du moyen d'expansion mentionné de type appareil (23) fonctionnant dans le processus de renvoi d'énergie et l'entrée dans l'échangeur thermique mentionné (6) « fluide opératoire gazeux - agent fluidique de transfert thermique conventionnellement froid », après avoir quitté l'échangeur thermique mentionné (26, 27) « fluide opératoire gazeux - fluide opératoire gazeux », le fluide opératoire gazeux est fourni via la conduite (18) à l'échangeur thermique mentionné (7) « fluide opératoire gazeux - agent fluidique de transfert thermique conventionnellement chaud » où le fluide opératoire gazeux est chauffé et simultanément l'agent fluidique de transfert thermique conventionnellement chaud est refroidi, en même temps l'agent fluidique de transfert thermique conventionnellement chaud est déplacé dans la boucle d'agent fluidique de transfert thermique conventionnellement chaud (2) à travers l'échangeur thermique mentionné (7) « fluide opératoire gazeux - agent fluidique de transfert thermique conventionnellement chaud » avec l'aide de l'appareil destiné à fournir l'agent fluidique de transfert thermique conventionnellement chaud se déplaçant depuis une partie (15) du réservoir (12) dans la boucle fluidique de transfert thermique conventionnellement chaud (2) dans laquelle l'agent fluidique de transfert thermique conventionnellement chaud est chauffé davantage, jusqu'à une autre partie (14) du réservoir (12) avec l'agent fluidique de transfert thermique conventionnellement chaud, moins chauffé, ou depuis un réservoir (31) dans la boucle d'agent fluidique de transfert thermique conventionnellement chaud (2) dans laquelle l'agent fluidique de transfert thermique conventionnellement chaud est chauffé davantage, jusqu'à un autre réservoir (30) avec l'agent fluidique de transfert thermique conventionnellement chaud, moins chauffé, ou jusqu'à d'autres réservoirs (30) avec l'agent fluidique de transfert thermique conventionnellement chaud, moins chauffé, ou depuis quelques réservoirs (31) dans la boucle d'agent fluidique de transfert thermique conventionnellement chaud (2) dans laquelle l'agent fluidique de transfert thermique conventionnellement chaud est chauffé davantage, jusqu'aux autres réservoirs (30) avec l'agent fluidique de transfert thermique conventionnellement chaud, chauffé davantage, après avoir quitté l'échangeur thermique mentionné (7) « fluide opératoire gazeux - agent fluidique de transfert thermique conventionnellement chaud », le fluide opératoire gazeux est de nouveau fourni via la conduite (18) au moyen d'expansion mentionné de type appareil (23) fonctionnant dans le processus de renvoi d'énergie ; dans le processus de stockage d'énergie accumulée, la circulation du fluide opératoire gazeux dans la boucle de fluide opératoire gazeux (3) est abaissée jusqu'au minimum préférable ou est arrêtée de, le déplacement de l'agent fluidique de transfert thermique conventionnellement chaud dans la boucle d'agent fluidique de transfert thermique conventionnellement chaud (2) et le déplacement de l'agent fluidique de transfert thermique conventionnellement froid dans la boucle d'agent fluidique de transfert thermique conventionnellement froid (1) sont abaissés jusqu'au minimum préférable ou arrêtés.

12. Procédé d'accumulation, de stockage et de renvoi d'une énergie mécanique dans l'installation selon la revendication , dans lequel l'énergie mécanique qui est accumulée est reçue dans le processus d'accumulation d'énergie en provenance de la source (4) de l'énergie mécanique qui est accumulée et par l'intermédiaire du lien (16) avec le moyen de compression de type appareil (19) fonctionnant dans le processus d'accumulation d'énergie, l'énergie mécanique est fournie au moyen de compression mentionné de type appareil (19) fonctionnant dans le processus d'accumulation d'énergie, en même temps le fluide opératoire gazeux circulant dans la boucle de fluide opératoire gazeux (3) est fournie au moyen de compression mentionné de type appareil (19) fonctionnant dans le processus d'accumulation d'énergie, le fluide opératoire gazeux est comprimé dans le moyen de compression mentionné de type appareil (19) fonctionnant dans le processus d'accumulation d'énergie, ce qui a pour effet que la pression et la température du fluide opératoire gazeux augmentent, après quoi le fluide opératoire gazeux est fourni via une conduite (18) à l'échangeur thermique (7) « fluide opératoire gazeux - agent fluidique de transfert thermique conventionnellement chaud », où le fluide opératoire gazeux est refroidi et, simultanément, l'agent fluidique de transfert thermique conventionnellement chaud est chauffé, en même temps l'agent fluidique de transfert thermique conventionnellement chaud est déplacé dans la boucle d'agent fluidique de transfert thermique conventionnellement chaud (2) à travers l'échangeur thermique mentionné (7) « fluide opératoire gazeux - agent fluidique de transfert thermique conventionnellement chaud » avec l'aide de l'appareil destiné à fournir l'agent fluidique de transfert thermique conventionnellement chaud se déplaçant depuis une partie (14) du réservoir (12) dans la boucle d'agent fluidique de transfert thermique conventionnellement chaud (2) dans laquelle l'agent fluidique de transfert thermique conventionnellement chaud est moins chauffé jusqu'à une autre partie (15) du réservoir (12) avec l'agent fluidique de transfert thermique conventionnellement chaud, chauffé davantage, ou depuis un réservoir (30) dans la boucle d'agent fluidique de transfert thermique conventionnellement chaud (2), dans laquelle l'agent fluidique de transfert thermique conventionnellement chaud est moins chauffé, jusqu'à un autre réservoir (31) avec l'agent fluidique de transfert thermique conventionnellement chaud, chauffé davantage, ou jusqu'aux autres (31) avec l'agent fluidique de transfert thermique conventionnellement chaud, chauffé davantage, ou depuis quelques réservoirs (30) dans la boucle d'agent fluidique de transfert thermique conventionnellement chaud (2), dans laquelle l'agent fluidique de transfert thermique conventionnellement chaud est moins chauffé, jusqu'aux autres réservoirs (31) avec l'agent fluidique de transfert thermique conventionnellement chaud, chauffé davantage, après avoir quitté l'échangeur thermique mentionné (7) « fluide opératoire gazeux - agent fluidique de transfert thermique conventionnellement chaud », le fluide opératoire gazeux est fourni via la conduite (18) à l'échangeur thermique (26) « fluide opératoire gazeux - fluide opératoire gazeux » où le fluide opératoire gazeux est refroidi par le transfert thermique au fluide opératoire gazeux qui est en train de chauffer circulant dans une autre partie de la boucle de fluide opératoire gazeux (3), après avoir quitté l'échangeur thermique mentionné (26) « fluide opératoire gazeux - fluide opératoire gazeux », le fluide opératoire gazeux est fourni via la conduite (18) au moyen d'expansion de type appareil (20) fonctionnant dans le processus d'accumulation d'énergie, où le fluide opératoire gazeux est dilaté, la pression et la température du fluide opératoire gazeux sont réduites, en même temps, via le lien (21) avec le moyen d'expansion mentionné de type appareil (20) fonctionnant dans le processus d'accumulation d'énergie, l'énergie mécanique sortant dans le moyen d'expansion mentionné de type appareil (20) fonctionnant dans le processus d'accumulation d'énergie est éliminé, après avoir quitté le moyen d'expansion mentionné de type appareil (20) fonctionnant dans le processus d'accumulation d'énergie, le fluide opératoire gazeux est fourni via la conduite (18) à l'échangeur thermique (6) « fluide opératoire gazeux - agent fluidique de transfert thermique conventionnellement froid », où le fluide opératoire gazeux est chauffé et simultanément l'agent fluidique de transfert thermique conventionnellement froid est refroidi, en même temps l'agent de transfert thermique conventionnellement froid est déplacé dans la boucle d'agent fluidique de transfert thermique conventionnellement froid (1), en cas de besoin, à travers l'échangeur thermique (32) de la boucle d'agent fluidique de transfert thermique « refroidisseur d'agent fluidique de transfert thermique conventionnellement froid », où l'agent fluidique de transfert thermique conventionnellement froid est refroidi et ensuite à travers l'échangeur thermique mentionné (6) « fluide opératoire gazeux - agent fluidique de transfert thermique conventionnellement froid » ou seulement à travers l'échangeur thermique mentionné (6) « fluide opératoire gazeux - agent fluidique de transfert thermique conventionnellement froid » ou seulement à travers l'échangeur thermique mentionné avec l'aide de l'appareil destiné à fournir l'agent fluidique de transfert thermique conventionnellement froid se déplaçant depuis une partie (10) du réservoir (8) dans la boucle d'agent fluidique de transfert thermique conventionnellement froid (1) dans laquelle l'agent fluidique de transfert thermique conventionnellement froid est chauffé davantage jusqu'à une autre partie (11) du réservoir (8) avec l'agent fluidique de transfert thermique conventionnellement froid, moins chauffé, ou depuis un réservoir (29) dans la boucle d'agent fluidique de transfert thermique conventionnellement froid (1) dans laquelle l'agent fluidique de transfert thermique conventionnellement froid est chauffé davantage, jusqu'à un autre réservoir (28) avec l'agent fluidique de transfert thermique conventionnellement froid, moins chauffé, ou jusqu'aux autres (28) avec l'agent fluidique de transfert thermique conventionnellement froid, moins chauffé, ou depuis quelques réservoirs (29) dans la boucle d'agent fluidique de transfert thermique conventionnellement froid (1) dans laquelle l'agent fluidique de transfert thermique conventionnellement froid est chauffé davantage, jusqu'aux autres réservoirs (28) avec l'agent fluidique de transfert thermique conventionnellement froid, moins chauffé, après avoir quitté l'échangeur thermique mentionné (6) « fluide opératoire gazeux - agent fluidique de transfert thermique conventionnellement froid », le fluide opératoire gazeux, en cas de besoin, est fourni à l'échangeur thermique (25) « refroidisseur de fluide opératoire gazeux », où le fluide opératoire gazeux est refroidi, après quoi le fluide opératoire gazeux est fourni via la conduite (18) à l'échangeur thermique mentionné (26) « fluide opératoire gazeux - fluide opératoire gazeux » ou tout de suite après avoir quitté l'échangeur technique mentionné (6) « fluide opératoire gazeux - agent fluidique de transfert thermique conventionnellement froid », le fluide opératoire gazeux est fourni via la conduite (18) à l'échangeur thermique mentionné (26) « fluide opératoire gazeux - fluide opératoire gazeux » où le fluide opératoire gazeux est chauffé par le transfert thermique mentionné depuis le fluide opératoire gazeux qui est refroidi qui circule dans la partie mentionnée de la boucle de fluide opératoire gazeux (3) entre la sortie de l'échangeur thermique mentionné (7) « fluide opératoire gazeux - agent fluidique de transfert thermique conventionnellement chaud » et l'entrée dans le moyen d'expansion mentionnée de type appareil » (20) fonctionnant dans le processus d'accumulation d'énergie, après avoir quitté l'échangeur thermique mentionné (26) « fluide opératoire gazeux - fluide opératoire gazeux », le fluide opératoire gazeux est de nouveau fourni au moyen de compression mentionné de type appareil (19) fonctionnant dans le processus d'accumulation d'énergie ; dans le processus de renvoi d'énergie, le fluide opératoire gazeux circulant dans la boucle de fluide opératoire gazeux (3) est fourni au moyen d'expansion de type appareil (23) fonctionnant dans le processus de renvoi d'énergie, le fluide opératoire gazeux est dilaté dans le moyen d'expansion de type appareil (23) fonctionnant dans le processus de renvoi d'énergie, en même temps la pression et la température du fluide opératoire gazeux sont réduites, via le lien (17) avec le moyen d'expansion mentionné de type appareil (23) fonctionnant dans le processus de renvoi d'énergie, l'énergie mécanique sortant dans le moyen d'expansion mentionné de type appareil (23) fonctionnant dans le processus de renvoi énergie est fournie à l'utilisateur (5) de l'énergie mécanique accumulée, après avoir quitté le moyen d'expansion mentionné de type appareil (23) fonctionnant dans le processus de renvoi d'énergie, le fluide opératoire gazeux est fourni via la conduite (18) à l'échangeur de chaleur (27) ou à l'échangeur thermique mentionné (26, 27) « fluide opératoire gazeux - fluide opératoire gazeux » où le fluide opératoire gazeux est refroidi en transférant la chaleur au fluide opératoire gazeux qui est chauffé circulant dans une autre partie de la boucle de fluide opératoire gazeux (3), après avoir quitté l'échangeur thermique mentionné (26, 27) « fluide opératoire gazeux - fluide opératoire gazeux », en cas de besoin, le fluide opératoire gazeux est fourni via la conduite (18) à l'échangeur thermique (25) « refroidisseur de fluide opératoire gazeux » dans lequel le fluide opératoire gazeux est refroidi et ensuite le fluide opératoire gazeux est fourni via la conduite (18) à l'échangeur thermique (6) « fluide opératoire gazeux - agent fluidique de transfert thermique conventionnellement froid » ou tout de suite après avoir quitté l'échangeur thermique mentionné (26, 27) « fluide opératoire gazeux - fluide opératoire gazeux », le fluide opératoire gazeux est fourni via la conduite (18) à l'échangeur thermique (6) « fluide opératoire gazeux - agent fluidique de transfert thermique conventionnellement froid » où le fluide opératoire gazeux est refroidi et simultanément l'agent fluidique de transfert thermique conventionnellement froid est chauffé, en même temps l'agent fluidique de transfert thermique conventionnellement froid est déplacé dans la boucle d'agent fluidique de transfert thermique conventionnellement froid (1) à travers l'échangeur thermique mentionné (6) « fluide opératoire gazeux - agent fluidique de transfert thermique conventionnellement froid » et ensuite, en cas de besoin, à travers l'échangeur thermique (32) « refroidisseur d'agent fluidique de transfert thermique conventionnellement froid » où l'agent fluidique de transfert thermique conventionnellement froid est refroidi ou seulement à travers l'échangeur thermique mentionné (6) « fluide opératoire gazeux - agent fluidique de transfert thermique conventionnellement froid » avec l'aide de l'appareil de fourniture de l'agent fluidique de transfert thermique conventionnellement froid se déplaçant depuis une partie (11) du réservoir (8) dans la boucle d'agent fluidique de transfert thermique conventionnellement froid (1) dans laquelle l'agent fluidique de transfert thermique conventionnellement froid est moins chauffé, jusqu'à une autre partie (10) du réservoir (8) avec l'agent fluidique de transfert thermique conventionnellement froid, chauffé davantage, ou depuis un réservoir (28) dans la boucle d'agent fluidique de transfert thermique conventionnellement froid (1) dans laquelle l'agent fluidique de transfert thermique conventionnellement froid est moins chauffé jusqu'à un autre réservoir (29) avec l'agent fluidique de transfert thermique conventionnellement froid, chauffé davantage, ou jusqu'à d'autres (29) avec l'agent fluidique de transfert thermique conventionnellement froid, chauffé davantage, ou depuis quelques réservoirs (28) dans la boucle d'agent fluidique de transfert thermique conventionnellement froid (1) dans laquelle l'agent fluidique de transfert thermique conventionnellement froid est moins chauffé, jusqu'aux autres réservoirs (29) avec l'agent fluidique de transfert thermique conventionnellement froid, chauffé davantage, après avoir quitté l'échangeur thermique mentionné (6) « fluide opératoire gazeux - agent fluidique de transfert thermique conventionnellement froid », le fluide opératoire gazeux est fourni via la conduite (18) au moyen de compression mentionné de type appareil (22) fonctionnant dans le processus de renvoi d'énergie où le fluide opératoire gazeux est comprimé la pression et la température du fluide opératoire gazeux sont augmentées, en même temps via le lien (24) avec le moyen de compression mentionné de type appareil (22) fonctionnant dans le processus de renvoi d'énergie, l'énergie mécanique est fournie au moyen de compression mentionnée de type appareil (22) fonctionnant dans le processus de renvoi d'énergie, après avoir quitté le moyen de compression mentionné de type appareil (22) fonctionnant dans le processus de renvoi d'énergie, le fluide opératoire gazeux est fourni via la conduite (18) à l'échangeur de chaleur mentionné (26, 27) « fluide opératoire gazeux - fluide opératoire gazeux » où le fluide opératoire gazeux est chauffé par le transfert thermique mentionné du fluide opératoire gazeux en cours de refroidissement qui circule dans la partie mentionnée de la boucle de fluide opératoire gazeux (3) entre la sortie du moyen d'expansion mentionné de type appareil (23) fonctionnant dans le processus de renvoi d'énergie et l'entrée dans l'échangeur thermique mentionné (6) « fluide opératoire gazeux - agent fluidique de transfert thermique conventionnellement froid », après avoir quitté l'échangeur thermique mentionné (26, 27) « fluide opératoire gazeux - fluide opératoire gazeux », le fluide opératoire gazeux est fourni via la conduite (18) à l'échangeur thermique mentionné (7) « fluide opératoire gazeux - agent fluidique de transfert thermique conventionnellement chaud » où le fluide opératoire gazeux est chauffé et simultanément l'agent fluidique de transfert thermique conventionnellement chaud est refroidi, en même temps l'agent fluidique de transfert thermique conventionnellement chaud est déplacé dans la boucle d'agent fluidique de transfert thermique conventionnellement chaud (2) à travers l'échangeur thermique mentionné (7) « fluide opératoire gazeux - agent fluidique de transfert thermique conventionnellement chaud » avec l'aide de l'appareil destiné à fournir l'agent fluidique de transfert thermique conventionnellement chaud se déplaçant depuis une partie (15) du réservoir (12) dans la boucle d'agent fluidique de transfert thermique conventionnellement chaud (2) dans laquelle l'agent fluidique de transfert thermique conventionnellement chaud est chauffé davantage, jusqu'à une autre partie (14) du réservoir (12) avec l'agent fluidique de transfert thermique conventionnellement chaud, moins chauffé, ou depuis un réservoir (31) dans la boucle d'agent fluidique de transfert thermique conventionnellement chaud (2) dans laquelle l'agent fluidique de transfert thermique conventionnellement chaud est chauffé davantage, jusqu'à un autre réservoir (30) avec l'agent fluidique de transfert thermique conventionnellement chaud, moins chauffé, ou jusqu'à d'autres (30) avec l'agent fluidique de transfert thermique conventionnellement chaud, moins chauffé, ou jusqu'à d'autres dans la boucle d'agent fluidique de transfert thermique conventionnellement chaud, moins chauffé, ou depuis quelques réservoirs (31) dans la boucle d'agent fluidique de transfert thermique conventionnellement chaud (2) dans laquelle l'agent fluidique de transfert thermique conventionnellement chaud est chauffé davantage, jusqu'aux autres réservoirs (30) avec l'agent fluidique de transfert thermique conventionnellement chaud, moins chauffé, après avoir quitté l'échangeur thermique mentionné(7) « fluide opératoire gazeux - agent fluidique de transfert thermique conventionnellement chaud », le fluide opératoire gazeux est de nouveau fourni via la conduite (18) au moyen d'expansion mentionné de type appareil (23) fonctionnant dans le processus de renvoi d'énergie ; dans le processus de stockage d'énergie accumulée, la circulation du fluide opératoire gazeux dans la boucle de fluide opératoire gazeux (3) est abaissée jusqu'au minimum préférable ou est arrêtée, le déplacement de l'agent fluidique de transfert thermique conventionnellement chaud dans la boucle d'agent fluidique de transfert thermique conventionnellement chaud (2) et le déplacement de l'agent fluidique de transfert thermique conventionnellement froid dans la boucle d'agent fluidique de transfert thermique conventionnellement froid (1) sont abaissés jusqu'au minimum préférable ou arrêtés.

13. Procédé selon la revendication 11 ou la revendication 12, dans laquelle l'énergie mécanique sortant dans le moyen d'expansion de type appareil (20) fonctionnant dans le processus d'accumulation d'énergie est fournie via le lien (21) au moyen de compression de type appareil (19) fonctionnant dans le processus d'accumulation d'énergie.

14. Procédé selon l'une quelconque des revendications 11 à 13, dans lequel l'énergie mécanique sortant dans le moyen d'expansion de type appareil (23) fonctionnant dans le processus de renvoi d'énergie est fournie via le lien (24) au moyen de compression de type appareil (22) fonctionnant dans le processus de renvoi d'énergie.

15. Procédé selon l'une quelconque des revendications 11 à 14, avant le début du processus d'accumulation d'énergie, en cas de besoin, l'agent de transfert thermique conventionnellement chaud est chauffé ou refroidi jusqu'à la température opératoire initiale et/ou l'agent de transfert thermique conventionnellement froid est chauffé ou refroidi jusqu'à la température opératoire initiale.
